# EUROPEAN PATENT APPLICATION

(11) **EP 4 542 964 A1**
(43) Date of publication of application: **23.04.2025**
(21) Application number: 23842358.6
(22) Date of filing: 19.07.2023
(51) Int. Cl.: H04L 65/403, H04L 67/1095, H04N 7/14

(54) **SHARING METHOD, ELECTRONIC DEVICE AND SYSTEM**

(30) Priority: 22.07.2022 CN 202210867898
(71) Applicant: Huawei Technologies Co., Ltd., Shenzhen, Guangdong 518129 (CN)
(72) Inventor: JIA, Yinyuan, Shenzhen, Guangdong 518129 (CN); ZHANG, Li, Shenzhen, Guangdong 518129 (CN); WANG, Liang, Shenzhen, Guangdong 518129 (CN); SHU, Haw-wei, Shenzhen, Guangdong 518129 (CN); WANG, Zhifeng, Shenzhen, Guangdong 518129 (CN)
(74) Representative: Epping - Hermann - Fischer
(86) International application number: PCT/CN2023/108156
(87) International publication number: WO 2024/017296

(57) **Abstract**

This application provides a sharing method, an electronic device, and a system. The method is applied to a first device. The method includes: displaying a first interface, where the first interface indicates that an operator call is currently performed with a second device; displaying a second interface of a first application when performing the operator call with the second device; receiving a user operation on the second interface; and sending first data to the second device, where the first data is used by the second device to output multimedia data related to the second interface. **In** this application, real-time sharing functions such as viewing together and listening together with a call party can be implemented for a user in a simpler and faster operation manner, to effectively meet a user requirement. This improves user experience.

## Description

This application claims priority to Chinese Patent Application No. 202210867898.7, filed with the China National Intellectual Property Administration on July 22, 2022 and entitled "SHARING METHOD, ELECTRONIC DEVICE, AND SYSTEM", which is incorporated herein by reference in its entirety.

### TECHNICAL FIELD

This application relates to the field of computer technologies, and in particular, to a sharing method, an electronic device, and a system.

### BACKGROUND

Currently, a function of sharing a multimedia data stream like an audio stream or a video stream in real time cannot be implemented. For example, a user usually shares content in a call through an oral description, and a call party cannot view/listen to the related content, or a user implements file-based sharing by using a short-range wireless communication technology like Bluetooth or a near field communication (near field communication, NFC) technology.

### SUMMARY

This application discloses a sharing method, an electronic device, and a system, so that real-time sharing functions such as viewing together, listening together, playing together, and editing together with at least one call party, a nearby user, and the like can be implemented for a user in a simpler and faster operation manner.

According to a first aspect, this application provides a sharing method, applied to a first device. The method includes: displaying a first interface, where the first interface indicates that an operator call is currently performed with a second device; displaying a second interface of a first application when performing the operator call with the second device; receiving a first user operation on the second interface; and sending first data to the second device, where the first data is used by the second device to output multimedia data related to the second interface.

In the foregoing method, when an operator call is performed between the first device and the second device, the first device can send, to the second device based on the received first user operation, the first data related to the first application that is used as a foreground application, so that the second device outputs multimedia data related to an interface of the first application. This resolves a problem that a multimedia data stream cannot be shared in real time in a scenario of an operator call, so that viewing together and listening together with a call party can be implemented for a user in a simpler and faster operation manner, to meet a user requirement. This improves user experience.

In a possible implementation, the first interface and the second interface include a first floating window, and the first user operation is a user operation on a share control in the first floating window; or the first user operation is a user operation of sliding along a first track.

In the foregoing method, there may be a plurality of types of first user operations for triggering sending of the first data to the second device, so that the user can select, according to a requirement, a type of the first user operation to be performed. This meets different user requirements and improves user experience.

In a possible implementation, before the sending first data to the second device, the method further includes: when the second interface is displayed, capturing the multimedia data related to the second interface, where the first data includes the multimedia data related to the second interface.

In the foregoing method, the first data includes the multimedia data such as an audio stream or a video stream that is related to the second interface and that is captured by the first device and output by the first device. Therefore, after receiving the first data, the second device can directly output the multimedia data related to the second interface, and can share multimedia data of any application in real time without a need to install the first application or adapt to the first application. This expands an application scenario and improves user experience.

In a possible implementation, the sending first data to the second device includes: sending call data of the operator call and the first data to the second device via a primary link for the operator call.

In a possible implementation, the sending first data to the second device includes: sending call data of the operator call to the second device via a primary link for the operator call, and sending the first data to the second device via a data channel for the operator call.

In a possible implementation, the sending first data to the second device includes: sending call data of the operator call to the second device via a primary link for the operator call, and sending the first data to the second device via an auxiliary link.

For example, the auxiliary link is a traversal link or a relay link of network address translation NAT.

For example, a physical channel of the auxiliary link is a cellular communication link, a wireless fidelity Wi-Fi link, a Bluetooth BT link, a device-to-device D2D link, or a satellite link.

In the foregoing method, when an operator call is performed between the first device and the second device, the first device can send, via the primary link, a data channel, or a related auxiliary link for the operator call, the first data shared in real time. Therefore, the user can quickly share multimedia data in real time based on a current operator call, without a need to install, on the first device and the second device, an application like a chat application or a conference application that is used to implement real-time sharing of multimedia data. This expands an application scenario and improves user experience.

In a possible implementation, before the sending first data to the second device, the method further includes: sending a first request message to a network device, where the first request message includes identification information of the second device; receiving a session identifier of the second device that is sent by the network device based on the first request message; and establishing the auxiliary link to the second device based on the session identifier of the second device.

For example, the identification information includes a phone number, an over the top OTT identifier ID, and a network account.

In the foregoing method, even if the first device originally does not store the session identifier of the second device, the first device can obtain the session identifier of the second device based on the existing identification information of the second device, so as to establish the auxiliary link to the second device. There are various types of identification information. This improves a probability of successfully establishing the auxiliary link, and an application scenario is wider.

In a possible implementation, the sending first data to the second device includes: displaying a third interface, where the third interface includes information about a plurality of devices; receiving a second user operation on the second device in the plurality of devices; and sending the first data to the second device.

In the foregoing method, a sharee device (second device) that performs real-time sharing with the first device may be determined in response to a user operation, so that the user can perform an operation more flexibly. This improves user experience.

For example, the second device is a device connected to the first device in a near field communication manner. This resolves a problem that a multimedia data stream cannot be shared in real time in a scenario of near field communication, so that viewing together and listening together with a nearby device can be implemented for the user in a simpler and faster operation manner, to meet a user requirement. This improves user experience.

**In** a possible implementation, the plurality of devices include at least one of the following: a discovered device, a connected device, a device that performs a latest operator call, a device that stores identification information, and a device recognized based on a captured image.

For example, the connected device includes the second device, a device connected in a near field communication manner, and a device connected in a far field communication manner. For example, the discovered device includes a device discovered in a near field communication manner and a device discovered in a far field communication manner. For example, the captured image includes an image captured by the first device and/or an image captured by the device connected to the first device.

In the foregoing method, there are various types of sharee devices that may be selected by the user, so as to meet a user requirement of sharing multimedia data with different devices in real time. This improves user experience.

In a possible implementation, the sending first data to the second device includes: displaying a fourth interface, where the fourth interface includes information about a plurality of windows; receiving a third user operation on a first window in the plurality of windows, where the first window includes content of the second interface; and sending the first data to the second device.

In the foregoing method, the content (first data) shared by the first device in real time may be determined in response to a user operation, so that the user can perform an operation more flexibly. This improves user experience.

In a possible implementation, the plurality of windows include at least one of the following: a window of a foreground application, a window of a background application, and a window of an application that is installed on the first device but is not run.

In the foregoing method, to-be-shared content that may be selected by the user may be multimedia data of the foreground application, or may be multimedia data of the background application, or may be multimedia data of the application that is installed on the first device but is not run, so as to meet a user requirement of sharing different multimedia data in real time. This improves user experience.

In a possible implementation, the sending first data to the second device includes: displaying a fifth interface, where the fifth interface includes a plurality of sharing manners; receiving a fourth user operation on a first manner in the plurality of sharing manners; displaying a sixth interface, where the sixth interface includes information about a plurality of windows and a plurality of devices, and the plurality of windows and the plurality of devices are determined based on the first manner; receiving a fifth user operation on a second window in the plurality of windows, and receiving a sixth user operation on the second device in the plurality of devices, where the second window includes content of the second interface; and sending the first data to the second device based on the fifth user operation and the sixth user operation.

For example, the first manner is viewing together, the plurality of windows include a window of a video application, and the plurality of devices include a device provided with a display (for example, a mobile phone or a tablet computer). For example, the first manner is listening together, the plurality of windows include a window of a music application, and the plurality of devices include a device provided with a speaker (for example, a headset or a sound box).

In the foregoing method, sharee device and to-be-shared content that are displayed by the first device and that may be selected by the user may be determined based on a sharing manner selected by the user, to filter out a sharee device and to-be-shared content that the user does not want to select, and prevent the information affecting user selection. This improves user experience.

In a possible implementation, before the sending first data to the second device, the method further includes: receiving a seventh user operation; and determining, in response to the seventh user operation, that a type of shared data is a first type, where when the first type is an audio, the first data includes audio data related to the second interface; when the first type is an image, the first data includes video data related to the second interface; or when the first type is an audio and an image, the first data includes audio data and video data that are related to the second interface.

In the foregoing method, the user can select a type of to-be-shared content, that is, select a type of the first data as an audio, an image, or an audio and an image, to meet a personalized requirement of the user. This improves user experience.

In a possible implementation, the first data includes video data related to the second interface; and the method further includes: receiving an eighth user operation, of sliding along a second track, on the second interface; and sending second data to the second device, where the second data includes audio data related to the second interface.

For example, the first track is a track of W, and the second track is a track of L.

In the foregoing method, the user can perform different user operations to trigger sharing of different types of content. Operations are simpler and more convenient. This improves user experience.

In a possible implementation, before the sending first data to the second device, the method further includes: receiving a ninth user operation used to select a first area in the second interface, where the first data includes multimedia data related to the first area.

In the foregoing method, the user can choose to share multimedia data related to some areas of the second interface, that is, the user can quickly share multimedia data of any area, to meet a personalized user requirement. This improves user experience.

In a possible implementation, before the sending first data to the second device, the method further includes: receiving a tenth user operation used to select a first layer in the second interface, where the first data includes multimedia data related to the first layer.

In the foregoing method, the user can choose to share multimedia data related to some layers of the second interface, that is, the user can quickly share multimedia data of any layer, to meet a personalized user requirement. This improves user experience.

In a possible implementation, the sending first data to the second device includes: when the first application is not a preset application, sending the first data to the second device, where a security level of the preset application is higher than a first level.

For example, the preset application includes an application determined by the first device in response to a user operation. For example, the preset application includes an application determined by the first device according to a preset rule. For example, the preset application includes a bank application and/or a payment application.

In the foregoing method, the first device may not share multimedia data of a preset application whose security level is higher than the first level. This effectively ensures privacy security of the user.

In a possible implementation, the sending first data to the second device includes: identifying that a security level of data related to a second area in the second interface is higher than a second level; and sending the first data to the second device, where the first data does not include the data related to the second area.

For example, the data related to the second area includes data determined by the first device in response to a user operation. For example, the data related to the second area includes data determined by the first device according to a preset rule. For example, the data related to the second area includes a user name, a password, an account name, a login name, an identity card number, a bank card number, and an account balance.

In the foregoing method, the first device may not share data whose security level is higher than the second level. This effectively ensures privacy security of the user.

In a possible implementation, the displaying a second interface of a first application includes: receiving broadcast data of a first channel that is sent by the network device; and displaying the second interface based on the broadcast data of the first channel.

In a possible implementation, the method further includes: receiving broadcast data of a second channel that is sent by the network device, where a user interface displayed by the first device is unrelated to the broadcast data of the second channel; receiving an eleventh user operation; and sending the broadcast data of the second channel to a third device, where the broadcast data of the second channel is used by the third device to output an audio and/or a video of the second channel.

In the foregoing method, the first device may not output the received broadcast data of the second channel, but directly send the broadcast data of the second channel to the third device in response to a user operation, without a need to wake up an application processor of the first device to process the broadcast data of the second channel, so as to reduce power consumption of the device. In addition, the first device does not need to have a capability of decoding and playing broadcast data. This expands an application scenario and improves user experience.

In a possible implementation, the sending first data to the second device includes: sending the first data and third data to the second device, where the third data includes audio data collected by the first device by using a microphone and/or image data collected by the first device by using a camera.

In the foregoing method, the audio data collected by using the microphone and/or the image data collected by using the camera may be superimposed on the multimedia data sent by the first device to the second device, so that a user who uses the second device can view/listen to application data, view a situation of the other party, and/or listen to a presentation of the other party, to meet a personalized user requirement. This improves user experience.

In a possible implementation, the method further includes: receiving a twelfth user operation; in response to the twelfth user operation, determining not to grant permission to the second device to store the first data and forward the first data; receiving a second request message sent by the second device, where the second request message is used to request to store and/or forward the first data; and displaying first prompt information based on the second request message.

In the foregoing method, the first device may be set to not allowing the second device to store and forward the first data. When the second device needs to store the first data or forward the first data, the second device may request permission from the first device, so as to avoid a case in which the second device retransmits the first data shared by the first device, without the knowledge of a user who uses the first device. This improves privacy security protection of the user.

In a possible implementation, the method further includes: receiving a third request message sent by the second device, where the third request message is used to request to share multimedia data with the first device in real time; displaying second prompt information based on the third request message; receiving a thirteenth user operation, where the thirteenth user operation is used to accept a request indicated by the second request message; receiving fourth data sent by the second device; and outputting the fourth data.

In the foregoing method, when the first device shares the first data with the second device, the second device may also share the multimedia data with the first device, that is, bidirectional sharing is implemented, to meet a personalized user requirement of real-time sharing. This improves user experience.

In a possible implementation, the outputting the fourth data includes: displaying a seventh interface based on the fourth data, where when the first device displays the seventh interface, the second device displays the content of the second interface; or the outputting the fourth data includes: displaying the second interface and an eighth interface on split screens, where the eighth interface is determined based on the fourth data.

In the foregoing method, when the first device displays content shared by the second device, the second device may also display content shared by the first device, that is, "You look at mine; I look at yours", or the first device may display content shared by the first device and content shared by the second device on split screens. Display manners are flexible and diversified, and different user requirements in different scenarios are met.

In a possible implementation, after the receiving fourth data sent by the second device, the method further includes: receiving a fourteenth user operation; and sending the fourth data to a fourth device, so that the fourth device outputs the fourth data.

In the foregoing method, the first device can share, to another device, the fourth data shared by the second device, so as to meet a personalized user requirement of real-time sharing. This improves user experience.

In a possible implementation, the sending first data to the second device includes: sending the first data to the second device via a first link and a second link, where the first link is a cellular communication link or an auxiliary link, the second link includes at least one of the following: a Bluetooth link, a wireless fidelity Wi-Fi link, a V2X link, a satellite link, a device-to-device D2D link, a cellular communication link, and an auxiliary link, and the first link is different from the second link.

In the foregoing method, the first device can transmit the first data through different transmission paths in different communication manners. For example, transmitting the first data once via the first link, and transmitting the first data once again via the second link may be understood as implementing redundant packet supplement, so as to avoid a case in which the second device cannot receive valid first data due to an unstable link. This improves transmission quality.

In a possible implementation, the method further includes: displaying a ninth interface, where the ninth interface includes information about a plurality of user interfaces running on the first device; receiving a fifteenth user operation on a first control in the ninth interface, where the first control is related to a tenth interface in the plurality of user interfaces; and sending fifth data to a fifth device, where the fifth data is used by the fifth device to output multimedia data related to the tenth interface.

For example, the ninth interface is a user interface of a multi-task list.

In the foregoing method, the user can trigger, based on the user interface of the multi-task list, sharing of multimedia data related to one of tasks (the tenth interface). There are various manners of triggering real-time sharing, to meet different user requirements in different scenarios. This improves user experience.

In a possible implementation, the method further includes: displaying an eleventh interface, where the eleventh interface includes information about a plurality of functions of a control center; receiving a sixteenth user operation on a second control on the eleventh interface, where the second control is related to a sharing function in the plurality of functions; and sending sixth data to a sixth device, where the sixth data is used by the sixth device to output multimedia data of a foreground application of the first device.

For example, the eleventh interface is a user interface that is of the control center and that is displayed by the first device in response to a user operation of sliding down from an upper edge of a screen.

In the foregoing method, the user can trigger real-time sharing based on the user interface of the control center. There are various triggering manners, to meet different user requirements in different scenarios. This improves user experience.

According to a second aspect, this application provides another sharing method, applied to a first device, where the method includes: displaying a first interface, where the first interface includes information about a plurality of windows running on the first device; receiving a first user operation on a first control in the first interface, where the first control is related to a first window that is of a first application and that is in the plurality of windows; and sending first data to a second device, where the first data is used by the second device to output multimedia data related to the first window.

For example, the first interface is a user interface of a multi-task list.

For example, the second device is a device that performs an operator call with the first device. For example, the second device is a device connected to the first device in a near field communication manner. For example, the second device is a device connected to the first device in a far field communication manner.

In the foregoing method, a user can trigger, based on the user interface of the multi-task list, sharing of multimedia data related to one of tasks (the first window), and the shared second device may be a call party or a nearby device. This resolves a problem that a multimedia data stream cannot be shared in real time in scenarios of an operator call and near field communication, so that viewing together and listening together with the call party, the nearby device, and a far field device can be implemented for the user in a simpler and faster operation manner, to meet a user requirement. This improves user experience.

In a possible implementation, the sending first data to a second device includes: displaying a second interface, where the second interface includes information about a plurality of devices; receiving a second user operation on the second device in the plurality of devices; and sending the first data to the second device.

In a possible implementation, the plurality of devices include at least one of the following: a discovered device, a connected device, a device that performs a latest operator call, a device that stores identification information, and a device recognized based on a captured image.

For example, the connected device includes a device that currently performs an operator call, a device connected in a near field communication manner, and a device connected in a far field communication manner.

In a possible implementation, before the displaying a second interface, the method further includes: displaying a third interface, where the third interface includes a plurality of sharing manners; and receiving a third user operation on a first manner in the plurality of sharing manners, where the plurality of devices are determined based on the first manner.

For example, the first manner is viewing together, and the plurality of devices include a device provided with a display (for example, a mobile phone or a tablet computer). For example, the first manner is listening together, and the plurality of devices include a device provided with a speaker (for example, a headset or a sound box).

In a possible implementation, before the sending first data to a second device, the method further includes: receiving a fourth user operation; and determining, in response to the fourth user operation, that a type of shared data is a first type, where when the first type is an audio, the first data includes audio data related to the first window; when the first type is an image, the first data includes video data related to the first window; or when the first type is an audio and an image, the first data includes audio data and video data that are related to the first window.

In a possible implementation, before the sending first data to a second device, the method further includes: receiving a fifth user operation on a first area in the first window, where the first data includes multimedia data related to the first area.

In a possible implementation, before the sending first data to a second device, the method further includes: receiving a sixth user operation on a first layer in the first window, where the first data includes multimedia data related to the first layer.

In a possible implementation, the sending first data to a second device includes: when the first application is not a preset application, sending the first data to the second device, where a security level of the preset application is higher than a first level.

In a possible implementation, the sending first data to a second device includes: identifying that a security level of data related to a second area in the first window is higher than a second level; and sending the first data to the second device, where the first data does not include the data related to the second area.

In a possible implementation, the displaying a first interface includes: receiving broadcast data of a first channel that is sent by a network device; and displaying the first window in the first interface based on the broadcast data of the first channel.

In a possible implementation, the method further includes: receiving broadcast data of a second channel that is sent by a network device, where a user interface displayed by the first device is unrelated to the broadcast data of the second channel; receiving a seventh user operation; and sending the broadcast data of the second channel to the second device, where the broadcast data of the second channel is used by the second device to output an audio and/or a video of the second channel.

In a possible implementation, the sending first data to a second device includes: sending the first data and second data to the second device, where the second data includes audio data collected by the first device by using a microphone and/or image data collected by the first device by using a camera.

In a possible implementation, the method further includes: receiving an eighth user operation; in response to the eighth user operation, determining not to grant permission to the second device to store the first data and forward the first data; receiving a first request message sent by the second device, where the first request message is used to request to store and/or forward the first data; and displaying first prompt information based on the first request message.

In a possible implementation, the method further includes: receiving a second request message sent by the second device, where the second request message is used to request real-time sharing; displaying second prompt information based on the second request message; receiving a ninth user operation, where the ninth user operation is used to accept a request indicated by the second request message; receiving third data sent by the second device; and outputting the third data.

In a possible implementation, the outputting the third data includes: displaying a fourth interface based on the third data, where when the first device displays the fourth interface, the second device displays content of the first window; or the outputting the third data includes: displaying a fifth interface and a sixth interface on split screens, where the fifth interface includes content of the first window, and the sixth interface is determined based on the third data.

In a possible implementation, after the receiving third data sent by the second device, the method further includes: receiving a tenth user operation; and sending the third data to a third device, so that the third device outputs the third data.

In a possible implementation, the sending first data to a second device includes: sending the first data to the second device via a first link and a second link, where the first link and the second link each include at least one of the following: a cellular communication link, an auxiliary link, a Bluetooth link, a wireless fidelity Wi-Fi link, a V2X link, a satellite link, and a device-to-device D2D link, and the first link is different from the second link.

According to a third aspect, this application provides another sharing method, applied to a first device, where the method includes: displaying a first interface, where the first interface includes information about a plurality of functions of a control center; receiving a first user operation on a first control in the first interface, where the first control is related to a sharing function in the plurality of functions; and sending first data to a second device, so that the second device outputs the first data.

For example, the first interface is a user interface that is of the control center and that is displayed by the first device in response to a user operation of sliding down from an upper edge of a screen.

For example, the second device is a device that performs an operator call with the first device. For example, the second device is a device connected to the first device in a near field communication manner. For example, the second device is a device connected to the first device in a far field communication manner.

In the foregoing method, a user can trigger, based on the user interface of the control center, real-time sharing, and the shared second device may be a call party or a nearby device. This resolves a problem that a multimedia data stream cannot be shared in real time in scenarios of an operator call and near field communication, so that viewing together and listening together with the call party, the nearby device, and a far field device can be implemented for the user in a simpler and faster operation manner, to meet a user requirement. This improves user experience.

In a possible implementation, the sending first data to a second device includes: displaying a second interface, where the second interface includes information about a plurality of devices; receiving a second user operation on the second device in the plurality of devices; and sending the first data to the second device.

In a possible implementation, the plurality of devices include at least one of the following: a discovered device, a connected device, a device that performs a latest operator call, a device that stores identification information, and a device recognized based on a captured image.

For example, the connected device includes a device that currently performs an operator call, a device connected in a near field communication manner, and a device connected in a far field communication manner.

In a possible implementation, the sending first data to a second device includes: displaying a third interface, where the third interface includes information about a plurality of windows; receiving a third user operation on a first window in the plurality of windows, where the first data includes multimedia data related to the first window; and sending the first data to the second device.

In a possible implementation, the plurality of windows include at least one of the following: a window of a foreground application, a window of a background application, and a window of an application that is installed on the first device but is not run.

In a possible implementation, before the sending first data to a second device, the method further includes: receiving a fourth user operation on a first area in the first window, where the first data includes multimedia data related to the first area.

In a possible implementation, before the sending first data to a second device, the method further includes: receiving a fifth user operation on a first layer in the first window, where the first data includes multimedia data related to the first layer.

In a possible implementation, the sending first data to a second device includes: when an application corresponding to the first data is not a preset application, sending the first data to the second device, where a security level of the preset application is higher than a first level.

In a possible implementation, the sending first data to a second device includes: identifying that a security level of data related to a second area in the first window is higher than a second level; and sending the first data to the second device, where the first data does not include the data related to the second area.

In a possible implementation, the sending first data to a second device includes: displaying a fourth interface, where the fourth interface includes a plurality of sharing manners; receiving a sixth user operation on a first manner in the plurality of sharing manners; displaying a fifth interface, where the fifth interface includes information about a plurality of windows and a plurality of devices, and the plurality of windows and the plurality of devices are determined based on the first manner; receiving a seventh user operation on a second window in the plurality of windows, and receiving an eighth user operation on the second device in the plurality of devices, where the first data includes multimedia data related to the second window; and sending the first data to the second device based on the seventh user operation and the eighth user operation.

In a possible implementation, before the sending first data to a second device, the method further includes: receiving a ninth user operation; and determining, in response to the ninth user operation, that a type of shared data is a first type, where when the first type is an audio, the first data includes audio data; when the first type is an image, the first data includes video data; or when the first type is an audio and an image, the first data includes audio data and video data.

In a possible implementation, before the sending first data to a second device, the method further includes: receiving broadcast data of a first channel that is sent by a network device; and displaying a sixth interface based on the broadcast data of the first channel, where the first data includes multimedia data related to the sixth interface.

In a possible implementation, the method further includes: receiving broadcast data of a second channel that is sent by the network device, where a user interface displayed by the first device is unrelated to the broadcast data of the second channel, the first data includes the broadcast data of the second channel, and the first data is used by the second device to output an audio and/or a video of the second channel.

In a possible implementation, the sending first data to a second device includes: sending the first data and second data to the second device, where the second data includes audio data collected by the first device by using a microphone and/or image data collected by the first device by using a camera.

In a possible implementation, the method further includes: receiving a tenth user operation; in response to the tenth user operation, determining not to grant permission to the second device to store the first data and forward the first data; receiving a first request message sent by the second device, where the first request message is used to request to store and/or forward the first data; and displaying first prompt information based on the first request message.

In a possible implementation, the method further includes: receiving a second request message sent by the second device, where the second request message is used to request real-time sharing; displaying second prompt information based on the second request message; receiving an eleventh user operation, where the eleventh user operation is used to accept a request indicated by the second request message; receiving third data sent by the second device; and outputting the third data.

In a possible implementation, the outputting the third data includes: displaying a seventh interface based on the third data, where when the first device displays the seventh interface, the second device displays video data included in the first data; or the outputting the third data includes: displaying an eighth interface and a ninth interface on split screens, where the eighth interface is determined based on the first data, and the ninth interface is determined based on the third data.

In a possible implementation, the method further includes: receiving a twelfth user operation; and sending the third data to a third device, so that the third device outputs the third data.

In a possible implementation, the sending first data to a second device includes: sending the first data to the second device via a first link and a second link, where the first link and the second link each include at least one of the following: a cellular communication link, an auxiliary link, a Bluetooth link, a wireless fidelity Wi-Fi link, a V2X link, a satellite link, and a device-to-device D2D link, and the first link is different from the second link.

According to a fourth aspect, this application provides an electronic device, including a transceiver, a processor, and a memory, where the memory is configured to store a computer program, and the processor invokes the computer program to perform the sharing method in any possible implementation of any one of the foregoing aspects.

According to a fifth aspect, this application provides a computer storage medium, where the computer storage medium stores a computer program, and when the computer program is executed by a processor, the sharing method in any possible implementation of any one of the foregoing aspects is performed.

According to a sixth aspect, this application provides a computer program product, where when the computer program product runs on an electronic device, the electronic device is enabled to perform the sharing method in any possible implementation of any one of the foregoing aspects.

According to a seventh aspect, this application provides an electronic device, where the electronic device includes the method or the apparatus for executing any implementation of this application. For example, the electronic device is a chip.

It should be understood that descriptions of technical features, technical solutions, beneficial effects, or similar languages in this application do not imply that all features and advantages can be implemented in any single implementation. On the contrary, it may be understood that descriptions of features or beneficial effects mean that at least one implementation includes specific technical features, technical solutions, or beneficial effects. Therefore, descriptions of technical features, technical solutions, or beneficial effects in this specification do not necessarily mean a same implementation. Further, the technical features, the technical solutions, or the beneficial effects described in embodiments of this application may be combined in any proper manner. A person skilled in the art may understand that this application may be implemented without one or more specific technical features or technical solutions, or beneficial effect in a specific implementation. In another implementation, additional technical features and beneficial effects may be further identified in a specific implementation that does not reflect this application.

### BRIEF DESCRIPTION OF DRAWINGS

The following describes the accompanying drawings used in this application.
FIG. 1A is a diagram of an architecture of a sharing system according to this application;
FIG. 1B is a diagram of an architecture of another sharing system according to this application;
FIG. 1C is a diagram of an architecture of another sharing system according to this application;
FIG. 2A is a diagram of a hardware structure of an electronic device according to this application;
FIG. 2B is a diagram of a software architecture of an electronic device according to an embodiment of this application;
FIG. 2C is a diagram of a software architecture of another electronic device according to this application;
FIG. 2D is a diagram of a software architecture of another electronic device according to this application;
FIG. 2E is a diagram of an architecture of another sharing system according to this application;
FIG. 3(A) to FIG. 3(C), FIG. 4A to FIG. 4C, FIG. 5A to FIG. 5D, FIG. 6A to FIG. 6D, FIG. 7A to FIG. 7C, FIG. 8A to FIG. 8C, FIG. 9A to FIG. 9C, FIG. 10A and FIG. 10B, FIG. 11A to FIG. 11D, FIG. 12A to FIG. 12D, FIG. 13, FIG. 14A(1) to FIG. 14D(3), FIG. 15A(1) to FIG. 15D, FIG. 16A to FIG. 16E, FIG. 17A to FIG. 17I, FIG. 18A to FIG. 18D, FIG. 19A to FIG. 19G, FIG. 20A to FIG. 20D, FIG. 21A to FIG. 21E, FIG. 22A to FIG. 22E, FIG. 23A(1) to FIG. 23C(2), and FIG. 24A(1) to FIG. 24C are diagrams of some user interfaces according to this application;
FIG. 25 is a schematic flowchart of a sharing method according to this application;
FIG. 26A is a diagram of an audio transmission manner according to this application;
FIG. 26B is a diagram of another audio transmission manner according to this application;
FIG. 26C is a diagram of another audio transmission manner according to this application;
FIG. 27 is a diagram of an architecture of another sharing system according to this application;
FIG. 28 is a schematic flowchart of a process of establishing an auxiliary link according to this application;
FIG. 29 is a diagram of a communication map according to this application;
FIG. 30 is a schematic flowchart of predictive link establishment according to this application;
FIG. 31 is a diagram of data transmission according to this application;
FIG. 32A is a diagram of an architecture of audio stream and/or video stream transmission according to this application;
FIG. 32B is a diagram of a data packet according to this application;
FIG. 33 is a diagram of another data transmission according to this application;
FIG. 34 is a diagram of an architecture of another sharing system according to this application;
FIG. 35 is a schematic flowchart of device discovery and connection according to this application;
FIG. 36 is a diagram of another data transmission according to this application;
FIG. 37 is a schematic flowchart of leaving of a multicast group member according to this application;
FIG. 38 is another schematic flowchart of leaving of a multicast group member according to this application;
FIG. 39 is a diagram of another data packet according to this application;
FIG. 40 is a diagram of an architecture of another sharing system according to this application;
FIG. 41 is a diagram of an architecture of another sharing system according to this application;
FIG. 42 is a diagram of another data transmission according to this application;
FIG. 43 is a schematic flowchart of a password transmission process according to this application;
FIG. 44 is a schematic flowchart of a multi-device synchronization process according to this application;
FIG. 45A to FIG. 45D are diagrams of some multi-level sharing scenarios according to this application; and
FIG. 46A to FIG. 46C are diagrams of architectures of some new radio NR access communication systems according to this application.

### DESCRIPTION OF EMBODIMENTS

The following describes technical solutions of embodiments in this application with reference to the accompanying drawings. In descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in descriptions of embodiments of this application, "a plurality of" means two or more than two.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

Currently, a sharing function can be implemented in the following three manners:
Manner 1: A user who uses a mobile phone usually shares, through an oral description in a call (which may also be referred to as an operator call), content viewed on the mobile phone, and a call party in the call cannot view the content.
Manner 2: A user implements file-based sharing by using a short-range wireless communication technology like Bluetooth or a near field communication (near field communication, NFC) technology. For example, the user may share an image file to a nearby user, but cannot share a multimedia data stream such as an audio stream or a video stream in real time, bringing a possibility of secondary transmission. This cannot effectively ensure privacy security of the user.
Manner 3: A user shares a multimedia data stream of another application in real time by using a chat application or a conference application installed on an electronic device. However, real-time sharing cannot be implemented in scenarios of an operator call and near field communication. In addition, a chat application, a conference application, or a to-be-shared application needs to be installed on both a sharer device and a sharee device, and even the sharee device may be required to register with and/or log in to the to-be-shared application. The to-be-shared application further needs to be adapted to the chat application or the conference application, and a multimedia data stream of an application that is not adapted cannot be shared in real time. Because an application scenario is limited, user requirements cannot be met.

This application provides a sharing method, to provide a simpler and more convenient user experience operation sequence, so that a sharer device and one or more sharee devices such as a call party, a nearby device, and a far-field device implement real-time sharing and collaboration functions such as viewing together, listening together, playing together, and editing together. This resolves a problem that real-time sharing cannot be performed in scenarios of an operator call and near field communication, without a need to install a chat application, a conference application, or a to-be-shared application, or adapt to a to-be-shared application, and greatly expands an application scenario, so that a user can quickly share a multimedia data stream of any application and any area, to effectively meet user requirements. This improves user experience. In addition, real-time sharing can reduce a possibility of secondary transmission, and improve privacy security protection of the user.

In this application, real-time sharing may be that a sharer device/sharer user shares to-be-shared data such as a multimedia data stream to at least one sharee device/sharee user, and the sharer device/sharer user and the at least one sharee device/sharee user may view/listen to the multimedia data stream together. The multimedia data stream may include image data (a plurality of frames of images may be referred to as a video stream) and audio data (a plurality of frames of audios may be referred to as an audio stream). The sharer device is a device that initiates real-time sharing, and may also be referred to as a sharing initiator. In an implementation, the sharer device may provide to-be-shared content (which may also be referred to as to-be-shared data, for example, a multimedia data stream of any application or any area). The sharee device is a device that receives the initiated real-time sharing, and may also be referred to as a sharing receiver. The sharee device may receive the to-be-shared content and output the to-be-shared content. Descriptions of the sharer user are similar to that of the sharee user. The sharer user may share, by using the sharer device, the to-be-shared data in real time with the sharee user who uses the sharee device. For the sharer device/sharer user, the sharee device/sharee user may be briefly referred to as a shared object. Real-time sharing in this application is real-time sharing. The real-time sharing may be described from a perspective of the sharer device.

It may be understood that the sharer device/sharer user and the sharee device/sharee user are relative role concepts rather than physical concepts, and one device/user may be different roles in different sharing scenarios. For example, a device 1/user 1 may serve as a sharer device/sharer user at a time period 1 to share a multimedia data stream with another device/user in real time, and may serve as a sharee device at a time period 2 to receive a multimedia data stream shared by another sharer device in real time. For example, the device 1/user 1 may share a multimedia data stream with a device 2/user 2 in real time, and the device 2/user 2 may further share a multimedia data stream with a device 3/user 3. In this case, for the device 1, the device 2 is a sharee device, but for the device 3, the device 2 is a sharer device.

In this application, viewing together, listening together, playing together, and editing together may be four different real-time sharing manners. For example, viewing together may be real-time sharing of content that can be viewed (for example, an image of a video application), listening together may be real-time sharing of content that can be listened to (for example, an audio of a music application), playing together may be real-time sharing of game-related content (for example, an image and/or audio of a game application), and editing together may be real-time sharing of file-related content that can be edited (for example, a file in a word format, a file in an excel (excel) format, and a file in a presentation (PowerPoint, PPT) format). In an implementation, the user may select a real-time sharing manner. However, it may be understood that the real-time sharing manner selected by the user does not constitute a limitation on content actually shared in real time. For example, the user first selects a real-time sharing manner of viewing together, but during actual real-time sharing, the user may use the sharer device to send the content that can be listened to, the game-related content, and/or the file-related content to another sharee device, for example, an audio stream and a video stream of a video application. In another implementation, the electronic device may alternatively determine a real-time sharing manner independently. For example, the real-time sharing manner is set by default, or the real-time sharing manner is determined according to a preset rule. This is not limited to the foregoing examples. There may be another real-time sharing manner. Specific content and a determining manner of the real-time sharing manner are not limited in this application.

In this application, the electronic device may run at least one application. An application that is visible to and that can interact with the user in the at least one application may be referred to as a foreground application. The electronic device may display a user interface of the foreground application, in other words, the electronic device runs the application in the foreground. An application that is invisible to and that cannot interact with the user in the at least one application may be referred to as a background application. The electronic device does not display a user interface of the background application, but still runs the background application, in other words, the electronic device runs the application in the background. It may be understood that the foreground application and the background application are role concepts rather than physical concepts, and one application may be different roles in different scenarios. For example, when displaying a user interface of an application 1 (in this case, the application 1 is a foreground application, and an application 2 is a background application), the electronic device may display a user interface of the application 2 (in this case, the application 2 is a foreground application, and the application 1 is a background application) in response to a user operation.

In this application, the nearby device is a device with which the electronic device can communicate by using a near field communication technology like Bluetooth, a wireless local area network (wireless local area network, WLAN) (for example, wireless fidelity (wireless fidelity, Wi-Fi)), device to device communication (device to device communication, D2D), a short-range wireless communication (near field communication, NFC) technology, an ultra wide band (ultra wide band, UWB) technology, or an infrared technology. The nearby device may include a device that is discovered by but is not connected to the electronic device, and/or a device that is connected to the electronic device. Specific content of the near field communication technology is not limited in this application.

In this application, the far-field device is a device with which the electronic device can communicate by using a far field communication technology like WLAN, a satellite, or cellular communication. The far-field device may include a device that is discovered by but is not connected to the electronic device, and/or a device that is connected to the electronic device. Specific content of the far field communication technology is not limited in this application.

A touch operation in this application may include but is not limited to a plurality of forms such as tap, double-tap, touch and hold, touch and hold with a single finger, touch and hold with a plurality of fingers, slide a single finger, slide a plurality of fingers, and slide a knuckle. A touch operation in a sliding form may be briefly referred to as a sliding operation. The sliding operation is, for example, but not limited to, sliding leftward and rightward, sliding upward and downward, sliding to a first specific location, or sliding along a specific track. A track of the sliding operation is not limited in this application. In some implementations, the touch operation may be performed on a second specific location on the electronic device. The specific location may be on a display of the electronic device, for example, a location of a control like an icon or an edge of the display, or the specific location may be on another area of the electronic device like a side or a back of the electronic device, for example, a location of a button like a volume button or a power button. The specific location is preset by the electronic device, or the specific location is determined by the electronic device in response to a user operation. The specific track is preset by the electronic device, or the specific track is determined by the electronic device in response to a user operation.

The following describes a sharing system 10 in embodiments of this application.

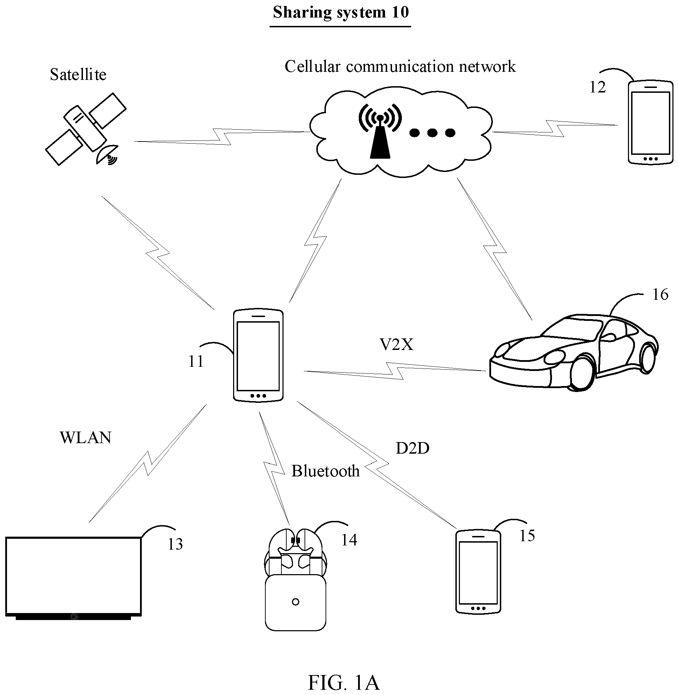

FIG. 1A shows an example of a diagram of an architecture of the sharing system 10.

As shown in FIG. 1A, the sharing system 10 may include an electronic device 11, and the electronic device 11 may communicate with different electronic devices in different communication manners. Specific examples are provided below.

In some embodiments, the electronic device 11 may communicate with at least one electronic device through a cellular communication network (which may also be referred to as a cellular communication manner), and optionally implement an operator call (namely, a phone call). FIG. 1A is described by using an example in which the at least one electronic device includes an electronic device 12. The electronic device 11, the cellular communication network, and the at least one electronic device may form a cellular communication system. The cellular communication system is, for example, but not limited to, a global system for mobile communications (global system for mobile communications, GSM), code division multiple access (code division multiple access, CDMA), wideband code division multiple access (wideband code division multiple access, WCDMA), time division synchronous code division multiple access (time division synchronous code division multiple access, TD-SCDMA), long term evolution (long term evolution, LTE), new radio (new radio, NR), or another future network system. The cellular communication network includes, for example, but is not limited to, a base station, a core network, and a communication line. The base station is a device deployed in a radio access network (radio access network, RAN) and configured to provide a wireless communication function. In different radio access systems, names of the base station may be different, for example, but not limited to a base transceiver station (base transceiver station, BTS) in a GSM or CDMA, a NodeB (NodeB, NB) in WCDMA, an evolved NodeB (evolved NodeB, eNodeB) in LTE, a next generation NodeB (gNodeB, gNB) in NR, or a base station in another future network system. The core network is a key control node in the cellular communication system, and is mainly responsible for a signaling processing function, for example, but not limited to implementing functions such as access control, mobility management, and session management. A core network device includes, for example, but is not limited to, an access and mobility management function (access and mobility management function, AMF) entity, a session management function (session management function, SMF) entity, and a user plane function (user plane function, UPF) entity. The communication line includes, for example, but is not limited to, a twisted pair, a coaxial cable, and an optical fiber. In some examples, the electronic device 11 may be connected to a base station 1 in the cellular communication network through an air interface (air interface), the electronic device 12 may be connected to a base station 2 in the cellular communication network through an air interface, and the base station 1 and the base station 2 may be connected to the core network. This is not limited to the foregoing examples. In some other examples, the base station 1 and the base station 2 may alternatively be a same base station.

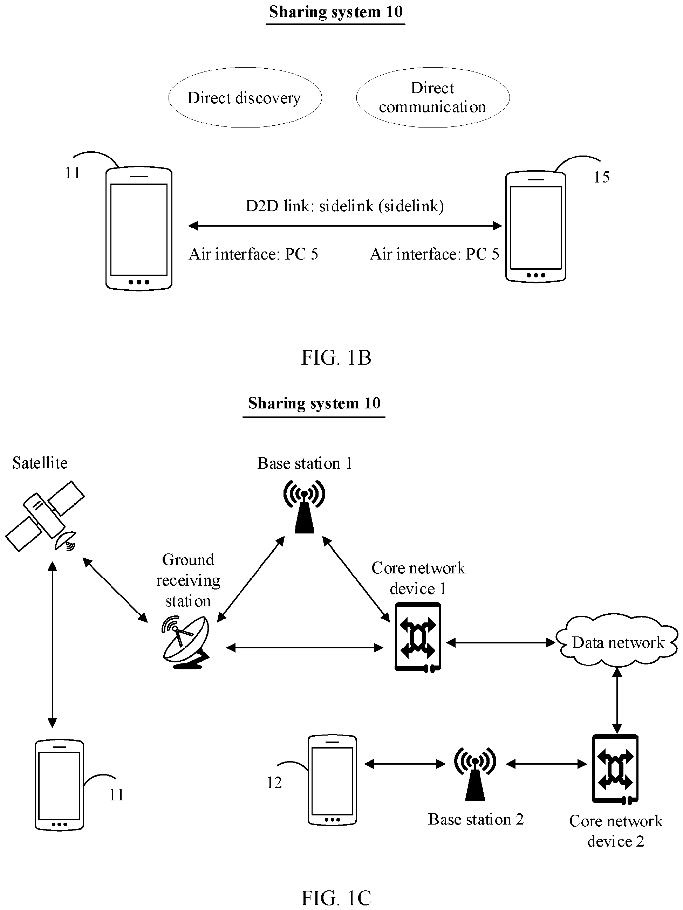

In some embodiments, the electronic device 11 may communicate with the at least one electronic device by using a near field communication technology. The near field communication technology includes, for example, but is not limited to, Bluetooth, a WLAN (for example, Wi-Fi), D2D, NFC, UWB, and infrared. FIG. 1A is described by using an example in which the at least one electronic device includes an electronic device 13, an electronic device 14, and an electronic device 15. The electronic device 11 communicates with the electronic device 13 through WLAN, communicates with the electronic device 14 through Bluetooth, and communicates with the electronic device 15 through D2D. For an example in which the electronic device 11 communicates with the electronic device 15, refer to FIG. 1B.

WLAN in a near field communication manner includes, for example, peer to peer (Peer to Peer, P2P) direct connection, or two devices (in this case, located in a same local area network) connected to a same WLAN signal source may communicate through a near field WLAN. This is not limited thereto. In some other examples, WLAN may alternatively be a far field communication manner. For example, two devices belonging to different local area networks may communicate with each other through far field WLAN.

In some embodiments, the electronic device 11 may further communicate with at least one vehicle by using a vehicle to X (vehicle to X, V2X) technology. FIG. 1A is described by using an example in which the at least one vehicle includes a vehicle 16. In some examples, the electronic device 11 may communicate with the vehicle 16 by using the cellular communication network, and it may be understood that V2X is implemented by using the cellular communication network. In some other examples, the electronic device 11 may directly communicate with the vehicle 16. This is not limited to the foregoing examples. In some other examples, the electronic device 11 may further communicate with another device like a vehicle-mounted device by using the V2X technology.

In some embodiments, the electronic device 11 may further communicate with the at least one electronic device by using a satellite system. The satellite system includes, for example, but is not limited to, BeiDou, Tiantong, and Starlink. FIG. 1A is described by using an example in which the at least one electronic device includes the electronic device 12. In some examples, the electronic device 11 may be connected to a satellite, then connected to the cellular communication network by using the satellite, and finally connected to the electronic device 12 through the cellular communication network. Refer to an example shown in FIG. 1C.

This is not limited thereto. In some other embodiments, the electronic device 11 may further implement an over the top (over the top, OTT) call with the at least one electronic device. In some examples, the OTT call may be a service that bypasses an operator to develop open internet-based data services such as various videos. For example, the OTT call is implemented through Wi-Fi. In some other examples, the OTT call may be implemented based on a cellular data service of an operator.

FIG. 1B is an example of a diagram of an architecture of another sharing system 10.

As shown in FIG. 1B, the sharing system 10 includes an electronic device 11 and an electronic device 15. D2D communication is implemented between the electronic device 11 and the electronic device 15 based on an air interface (for example, a PC 5) and a communication link (for example, a sidelink (sidelink)). Different from a cellular communication link in which an uplink (uplink) and a downlink (downlink) are distinguished, the sidelink may reflect a peer-to-peer relationship between two communication peers. D2D communication provides a direct discovery (direct discovery) function and a direct communication (direct communication) function. The direct discovery may provide an electronic device A with a function of discovering a nearby electronic device B that can be directly connected to the electronic device A. The direct communication may provide the electronic device A with a function of exchanging data with the surrounding electronic device B. For example, the electronic device A is the electronic device 11 and the electronic device B is the electronic device 15; or the electronic device A is the electronic device 15 and the electronic device B is the electronic device 11. In some embodiments, the direct discovery and the direct communication may be performed on the two ends (the electronic device 11 and the electronic device 15) by using a D2D technology, so as to implement real-time sharing functions such as viewing together, listening together, playing together, and editing together.

FIG. 1C is an example of a diagram of an architecture of another sharing system 10.

As shown in FIG. 1C, the sharing system 10 includes an electronic device 11, a satellite, a ground receiving station, a base station 1, a core network device 1, a data network (Data Network), a core network device 2, a base station 2, and an electronic device 12. In some embodiments, the electronic device 11 and the electronic device 12 may implement real-time sharing functions such as viewing together, listening together, playing together, and editing together by using the sharing system 10. An example in which the electronic device 11 is a sharer device and the electronic device 12 is a sharee device is used for description.

The electronic device 11 may be connected to the satellite, and send shared content to the satellite. The satellite may send the shared content to the ground receiving station. In an implementation, the ground receiving station may access the core network device 1 via the base station 1, and send the shared content to the core network device 1 via the base station 1. In another implementation, the ground receiving station may alternatively be directly connected to the core network device 1, and directly send the shared content to the core network device 1. Then, the core network device 1 may send the shared content to the core network device 2 through the data network. The electronic device 12 may access the core network device 2 via the base station 2, and the core network device 2 may send the shared content to the electronic device 12 via the base station 2 for output.

This is not limited to the foregoing example. In another implementation, there may be more or fewer devices between the satellite and the electronic device 12. For example, the ground receiving station may be connected to the core network device 1 by using at least one gateway device that performs access conversion.

This is not limited to the foregoing example. In another implementation, the electronic device 12 may alternatively not access the data network by using a network device that performs cellular communication (for example, the base station 2 and the core network device 2), but access the data network through a WLAN (for example, Wi-Fi). A manner of accessing the data network by the electronic device 12 is not limited in this application.

In some embodiments, a multi-connection may be implemented between a sharer device and a sharee device in a plurality of communication manners, for example, redundant packet supplement is performed on different transmission paths in different communication manners, so as to ensure transmission quality (for example, real-time performance and/or stability) during real-time sharing. The plurality of communication manners include, for example, but are not limited to, the communication manners described in FIG. 1A, FIG. 1B, and FIG. 1C. In this application, packet supplement may be transmission of a part or all of a particular data packet at least once more during transmission of the data packet. Content transmitted each time may be the same or different (for example, three cases are included: completely the same, partially the same, and completely different), and time of each transmission may be the same or different. For example, at a time period 1, all content of a data packet 1 is transmitted by using the satellite, and a segment 1 of the data packet 1 is transmitted in a cellular communication manner; at a time period 2, a segment 2 of the data packet 1 is transmitted by using the satellite; and at a time period 3, all content of the data packet 1 is transmitted in the cellular communication manner, and the segment 2 of the data packet 1 is transmitted through Bluetooth.

It should be noted that forms of the electronic devices 11, 12, 13, 14, and 15, the vehicle 16, the satellite, the cellular communication network, the ground receiving station, the base stations 1 and 2, the core network devices 1 and 2, and the data network shown in FIG. 1A, FIG. 1B, and FIG. 1C and their quantities are merely used as examples. This is not limited in embodiments of this application.

This is not limited to the foregoing example. In another implementation, the base station may be another access network device, for example, user equipment (user equipment, UE), an access point (access point, AP), a transmission and receiver point (transmission and receiver point, TRP), a relay device, or another network device that has a function of a base station.

The following describes an example electronic device 100 according to an embodiment of this application. In some embodiments, the electronic device 100 may be any electronic device in the sharing system 10.

In this application, the electronic device 100 may be a mobile phone, a tablet computer, a handheld computer, a desktop computer, a laptop computer, an ultra-mobile personal computer (ultra-mobile personal computer, UMPC), a netbook, a cellular phone, a personal digital assistant (personal digital assistant, PDA), a smart home device like a smart television or a smart sound box, a wearable device like a smart band, a smart watch, or smart glasses, an extended reality (extended reality, XR) device like an augmented reality (augmented reality, AR) device, a virtual reality (virtual reality, VR) device, or a mixed reality (mixed reality, MR) device, a vehicle-mounted device, or a smart city device. A specific type of the electronic device is not specially limited in embodiments of this application.

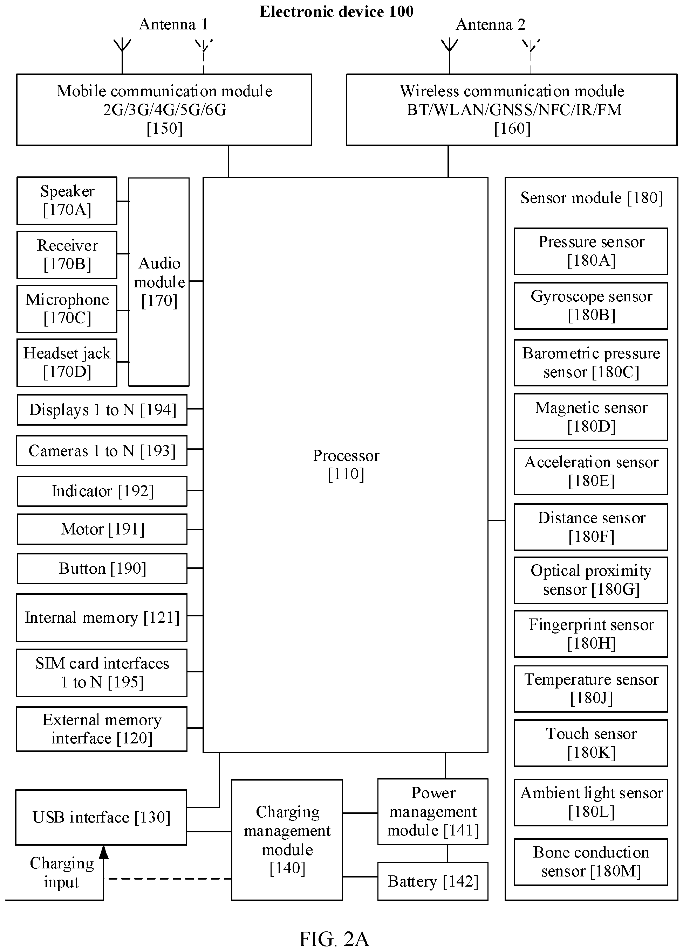

FIG. 2A is an example of a diagram of a hardware structure of an electronic device 100.

It should be understood that the electronic device 100 shown in FIG. 2A is merely an example, and the electronic device 100 may have more or fewer components than those shown in FIG. 2A, or a combination of two or more components, or a different component layout. Components shown in FIG. 2A may be implemented by hardware including one or more signal processing and/or application-specific integrated circuits, software, or a combination of hardware and software.

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem (modem) processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In an implementation, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In an implementation, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The charging management module 140 supplies power to the electronic device through the power management module 141 while charging the battery 142. The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100, for example, transmission of a real-time shared audio stream/video stream, may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G/6G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In an implementation, at least some function modules of the mobile communication module 150 may be disposed in the processor 110. In an implementation, at least some function modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video on the display 194. In an implementation, the modem processor may be an independent component. In another implementation, the modem processor may be independent of the processor 110, and is disposed in a same component as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, D2D, V2X, or the like. The wireless communication module 160 may be one or more components integrating at least one communication processor module. The wireless communication module 160 receives an electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In an implementation, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function through the GPU, the display 194, the application processor, and the like, for example, displays a real-time shared video stream.

The GPU is a microprocessor for image processing, and is connected to the display 194 and the application processor. The GPU is configured to: perform mathematical and geometric computation, and render an image. The processor 110 may include one or more GPUs, which execute program instructions to generate or change display information. The display 194 (which may also be referred to as a screen) is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic-light emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In an implementation, the electronic device 100 may include one or N displays 194, where N is a positive integer greater than 1.

The electronic device 100 may implement a photographing function through the ISP, the camera 193, the video codec, the GPU, the display 194, the application processor, and the like. For example, the electronic device 100 may take a portrait, so as to share the portrait to another device in real time together with a video stream of an application.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In an implementation, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In an implementation, the electronic device 100 may include one or N cameras 193, where N is a positive integer greater than 1.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The external memory interface 120 may be used to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, play a real-time shared audio stream, through the audio module 170, the speaker 170A, the receiver 170B, the microphone 170C, the headset jack 170D, and the application processor.

The audio module 170 is configured to convert digital audio information into an analog audio signal for output, and is also configured to convert an analog audio input into a digital audio signal. The audio module 170 may be further configured to: encode and decode an audio signal. In an implementation, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may listen to music or another real-time shared audio stream or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In another implementation, two microphones 170C may be disposed in the electronic device 100, to collect a sound signal and implement a noise reduction function. In another implementation, three, four, or more microphones 170C may alternatively be disposed in the electronic device 100, to collect a sound signal, implement noise reduction, and identify a sound source, so as to implement a directional recording function and the like. For example, an audio collected by the microphone 170C in real time and an audio stream of an application may be shared to another device in real time.

The headset jack 170D is configured to connect to a wired headset.

The pressure sensor 180A is configured to sense a pressure signal, and can convert the pressure signal into an electrical signal. In an implementation, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A.

The touch sensor 180K is also referred to as a "touch device". The touch sensor 180K may be disposed on the display 194, and the touch sensor 180K and the display 194 constitute a touchscreen, which is also referred to as a "touch screen". In another implementation, the touch sensor 180K may alternatively be disposed on a surface of the electronic device 100 at a location different from that of the display 194.

The pressure sensor 180A and/or the touch sensor 180K are/is configured to detect a touch operation performed on or near the pressure sensor 180A and/or the touch sensor 180K. The pressure sensor 180A and/or the touch sensor 180K may transfer the detected touch operation to the application processor, to determine a touch event type. A visual output related to the touch operation may be provided on the display 194.

The gyroscope sensor 180B may be configured to determine a moving posture of the electronic device 100. The barometric pressure sensor 180C is configured to measure barometric pressure. The magnetic sensor 180D includes a Hall effect sensor. The electronic device 100 may detect opening and closing of a flip cover by using the magnetic sensor 180D. The acceleration sensor 180E may detect accelerations in various directions (usually on three axes) of the electronic device 100. The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The temperature sensor 180J is configured to detect a temperature. The bone conduction sensor 180M may obtain a vibration signal.

The button 190 includes a power button, a volume button, and the like. The button 190 may be a mechanical button, or may be a touch button. The electronic device 100 may receive a button input, and generate a button signal input related to a user setting and function control of the electronic device 100. The motor 191 may generate a vibration prompt. The indicator 192 may be an indicator light, and may be used to indicate a charging status and a power change, or may be configured to indicate a message, a missed call, a notification, and the like. The SIM card interface 195 is configured to connect to a SIM card.

The following describes an example of a software system of the electronic device 100.

A software system of the electronic device 100 may use a layered architecture, an eventdriven architecture, a microkernel architecture, a micro service architecture, or a cloud architecture. For example, a software system of the layered architecture may be an Android (Android) system, or may be a Harmony (harmony) operating system (operating system, OS), or another software system.

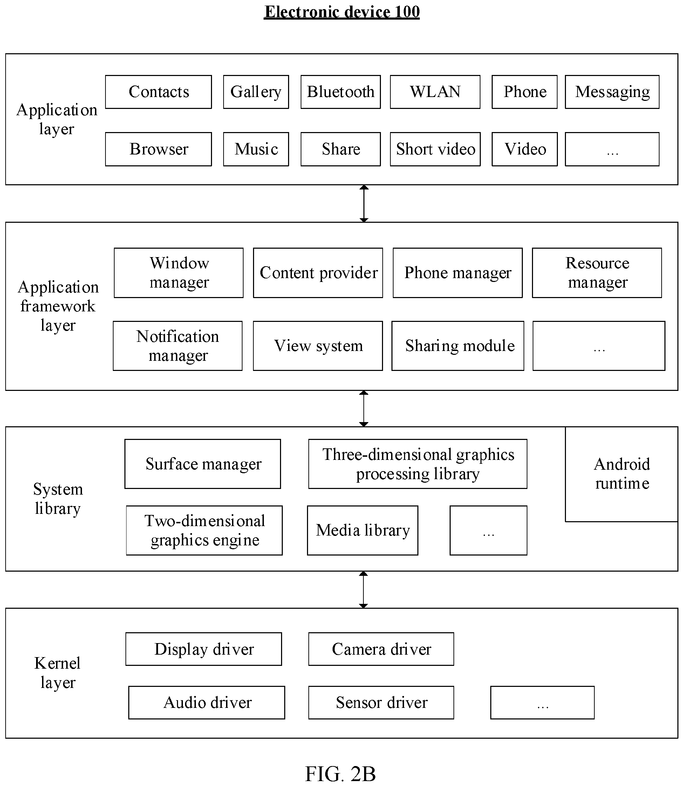

FIG. 2B is an example of a diagram of a software architecture of an electronic device 100. FIG. 2B describes an example of a software structure of the electronic device 100 by using an Android system with a layered architecture as an example.

In a layered architecture, software is divided into several layers, and each layer has a clear role and task. The layers communicate with each other through a software interface. In an implementation, the Android system is divided into four layers: an application layer, an application framework layer, an Android runtime (Android runtime) and system library, and a kernel layer from top to bottom.

The application layer may include a series of application packages.

As shown in FIG. 2B, the application package may include applications such as Contacts, Gallery, Bluetooth, WLAN, Phone, Messaging, Browser, Music, Share, Short video, and Video. A sharing application may provide real-time sharing functions such as viewing together, listening together, editing together, and playing together with one or more sharee devices such as a call party, a nearby device, and a far-field device. The sharing application may be an independent application, or may be a function component encapsulated by another application like Phone, Bluetooth, or WLAN. This is not limited in this application. In this application, the application package may also be replaced with software in another form such as an applet. The following embodiments are described by using an example in which a shared function component is integrated into Phone, Bluetooth, and WLAN.

The application framework layer provides an application programming interface (application programming interface, API) and a programming framework for an application at the application layer. The application framework layer includes some predefined functions.

As shown in FIG. 2B, the application framework layer may include a window manager, a content provider, a view system, a phone manager, a resource manager, a notification manager, a sharing module, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be used to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in the form of a graph or a scroll bar text, for example, a notification of an application that is run on a background, or may be a notification that appears on the screen in the form of a dialog window. For example, text information is displayed in the status bar, an alert tone is made, the electronic device vibrates, or the indicator light blinks.

The sharing module may be configured to implement real-time sharing functions such as viewing together, listening together, editing together, and playing together. The functions include, for example, but not limited to user experience (user experience, UX) display, providing a user interaction function (for example, receiving and responding to an operation of a user input), a service function, and service logic. The UX display includes, for example, but is not limited to, a display interface for initiating a real-time sharing operation like viewing together, listening together, editing together, and playing together (including a control for triggering a real-time sharing operation), a display interface for playing a real-time shared multimedia data stream, a display interface for selecting to-be-shared content, and a display interface for selecting a sharee device/sharee user (which may also be referred to as a shared object).

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer are run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (media library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports play and recording in a plurality of commonly used audio and video formats, and static image files. The media library may support a plurality of audio and video coding formats, for example, video coding formats of MPEG-4, H.264, and H.265, audio coding formats of MP3, AAC, AMR, SBC, LC3, aptX, LDAC, L2HC, WAV, and FLAC, and image coding formats of JPG, PNG, BMP, and GIF.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of the software and the hardware of the electronic device 100 with reference to a scenario of answering a call.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is an answer control of a phone application. The phone application invokes an interface of the application framework layer, then starts the audio driver by invoking the kernel layer, and plays voice information of a call party by using the receiver 170B and/or obtains voice information of a current user by using the microphone 170C.

In some embodiments, the software system of the electronic device 100 may include an application processor (application processor, AP) system and a wireless communication system.

The wireless communication system may include but is not limited to at least one of the following: a cellular communication system (for example, 2G/3G/4G/5G/6G), a satellite system (for example, BeiDou, Tiantong, and Starlink), Wi-Fi, BT, NFC, and D2D. In an implementation, the wireless communication system may include a coprocessor (CoProcessor, CP) and/or a digital signal processor (digital signal processor, DSP). In a terminal, the CP may be a baseband chip plus a coprocessor or a multimedia accelerator. The CP may include a digital component necessary for communicating with a network. The CP may include a processor that is based on a reduced instruction set computer (reduced instruction set computer, RISC) microprocessor (advanced RISC machines, ARM), and a DSP. The CP may have an operating system, and may communicate, through a high speed (high speed, HS) serial connection, with an application processor that runs an operating system like Android, iOS, or Windows. The CP may implement processing logic such as VR, AR, image processing, high-fidelity (high-fidelity, Hi-Fi), high-speed data transmission (high data rate, HDR), and sensor management. The CP is not limited thereto. The CP may alternatively be a cellular modem (cellular processor, CP).

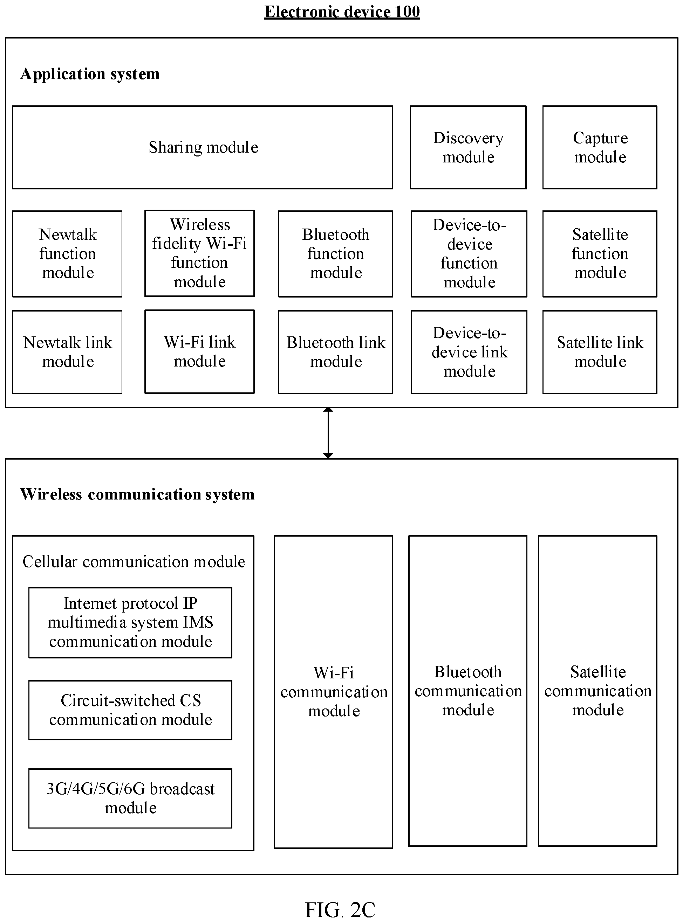

An application system is used to implement control logic such as rendering and presentation of a user interface, input and response of a user operation, a service function, and playing of multimedia data such as an audio/a video. For a specific example of the software system, refer to FIG. 2C to FIG. 2E.

FIG. 2C is an example of a diagram of a software architecture of another electronic device 100.

As shown in FIG. 2C, an application system of the electronic device 100 includes a sharing module, a discovery module, a capture module, a NewTalk (NewTalk) function module, a Wi-Fi function module, a BT function module, a D2D function module, a satellite (Satellite) function module, a NewTalk link (Link) module, a Wi-Fi link module, a BT link module, a D2D link module, and a satellite link module.

The sharing module may be understood as a core function module for real-time sharing such as View (View) together, Listen (Listen) together, Play (Play) together, and Edit (Edit) together. The sharing module is referred to as, for example, Together (View/Listen/Play/Edit). The sharing module may be used for UX display, for example, but not limited to: a display interface for initiating a real-time sharing operation like viewing together, listening together, editing together, and playing together (including a control for triggering a real-time sharing operation), a display interface for playing a real-time played multimedia data stream, a display interface for selecting to-be-shared content, and a display interface for selecting a sharee device/sharee user (which may also be referred to as a to-be-shared object). This not limited thereto. The sharing module may be further configured to provide a user interaction function of real-time sharing, provide a related service function of real-time sharing, and implement service logic of real-time sharing. This is not limited in this application.

The discovery module is configured to discover a nearby device by using a near field communication technology like Wi-Fi, BT, or D2D, and the discovery module is referred to as, for example, Nearby. This not limited thereto. A device may be discovered by using a far field communication technology like a cellular communication technology or a satellite. A communication technology for discovering the device is not limited in this application.

The capture module is configured to capture to-be-shared data. In some examples, the capture module may obtain, through an interface of an application and/or a system, a multimedia data stream after decoding (which can be directly played) or a multimedia data stream before decoding (for example, generated original data). For example, the multimedia data stream after decoding is data that can be directly played and that is obtained by processing for a specific electronic device 100. In order to ensure play effect of to-be-shared data on the sharee device, the capture module may capture the multimedia data stream before decoding for real-time sharing. In some other examples, the capture module may directly capture, at the system layer, a multimedia data stream before decoding. For example, after the electronic device 100 receives, by using a 3G/4G/5G/6G broadcast module, broadcast data sent by a base station, the electronic device 100 may report the broadcast data to the system layer by using a cellular communication network interface controller (not shown) at a kernel layer. The electronic device 100 may not play the broadcast data, but the capture module obtains the broadcast data for real-time sharing.

The NewTalk function module is configured to implement a real-time sharing function through NewTalk. NewTalk may be, but is not limited to, an operator call and/or an OTT call, and NewTalk is implemented, for example, but not limited to, in a cellular communication manner. In an implementation, the NewTalk function module may implement real-time sharing through NewTalk that is in a call (which may be briefly referred to as a call state). In another implementation, the NewTalk function module may implement real-time sharing through NewTalk that is not in a call (which may be briefly referred to as a non-call state).

The Wi-Fi function module is configured to implement real-time sharing through Wi-Fi. Wi-Fi communication may be implemented in a transmission manner such as unicast (unicast), broadcast (broadcast), or multicast (multicast) (which may also be referred to as groupcast).

The BT function module is configured to implement real-time sharing through BT. BT communication may be implemented in a transmission manner such as unicast, broadcast, or multicast.

The D2D function module is configured to implement real-time sharing through D2D.

The satellite function module is configured to implement real-time sharing by using a communication satellite.

The NewTalk link module is configured to manage a NewTalk link, including, for example, but not limited to link establishment, link release, and data transmission. In an implementation, the NewTalk link may include a primary link and an auxiliary link.

The Wi-Fi link module is configured to manage a Wi-Fi link, including, for example, but not limited to link establishment, link release, and data transmission.

The BT link module is configured to manage a BT link, including, for example, but not limited to link establishment, link release, and data transmission.

The D2D link module is configured to manage a D2D link, including, for example, but not limited to link establishment, link release, and data transmission.

The satellite link module is configured to manage a communication satellite link, including, for example, but not limited to link establishment, link release, and data transmission.

As shown in FIG. 2C, a wireless communication system of the electronic device 100 includes a cellular communication module, a Wi-Fi communication module, a BT communication module, and a satellite communication module.

The cellular communication module (modem) includes an internet protocol (internet protocol, IP) multimedia subsystem (IP multimedia subsystem, IMS) communication module, a circuit switched (circuit switched, CS) communication module, and the 3G/4G/5G/6G broadcast module. The IMS communication module may implement, but is not limited to IMS protocol-based calls such as voice over LTE (voice over LTE, VoLTE), video over LTE (video over LTE, ViLTE), voice over NR (voice over NR, VoNR), video over NR (video over NR, ViNR), voice over Wi-Fi (voice over Wi-Fi, VoWiFi), video over Wi-Fi (video over Wi-Fi, ViWiFi), and evolved packet system-fallback (evolved packet system-Fallback, EPS-Fallback). The CS communication module may provide a CS fallback function.

The 3G/4G/5G/6G broadcast module may be configured to listen to a 3G/4G/5G/6G broadcast channel. The electronic device 100 may be located in a coverage area of at least one base station. Any base station in the at least one base station may send broadcast data (for example, an audio stream, a video stream, or other multimedia data) to an electronic device (including the electronic device 100) in the coverage area over a broadcast channel. Any base station may maintain at least one channel, and different channels may correspond to different broadcast data. In some examples, the user may select, by using the electronic device 100, a channel corresponding to the received broadcast data. In some examples, the electronic device 100 may receive, through the 3G/4G/5G/6G broadcast module, the broadcast data sent by the base station, and the 3G/4G/5G/6G broadcast module may report, by using the cellular communication network interface controller (not shown) at the kernel layer, the broadcast data to the system layer for processing. In some examples, the electronic device 100 may play the received broadcast data by using a system application (for example, a call) or a third-party application (for example, a chat application or a conference application), and the electronic device 100 may share the played content to another device. In some other examples, the electronic device 100 may not play the received broadcast data, but directly share the received broadcast data to another device, or share the processed broadcast data to another device.

The Wi-Fi communication module may include a Wi-Fi communication hardware module, for example, firmware and a chip.

The BT communication module may include a BT communication hardware module, for example, firmware and a chip.

The satellite communication module may include a satellite communication hardware module, for example, firmware and a chip.

As shown in FIG. 2C, a real-time sharing function based on a far field communication manner such as NewTalk or a satellite and a near field communication manner such as Wi-Fi, BT, and D2D is uniformly implemented through the sharing module. In an implementation, various radio access technologies (radio access technology, RAT) of the near field communication manner and the far field communication manner may be responsible for only communication link management. For example, link modules for these communication manners are responsible for communication link management, and some service (service) functions (for example, but not limited to security and encoding/decoding) may be implemented through the sharing module. This not limited thereto. In another implementation, some service (service) functions (for example, but not limited to security and encoding/decoding) may alternatively be implemented through function modules for corresponding communication manners.

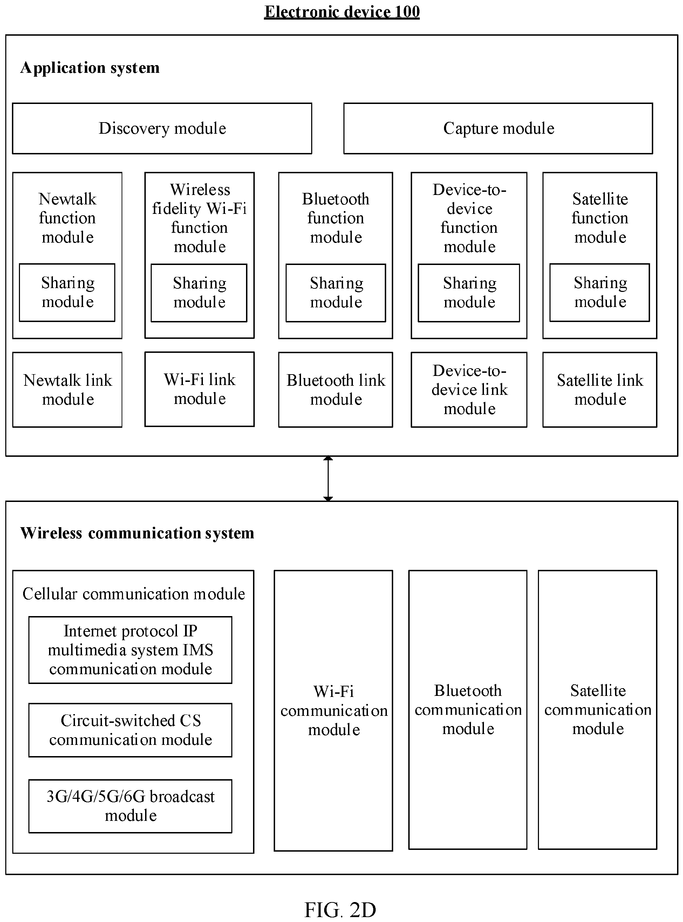

A software architecture is not limited to a diagram shown as FIG. 2C. In some other embodiments, for a diagram of a schematic software of the electronic device 100, refer to FIG. 2D. FIG. 2D is similar to FIG. 2C. A difference lies in that in FIG. 2D, real-time sharing functions such as viewing together, listening together, playing together, and editing together in a far field communication manner like NewTalk or a satellite and a near field communication manner like Wi-Fi, BT, or D2D are independent of each other, and function modules in these communication manners may be integrated with the sharing module.

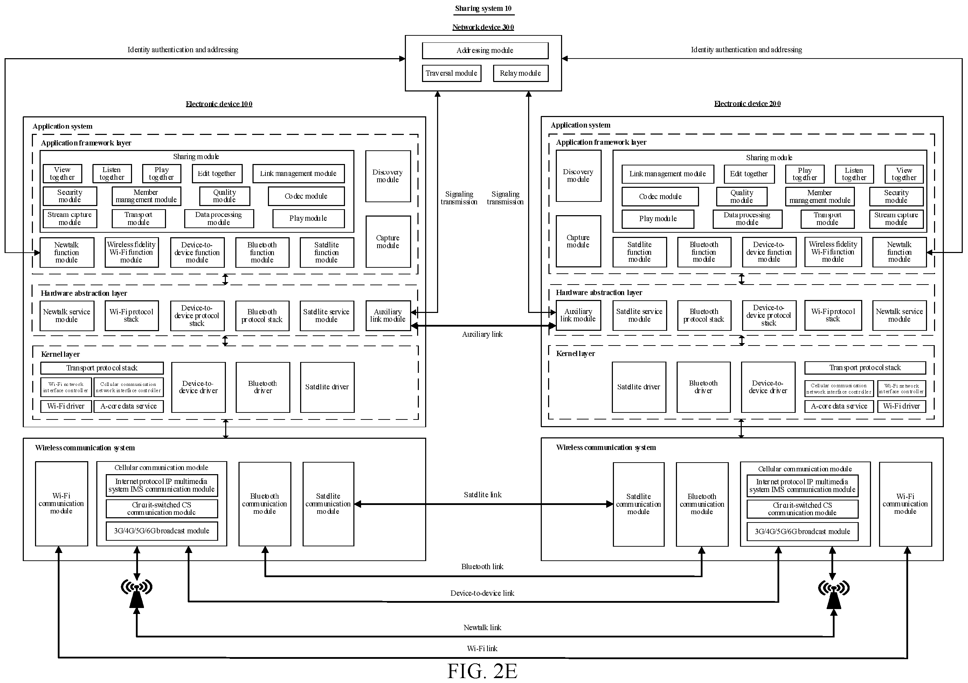

The foregoing describes a hardware structure and a software architecture of the electronic device. The following describes an example of a communication architecture of the sharer device and the sharee device with reference to FIG. 2E. For functions and possible implementations of some modules in FIG. 2E, refer to descriptions of the software architecture of the electronic device in the foregoing embodiment, for example, descriptions of the electronic device 100 shown in FIG. 2C.

FIG. 2E is an example of a diagram of an architecture of another sharing system 10.

As shown in FIG. 2E, the sharing system 10 may include an electronic device 100, an electronic device 200, and a network device 300. Real-time sharing such as viewing together, listening together, playing together, and editing together may be performed between the electronic device 100 and the electronic device 200. The network device 300 may include at least one server. For example, the network device 300 is a server cluster including a plurality of servers. Any server may be a hardware server, or may be a cloud server, for example, a web server, a background server, an application server, or a download server.

The electronic device 100 is used as an example to describe an architecture of a software system of the electronic device, and the electronic device 200 is described in a similar way.

In an implementation, as shown in FIG. 2E, an application system (AP) of the electronic device 100 may be divided into three layers from top to bottom: an application framework (framework, FW) layer, a hardware abstraction layer (hardware abstraction layer, HAL), and a kernel (kernel) layer. The application framework layer includes a sharing module, a discovery module, a capture module, a NewTalk function module, a Wi-Fi function module, a BT function module, a D2D function module, and a satellite function module. The sharing module may include a view (View) together function module, a listen (Listen) together function module, a play (Play) together function module, an edit (Edit) together function module, a link management module, a security module, a member management module, a quality module, a codec module, a stream capture module, a transmission module, a data processing module, and a play module.

The link management (Link Manager) module is configured to uniformly manage a link in a far field communication manner like NewTalk or a satellite and a link in a near field communication manner like Wi-Fi, BT, or D2D. Link management includes, for example, but are not limited to operations such as establishing, maintaining, and destroying one or more physical links. The one or more physical links may include at least one of the following links: a NewTalk primary link, a NewTalk auxiliary link, a satellite link, a D2D link, a BT broadcast link, a BT unicast link, a Wi-Fi broadcast link, and a Wi-Fi unicast link.

The security (Security) module may be configured to implement, but is not limited to, security functions such as certificate authentication and encryption/decryption.

The member management (Member Manager) module is configured to manage a member (device/user) that performs real-time sharing. In some examples, the member that performs real-time sharing may be added or deleted. For example, when the electronic device 100 is a sharer device, the electronic device 100 may select a device/user to share and view a device/user that is playing shared content, cancel sharing to some devices/users, and the like. The member management module may manage, based on, but not limited to, identification information such as address information of the device and name information of the user, the member that performs real-time sharing.

The quality module is configured to control quality of experience (quality of experience, QoE) of a user who performs real-time sharing.

The codec (Codec) module is configured to: encode and decode data such as an audio (Audio), a video (Video), and a voice (Speech).

The stream capture (CaptureStream) module is an adaptation module of a stream capture function, and may be configured to capture, but not limited to, data streams such as an audio, a video, and a voice.

The transmission module is configured to manage a transmission function in a far field communication manner like NewTalk or a satellite and a near field communication manner like Wi-Fi, BT, or D2D.

The data processing module may implement at least one data processing policy, for example, including, but not limited to, slice (Slice), aggregation (Aggregation), and redundancy (Redundancy).

The play (PlayStream) module is an adaptation module of a play function, and may be configured to play, but not limited to, data streams such as an audio, a video, and a voice.

The HAL may include a NewTalk service module, a Wi-Fi protocol stack, a D2D protocol stack, a BT protocol stack, a satellite service module, and an auxiliary link module. The Wi-Fi protocol stack may implement Wi-Fi unicast, multicast, and broadcast communication. The BT protocol stack implements BT unicast, multicast, and broadcast communication. In an implementation, the auxiliary link module may include an end-side service module for network address translation (network address translation, NAT) traversal and/or relay, which is referred to as, for example, NATService. Traversal (session traversal utilities for NAT, STUN) may be understood as a P2P technology for direct communication between two points. Relay (traversal using relays around NAT, TURN) may be that a network device like a server is responsible for forwarding data between two communication parties, to implement communication between two points. This not limited thereto. The auxiliary link module may include a real-time communication (real-time communication, RTC) service module. The service module implements data transmission of the auxiliary link by using, for example, a real-time network (real-time network, RTN), to further improve transmission efficiency and quality.

The kernel layer may include a transport protocol stack, a Wi-Fi network interface controller (network interface controller, NIC), a Wi-Fi driver (driver), a cellular communication network interface controller, an A-core data service (A-core data service, ADS), a D2D driver, a Bluetooth driver, and a satellite driver. The transport protocol stack may include but is not limited to a transmission control protocol (transmission control protocol, TCP)/an IP protocol stack. A full name of the cellular communication network interface controller in English may be remote (wireless wide area) network, and may be briefly referred to as RMNET. RMNET may be a remote network interface controller provided by using a modem or another external device as an operating system, and may form a virtual network interface controller device in a kernel of the operating system. For example, the end-side networking manner and a network interface controller device may be used in a modem chip. The Bluetooth driver is, for example, a Bluetooth low energy consumption (Bluetooth low energy, BLE) control (Control) module, and is configured to control BLE signaling.

The network device 300 may include an addressing (wiseFunction) module, a (NAT) traversal (STUN) module, and a (NAT) relay (TURN) module.

The addressing module is configured to perform identity authentication and addressing for establishing a link. For example, the NewTalk function module of the electronic device 100 may implement access token (access token, AT) authentication and exchange of a session (Session) identity document (identity document, ID) for NAT traversal through the addressing module of the network device 300, and the electronic device 100 may obtain a session ID of the electronic device 200. Similarly, a NewTalk function module of the electronic device 200 may also implement AT authentication and exchange of a NAT traversal session ID through the addressing module of the network device 300, and the electronic device 200 may obtain a session ID of the electronic device 100. The session ID may be used to establish a link, for example, a NAT traversal link or a NAT relay link.

The (NAT) traversal module is configured to implement establishment of a NAT traversal link and signaling transmission. For example, the auxiliary link module of the electronic device 100 and an auxiliary link module of the electronic device 200 may establish a P2P traversal link (an auxiliary link) through the NAT traversal module of the network device 300 and perform signaling transmission through the link.

The (NAT) relay module is configured to implement establishment of a NAT relay link and signaling transmission. For example, the auxiliary link module of the electronic device 100 and the auxiliary link module of the electronic device 200 may establish a relay link (an auxiliary link) through a NAT relay module of the network device 300 and perform signaling transmission through the link.

As shown in FIG. 2E, a communication link between the electronic device 100 and the electronic device 200 may include at least one of the following:
Link 1: a NewTalk link. The NewTalk link may include an IMS communication link and a CS communication link. The IMS communication link may be, but is not limited to, a multimedia channel of a QoS class identifier (QoS class identifier, QCI) 1/QCI2, or a data channel (Data channel). In some examples, the NewTalk link may be established through a cellular communication module of the electronic device 100 and a cellular communication module of the electronic device 200. For example, the cellular communication module of the electronic device 100 is connected to a base station 1, the base station 1 is connected to a base station 2, and the base station 2 is connected to the cellular communication module of the electronic device 200. The NewTalk link is a communication link between the cellular communication module of the electronic device 100 and the cellular communication module of the electronic device 200. In some examples, the NewTalk link is used to implement an operator call (for example, through the cellular communication module) and/or an OTT call.
Link 2: a Wi-Fi link. The Wi-Fi link may include a unicast link, a multicast link, and/or a broadcast link. In some examples, the Wi-Fi link may be established through a Wi-Fi communication module of the electronic device 100 and a Wi-Fi communication module of the electronic device 200. In some examples, the Wi-Fi link is used to implement Wi-Fi communication.
Link 3: a BT link. The BT link may include a unicast link, a multicast link, and/or a broadcast link. In some examples, the BT link may be established through a BT communication module of the electronic device 100 and a BT communication module of the electronic device 200. In some examples, the BT link is used to implement BT communication.
Link 4: D2D link. In some examples, the D2D link may be established through a cellular communication module of the electronic device 100 and a cellular communication module of the electronic device 200. In some other examples, the D2D link may be established through a Wi-Fi communication module of the electronic device 100 and a Wi-Fi communication module of the electronic device 200. In some other examples, the D2D link may be established through a D2D communication module (not shown in FIG. 2E) in a wireless communication system of the electronic device 100 and a D2D communication module (not shown in FIG. 2E) in a wireless communication system of the electronic device 200. In some examples, the D2D link is used to implement D2D communication.
Link 5: a satellite link. In some examples, a satellite link may be established through a satellite communication module of the electronic device 100 and a satellite communication module of the electronic device 200. In some examples, the satellite link is used to implement satellite communication.
Link 6: an auxiliary link. The auxiliary link may be NAT traversal (P2P direct transmission) and/or NAT relay. In some examples, the auxiliary link is established in a call state. In some other examples, the auxiliary link is established in a non-call state. A physical channel of the auxiliary link may be, but is not limited to, a communication link like a NewTalk link, a Wi-Fi link, a BT link, a D2D link, or a satellite link. For a specific establishment manner, refer to descriptions of the link 1 to the link 5. Details are not described again. In some examples, the auxiliary link is used to implement an operator call and/or an OTT call.

In some embodiments, the electronic device 100 and the electronic device 200 may select, according to a requirement of a transmission scenario, to establish at least one of the link 1 to the link 5 (any one or a combination of a plurality of links). For example, when the electronic device 100 and the electronic device 200 are close to each other, the link 3 and the link 4 may be established. Establishing a plurality of links can avoid a case in which communication fails or communication quality is poor when one link is abnormal. This improves communication stability.

Examples of uplink/downlink data streams of different communication links are described based on the software system of the electronic device shown in FIG. 2E. The following examples are described by using an example in which the electronic device 100 is a sharer device and the electronic device 200 is a sharee device.

Example 1: An uplink data stream of the NewTalk link (a data flow direction in the software system of the electronic device 100) is the capture module -> the sharing module (the stream capture module -> the codec module (for example, used for encoding) -> the data processing module (for example, used for packet encapsulation) -> the transmission module (for example, used for splitting)) -> the NewTalk function module -> the NewTalk service module -> the transport protocol stack -> the cellular communication network interface controller -> the ADS -> the cellular communication module -> an air interface. A downlink data stream of the NewTalk link (a data flow direction in a software system of the electronic device 200) is an air interface -> a cellular communication module -> an ADS -> a cellular communication card -> a transport protocol stack -> the NewTalk service module -> a NewTalk function module -> a sharing module (a transmission module (for example, used for aggregation) -> a data processing module (for example, used for packet decapsulation) -> a codec module (for example, used for decoding) -> a play module).

Example 2: An uplink data stream of the Wi-Fi link (a data flow direction in the software system of the electronic device 100) is the capture module -> the sharing module (the stream capture module -> the codec module (for example, used for encoding) -> the data processing module (for example, used for packet encapsulation) -> the transmission module (for example, used for splitting)) -> the Wi-Fi function module -> the Wi-Fi protocol stack -> the transport protocol stack -> the Wi-Fi network interface controller -> the Wi-Fi driver -> the Wi-Fi communication module -> an air interface. A downlink data stream of the Wi-Fi link (a data flow direction in a software system of the electronic device 200) is an air interface -> the Wi-Fi communication module -> a Wi-Fi driver -> a Wi-Fi network interface controller -> a transport protocol stack -> a Wi-Fi protocol stack -> a Wi-Fi function module -> a sharing module (a transmission module (for example, used for aggregation) -> a data processing module (for example, used for packet decapsulation) -> a codec module (for example, used for decoding) -> a play module).

Example 3: An uplink data stream of the BT link (a data flow direction in the software system of the electronic device 100) is the capture module -> the sharing module (the stream capture module -> the codec module (for example, used for encoding) -> the data processing module (for example, used for packet encapsulation) -> the transmission module (for example, used for splitting)) -> the BT function module -> the BT protocol stack -> a BT driver -> the BT communication module -> an air interface. A downlink data stream of the BT link (a data flow direction in a software system of the electronic device 200) is an air interface -> a BT communication module -> a BT driver -> a BT protocol stack -> a BT function module -> a sharing module (a transmission module (for example, used for aggregation) -> a data processing module (for example, used for packet decapsulation) -> a codec module (for example, used for decoding) -> a play module).

Example 4: An uplink data stream of the D2D link (a data flow direction in the software system of the electronic device 100) is the capture module -> the sharing module (the stream capture module -> the codec module (for example, used for encoding) -> the data processing module (for example, used for packet encapsulation) -> the transmission module (for example, used for splitting)) -> the D2D function module -> the D2D protocol stack -> the D2D driver -> the cellular communication module/the Wi-Fi communication module -> an air interface. A downlink data stream of the D2D link (a data flow direction in a software system of the electronic device 200) is an air interface -> the cellular communication module/Wi-Fi communication module -> a D2D driver -> a D2D protocol stack -> a D2D function module -> a sharing module (a transmission module (for example, used for aggregation) -> a data processing module (for example, used for packet decapsulation) -> a codec module (for example, used for decoding) -> a play module). This is not limited thereto. In some other examples, the D2D driver in the uplink data stream of the D2D link may alternatively be replaced with: the transport protocol stack -> the cellular communication network interface controller -> the ADS. In this case, the cellular communication module/Wi-Fi communication module is specifically a cellular communication module. The D2D driver in the downlink data stream of the D2D link may alternatively be replaced with: an ADS -> a cellular communication network interface controller -> a transport protocol stack. In this case, the cellular communication module/Wi-Fi communication module is specifically a cellular communication module. In some other examples, the D2D driver in the uplink data stream of the D2D link may alternatively be replaced with: the transport protocol stack -> the Wi-Fi network interface controller -> the Wi-Fi driver. In this case, the cellular communication module/Wi-Fi communication module is specifically a Wi-Fi communication module. The D2D driver in the downlink data stream of the D2D link may alternatively be replaced with: a Wi-Fi driver->a Wi-Fi network interface controller -> a transport protocol stack. In this case, the cellular communication module/Wi-Fi communication module is specifically a Wi-Fi communication module. In some other examples, the cellular communication module/Wi-Fi communication module in the uplink data stream/downlink data stream of the D2D link may be changed to a D2D communication module (not shown in FIG. 2E), and the D2D communication module may include a hardware module for D2D communications, for example, firmware and a chip.

Example 5: An uplink data stream of the satellite link (a data flow direction in the software system of the electronic device 100) is the capture module -> the sharing module (the stream capture module -> the codec module (for example, used for encoding) -> the data processing module (for example, used for packet encapsulation) -> the transmission module (for example, used for splitting)) -> the satellite function module -> the satellite service module -> the satellite driver -> the satellite communication module -> an air interface. A downlink data stream of the satellite link (a data flow direction in a software system of the electronic device 200) is an air interface -> the satellite communication module -> a satellite driver -> a satellite service module -> a satellite function module -> a sharing module (a transmission module (for example, used for aggregation) -> a data processing module (for example, used for packet decapsulation) -> a codec module (for example, used for decoding) -> a play module).

Example 6: An uplink data stream of the auxiliary link (a data flow direction in the software system of the electronic device 100) is the capture module -> the sharing module (the stream capture module -> the codec module (for example, used for encoding) -> the data processing module (for example, used for packet encapsulation) -> the transmission module (for example, used for splitting)) -> the NewTalk function module -> the NewTalk service module -> the auxiliary link module -> a NewTalk/Wi-Fi/BT/D2D/ satellite transmission module -> an air interface. A downlink data stream of the auxiliary link (a data flow direction in a software system of the electronic device 200) is an air interface ->a NewTalk/Wi-Fi/BT/D2D/ satellite transmission module -> the auxiliary link module -> a NewTalk service module -> a NewTalk function module -> a sharing module (a transmission module (for example, used for aggregation) -> a data processing module (for example, used for packet decapsulation) -> a codec module (for example, used for decoding) -> a play module).

In an implementation, the physical channel of the auxiliary link is a NewTalk link. The NewTalk transmission module in the uplink data stream of the auxiliary link is the transport protocol stack -> the cellular communication network interface controller -> the ADS -> the cellular communication module. The NewTalk transmission module in the downlink data stream of the auxiliary link is the cellular communication module -> the ADS -> the cellular communication network interface controller -> the transport protocol stack.

In another implementation, the physical channel of the auxiliary link is a Wi-Fi link. The Wi-Fi transmission module in the uplink data stream of the auxiliary link is the transport protocol stack -> the Wi-Fi network interface controller -> the Wi-Fi driver -> the Wi-Fi communication module. The Wi-Fi transmission module in the downlink data stream of the auxiliary link is the Wi-Fi communication module -> the Wi-Fi driver -> the Wi-Fi network interface controller -> the transport protocol stack.

In another implementation, the physical channel of the auxiliary link is a BT link. The BT transmission module in the uplink data stream of the auxiliary link is the BT driver -> the BT communication module. The BT transmission module in the downlink data stream of the auxiliary link is the BT communication module -> the BT driver.

In another implementation, the physical channel of the auxiliary link is a D2D link. The D2D transmission module in the uplink data stream of the auxiliary link is the D2D driver -> the cellular communication module/the Wi-Fi communication module/the D2D communication module. The D2D transmission module in the downlink data stream of the auxiliary link is the cellular communication module/the Wi-Fi communication module/the D2D communication module -> the D2D driver. The D2D driver may alternatively be replaced with another module described in Example 4. For details, refer to descriptions in Example 4.

In another implementation, the physical channel of the auxiliary link is a satellite link. The satellite transmission module in the uplink data stream of the auxiliary link is the satellite driver -> the satellite communication module. The satellite transmission module in the downlink data stream of the auxiliary link is the satellite communication module -> the satellite driver.

The following describes an example of an application scenario in embodiments of this application and an example of a user interface (user interface, UI) in the application scenario. The following examples are described by using an example in which the electronic device 100 is a sharer device.

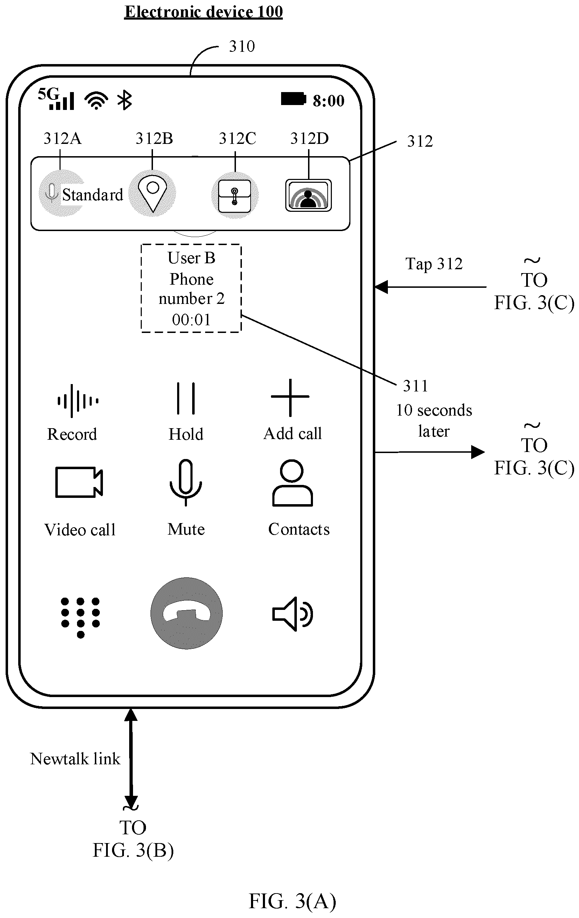

FIG. 3(A) to FIG. 3(C) are an example of a diagram of a call interface.

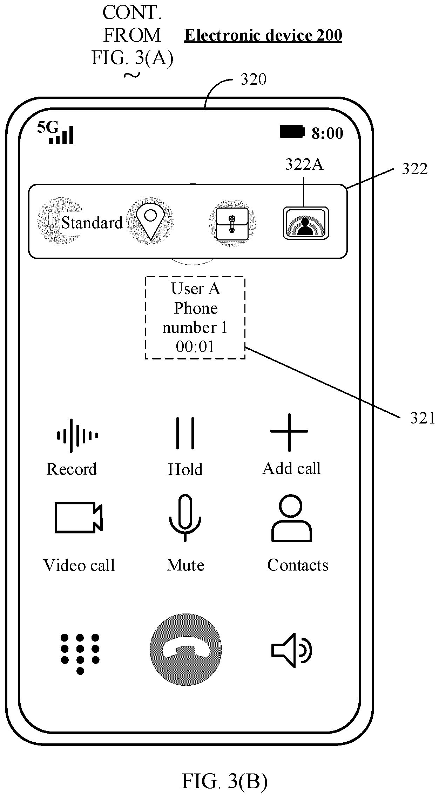

As shown in FIG. 3(A) to FIG. 3(C), NewTalk such as an operator call/OTT call may be performed between an electronic device 100 (user A, phone number 1) and an electronic device 200 (user B, phone number 2). As shown in FIG. 3(A), the electronic device 100 may display a user interface 310 of a phone application (which may be briefly referred to as a call interface 310). The call interface 310 includes call information 311 and a floating window 312. The call information 311 includes information about a call party (a contact name of "User B" and a communication number of "Phone number 2") and call duration of "One second". The floating window 312 includes a plurality of options, for example, an option 312A used to switch a call mode, an option 312B used to send location information, an option 312C used to send a file, and a sharing option 312D. As shown in FIG. 3(B), the electronic device 200 may display a user interface 320 of a phone application. Like the call interface 310, the user interface 320 also includes call information 321 and a floating window 322. The call information 321 includes information about a call party (a contact name of "User A" and a communication number of "Phone number 1") and call duration of "One second". The floating window 322 is consistent with the floating window 312, and the floating window 322 also includes a sharing option 322A.

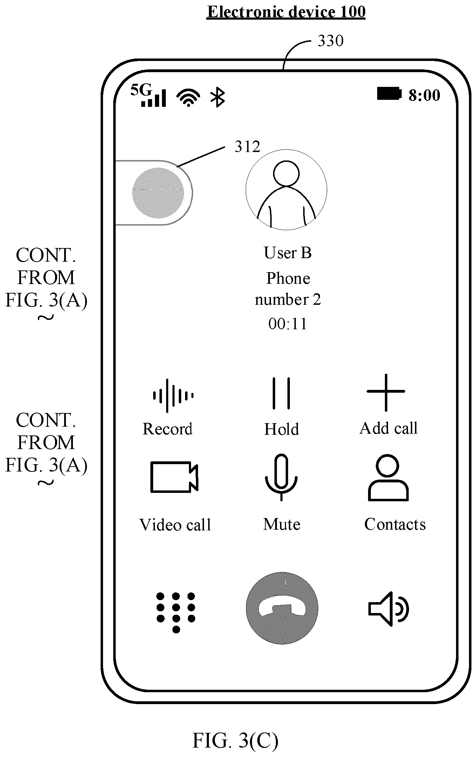

In an implementation, that after displaying the floating window 312 on the call interface 310 for preset duration (for example, 10 seconds in FIG. 3(A)), the electronic device 100 may cancel displaying of detailed information of the floating window 312, but display an icon of the floating window 312 may be referred to as that the floating window 312 is collapsed after staying on the call interface 310 for the preset duration. For example, the floating window 312 may be collapsed against a left, right, top, or bottom edge of the screen. For a specific example, refer to the user interface 330 shown in FIG. 3(C). On the user interface 330 displayed by the electronic device 100, the floating window 312 is displayed in the form of an icon on a left edge of the screen. In an implementation, the electronic device 100 may display detailed information of the floating window 312 in response to a touch operation (for example, a tap operation) on the floating window 312 in the user interface 330 shown in FIG. 3(C), for example, display the call interface 310 shown in FIG. 3(A).

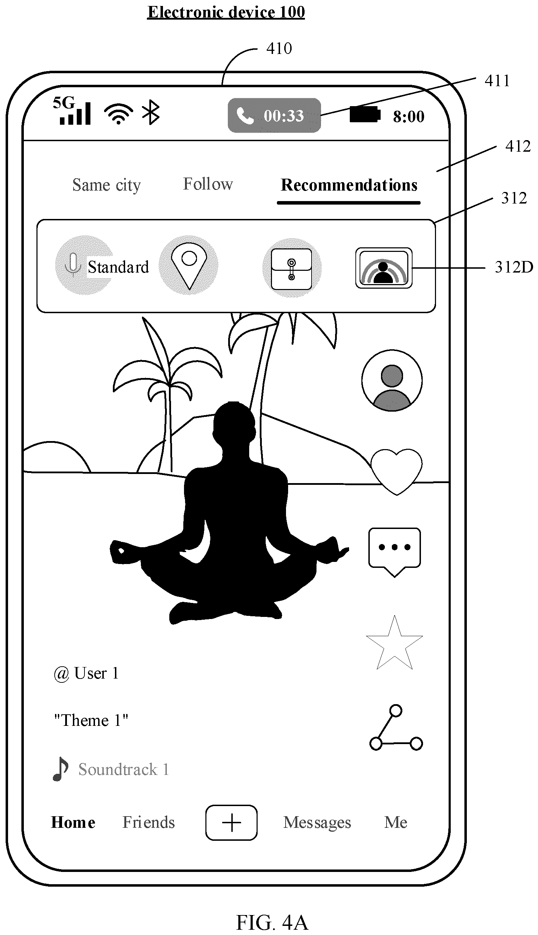

In an implementation, the electronic device 100 in a call state may display a user interface of another application after the user interface shown in FIG. 3(A) and the user interface shown in FIG. 3(B). In this case, a multimedia data stream of the application may be shared in real time to a call party and a nearby device. For a specific example, refer to FIG. 4A (in FIG. 4A, an example in which a multimedia data stream of a short video application is shared in real time to a call party, namely, the electronic device 200, is used for description).

As shown in FIG. 4A, the electronic device 100 may display a user interface 410 of the short video application, and the user interface 410 may include a call control 411 located at the top, a play window 412 of a short video, and the floating window 312. The call control 411 may represent that the electronic device 100 is currently in a call state and call duration is 33 seconds. The play window 412 is used to display a played short video, for example, a short video 1 named "Theme 1" and published by "User 1" is currently being played. In some examples, the sharing option 312D on the floating window 312 is used to trigger real-time sharing of a multimedia data stream of a foreground application (the short video application is used as an example for description in FIG. 4A) to a call party (the electronic device 200/user B).

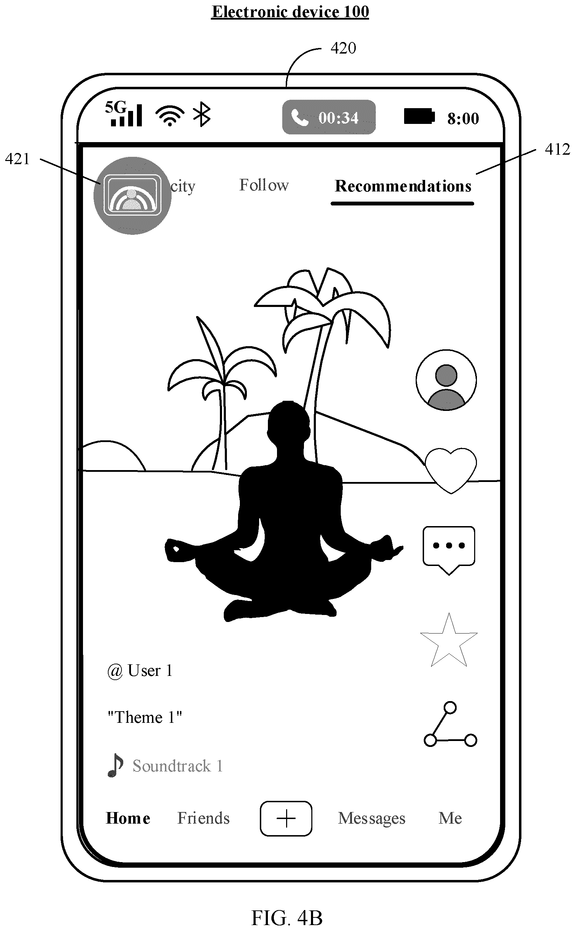

In an implementation, the electronic device 100 may send a sharing request to the electronic device 200 in response to a touch operation (for example, a tap operation) on the sharing option 312D in the user interface 410 shown in FIG. 4A. After the electronic device 200 accepts the sharing request, the electronic device 100 may send an audio stream (for example, an audio of the short video 1 and/or an audio collected by using a microphone) and/or a video stream (for example, an image of the short video 1 and/or an image collected by using a camera) related to the play window 412 to the electronic device 200 in a cellular communication manner. The electronic device 100 may display a user interface 420 shown in FIG. 4B. That compared with the user interface 410 shown in FIG. 4A, the user interface 420 does not include the floating window 312 and the play window 412 in the user interface 420 is in a selected state may represent that the audio stream and/or the video stream (shared content) related to the play window 412 is currently being shared. The user interface 420 further includes a sharing control option 421. The sharing control option 421 is used to trigger displaying of a sharing menu. The sharing menu includes, for example, but is not limited to, function options such as Pause sharing/Exit sharing, Change shared content, and Change a sharee device.

A communication manner in which the electronic device 100 sends the sharing request to the electronic device 200 may be a cellular communication manner in some examples or may be another communication manner like a near field communication manner in some other examples.

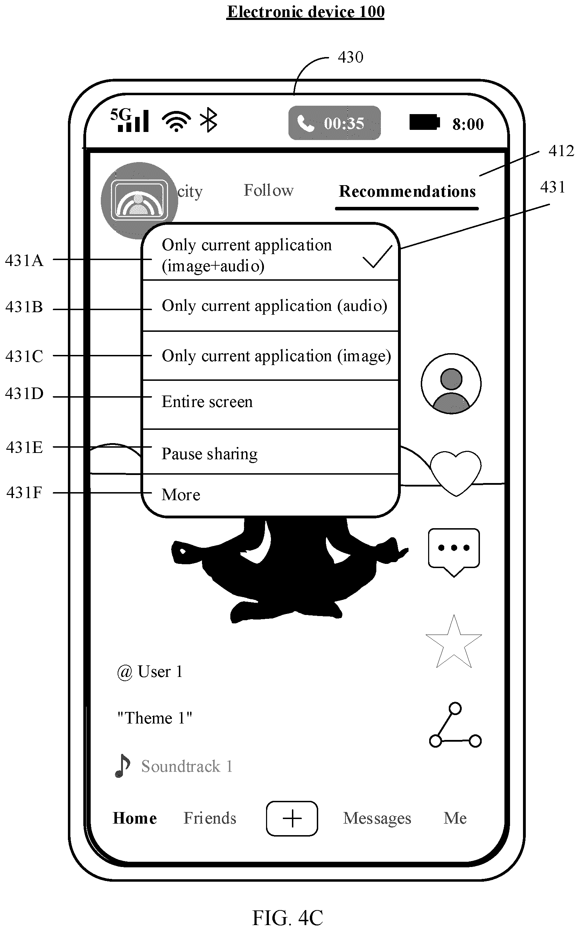

In an implementation, the electronic device 100 may display a sharing menu in response to a touch operation (for example, a tap operation) on the sharing control option 421 in the user interface 420 shown in FIG. 4B, for example, display a user interface 430 shown in FIG. 4C. Compared with the user interface 420 shown in FIG. 4B, the user interface 430 further includes a sharing menu 431. The sharing menu 431 may include a plurality of options, for example, an option 431A, an option 431B, an option 431C, an option 431D, an option 431E, and an option 431F. The option 431A includes characters "Only current application (image+audio)", and is used to set shared content to an image and an audio (for example, an image and an audio of the short video 1 played in the play window 412) of a foreground application (the short video application is used as an example for description in FIG. 4B). The option 431B includes characters "Only current application (audio)", and is used to set shared content to an audio of a foreground application (for example, an audio of the short video 1 played in the play window 412). The option 431C includes characters "Only current application (image)", and is used to set shared content to an image of a foreground application (for example, an image of the short video 1 played in the play window 412). The option 431D includes characters "Entire screen", and is used to set shared content to display content (for example, an image/an audio related to the user interface 430) of the screen of the electronic device 100. The option 431E includes characters "Pause sharing", and is used to cancel/pause/stop real-time sharing. The option 431F includes characters "More", and is used to trigger displaying of more function options, for example, whether to share an audio collected by using a microphone, whether to share an image collected by using a camera, whether to allow saving, and whether to allow forwarding.

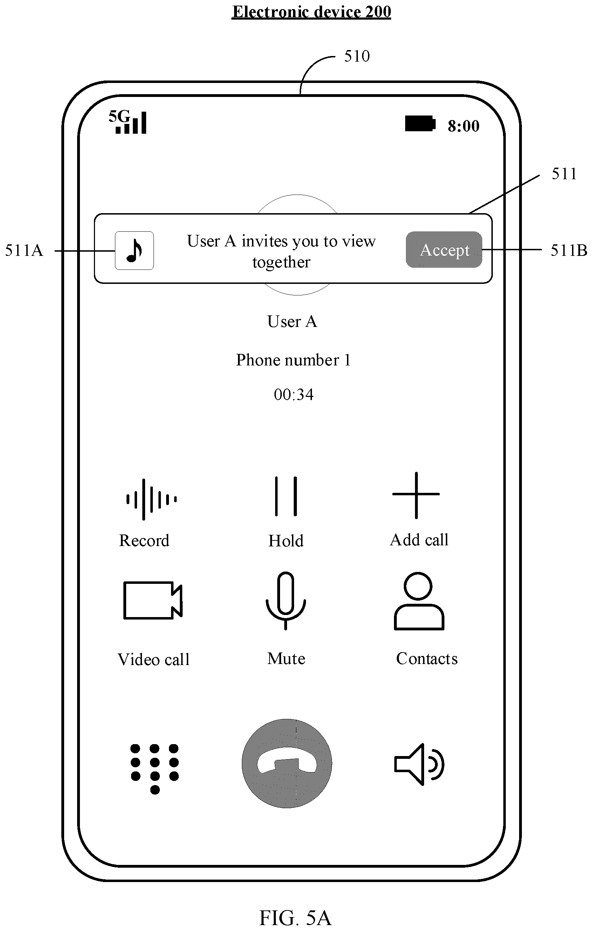

In an implementation, after FIG. 4A, when receiving the sharing request sent by the electronic device 100, the electronic device 200 may display prompt information, for example, display a user interface 510 shown in FIG. 5A. The user interface 510 is similar to the user interface 320 shown in FIG. 3(B). A difference lies in that the user interface 510 does not include the floating window 322, but includes prompt information 511. The prompt information 511 includes an icon 511A of a short video application to which shared content (an audio stream/a video stream of the short video 1 played in the play window 412 in the user interface 410 shown in FIG. 4A is used as an example) belongs, characters "User A invites you to view together", and an accept control 511B.

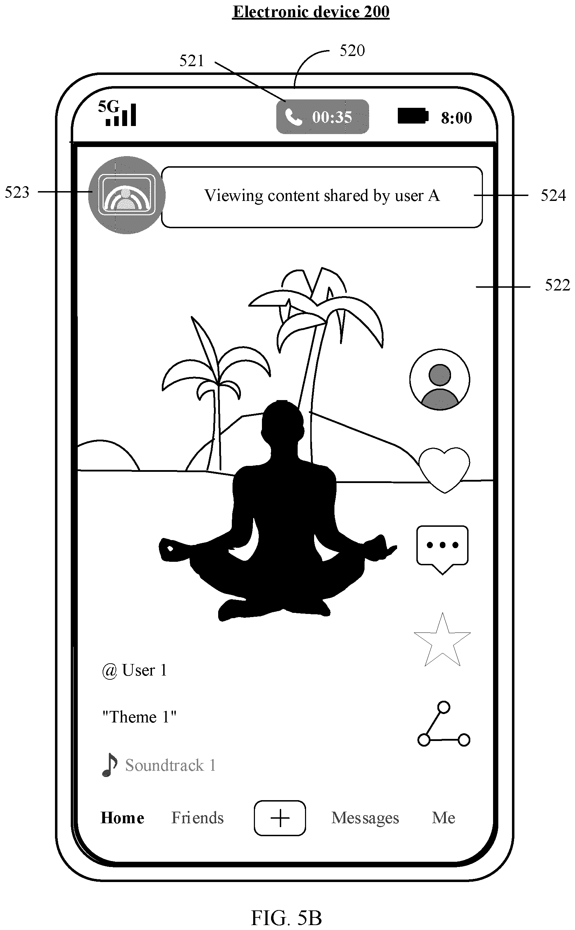

In an implementation, the electronic device 200 may receive, in a cellular communication manner in response to a touch operation (for example, a tap operation) on the accept control 511B in the user interface 510 shown in FIG. 5A, shared content sent by the electronic device 100, and display the shared content, for example, display a user interface 520 shown in FIG. 5B. The user interface 520 may include a call control 521 located at the top, a play window 522 of shared content, a sharing control option 523, and a prompt box 524. The call control 521 may represent that the electronic device 200 is currently in a call state and call duration is 35 seconds. The prompt box 524 includes characters "Viewing content shared by user A". The play window 522 is used to display shared content, for example, an image displayed in the play window 412 in the user interface 410 shown in FIG. 4A. The sharing control option 523 is used to trigger displaying of a sharing menu. The sharing menu includes, for example, but is not limited to, an option used to pause/exit playing of shared content.

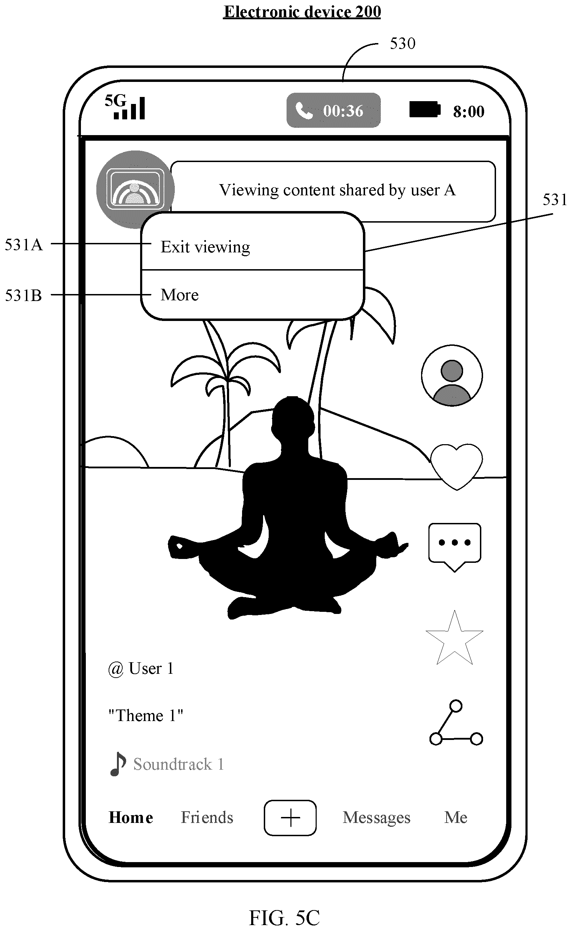

In an implementation, the electronic device 200 may display, in response to a touch operation (for example, a tap operation) on the sharing control option 523 in the user interface 520 shown in FIG. 5B, a user interface 530 shown in FIG. 5C. Compared with the user interface 520 shown in FIG. 5B, the user interface 530 further includes a sharing menu 531. The sharing menu 531 may include a plurality of options, for example, an option 531A and an option 531B. The option 531A includes characters "Exit viewing", and is used to pause/exit a play interface of shared content. The option 531B includes characters "More", and is used to trigger displaying of more function options, for example, an option used to trigger real-time sharing of an audio stream/a video stream with another user. The electronic device 200 may exit viewing currently played shared content in response to a touch operation (for example, a tap operation) on the option 531A, for example, display the user interface 320 shown in FIG. 3(B). In some examples, when receiving a sharing request sent by the electronic device 100 again, the electronic device 200 may accept the sharing request in response to a user operation, and play the shared content again, for example, display the user interface 520 shown in FIG. 5B.

In an implementation, the electronic device 200 may return to display a call interface in response to a touch operation (for example, a tap operation) on the call control 521 in the user interface 520 shown in FIG. 5B, for example, display the user interface 320 shown in FIG. 3(B). In the foregoing implementation, the electronic device 200 may work according to, but not limited to, the following three cases:
Case 1: After receiving the touch operation on the call control 521 in the user interface 520 shown in FIG. 5B, the electronic device 200 does not send a notification message to the electronic device 100. Therefore, the electronic device 100 continues to send shared content to the electronic device 200. In some examples, the electronic device 200 may run a play interface of the shared content in the background based on the received shared content.
Case 2: After receiving the touch operation on the call control 521 in the user interface 520 shown in FIG. 5B, the electronic device 200 sends a notification message to the electronic device 100. After receiving the notification message, the electronic device 100 does not send shared content to the electronic device 200.
Case 3: After receiving the touch operation on the call control 521 in the user interface 520 shown in FIG. 5B, the electronic device 200 sends a notification message to the electronic device 100. After receiving the notification message (for example, related to a resolution and/or a frame rate), the electronic device 100 reduces a transmission bandwidth of shared content (which is implemented by reducing, for example, a resolution, a frame rate, or a bit rate of the shared content), to reduce device power consumption and transmission resources. In some examples, the electronic device 200 may run a play interface of the shared content in the background based on the shared content received by reducing the transmission bandwidth.

This is not limited to the foregoing implementation. In another implementation, the electronic device 200 may display a call interface (for example, the user interface 320 shown in FIG. 3(B)) and a play interface of shared content (for example, the user interface 520 shown in FIG. 5B) on split screens in response to a touch operation (for example, a tap operation) on the call control 521 in the user interface 520 shown in FIG. 5B. This is not limited thereto. In another implementation, the electronic device 200 may display a call interface in response to a touch operation (for example, a tap operation) on the call control 521 in the user interface 520 shown in FIG. 5B, and display a play interface of shared content on the call interface in the form of a small floating window. A specific display manner is not limited in this application. In the foregoing two implementations, the electronic device 200 may work according to, but not limited to, the foregoing three cases. In some examples, in the case 1, after receiving the shared content, the electronic device 200 needs to first process the shared content (for example, reduce a resolution or reduce a frame rate), and then display the processed shared content on split screens or in the form of a small floating window.

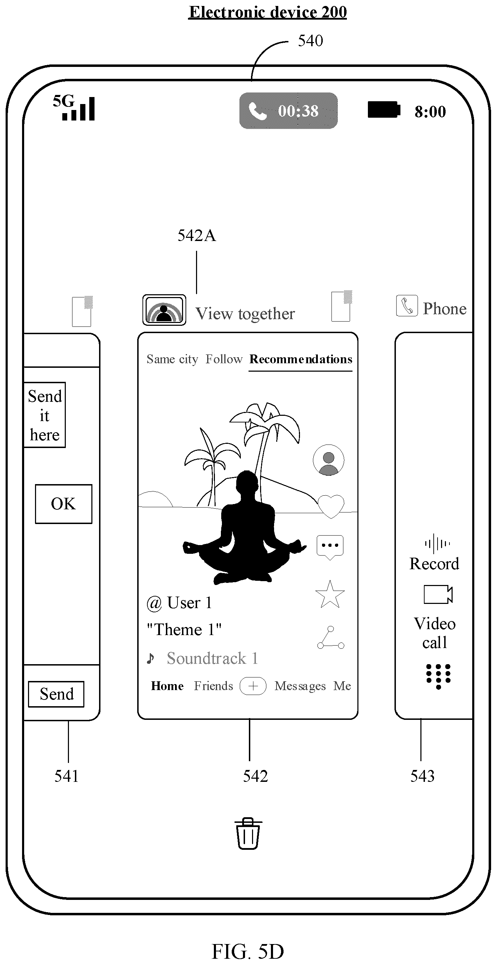

In an implementation, after the electronic device 200 returns to display a call interface (it is assumed that the user interface 320 shown in FIG. 3(B) is displayed), the electronic device 200 may replay shared content in response to a touch operation (for example, a tap operation) on the sharing option 322A in the floating window 322 shown in the user interface 320, for example, display the user interface 520 shown in FIG. 5B. This is not limited thereto. In another implementation, the electronic device 200 may display a user interface of a multi-task window/multi-task list in response to a touch operation (for example, sliding from bottom to top) on the call interface, for example, display a user interface 540 shown in FIG. 5D. The user interface 540 is used to display a window list. The window list includes at least one window running on the electronic device 200, for example, a window 541 of a messaging application, a real-time sharing window 542, and a window 543 of the phone application. The real-time sharing window 542 displays an icon of a real-time sharing function and characters "View together" 542A, and the real-time sharing window 542 is used to indicate a play window of shared content. The electronic device 200 may replay the shared content in response to a touch operation (for example, a tap operation) on the window 542. It may be understood that, when the electronic device 200 returns to display the call interface, the electronic device 200 runs a play interface of the shared content in the background, and replaying of the shared content by the electronic device 200 may be switching the shared content to running of the play interface of the shared content in the foreground.

In some examples, in the case 1, the electronic device 200 may directly replay the shared content based on the received shared content. In some other examples, in the case 2, the electronic device 200 may send a notification message to the electronic device 100 in response to the touch operation on the sharing option 322A in the floating window 322 shown in the user interface 320 or the touch operation on the window 542. After receiving the notification message, the electronic device 100 sends the shared content to the electronic device 200, so that the electronic device 200 can replay the shared content. In some other examples, in the case 3, the electronic device 200 may send a notification message to the electronic device 100 in response to the touch operation on the sharing option 322A in the floating window 322 shown in the user interface 320 or the touch operation on the window 542. After receiving the notification message, the electronic device 100 increases a transmission bandwidth of the shared content (which is implemented by increasing, for example, a resolution, a frame rate, or a bit rate of the shared content), and the electronic device 200 may replay the shared content based on the received shared content obtained by increasing the transmission bandwidth.

In an implementation, when displaying the call interface and the play interface of the shared content on split screens, the electronic device 200 may display the play interface of the shared content in full screen in response to a user operation on the play interface of the shared content (for example, dragging a drag bar between the call interface and the play interface of the shared content on a split-screen interface), for example, display the user interface 520 shown in FIG. 5B. A specific example is similar to the example in which the electronic device 200 returns to display the call interface. Details are not described again.

In an implementation, when displaying the play interface of the shared content on the call interface in the form of a small floating window, the electronic device 200 may display the play interface of the shared content in full screen in response to a user operation on the small floating window, for example, display the user interface 520 shown in FIG. 5B. A specific example is similar to the example in which the electronic device 200 returns to display the call interface. Details are not described again.

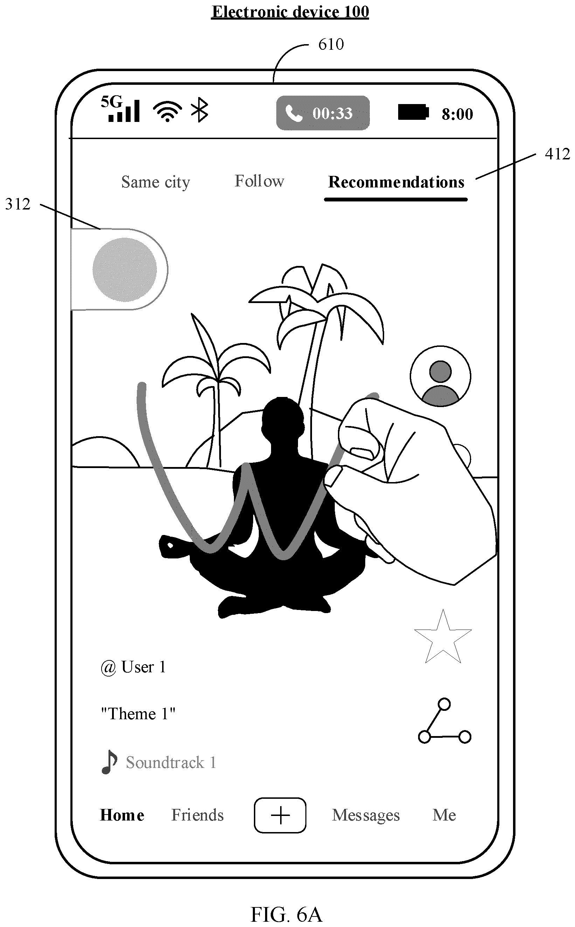

This is not limited to the implementations shown in FIG. 4A and FIG. 4B (triggering a real-time sharing function by using a floating window). In another implementation, the real-time sharing function may alternatively be triggered by using a sliding operation. For example, the sliding operation is sliding upward and downward, sliding leftward and rightward, or sliding along a specific track. For a specific example, refer to a user interface 610 shown in FIG. 6A.

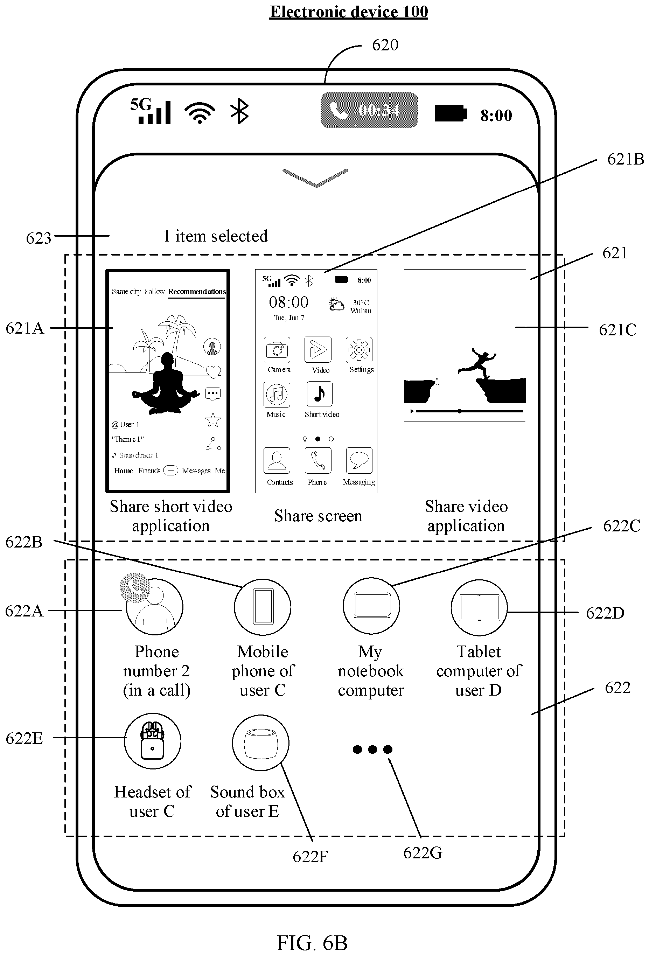

As shown in FIG. 6A, the user interface 610 is similar to the user interface 410 shown in FIG. 4A, and a difference lies in that a floating window 312 in the user interface 610 is in a collapsed state, for example, is displayed in the form of an icon on a left edge of the screen. The electronic device 100 may display, in response to a sliding operation on the user interface 610 (FIG. 6A is described by using an example in which the sliding operation is sliding a knuckle along a specific track "W"), an interface for selecting to-be-shared content and a to-be-shared object, for example, display a user interface 620 shown in FIG. 6B.

As shown in FIG. 6B, the user interface 620 includes a list 621 of selectable to-be-shared content and a list 622 of selectable to-be-shared objects. The list 621 may include an option 621A, an option 621B, and an option 621C. Characters "Share short video application" are displayed below the option 621A. The option 621A is used to indicate a window of a foreground application (the short video application is used as an example for description in FIG. 6B). Characters "Share screen" are displayed below the option 621B. The option 621B is used to indicate the display content of the screen of the electronic device 100. Characters "Share video application" are displayed below the option 621C. The option 621C is used to indicate a window of a background application (the video application is used as an example for description in FIG. 6B). This is not limited to the foregoing examples. In some other examples, the electronic device 100 may have fewer or more background applications. For example, if the electronic device 100 does not run a video application, the list 621 does not include the option 621C; or if the electronic device 100 further runs another background application (for example, a messaging application), the list 621 may further include an option indicating a window of the messaging application. In some examples, the electronic device 100 may display, in response to a touch operation (for example, sliding leftward or rightward) on the list 621, another option included in the list 621.

In an implementation, the electronic device 100 may select, in response to a touch operation (for example, a tap operation) on any option in the list 621, an audio stream or a video stream related to the option as to-be-shared content, or cancel the selection. For example, the electronic device 100 may select an audio stream/a video stream of the short video application as to-be-shared content in response to a touch operation (for example, a tap operation) on the option 621A. In this case, the option 621A may be in a selected state shown in FIG. 6B, and the option 621B and the option 621C may be in an unselected state shown in FIG. 6B. As shown in FIG. 6B, prompt information 623 may be displayed in the list 621. The prompt information 623 may indicate a quantity of pieces of selected to-be-shared content. For example, currently, "1 item selected" may represent that one piece of to-be-shared content (the audio stream/video stream of the short video application) is selected currently. For example, the electronic device 100 may select display content of a screen of the electronic device 100 in response to a touch operation (for example, a tap operation) on the option 621B, and optionally, select content played through a speaker of the electronic device 100 as to-be-shared content. In this case, when the electronic device 100 displays the user interface 610 shown in FIG. 6A, an audio stream/a video stream related to the user interface 610 is shared in real time; or when the electronic device 100 switches a display interface to the call interface 310 shown in FIG. 3(A) in response to a user operation, an audio stream/a video stream related to the call interface 310 is shared in real time.

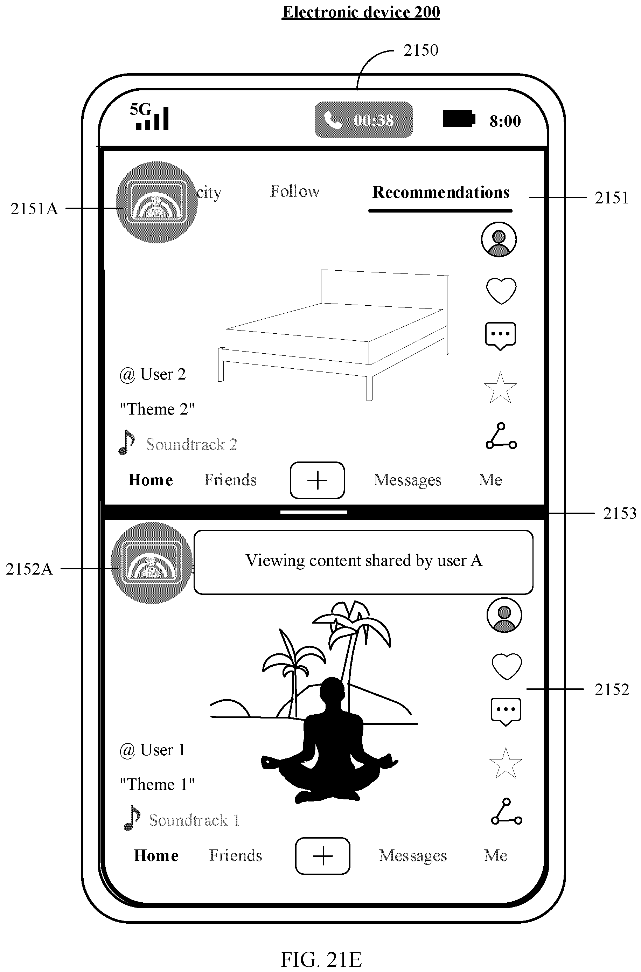

This is not limited to the foregoing examples. In some other examples, a user may select a plurality of pieces of to-be-shared content based on the list 621, and the electronic device 100 may send the plurality of pieces of to-be-shared content selected by the user to a sharee device. In a case, the sharee device may display the plurality of pieces of to-be-shared content on split screens, and an interface example is similar to that in FIG. 21E. This is not limited thereto. In another case, the sharee device may alternatively determine the displayed to-be-shared content in response to a user operation. For example, the sharee device may display one piece of to-be-shared content in the plurality of pieces of to-be-shared content by default, and display other to-be-shared content in the plurality of pieces of to-be-shared content when receiving a user operation used to switch the to-be-shared content. In another case, the sharee device may display the plurality of pieces of to-be-shared content together by using a connected device. For example, the sharee device may display one piece of to-be-shared content, and a device connected to the sharee device displays another piece of to-be-shared content. A manner in which the sharee device displays the plurality of pieces of to-be-shared content is not limited in this application. In some examples, the electronic device 100 may send audio data of N pieces of to-be-shared content in the plurality of pieces of to-be-shared content to the sharee device in response to a user operation, and does not send audio data of other to-be-shared content to the sharee device, where N is a positive integer. In some other examples, after receiving audio data that is of the plurality of pieces of to-be-shared content and that is sent by the electronic device 100, the sharee device may play audio data of M pieces of to-be-shared content in response to a user operation, where M is a positive integer, so as to avoid a case in which user experience is affected because the plurality of pieces of audio data is played together.

As shown in FIG. 6B, the list 622 includes an option 622A indicating a call party (user B/electronic device 200) and a plurality of options indicating a nearby device. The option 622A includes characters "Phone number 2 (in a call)", where the phone number 2 is a communication number of the call party. The plurality of options indicating a nearby device include, for example, an option 622B, an option 622C, an option 622D, an option 622E, and an option 622F. The option 622B includes characters "Mobile phone of user C", and is used to indicate a nearby device whose device type is "Mobile phone" and whose related user name is "User C". The option 622C includes characters "My notebook computer", and is used to indicate a nearby device whose device type is "Notebook computer" and whose related user name is user A who uses the electronic device 100. Other options are similar. The option 622D includes characters "Tablet computer of user D". The option 622E includes characters "Headset of user C". The option 622F includes characters "Sound box of user E". The list 622 further includes an option 622G. The option 622G is used to trigger displaying of more function options, for example, viewing more nearby devices, and selecting all options shown in the list 622 (that is, setting nearby devices indicated by these options as to-be-shared objects). This is not limited to the foregoing examples. In some other examples, there may be more or fewer nearby devices, and correspondingly, the list 622 may include more or fewer options.

In an implementation, the electronic device 100 may select, in response to a touch operation (for example, a tap operation) on any option in the list 622, a device indicated by the option as a to-be-shared object, or cancel the selection.

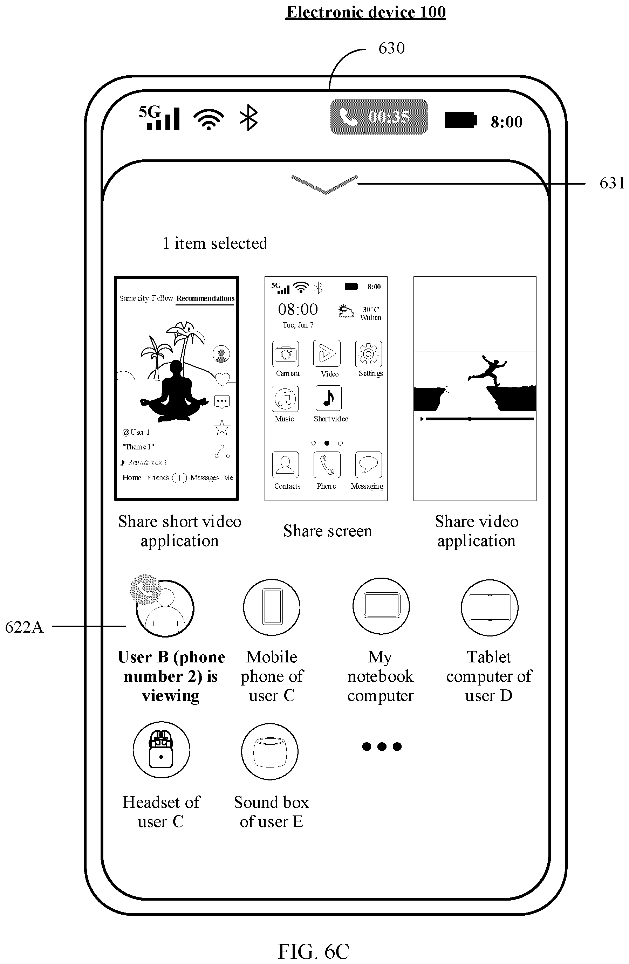

In some examples, the electronic device 100 may select, in response to a touch operation (for example, a tap operation) on the option 622A in the list 622, a call party (the electronic device 200) indicated by the option 622A as a to-be-shared object. In some examples, after the electronic device 100 receives the touch operation (for example, a tap operation) on the option 622A, the option 622Amay be in a selected state. For a specific example, refer to a user interface 630 shown in FIG. 6C. Characters included in the option 622A in the user interface 630 is "User B (phone number 2) is viewing".

In some examples, the electronic device 100 may send, in response to a touch operation (for example, a tap operation) on the option 622A, a sharing request to a call party (the electronic device 200) indicated by the option 622A. Specific descriptions are similar to the implementations shown in FIG. 4A to FIG. 4C and FIG. 5A to FIG. 5D. In a case, after sending the sharing request to the electronic device 200, the electronic device 100 may continue to display an interface for selecting to-be-shared content and a to-be-shared object, for example, display the user interface 630 shown in FIG. 6C. Then, the electronic device 100 may return to display a previous-level interface, for example, the user interface 610 shown in FIG. 6A, in response to a touch operation (for example, a tap operation or a slide-up or slide-down operation) on a collapse option 631 in the user interface 630. This is not limited thereto. In another case, to-be-shared content selected by the user based on the list 621 is an audio stream/a video stream of a background application (assumed as a video application). The electronic device 100 may switch the video application to run in the foreground, and share the audio stream/video stream of the video application to the electronic device 200. The electronic device 100 may display a user interface of the video application in response to the touch operation on the collapse option 631 in the user interface 630.

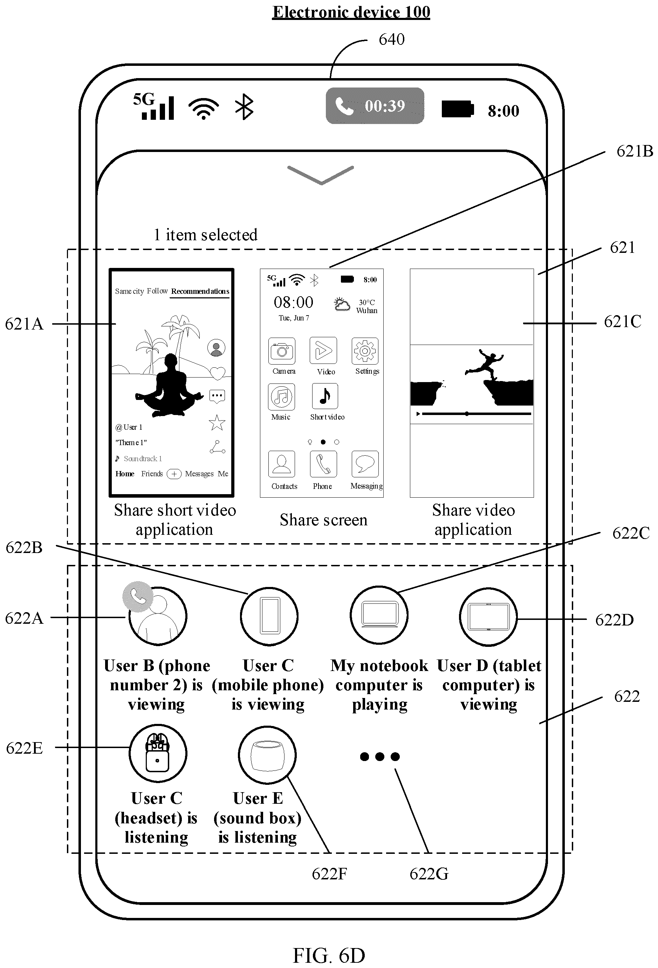

This is not limited to the foregoing examples. In some other examples, the user may select a plurality of to-be-shared objects based on the list 622, and the electronic device 100 may send to-be-shared content to the plurality of to-be-shared objects selected by the user. For example, the electronic device 100 may sequentially receive touch operations (for example, tap operations) on the option 622A, the option 622B, the option 622C, the option 622D, the option 622E, and the option 622F in the list 622. In this case, the electronic device 100 may display a user interface 640 shown in FIG. 6D. That the option 622A, the option 622B, the option 622C, the option 622D, the option 622E, and the option 622F are all in a selected state in the user interface 640 may represent that the user has selected, as to-be-shared objects, devices indicated by the option 622A, the option 622B, the option 622C, the option 622D, the option 622E, and the option 622F. Characters included in the option 622A are "User B (phone number 2) is viewing". Characters included in the option 622B are "User C (mobile phone) is viewing". Characters included in the option 622C are "My notebook computer is playing". Characters included in the option 622D are "User D (tablet computer) is viewing". Characters included in the option 622E are "User C (headset) is listening". Characters included in the option 622F are "User E (sound box) is listening".

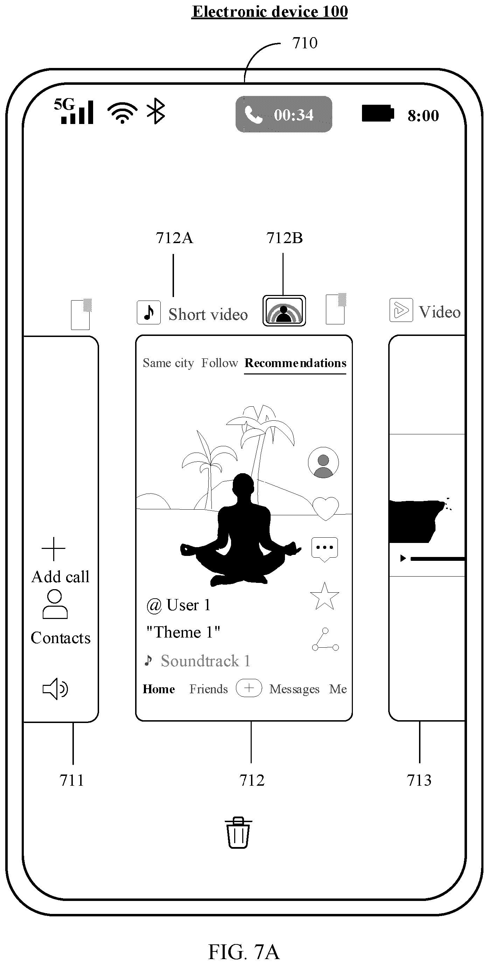

In another implementation, the real-time sharing function may alternatively be triggered by using a user interface of a multi-task list/multi-task window. For example, the electronic device 100 may display the user interface of the multi-task list/multi-task window in response to a touch operation (for example, sliding from bottom to top) on the user interface 410 shown in FIG. 4A. For a specific example, refer to a user interface 710 shown in FIG. 7A.

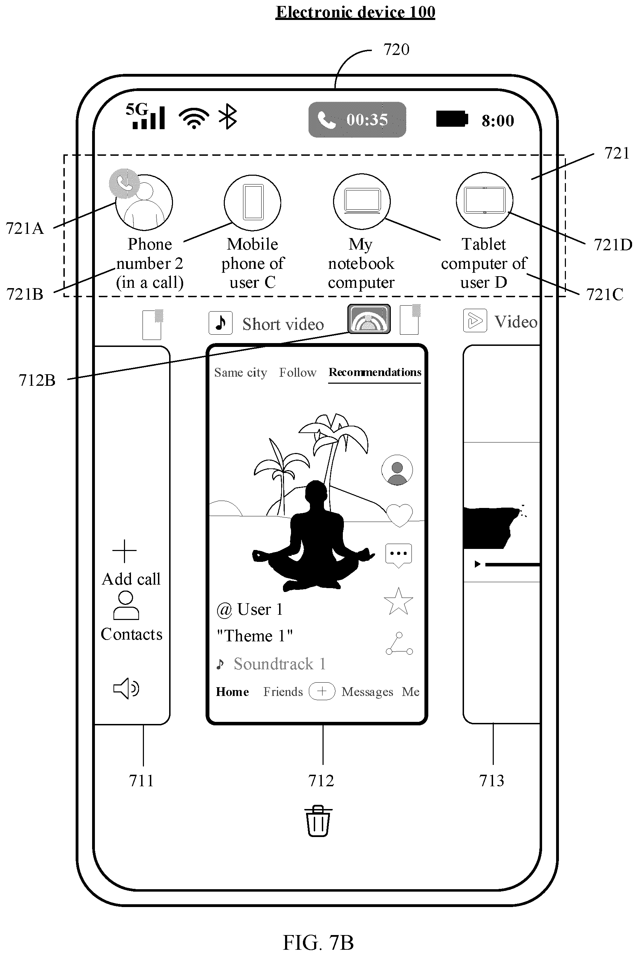

As shown in FIG. 7A, the user interface 710 is used to display a window list. The window list includes at least one window running on the electronic device 100, for example, a window 711 of the phone application, a window 712 of the short video application, and a window 713 of the video application. An icon and a name of an application, and a share control for triggering real-time sharing of an audio stream/a video stream of the application may be displayed in any window. For example, an icon and a name "Short video" 712A of the short video application, and a share control 712B are displayed in the window 712 of the short video application. In some examples, the electronic device 100 may display a list of selectable to-be-shared objects in response to a touch operation (for example, a tap operation) on the share control 712B, for example, display a user interface 720 shown in FIG. 7B.

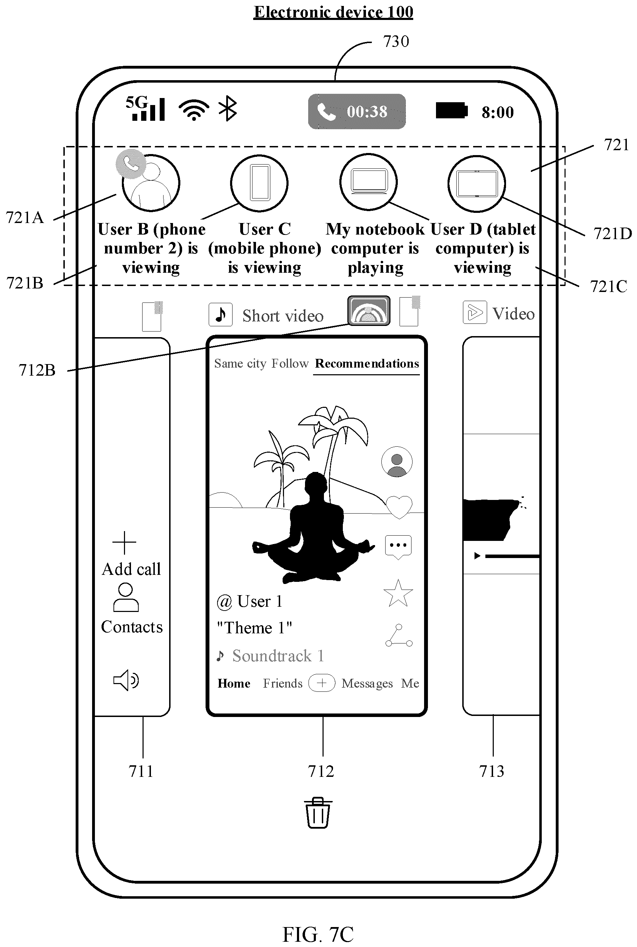

As shown in FIG. 7B, the user interface 720 is similar to the user interface 710 shown in FIG. 7A. A difference lies in that the user interface 720 further includes a list 721 of selectable to-be-shared objects, the window 712 of the short video application is in a selected state, and the share control 712B is in a selected state. The list 721 is similar to the list 622 in the user interface 620 shown in FIG. 6B, and includes an option 721A indicating a call party (user B/electronic device 200) and a plurality of options indicating a nearby device. The plurality of options indicating a nearby device include, for example, an option 721B (including characters "Mobile phone of user C"), an option 721C (including characters "My notebook computer"), and an option 721D (including characters "Tablet computer of user D"). In an implementation, the electronic device 100 may select, in response to a touch operation (for example, a tap operation) on any option in the list 721, a device indicated by the option as a to-be-shared object, or cancel the selection. A specific example is similar to the example in which the electronic device 100 responds to a touch operation on any option in the list 622 included in the user interface 620 shown in FIG. 6B. This is not limited thereto. In some other examples, the user may select a plurality of to-be-shared objects based on the list 721, and the electronic device 100 may send to-be-shared content to the plurality of to-be-shared objects selected by the user. For example, the electronic device 100 may display a user interface 730 shown in FIG. 7C. That the option 721A, the option 721B, the option 721C, and the option 721D in the list 721 are all in a selected state in the user interface 730 may represent that the user has selected devices, as to-be-shared objects, indicated by the option 721A, the option 721B, the option 721C, and the option 721D. Characters included in the option 721A are "User B (phone number 2) is viewing". Characters included in the option 721B are "User C (mobile phone) is viewing". Characters included in the option 721C are "My notebook computer is playing". Characters included in the option 721D are "User D (tablet computer) is viewing".

In some examples, after selecting a to-be-shared object, the electronic device 100 may receive a touch operation (for example, a tap operation) on the window 712 of the short video application in the user interface 720 shown in FIG. 7B or the user interface 730 shown in FIG. 7C, and display a play interface of to-be-shared content, for example, the user interface 420 shown in FIG. 4B.

This is not limited to the foregoing examples. In some other examples, a multi-task list/multi-task window displayed by a sharee device further includes a display window of real-time shared content. The display window may also display a share control, and the share control is configured to trigger sharing of the real-time shared content to another device. For example, the display window of the real-time shared content may be a window 542 in the user interface 540 shown in FIG. 5D, and the share control 712B in the user interface 710 shown in FIG. 7A may be displayed on the window 542.

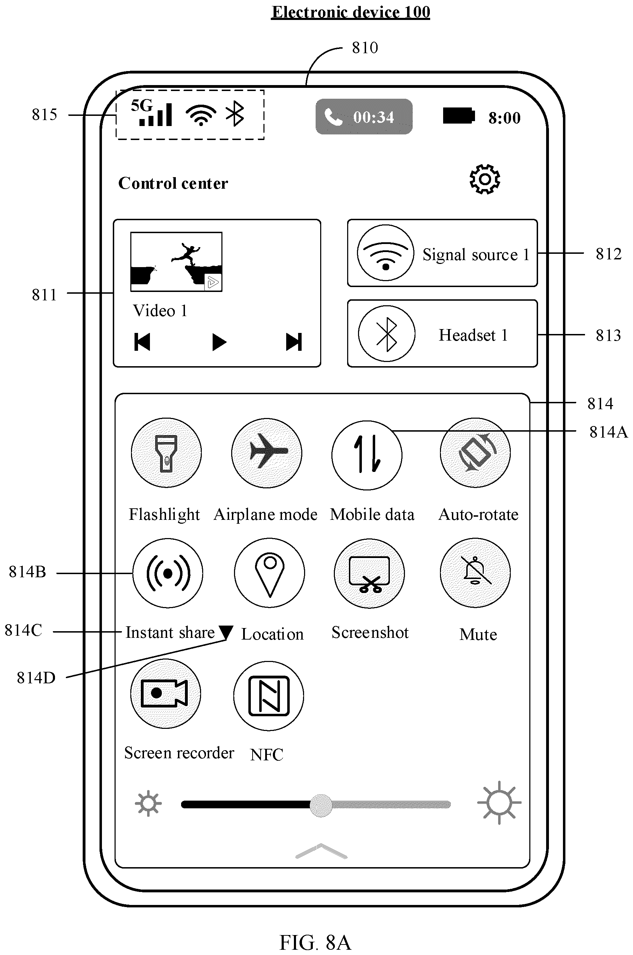

In another implementation, the real-time sharing function may alternatively be triggered by using a notification interface. For example, the electronic device 100 may display the notification interface in response to a touch operation (for example, sliding from top to bottom) on the user interface 410 shown in FIG. 4A. For a specific example, refer to a user interface 810 shown in FIG. 8A.

As shown in FIG. 8A, the user interface 810 includes a notification bar 811 of a background application (the video application is used as an example for description in FIG. 8A), a control 812 of a Wi-Fi function, a control 813 of a Bluetooth function, and a menu 814. The control 812 may be configured to enable or disable a Wi-Fi function of the electronic device 100, and may be further configured to select a Wi-Fi signal source for connection (in FIG. 8A, an example in which a Wi-Fi signal source named "Signal source 1" is connected is used for description). The control 813 may be configured to enable or disable a Bluetooth function of the electronic device 100, and may be further configured to select a device that is connected to the electronic device 100 through Bluetooth (in FIG. 8A, an example in which a device named "Headset 1" is connected is used for description). The menu 814 may include a plurality of function controls, for example, a flashlight control, an airplane mode control, a mobile data control 814A, an auto-rotate control, an instant share control 814B, a location function control, a screenshot function control, a mute function control, a screen recorder control, and an NFC control. The control 814A is configured to enable or disable mobile data of the electronic device 100 (which may also be referred to as enabling or disabling a cellular communication function). Characters "Instant share" 814C and a control 814D are displayed below the control 814B. The control 814B may be configured to enable or disable an instant sharing function of the electronic device 100. The control 814D may trigger displaying of more function information of the instant sharing function, for example, a manner of selecting instant sharing. That the control 812, the control 813, and the control 814A in the user interface 810 are all in an on state, and status information 815 at the top of the user interface 810 includes identifiers of "5G", Wi-Fi, and Bluetooth may represent that the mobile data, the Wi-Fi function, and the Bluetooth function of the electronic device 100 are currently enabled. In some examples, the electronic device 100 may display, in response to a touch operation (for example, a tap operation) on the control 814B, an interface for selecting to-be-shared content and a to-be-shared object, for example, display the user interface 620 shown in FIG. 6B.

In the foregoing example, the real-time sharing function such as viewing together and listening together in a call can be triggered by using a button in a floating window, a sliding operation, a multi-task list/multi-task window, or a button on the notification interface. This is convenient and flexible in use, and provides good user experience.

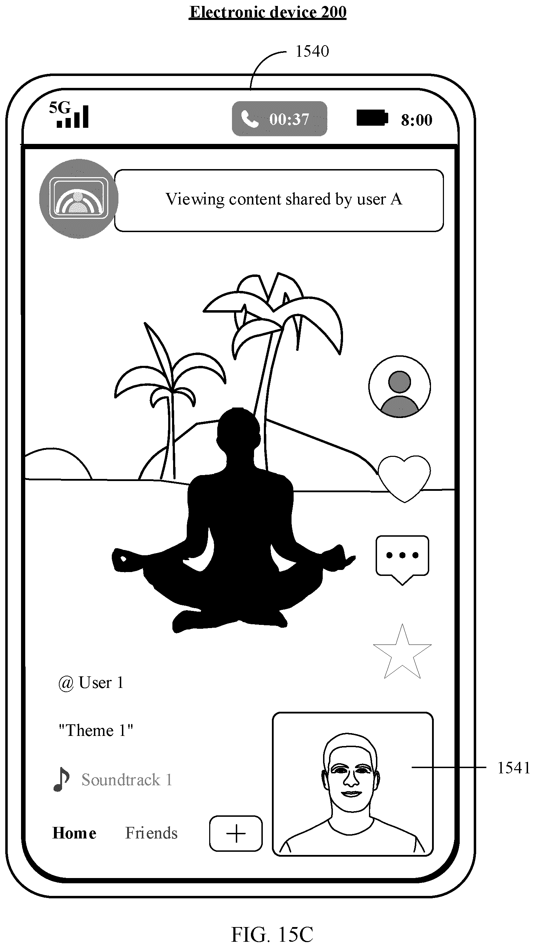

This is not limited to the foregoing implementation. In another implementation, a plurality of devices that perform communication may further collect a facial image of a user by using a camera, and share the collected image to another user. The image may be currently collected by the device, or may be previously collected by the device (for example, collected before communication). This is not limited in this application. For one of users, a used electronic device may display at least one window, and each window may display an image of one user, for example, a control 1541 in a user interface 1540 shown in FIG. 15C. In some examples, a sharer user may select the at least one window displayed by the electronic device, so as to select, as a to-be-shared object, a device/user corresponding to the at least one window. For example, a list of selectable to-be-shared objects may include at least one window displaying the image of the user. In another implementation, when the device 1 discovers any other device (it is assumed that the device is the device 2), the device 2 may respond to the device 1, and send an avatar (for example, an avatar in contacts, an avatar in instant share, or an image in a chat application) of a user who uses the device 2 to the device 1 when responding to the device 1. A list of to-be-shared objects displayed by the device 1 may include the avatar, and the avatar may be used to trigger real-time sharing with the device 2. A display manner of the shared object is not limited in this application. Similarly, the list of selectable to-be-shared content may also include an icon. A display manner of the to-be-shared content is not limited in this application.

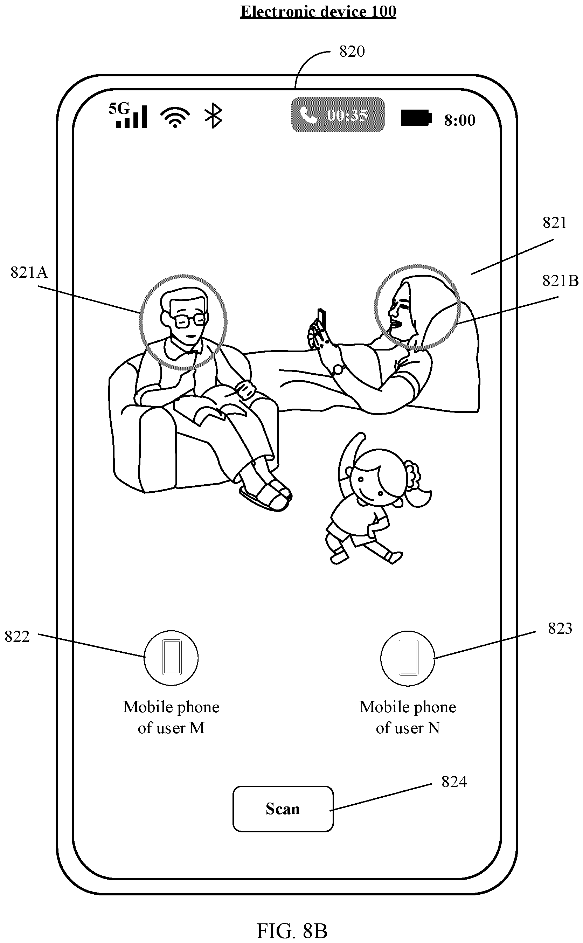

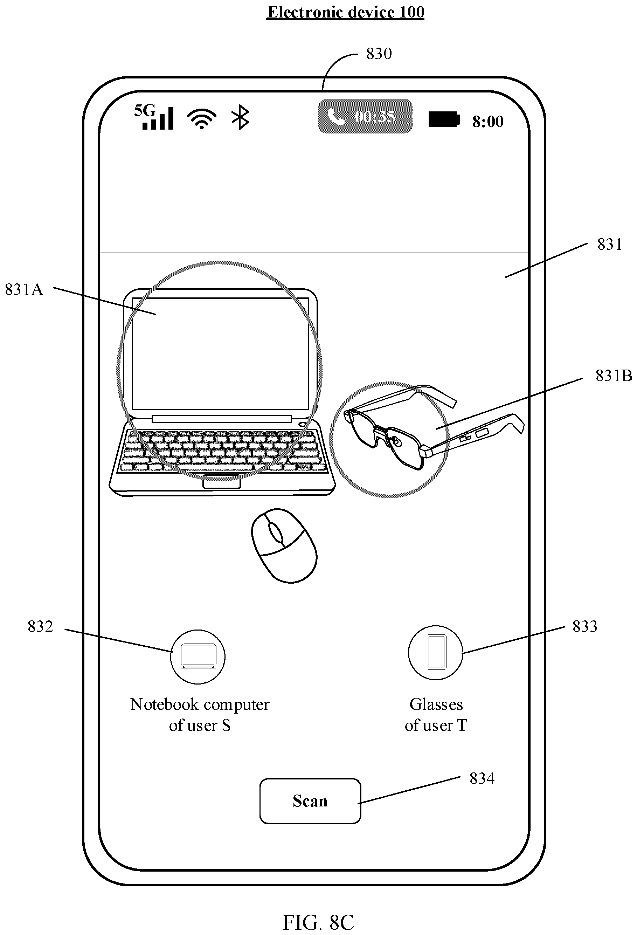

This is not limited to the foregoing implementation (the user selects a to-be-shared object based on the list of to-be-shared objects displayed by the electronic device 100). In another implementation, the user may alternatively add a shared object in a self-defined manner by using a scan function of the electronic device 100. In some examples, the electronic device 100 may display a device selection option in response to a touch operation on the option 622G in the user interface 620 shown in FIG. 6B. The electronic device 100 may photograph, in response to the touch operation on the option, a nearby electronic device and/or a user by using a camera, and select an electronic device and/or a user from a photographed image as a shared object for real-time sharing. For specific examples, refer to FIG. 8B and FIG. 8C.

As shown in FIG. 8B, the electronic device 100 may display a user interface 820. The user interface 820 may include an image 821 captured by using the scan function. The image 821 may include a user 821A and a user 821B who are selected by a user of the electronic device 100. The user interface 820 may further include a specific device identified by the electronic device 100 based on the selected users: a device 822 (including characters "Mobile phone of user M") corresponding to the user 821A and a device 823 (including characters "Mobile phone of user N") corresponding to the user 821B. In some examples, in response to a touch operation on any device/user included in the user interface 820, the electronic device 100 may perform real-time sharing with the device/a device corresponding to the user. The user interface 820 further includes a scan control 824, and the control 824 may trigger re-capturing of an image by using the camera.

In an implementation, before the electronic device 100 identifies a corresponding device based on a selected user in a shot image, a user (for example, the user 821A) needs to record human body feature information (for example, a face) into a used electronic device (for example, the device 822), or the electronic device collects and extracts human body feature information (for example, a face) of a user in real time/periodically (for example, twice a day)/irregularly (for example, each time when the user uses the camera). In an implementation, after the user of the electronic device 100 selects at least one user in the image captured by using the scan function, the electronic device 100 may identify feature information of the at least one user. The feature information includes, for example, but is not limited to: a gender, a hair length, a predicted age, a skin color, whether to wear glasses, a clothing type, a clothing color, and facial data. The electronic device 100 may broadcast (for example, through Wi-Fi or BT) original data or key data of the identified feature information. After receiving a broadcast message, another device may match the stored human body feature information with data in the broadcast message. If the matching succeeds, the another device sends a response message to a broadcast sender (the electronic device 100). The electronic device 100 may display, based on the response message, a device (for example, the device 822 and device 823) corresponding to the selected user, so that the user selects a to-be-shared object. It may be understood that broadcasting only the key data can reduce a data transmission amount, to more efficiently identify the devices corresponding to the selected user. This is not limited to the foregoing implementations. In another implementation, the electronic device 100 may alternatively identify, by using a third-party device (a network device, for example, a nearby electronic device or a server), a device corresponding to the selected user. For example, the electronic device 100 may send feature information of the selected user and/or location information (for example, but not limited to locating information, information about a cellular cell, and a Wi-Fi ID) of the electronic device 100 to the third-party device. The third-party device may perform matching query based on the received information, and return, to the electronic device 100, the found device information that matches the selected user.

In some examples, the electronic device 100 may cancel selection of any user in the user interface 820 shown in FIG. 8B in response to a touch operation on the user. In some examples, the electronic device 100 may delete any device in the user interface 820 shown in FIG. 8B in response to a touch operation on the device. For example, when the user 821A is deselected or the device 822 is deleted, the electronic device 100 cancels displaying of a circle outside the user 821A in the image 821, and cancels displaying of the device 822 in the user interface 820.

As shown in FIG. 8C, the electronic device 100 may display a user interface 830. The user interface 830 may include an image 831 captured by using the scan function. The image 831 may include a device 831A and a device 831B that are selected by the user of the electronic device 100. The user interface 830 may further include a specific device identified based on the selected device: a device 832 (including characters "Notebook computer of user S") corresponding to the device 831A and a device 833 (including characters "Glasses of user T") corresponding to the device 831B. In some examples, the electronic device 100 may perform real-time sharing with any device included in the user interface 830 in response to a touch operation on the device. The user interface 830 further includes a scan control 834, and the control 834 may trigger re-capturing of an image by using the camera.

In an implementation, when identifying a corresponding specific device based on a selected device in a captured image, the electronic device 100 may identify at least one of the following: a type (for example, a notebook computer or a mobile phone) of the selected device in the image, a device manufacturer/brand (for example, a trademark (logo) of the selected device in the image) of the selected device in the image, and an appearance feature (for example, a color) of the device. The electronic device 100 may perform matching query on an identified feature in a broadcast mode or by using the third-party device, to obtain and display a specific device (for example, the device 832 and device 833) corresponding to the selected device, so that the user selects a to-be-shared object. For descriptions of performing matching query in a broadcast mode and by using the third-party device, refer to descriptions of identifying, by the electronic device 100, the corresponding device based on the selected user in the captured image, identifying a device corresponding to the selected user in a broadcast mode, or identifying a device corresponding to the selected user by using the third-party device.

In some examples, the electronic device 100 may alternatively cancel selection/deletion of any device in the user interface 830 shown in FIG. 8C in response to a touch operation on the device. Specific descriptions are similar to those in FIG. 8B. Details are not described again.

This is not limited to the foregoing examples. In some other examples, user A may alternatively select, as a to-be-shared object, an electronic device and/or a user from an image captured by another electronic device (it is assumed that the another electronic device is the electronic device 200) that communicates with the electronic device 100, to perform real-time sharing. In this way, even if user A is far away from the selected to-be-shared object, the selected to-be-shared object may be added in a customized manner by using the image captured by the electronic device 200. For example, when user A uses the electronic device 100 to perform NewTalk with user B who uses the electronic device 200, user B may operate the electronic device 200 to turn on a camera and photograph a nearby electronic device and/or a user. A captured image may be shared to the electronic device 100 for display (for example, the image captured by the electronic device 200 is displayed by using the control in on the user interface 1540 shown in FIG. 15C). It is assumed that user A selects user C and user D from the image as to-be-shared objects. The electronic device 100 may send to-be-shared data to the electronic device 200, and then the electronic device 200 forwards the to-be-shared data to an electronic device used by user C and an electronic device used by user D.

This is not limited to the foregoing implementation. In another implementation, user A may alternatively obtain information about a nearby electronic device and/or a user by using a touch function (for example, implemented by using NFC) of the electronic device 100, and add at least one device as a to-be-shared object in a customized manner based on the obtained information, to perform real-time sharing. A manner of adding the to-be-shared object in a customized manner is not limited in this application.

The touch operation on the sharing option 312D in the floating window 312 included in the user interface 410 shown in FIG. 4A, the sliding operation on the user interface 610 shown in FIG. 6A (the sliding operation shown in FIG. 6A is sliding a knuckle along a specific track "W"), the touch operation on the share control 712B in the user interface 710 shown in FIG. 7A, and the touch operation on the control 814B in the user interface 810 shown in FIG. 8A may be collectively referred to as a user operation used to trigger the real-time sharing function. This is not limited thereto. The user operation used to trigger the real-time sharing function may be in another form, for example, a touch operation (for example, a tap operation) on the sharing option 312D on the call interface 310 shown in FIG. 3(A), a voice input, or a gesture. This is not limited in this application.

This is not limited to the foregoing implementation. In another implementation, the electronic device 100 may alternatively receive, in a non-call state, a user operation used to trigger a real-time sharing function. The real-time sharing function may be implemented by using a near field communication technology.

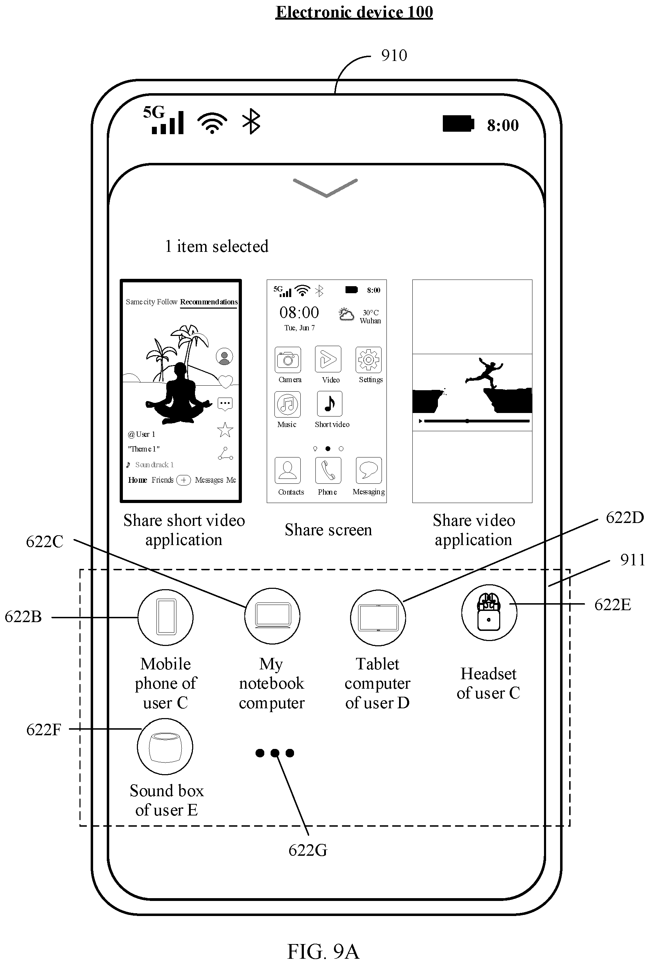

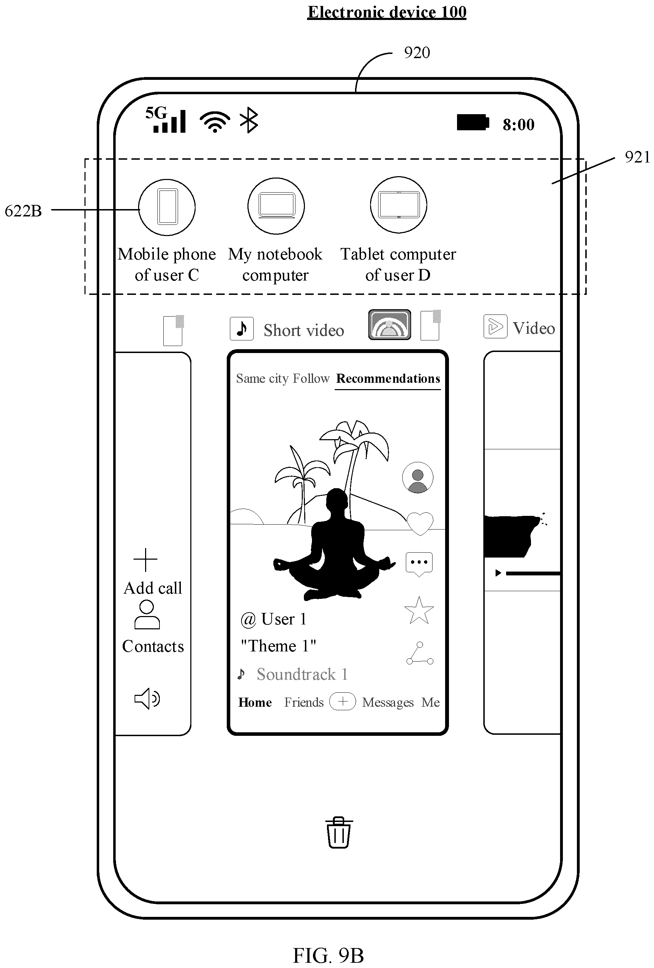

In some examples, the electronic device 100 may display, in response to the user operation, an interface for selecting to-be-shared content and a to-be-shared object. For example, the electronic device may display a user interface 910 shown in FIG. 9A. The user interface 910 is similar to the user interface 620 shown in FIG. 6B. A difference lies in that a status bar at the top of the user interface 910 does not include a call icon, indicating that the electronic device 100 is currently in a non-call state. In addition, a list 911 of selectable to-be-shared objects in the user interface 910 does not include an option indicating a call party, but includes only a plurality of options indicating a nearby device. This is not limited thereto. In some other examples, the interface for selecting to-be-shared content and a to-be-shared object may alternatively be a user interface 920 shown in FIG. 9B. The user interface 920 is similar to the user interface 720 shown in FIG. 7B. A difference lies in that a status bar at the top of the user interface 920 does not include a call icon, indicating that the electronic device 100 is currently in a non-call state. In addition, a list 921 of selectable to-be-shared objects in the user interface 920 does not include an option indicating a call party, but includes only a plurality of options indicating a nearby device.

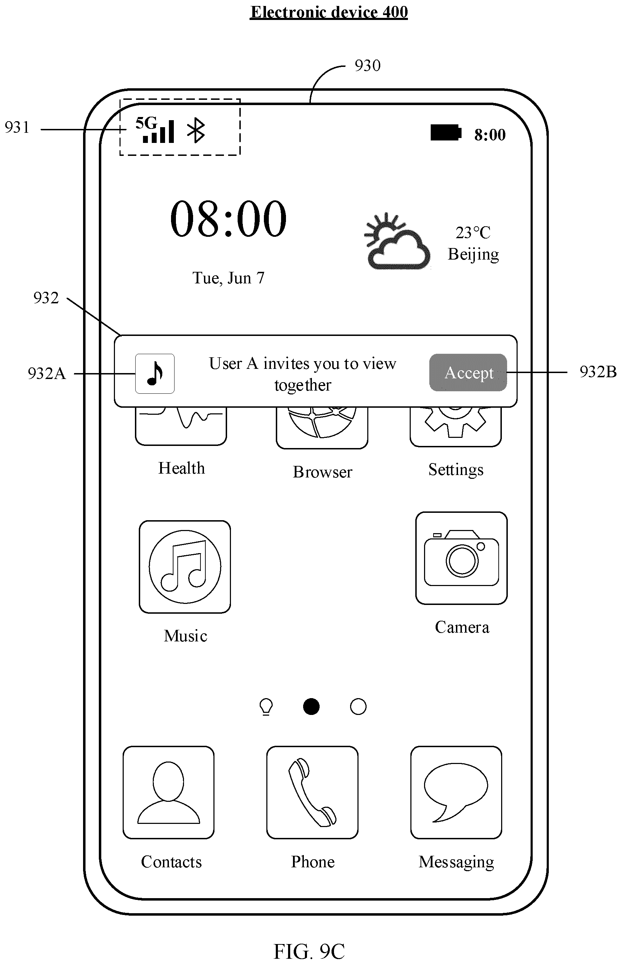

In some examples, the electronic device 100 may receive a touch operation on any one of the plurality of options indicating a nearby device (the option 622B is used as an example), and send a sharing request to an electronic device 400 ("Mobile phone" of "User C") indicated by the option 622B. When receiving the sharing request sent by the electronic device 100, the electronic device 400 may display prompt information, for example, display a user interface 930 shown in FIG. 9C. The user interface 930 may be a desktop of the electronic device 400. That status information 931 at the top of the user interface 930 includes identifiers of "5G" and Bluetooth may represent that mobile data and a Bluetooth function of the electronic device 100 are currently enabled. The user interface 930 further includes prompt information 932. The prompt information 932 includes an icon 932A of a short video application to which shared content (an audio stream/a video stream of the short video 1 played in the play window 412 in the user interface 410 shown in FIG. 4A is used as an example) belongs, characters "User A invites you to view together", and an accept control 932B. In some examples, the electronic device 400 may receive, by using the near field communication technology (for example, Bluetooth) in response to a touch operation (for example, a tap operation) on the accept control 932B, shared content sent by the electronic device 100, and display the shared content, for example, display the play window 522 in the user interface 520 shown in FIG. 5B.

A communication manner in which the electronic device 100 sends the sharing request to the electronic device 400 may be Bluetooth in some examples, or may be another communication manner such as Wi-Fi or cellular communication in some other examples. In other words, the communication manner in which the electronic device 100 sends the sharing request to the electronic device 400 may be the same as or different from a communication manner in which the electronic device 100 sends the shared content to the electronic device 400.

In some examples, multimedia data streams of any piece of content that are sent to different sharee devices when the electronic device 100 shares the content in real time may be the same or may be different. For example, when the electronic device 100 shares a multimedia data stream of the short video application in real time, the electronic device 100 may send an audio stream of the short video application to at least one sharee device connected through Bluetooth, and send an audio stream and a video stream of the short video application to at least one sharee device connected through Wi-Fi.

This is not limited to the foregoing examples. The electronic device 100 may alternatively implement the real-time sharing function in a call state by using the near field communication technology. This is not limited in this application.

In the foregoing examples, the real-time sharing function such as viewing together and listening together in a near field communication scenario such as a nearby Bluetooth device can be implemented. An application scenario is wider, and user experience is better.

This is not limited to the foregoing examples. In some other examples, the real-time sharing function such as viewing together and listening together may be implemented in a communication scenario such as a satellite, D2D, or V2X. A communication manner for implementing the real-time sharing function is not limited in this application.

It may be understood that, after receiving the user operation used to trigger the real-time sharing function, a sharer device may determine a to-be-shared object and to-be-shared content according to, but not limited to, any one of the following manners:
Manner 1: The to-be-shared object and the to-be-shared content are preset. In the examples shown in FIG. 4A and FIG. 4B, the electronic device 100 directly sets the call party (electronic device 200) as the to-be-shared object, and sets an audio stream/a video stream of the foreground application (short video application) as the to-be-shared content.
Manner 2: The to-be-shared object is preset and the to-be-shared content is determined based on a received user operation. For example, the electronic device 100 displays, in response to a touch operation (for example, a tap operation) on the sharing option 312D in the user interface 410 shown in FIG. 4A, an interface for selecting to-be-shared content, for example, displays the list 621 of selectable to-be-shared content in the user interface 620 shown in FIG. 6B. The electronic device 100 may determine the to-be-shared content based on an operation input by the user based on the interface for selecting to-be-shared content, and the electronic device 100 may directly set the call party (electronic device 200) as the to-be-shared object.
Manner 3: The to-be-shared content is preset and the to-be-shared object is determined based on a received user operation. In the examples shown in FIG. 7A to FIG. 7C, the electronic device 100 may directly set, as the to-be-shared content, an audio stream/a video stream that is of the short video application and that is for the user operation used to trigger the real-time sharing function, and the electronic device 100 may determine the to-be-shared object based on an operation input by the user based on an interface for selecting a to-be-shared object (the user interface 720 shown in FIG. 7B).
Manner 4: The to-be-shared content and the to-be-shared object are determined based on a received user operation. In the examples shown in FIG. 6A to FIG. 6D, the electronic device 100 may determine the to-be-shared content and the to-be-shared object based on an operation input by the user based on an interface for selecting to-be-shared content and a to-be-shared object (the user interface 620 shown in FIG. 6B).

In this application, an occasion of triggering displaying of a floating window of the real-time sharing function may be but is not limited to the following several cases. The floating window (which may also be understood as a display form) herein may be detailed information of the floating window, for example, the floating window 312 shown in FIG. 3(A), or may be an icon of the floating window, for example, the floating window 312 shown in FIG. 3(C). The electronic device 100 may switch a display form when displaying the floating window. For a specific example, refer to descriptions in FIG. 3(A) and FIG. 3(C).

Case 1: The electronic device 100 may display a floating window in a call state. In some examples, the call state may be a call state of an operator call. For an interface example, refer to FIG. 3(A) to FIG. 3(C). In some other examples, the call state may be a call state of an OTT call, and an interface example is similar to that in FIG. 3(A) to FIG. 3(C) (for example, in this case, a voice/video call interface of a social application is displayed).

Case 2: The electronic device 100 may display a floating window when displaying a session interface. In some examples, the session interface may be an operator session interface (an SMS message session interface). In some other examples, the session interface may be an OTT session interface (for example, a session interface of an instant messaging application, where there may be one or more session objects).

Case 3: The electronic device 100 may display a floating window when displaying information about a call object (in this case, the electronic device is not in a call state or a session state). This may be understood as providing a floating window for the user when the user browses a call object. In some examples, the electronic device 100 may display a floating window when displaying detailed information of a contact. The contact may be a contact in a preset application. The preset application may be used to implement an operator call and/or an operator session, and may also be used to implement an OTT call and/or an OTT session. In some other examples, the electronic device 100 may display a floating window when displaying information about a communication identifier. The communication identifier may identify a call object, and communication identifiers of different call objects are different. A call object corresponding to a communication identifier displayed by the electronic device 100 herein may be a call object that is not recorded/stored in the electronic device 100, or may be a call object (a contact) that is recorded/stored in the electronic device 100. The communication identifier is, for example, a communication identifier (for example, a phone number) of an operator call or a communication identifier (for example, a personal number or a personal name of a network chat application) of an OTT call. For example, the electronic device 100 may display a floating window when the user inputs a phone number on a dialing interface of the electronic device 100. For another example, the electronic device 100 may display a floating window when the user inputs a personal number or a personal name of another user in a search bar of a network chat application.

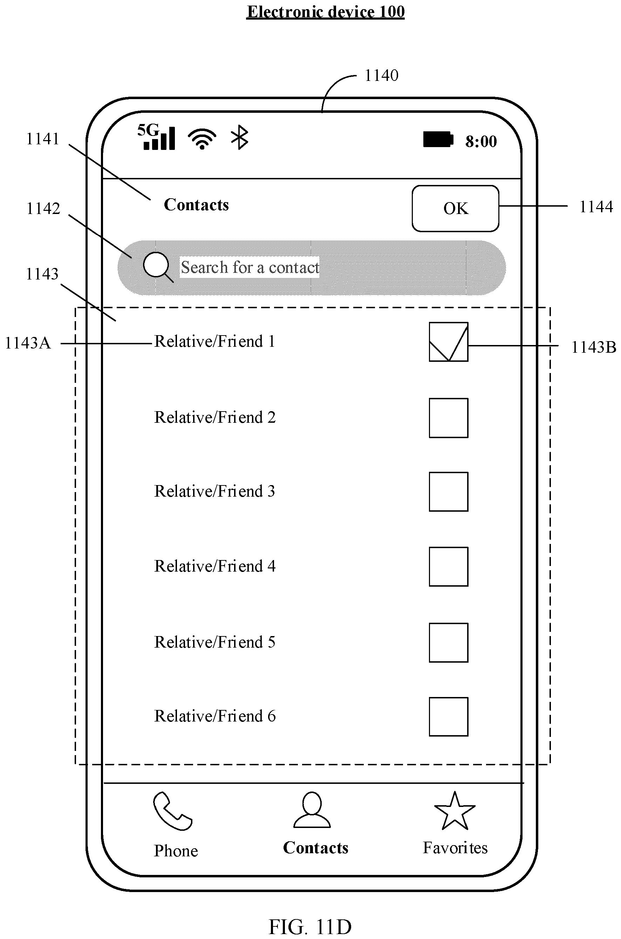

Case 4: The electronic device 100 may display a floating window when displaying a preset interface of a preset application (in this case, the electronic device is not in a call state or a session state, and the electronic device displays more than just information about one call object). The preset application may be used to implement an operator call and/or an operator session, and may also be used to implement an OTT call and/or an OTT session. In some examples, the preset interface includes a session list of an SMS message. In some other examples, the preset interface includes a call record/a chat record. In some other examples, the preset interface includes a list of contacts (for example, a user interface 1140 shown in FIG. 11D). In some other examples, the preset interface includes a list of OTT sessions (for example, an instant messaging session).

Case 5: The electronic device 100 may display a floating window when displaying a specific interface (in this case, the electronic device is not in a call state or a session state, and displays more than just information about one call object). For example, the specific interface is a desktop.

The case 1, case 2, and case 3 may be understood as that a floating window is displayed when a specific call object exists. The call object herein may be an object that is in a call/session, or may be an object that intends to make a call/session (for example, the case 3). In an implementation, the electronic device 100 may first establish a link to the call object, and then display the floating window after the link is established successfully. In another implementation, the electronic device 100 may first display the floating window, and when receiving a user operation (used to trigger the real-time sharing function) on the floating window, establish a link to a to-be-shared object (which may be the call object or may not be the call object). In an implementation, when the electronic device 100 performs real-time sharing with a to-be-shared object/when the electronic device 100 displays a floating window, NewTalk may be collapsed (a call may be made via a primary link and/or an auxiliary link), or NewTalk may not be collapsed.

The case 4 and case 5 may be understood as that a floating window is displayed when there is no specific call object. In an implementation, the electronic device 100 may first display a floating window, and establish a link to a to-be-shared object when receiving a user operation (used to trigger the real-time sharing function) on the floating window. Optionally, the to-be-shared object may be selected by the user. For example, the electronic device 100 displays a floating window when displaying an interface of an application A. In response to a user operation on the floating window, the electronic device may display a contact of a system application (for example, the phone application/messaging application) when the application A does not have a contact; or display a contact of the application A when the application A has a contact, where the displayed contact is used by the user to select the shared object. In an implementation, when the electronic device 100 performs real-time sharing with a to-be-shared object/when the electronic device 100 displays a floating window, NewTalk may be collapsed (a call may be made via a primary link and/or an auxiliary link), or NewTalk may not be collapsed.

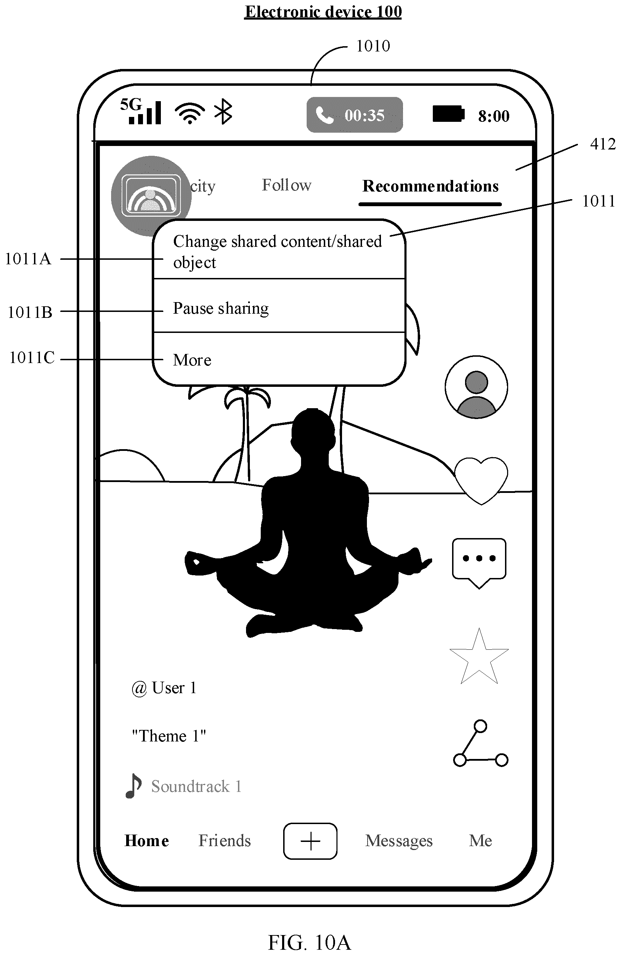

In an implementation, when the electronic device 100 is used as a sharer device to perform real-time sharing, the electronic device may manage a sharee device. In an implementation, when the electronic device 100 is used as a sharer device to perform real-time sharing, the electronic device may change to-be-shared content. A specific example is as follows:
When displaying a play interface (for example, the user interface 420 shown in FIG. 4B) of the shared content, the electronic device 100 may display a sharing menu in response to a touch operation (for example, a tap operation) on the sharing control option 421 in the user interface 420, for example, display a user interface 1010 shown in FIG. 10A. Compared with the user interface 420 shown in FIG. 4B, the user interface 1010 further includes a sharing menu 1011. The sharing menu 1011 may include a plurality of options, for example, an option 1011A, an option 1011B, and an option 1011C. The option 1011A includes characters "Change shared content/shared object". The option 1011B includes characters "Pause sharing", and is used to cancel/pause/stop real-time sharing. The option 1011C includes characters "More", and is used to trigger displaying of more function options. The electronic device 100 may display the shared content and/or a management interface of the shared content in response to a touch operation (for example, a tap operation) on the option 1011A, for example, display the user interface 640 shown in FIG. 6D.

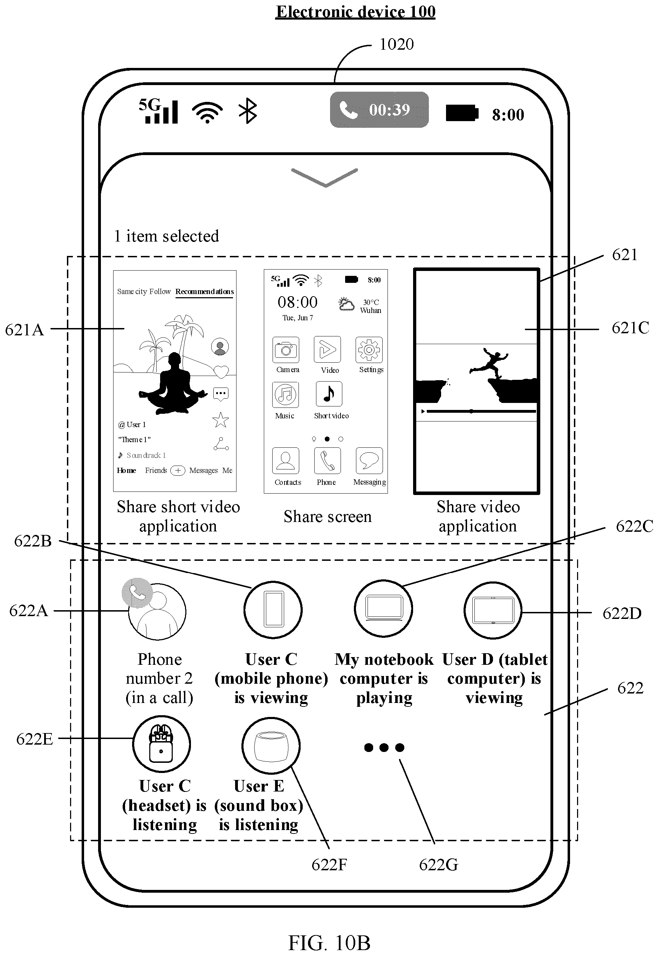

In some examples, the electronic device 100 may cancel, in response to a touch operation (for example, a tap operation) on the option 621A (in a selected state) included in the list 621 in the user interface 640 shown in FIG. 6D, sharing of an audio stream/a video stream of the short video application indicated by the option 621A. The electronic device 100 may select, in response to a touch operation (for example, a tap operation) on the option 621C in the list 621, an audio stream/a video stream of the video application indicated by the option 621C as the to-be-shared content. The electronic device 100 may share the selected to-be-shared content with a selected to-be-shared object (a device indicated by an option in a selected state included in the list 622 in the user interface 640). It may be understood that the electronic device 100 changes the shared content from the audio stream/video stream of the short video application to the audio stream/video stream of the video application in response to a user operation. In some examples, the electronic device 100 may cancel, in response to a touch operation (for example, a tap operation) on any option (in a selected state) in the list 622, sending of the to-be-shared content to a device indicated by the option. For example, if the option is the option 622A in the list 622, the electronic device 100 does not send the to-be-shared content to a call party (the electronic device 200) indicated by the option 622A. It may be understood that the electronic device 100 deletes an existing sharee device in response to a user operation. For example, after the foregoing process, the electronic device 100 may display a user interface 1020 shown in FIG. 10B. The user interface 1020 is similar to the user interface 620 shown in FIG. 6B. A difference lies in that, in the user interface 1020, the option 621A in the list 621 is in an unselected state, the option 621C is in a selected state, and the option 622A in the list 622 is in an unselected state.

The preceding examples implement member management and content management during real-time sharing, to meet personalized requirements of users and improve user experience.

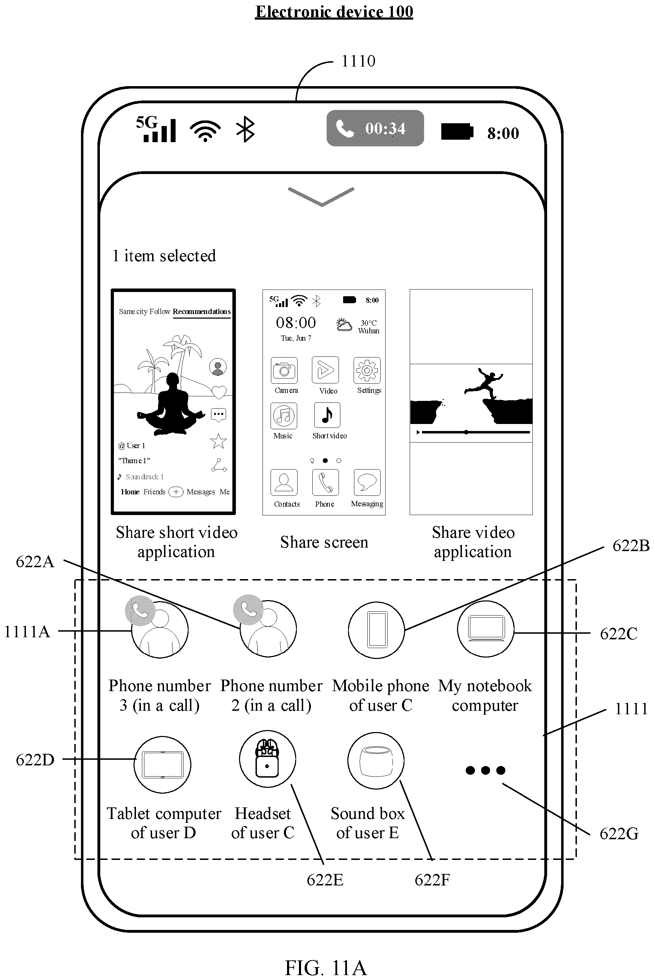

This is not limited to the foregoing implementations. In another implementation, the electronic device 100 may perform NewTalk such as an operator call/OTT call with a plurality of electronic devices, and the electronic device 100 may share an audio stream/a video stream with at least one of the plurality of electronic devices in real time. In some examples, the electronic device 100 may share an audio stream/a video stream of a foreground application with a plurality of call parties (the plurality of electronic devices) in response to a user operation used to trigger the real-time sharing function. In some other examples, the electronic device 100 may display, in response to a user operation used to trigger the real-time sharing function, information about the plurality of electronic devices on an interface for selecting a to-be-shared object, so that the user selects whether to share an audio stream/a video stream to at least one of the devices in real time. For example, the electronic device 100 may display a user interface 1110 shown in FIG. 11A. The user interface 1110 is similar to the user interface 620 shown in FIG. 6B. A difference lies in that, in the user interface 1110, a list 1111 of selectable to-be-shared objects further includes an option 1111A, and the option 1111A includes characters "Phone number 3 (in a call)" indicating a call party whose communication number is "Phone number 3". The option 622A and the option 1111A in the list 622 may represent NewTalk such as an operator call/OTT call that is currently performed by the electronic device 100 with a device whose communication number is "Phone number 2" and a device whose communication number is "Phone number 3". The electronic device 100 may share an audio stream/a video stream in real time with the device whose communication number is "Phone number 2" and/or the device whose communication number is "Phone number 3" in response to a touch operation (for example, a tap operation) on the option 622A and/or the option 1111A.

In the foregoing examples, not only a unicast-type real-time sharing function (one sharee device) but also a broadcast-type or multicast-type real-time sharing function (a plurality of sharee devices) can be implemented. Adaptive adjustment may be performed according to a specific scenario, to meet different requirements of the user in different scenarios, and improve user experience.

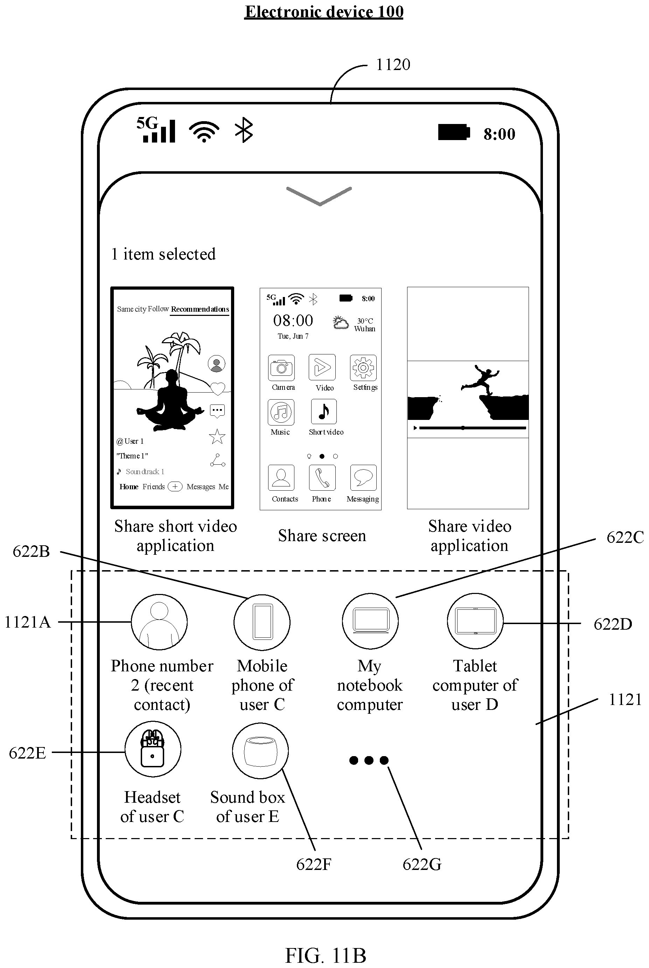

This is not limited to the foregoing implementation. In another implementation, the electronic device 100 may alternatively receive, in a non-call state, a user operation used to trigger a real-time sharing function. In some examples, the electronic device 100 may display, in response to the user operation, at least one device with which the electronic device recently communicates on an interface for selecting a to-be-shared object, so that the user selects whether to share an audio stream/a video stream to the at least one device in real time. Optionally, the at least one device may be a device that communicates with the electronic device 100 within a preset time period (for example, one hour, one day, or one week). Optionally, a quantity of the at least one device may be preset by the electronic device 100, for example, less than or equal to 3. Optionally, the at least one device may be a device that communicates with the electronic device 100 by using a preset application. For example, the preset application is an application that implements an operator call, an OTT call, and/or a network chat. A specific type of the at least one device that recently performs communication is not limited in this application. For example, the electronic device 100 may display a user interface 1120 shown in FIG. 11B. The user interface 1120 is similar to the user interface 620 shown in FIG. 6B. A difference lies in that, in the user interface 1120, a list 1121 of selectable to-be-shared objects does not include the option 621A in the user interface 620, and the list 1121 further includes an option 1121A. The option 1121A includes characters "Phone number 2 (recent contact)", and is used to indicate a user/device whose communication number is "Phone number 2" and with which the electronic device 100 recently performs NewTalk such as an operator call/OTT call. The electronic device 100 may send a NewTalk call request to the device whose communication number is "Phone number 2" in response to a touch operation (for example, a tap operation) on the option 1121A. After the device whose communication number is "Phone number 2" accepts the call request, the electronic device 100 may perform NewTalk with the device, so that the electronic device 100 may share an audio stream/a video stream with the device in real time through NewTalk.

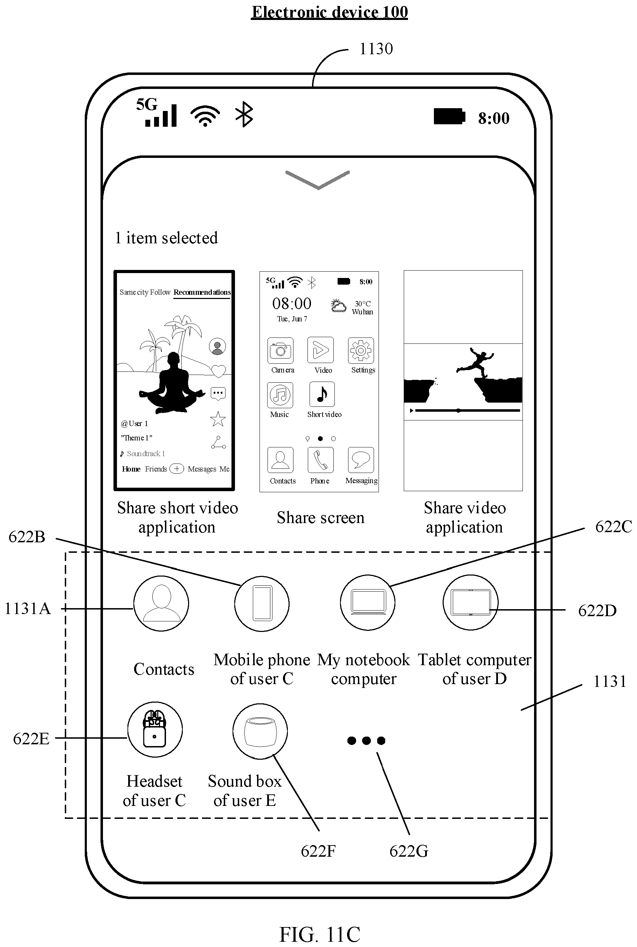

In some other examples, the electronic device 100 may display, in response to a user operation used to trigger the real-time sharing function, an icon of a contact on an interface for selecting a to-be-shared object, so that the user selects whether to share an audio stream/a video stream in real time with at least one contact stored in the electronic device 100. Optionally, the at least one contact may be a contact in a preset application. For example, the preset application is an application that implements an operator call, an OTT call, and/or a network chat. A specific type of the contact is not limited in this application. For example, the electronic device 100 may display a user interface 1130 shown in FIG. 11C. The user interface 1130 is similar to the user interface 620 shown in FIG. 6B. A difference lies in that, in the user interface 1130, a list 1131 of selectable to-be-shared objects does not include the option 621A in the user interface 620, the list 1131 further includes an option 1131A, and the option 1131A includes characters "Contacts". The electronic device 100 may display, in response to a touch operation (for example, a tap operation) on the option 1131A, information about the at least one contact stored in the electronic device 100, for example, display the user interface 1140 shown in FIG. 11D. The user interface 1140 may include a title 1141 ("Contacts"), a search box 1142, a list 1143 of contacts, and an OK control 1144. The list 1143 of contacts may include information about a plurality of contacts, for example, information 1143A about a contact named "Relative/Friend 1". A selection control 1143B is further displayed on the right of the information 1143A. The selection control 1143B is configured to select the contact "Relative/Friend 1" indicated by the information 1143A or cancel the selection. Information about other contacts is similar. Details are not described again. The electronic device 100 may send, in response to a touch operation (for example, a tap operation) on the OK control 1144, a NewTalk call request to a device corresponding to a selected contact (for example, the contact "Relative/Friend 1" indicated by the information 1143A) in the list 1143 of contacts. After the device accepts the call request, the electronic device 100 may perform NewTalk with the device, so that the electronic device 100 may share an audio stream/a video stream with the device in real time through NewTalk.

This is not limited to the foregoing examples. In some other examples, the electronic device 100 may obtain, based on identification information (for example, the phone number or an account of the network chat) of a stored contact (for example, the recent contact or a contact in the list of contacts), a communication ID of a device corresponding to the contact, for example, perform addressing by using the network device 300. After completing addressing, the electronic device 100 and the device corresponding to the contact may establish a connection based on the obtained communication ID of the other party. The electronic device 100 may share an audio stream/a video stream in real time with the device corresponding to the contact based on the established connection. The established connection is, for example, but is not limited to, a Bluetooth connection, a Wi-Fi connection, or a NewTalk connection.

This is not limited to the foregoing implementations. In another implementation, the electronic device 100 may determine a real-time sharing manner in response to a user operation, for example, select a real-time sharing manner like viewing together, listening together, editing together, or playing together. The following uses an example in which a selectable real-time sharing manner includes viewing together and listening together for description.

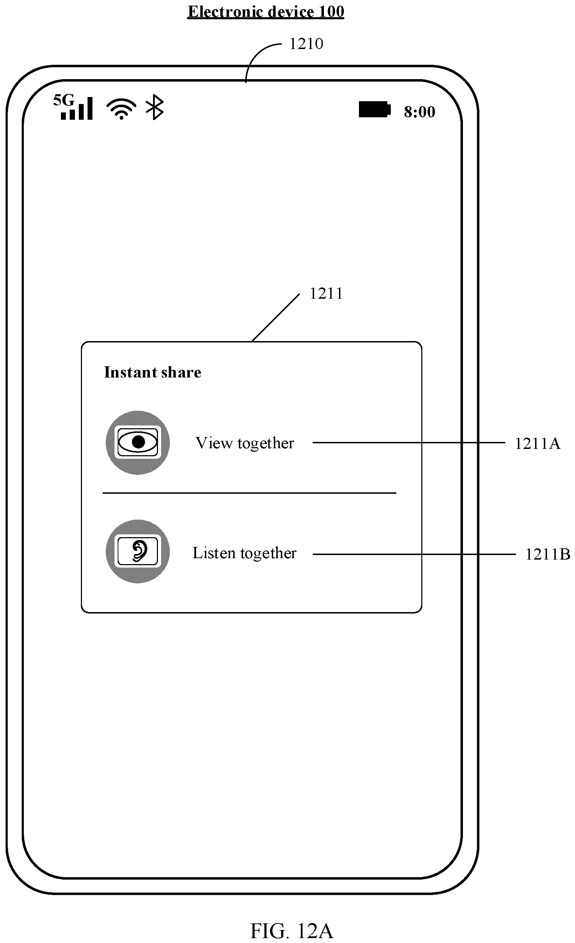

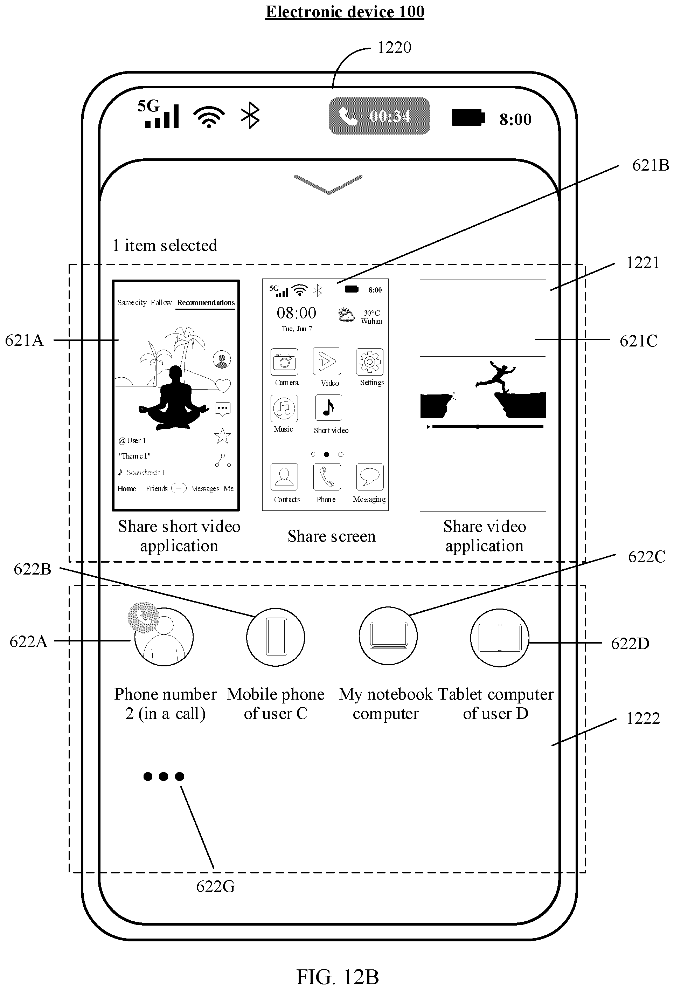

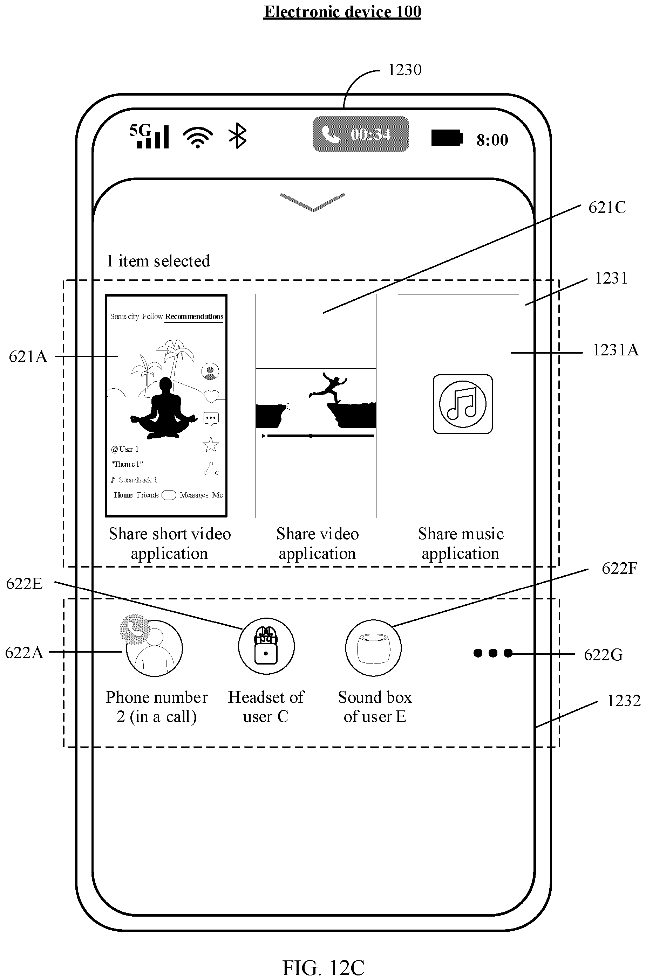

In some examples, the electronic device 100 may display, in response to a user operation used to trigger the real-time sharing function (for example, a touch operation on the control 814D in the user interface 810 shown in FIG. 8A), an interface for selecting a real-time sharing manner, for example, display a user interface 1210 shown in FIG. 12A. The user interface 1210 includes a prompt box 1211, and the prompt box 1211 includes a view together option 1211A and a listen together option 1211B. In some examples, when real-time sharing manners selected by the user are different, interfaces for selecting to-be-shared content and/or a to-be-shared object displayed by the electronic device 100 may also be different. For example, the electronic device 100 may display, in response to a touch operation (for example, a tap operation) on the view together option 1211A in the user interface 1210, a user interface 1220 shown in FIG. 12B. The user interface 1220 is similar to the user interface 620 shown in FIG. 6B. A list 1221 of selectable to-be-shared content in the user interface 1220 includes a plurality of options indicating shared content that can be viewed, for example, the option 621A used to share an image of the short video application, the option 621B used to share display content of a screen of the electronic device 100, and the option 621C used to share an image of a video application. A list 1222 of selectable to-be-shared objects in the user interface 1220 includes a plurality of options indicating a device that can display an image, for example, the option 622A indicating the electronic device 200 (for example, a mobile phone) whose communication number is "Phone number 2", the option 622B indicating "Mobile phone" of "User C", the option 622C indicating "Notebook computer" of "User A", and the option 622D indicating "Tablet computer" of "User D". The electronic device 100 may display, in response to a touch operation (for example, a tap operation) on the listen together option 1211B in the user interface 1210, a user interface 1230 shown in FIG. 12C. The user interface 1230 is similar to the user interface 620 shown in FIG. 6B. A list 1231 of selectable to-be-shared content in the user interface 1230 includes a plurality of options indicating shared content that can be listened to, for example, the option 621A used to share the audio of the short video application, the option 621C used to share the audio of the video application, and an option 1231A used to share an audio of a music application. A list 1232 of selectable to-be-shared objects in the user interface 1230 includes a plurality of options indicating a device that can play an audio, for example, the option 622A indicating the electronic device 200 (for example, a mobile phone) whose communication number is "Phone number 2", the option 622E indicating "Headset" of "User C", and the option 622F indicating "Sound box" of "User E". This is not limited to the foregoing examples. In some other examples, the list 1232 of selectable to-be-shared objects in the user interface 1230 further includes the option 622B, the option 622C, and the option 622D. This is not limited in this application.

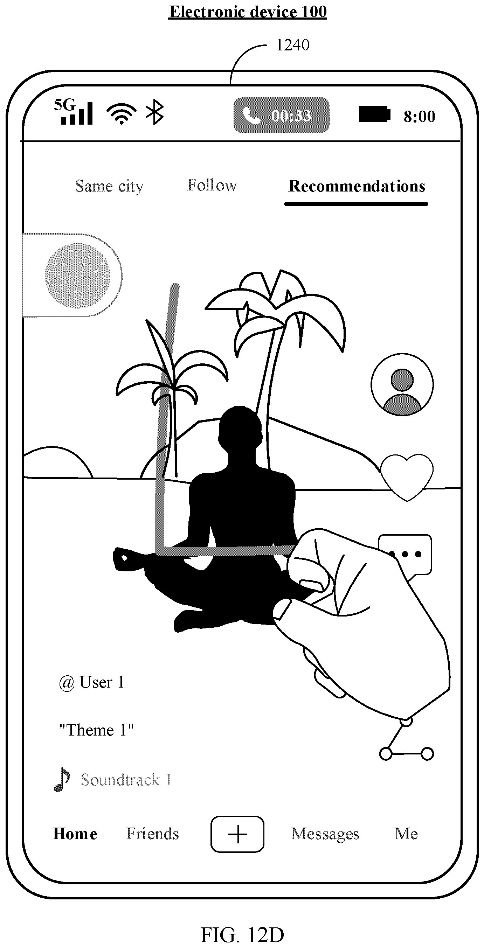

In some other examples, the electronic device 100 may determine a real-time sharing manner based on a user operation used to trigger the real-time sharing function. That is, different user operations used to trigger a real-time sharing function correspond to different real-time sharing manners. For example, the electronic device 100 may display, in response to a first sliding operation on the user interface 610 shown in FIG. 6A (for example, sliding a knuckle along a specific track "W" shown in FIG. 6A), the user interface 1220 shown in FIG. 12B. The electronic device 100 may display, in response to a second sliding operation on the user interface 610 shown in FIG. 6A (for example, sliding a knuckle along a specific track "L" in a user interface 1240 shown in FIG. 12D), the user interface 1230 shown in FIG. 12C.

It may be understood that, when performing real-time sharing, a sharer device may not only share an audio stream/a video stream of a running application (for example, a foreground application and/or a background application) in real time, but also share an audio stream/a video stream of a non-running application in real time. For example, in the user interface 1230 shown in FIG. 12C, the list 1231 of selectable to-be-shared content includes the option 621A used to share the audio of the short video application (foreground application), the option 621B used to share the audio of the video application (background application), and the option 1231A used to share the audio of the music application (non-running application). The electronic device 100 may start the music application in response to a touch operation (for example, a tap operation) on the option 1231A, and share an audio stream/a video stream of the music application with a selected shared object in real time.

This is not limited to the foregoing implementations. In another implementation, the electronic device 100 may determine a type of a selectable to-be-shared object in response to a user operation.

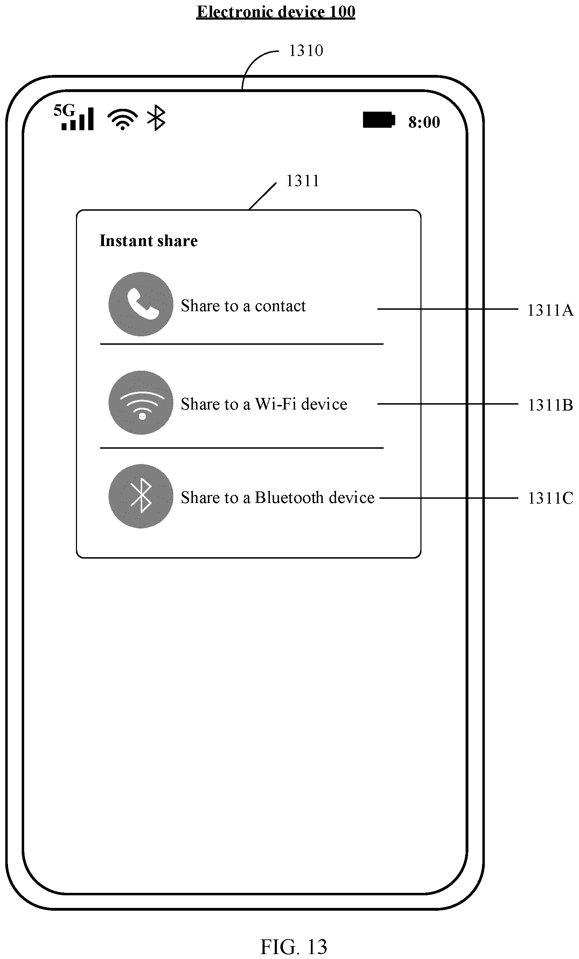

In some examples, the electronic device 100 may display, in response to a user operation used to trigger the real-time sharing function, a user interface for selecting a type of a to-be-shared object, and then display an interface for selecting a to-be-shared object, where the interface is consistent with the selected type. For example, the electronic device 100 may first display a user interface 1310 shown in FIG. 13. The user interface 1310 includes a prompt box 1311. The prompt box 1311 includes an option 1311A (including characters "Share to a contact"), an option 1311B (including characters "Share to a Wi-Fi device"), and an option 1311C (including characters "Share to a Bluetooth device"). A selectable to-be-shared object displayed by the electronic device 100 in response to a touch operation (for example, a tap operation) on the option 1311A is a device that communicates with the electronic device 100 through NewTalk such as an operator call or an OTT call, for example, a device indicated by the option 622A in the user interface 620 shown in FIG. 6B. A selectable to-be-shared object displayed by the electronic device 100 in response to a touch operation (for example, a tap operation) on the option 1311B is a device that communicates with the electronic device 100 through Wi-Fi, for example, a device indicated by the option 622C and the option 622D in the user interface 620 shown in FIG. 6B. A selectable to-be-shared object displayed by the electronic device 100 in response to a touch operation (for example, a tap operation) on the option 1311C is a device that communicates with the electronic device 100 through Bluetooth, for example, a device indicated by the option 622B, the option 622E, and the option 622F in the user interface 620 shown in FIG. 6B.

This is not limited to the foregoing implementation. In another implementation, after receiving a sharing request, a sharee device may play, through an audio module like a speaker, prompt information corresponding to the sharing request. A manner of outputting the prompt information by the electronic device is not limited in this application.

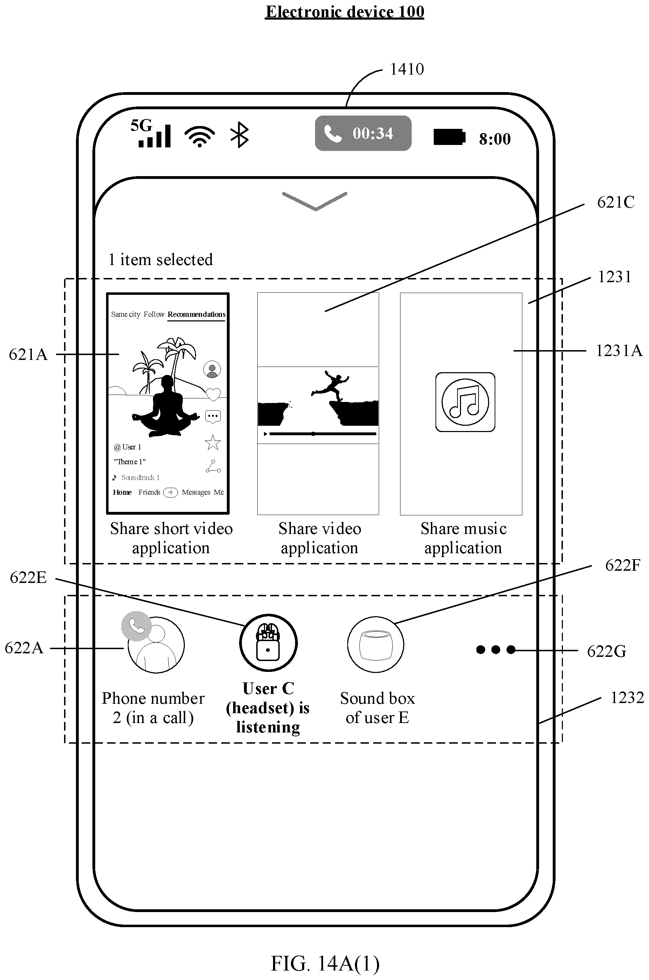

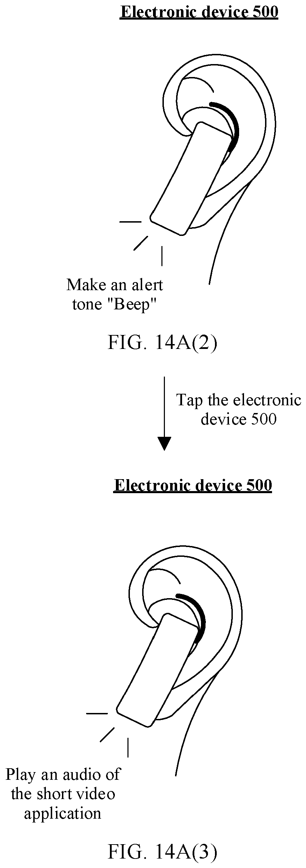

In some examples, the sharee device is a headset. As shown in FIG. 14A(1), the electronic device 100 may display a user interface 1410. The user interface 1410 is similar to the user interface 1230 shown in FIG. 12C. A difference lies in that the option 622E in the user interface 1410 is in a selected state, which may represent that an electronic device 500 ("Headset" of "User C") indicated by the option 622E is a selected to-be-shared object. The option 621A in the user interface 1410 is also in a selected state, which may represent that an audio of the short video application indicated by the option 621A is selected to-be-shared content. The electronic device 100 may send a sharing request to the electronic device 500. After receiving the sharing request, the electronic device 500 may make an alert tone, for example, "Beep" shown in FIG. 14A(2). The electronic device 500 may accept the sharing request in response to a user operation (for example, a tap operation). After accepting the sharing request, the electronic device 500 may receive shared content sent by the electronic device 100, and play the shared content, namely, the audio of the short video application. For a specific example, refer to FIG. 14A(3).

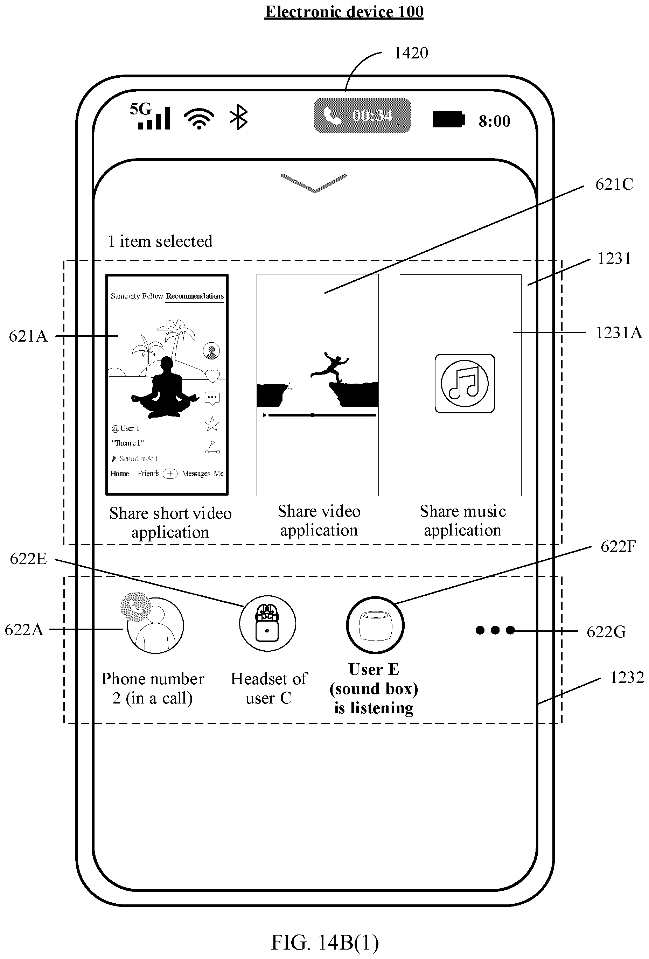

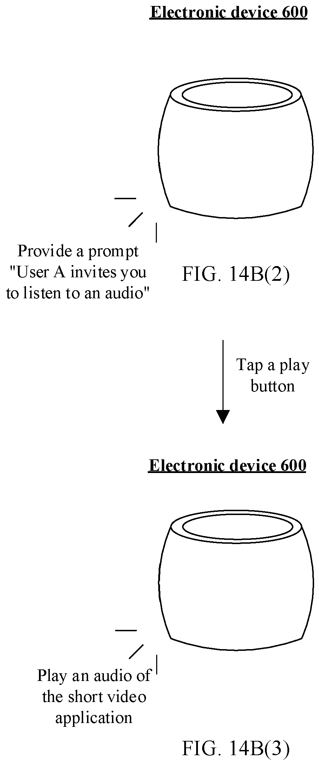

In some other examples, the sharee device is a sound box. As shown in FIG. 14B(1), the electronic device 100 may display a user interface 1420. The user interface 1420 is similar to the user interface 1230 shown in FIG. 12C. A difference lies in that the option 622F in the user interface 1420 is in a selected state, which may represent that an electronic device 600 ("Sound box" of "User E") indicated by the option 622F is a selected to-be-shared object. The option 621A in the user interface 1420 is also in a selected state, which may represent that an audio of the short video application indicated by the option 621A is selected to-be-shared content. The electronic device 100 may send a sharing request to the electronic device 600. After receiving the sharing request, the electronic device 600 may provide a prompt, for example, "User A invites you to listen to an audio" shown in FIG. 14B(2). The electronic device 600 may accept the sharing request in response to a user operation (for example, a tap operation on a play button of the electronic device 600). After accepting the sharing request, the electronic device 600 may receive shared content sent by the electronic device 100, and play the shared content, namely, the audio of the short video application. For a specific example, refer to FIG. 14B(3).

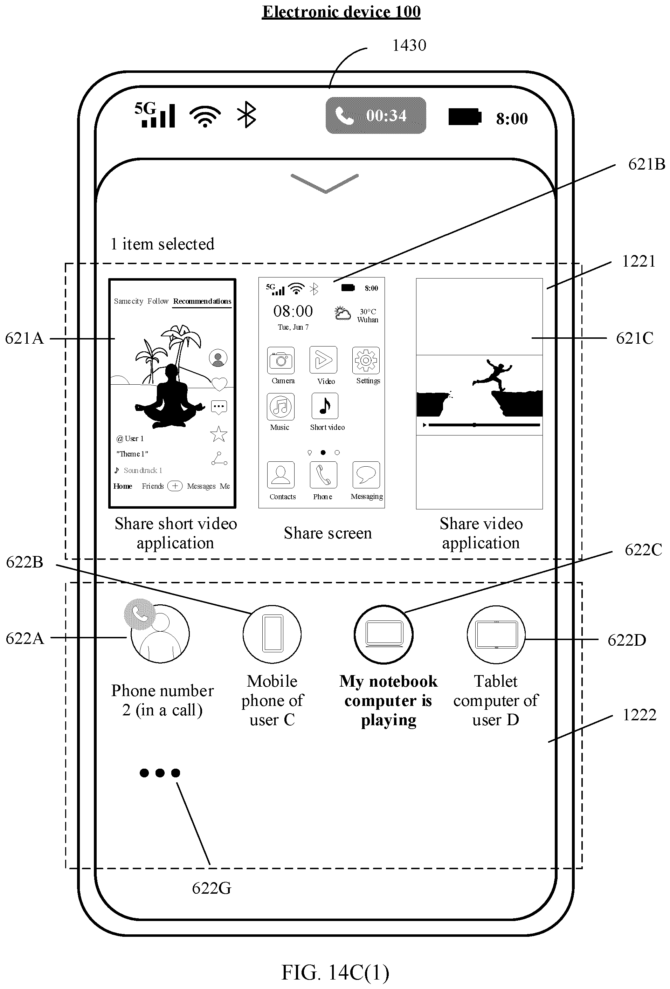

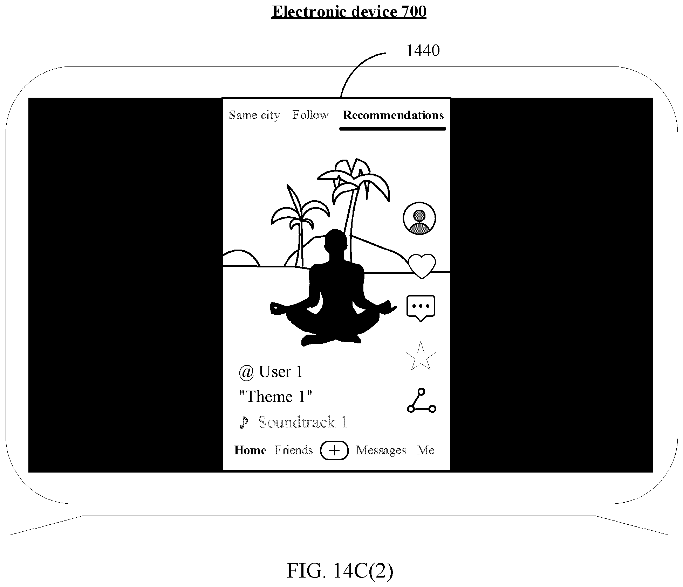

This is not limited to the foregoing implementation. In another implementation, after receiving a sharing request, a sharee device may not output prompt information, but directly accept the sharing request. In some examples, as shown in FIG. 14C(1), the electronic device 100 may display a user interface 1430. The user interface 1430 is similar to the user interface 1220 shown in FIG. 12B. A difference lies in that the option 622C in the user interface 1430 is in a selected state, which may represent that an electronic device 700 ("My" "Notebook computer") indicated by the option 622F is a selected to-be-shared object, where a login account of the electronic device 700 is the same as a login account of the electronic device 100 (named "User A"). The option 621A in the user interface 1430 is also in a selected state, which may represent that an image of the short video application indicated by the option 621A is selected to-be-shared content. The electronic device 100 may send a sharing request to the electronic device 700. After receiving the sharing request, the electronic device 700 may directly accept the sharing request, and receive and display shared content sent by the electronic device 100. For a specific example, refer to FIG. 14C(2). The electronic device 700 may display a user interface 1440. The user interface 1440 is used to display the image of the short video application.

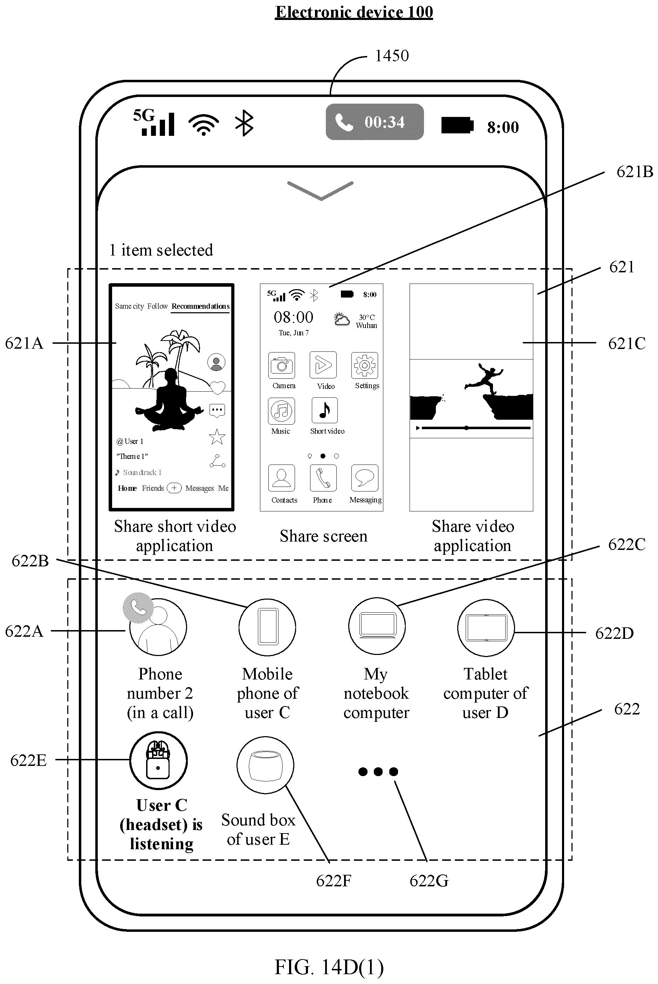

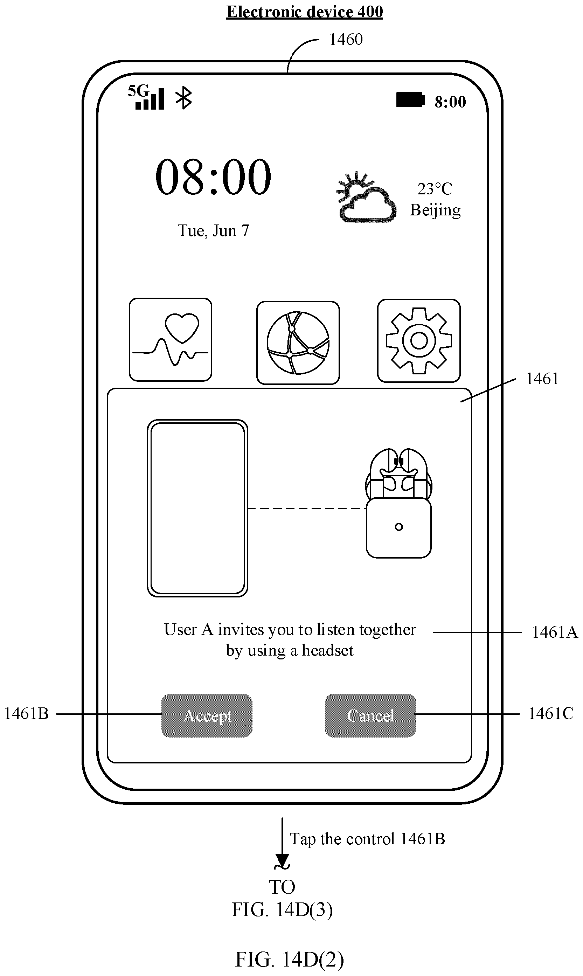

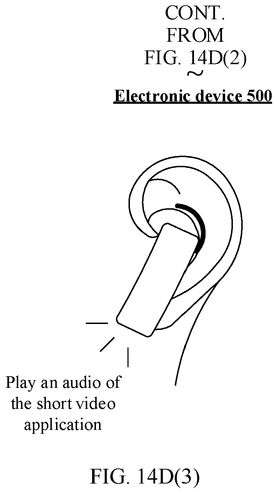

This is not limited to the foregoing implementation. In another implementation, a sharer device may send, to another device connected to a sharee device, a sharing request for the sharee device, where the sharing request is used to request to share an audio stream/a video stream with the sharee device in real time. After receiving the sharing request, the another device may output prompt information, and a user may accept or reject the sharing request for the sharee device by using the another device. A manner of sending the sharing request by the sharer device is not limited in this application. In some examples, as shown in FIG. 14D(1), the electronic device 100 may display a user interface 1450. The user interface 1450 is similar to the user interface 620 shown in FIG. 6B. A difference lies in that the option 622E in the user interface 1450 is in a selected state, which may represent that the electronic device 500 ("Headset" of "User C") indicated by the option 622E is a selected to-be-shared object. The option 621A in the user interface 1450 is also in a selected state, which may represent that an image of the short video application indicated by the option 621A is selected to-be-shared content. It is assumed that the electronic device 500 is connected to the electronic device 400 ("Mobile phone" of "User C") indicated by the option 622B in the user interface 1450. The electronic device 100 may send a sharing request for the electronic device 500 to the electronic device 400. After receiving the sharing request, the electronic device 400 may display prompt information, for example, display the user interface 1460 shown in FIG. 14D(2). The user interface 1460 may be a desktop of the electronic device 400, and may include prompt information 1461. The prompt information 1461 includes a prompt message 1461A (including characters "User A invites you to listen together by using a headset", where "Headset" is the electronic device 500), a determine control 1461B (used to accept the sharing request for the electronic device 500), and a cancel control 1461C (used to reject the sharing request for the electronic device 500). The electronic device 400 may accept the sharing request for the electronic device 500 in response to a touch operation (for example, a tap operation) on the determine control 1461B. After accepting the sharing request, the electronic device 500 may receive and play shared content sent by the electronic device 100, namely, an audio of the short video application. For a specific example, refer to FIG. 14D(3).

This is not limited to the foregoing examples. In some other examples, a sharer device may send, to a sharee device by using another device connected to the sharee device, to-be-shared content for the sharee device. This may be understood as that data is forwarded by using "Third-party device" (the another device). For example, in the example shown in FIG. 14D(1) to FIG. 14D(3), when the electronic device 100 serves as a sharer device to share an audio of the short video application with the electronic device 500 in real time, the electronic device 100 may send the audio of the short video application to the electronic device 400 connected to the electronic device 500, and the electronic device 400 may forward the received audio of the short video application to the electronic device 500 for playing by the electronic device 500.

This is not limited to the implementation shown in FIG. 4C. In another implementation, a type of shared content (for example, an audio, an image, or audio and an image) may be set by using more options in a sharing menu. A manner of setting the type of the shared content is not limited in this application.

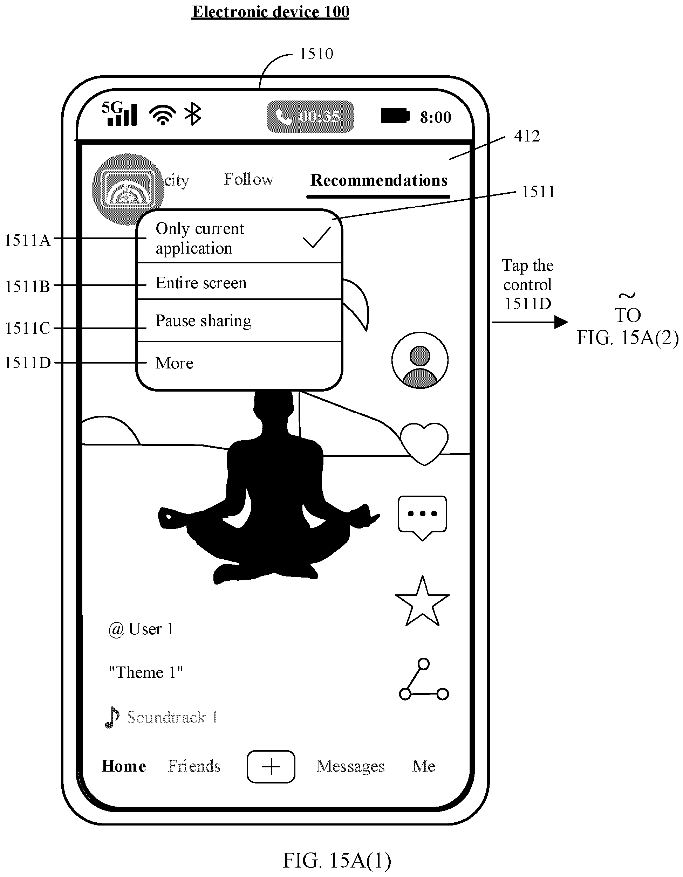

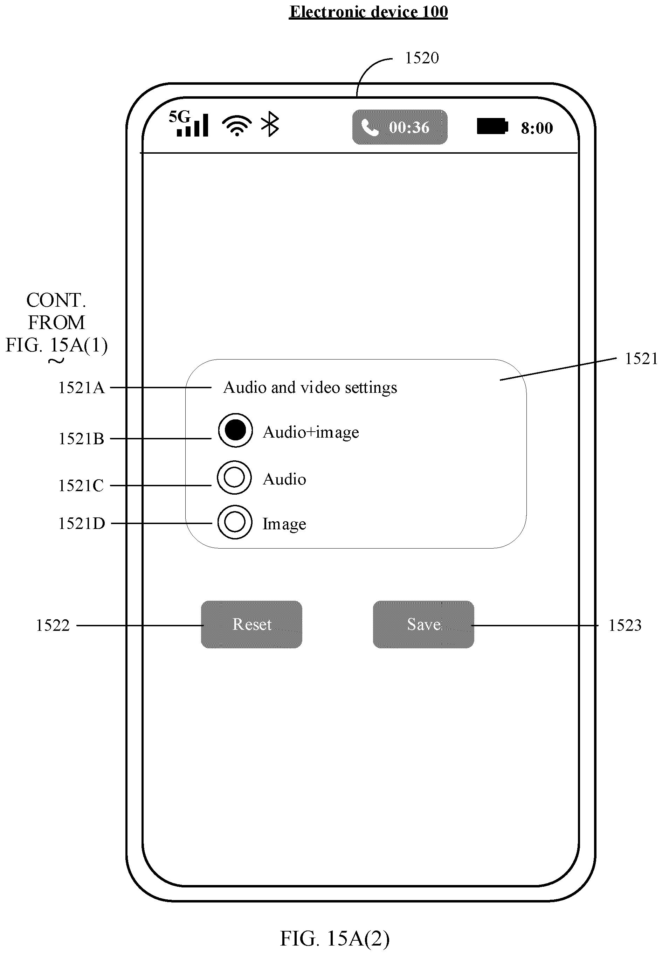

In some examples, the electronic device 100 may display a sharing menu in response to a touch operation (for example, a tap operation) on the sharing control option 421 in the user interface 420 shown in FIG. 4B, for example, display a user interface 1510 shown in FIG. 15A(1). A sharing menu 1511 in the user interface 1510 may include a plurality of options, for example, an option 1511A used to share an audio stream/a video stream of a current application (the short video application is used as an example for description in FIG. 15A(1)), an option 1511B used to share display content of a screen of the electronic device 100, an option 1511C used to cancel/pause/stop real-time sharing, and an option 1511D used to trigger more functions. The electronic device 100 may display, in response to a touch operation (for example, a tap operation) on the option 1511D, a user interface 1520 shown in FIG. 15A(2). The user interface 1520 may include a setting window 1521. The setting window 1521 may include a setting name 1521A (including characters "Audio and video settings") and a plurality of setting options. The plurality of setting options include, for example, an option 1521B, an option 1521C, and an option 1521D. The option 1521B includes characters "Audio+image", and is used to set the type of the shared content to an image and an audio. The option 1521C includes character "Audio", and is used to set the type of the shared content to an audio. The option 1521D includes characters "Image", and is used to set the type of the shared content to an image. The user interface 1520 further includes a reset control 1522 and a save control 1523. The reset control 1522 is configured to set a preset option (for example, the option 1521B) in the setting window 1521 to a selected state. The save control 1523 is configured to save current content of the setting window 1521. For example, the option 1521B in the setting window 1521 shown in the user interface 1520 is in a selected state. In response to a touch operation (for example, a tap operation) on the save control 1523, the electronic device 100 may set the shared content to the image and the audio indicated by the option 1521B.

In an implementation, the electronic device 100 may set whether to share an audio collected by using a microphone and/or an image collected by using a camera when sharing an audio stream/a video stream of a system and/or an application in real time.

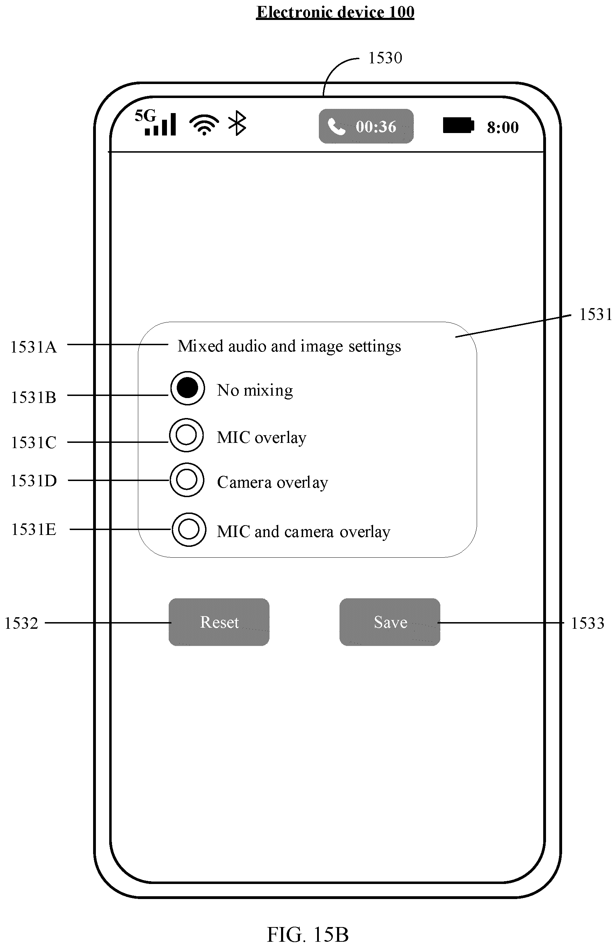

In some examples, the electronic device 100 may display, in response to a touch operation (for example, a tap operation) on the option 1511D in the user interface 1510 shown in FIG. 15A(1), a user interface 1530 shown in FIG. 15B. The user interface 1530 may include a setting window 1531, a reset control 1532, and a save control 1533. The setting window 1531 may include a setting name 1531A (including characters "Mixed audio and image settings") and a plurality of setting options. The plurality of setting options include, for example, an option 1531B, an option 153IC, an option 1531D, and an option 1531E. The option 1531B includes characters "No mixing", and is used to perform the following settings: only the audio stream/video stream of the system and/or the application is shared in real time, and the audio collected by using the microphone and the image collected by using the camera are not shared in real time. The option 1531C includes characters "MIC overlay", and is used to perform the following settings: the audio collected by using the microphone is also shared in real time when the audio stream of the system and/or the application is shared in real time; and the image collected by using the camera is not shared in real time when the video stream of the system and/or the application is shared in real time. The option 1531D includes characters "Camera overlay", and is used to perform the following settings: the audio collected by using the microphone is not shared in real time when the audio stream of the system and/or the application is shared in real time; and the image collected by using the camera is also shared in real time when the video stream of the system and/or the application is shared in real time. The option 153 1E includes characters "MIC and camera overlay", and is used to perform the following settings: the audio collected by using the microphone is also shared in real time when the audio stream of the system and/or the application is shared in real time; and the image collected by using the camera is also shared in real time when the video stream of the system and/or the application is shared in real time. The reset control 1532 is configured to set a preset option (for example, the option 1531B) in the setting window 1531 to a selected state. The save control 1533 is configured to save current content of the setting window 1531.

For example, when the option 1531C or the option 1531E is in a selected state, a sharer device may send, to a sharee device, to-be-shared content and an audio collected by using a microphone of the sharer device, and the sharee device may simultaneously play the to-be-shared content and the audio collected by using the microphone of the sharer device.

For example, when the option 1531D or the option 1531E is in a selected state, a sharer device may send, to a sharee device, to-be-shared content and an image collected by using a camera of the sharer device, and the sharee device may simultaneously display the to-be-shared content and the image collected by using the camera of the sharer device. For example, after receiving a video stream (shared content) of the short video application and an image collected by using a microphone that are sent by the electronic device 100 (sharer device), the electronic device 200 (sharee device) may display the user interface 1540 shown in FIG. 15C. The user interface 1540 is similar to the user interface 520 shown in FIG. 5B. A difference lies in that the user interface 1540 further includes the control 1541, and the control 1541 is configured to display a facial image collected by using a camera of the electronic device 100.

This is not limited to the foregoing examples. In some other examples, whether to share an audio collected by using a microphone and/or an image collected by using a camera in real time may be further set by using a system setting function or an application setting function of a sharer device. This is not limited in this application.

This is not limited to the foregoing implementation. In another implementation, a sharer device may further preset: an audio collected by using a microphone and/or an image collected by using a camera are/is shared or not shared by default during real-time sharing. For example, when receiving a user operation used to trigger real-time sharing, the sharer device first displays the user interface 1530 shown in FIG. 15B. This is not limited in this application.

In the foregoing examples, the audio collected by using the microphone and a system-level audio/an application-level audio/a background audio (which may also be referred to as audio mixing) may be simultaneously shared, and/or the image collected by using the camera and a system-level image/an application-level image may be simultaneously shared, so that a sharer user can "view and explain", the sharee user can "view and listen", and the sharer user and the sharee user can further talk with each other, to meet personalized requirements of users and improve user experience.

In an implementation, the electronic device 100 may set shared content-based related permission of a sharee device. Optionally, the related permission includes storage permission, for example, screen recording/screenshot permission, and/or permission to store a file of shared content. Optionally, the related permission includes secondary propagation permission, for example, instant propagation permission and/or delayed propagation permission. The instant propagation permission is permission to determine whether a sharee device can forward, when playing content shared by a sharer device in real time, the real-time shared content to another device. The delayed propagation permission is permission of whether a sharee device can forward, after storing shared content sent by a sharer device, the stored shared content to another device.

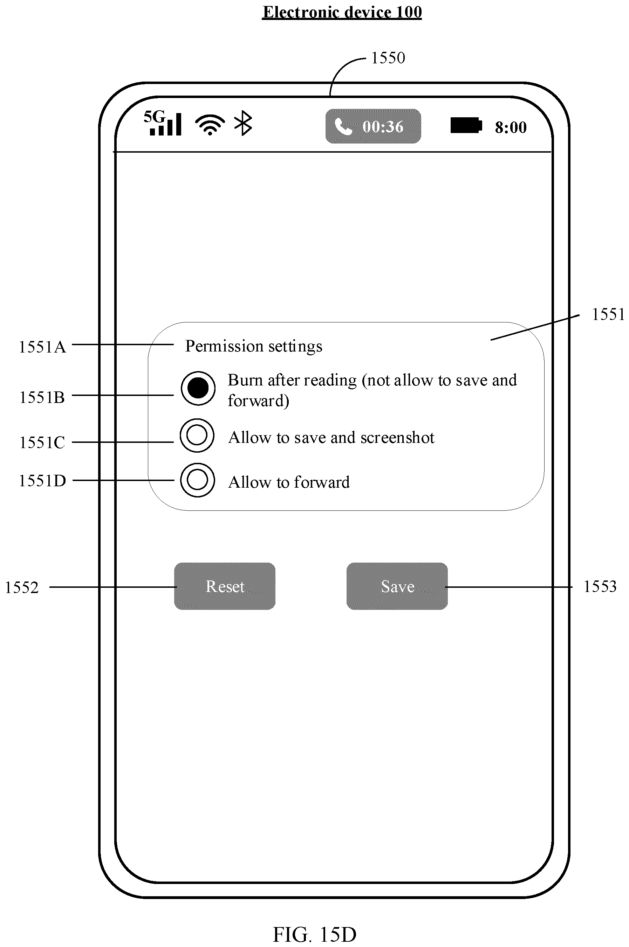

In some examples, the electronic device 100 may display, in response to a touch operation (for example, a tap operation) on the option 1511D in the user interface 1510 shown in FIG. 15A(1), a user interface 1550 shown in FIG. 15D. The user interface 1550 may include a setting window 1551, a reset control 1552, and a save control 1553. The setting window 1551 may include a setting name 1551A (including characters "Permission settings") and a plurality of setting options. The plurality of setting options include, for example, an option 1551B, an option 1551C, and an option 1551D. The option 1551B includes characters "Burn after reading (not allow to save and forward)", and is used to perform the following settings: the sharee device is not granted the storage permission and the secondary propagation permission. The option 1551C includes characters "Allow to save and screenshot", and is used to perform the following settings: the sharee device is granted the storage permission, but not the secondary propagation permission. The option 1551D includes characters "Allow to forward", and is used to perform the following settings: the sharee device is granted the secondary propagation permission, but not the storage permission. The reset control 1552 is configured to set a preset option (for example, the option 1551B) in the setting window 1551 to a selected state. The save control 1553 is configured to save current content of the setting window 1551. This is not limited to the example in FIG. 15D. In some other examples, a permission setting in the setting window 1551 may also be more detailed, including, for example, but not limited to at least one of the following setting options: an option 1 used to perform the following setting: the sharee device is not granted the storage permission and the secondary propagation permission (instant propagation permission), an option 2 used to perform the following setting: the sharee device is not granted the storage permission but is granted the secondary propagation permission (the instant propagation permission), an option 3 used to perform the following setting: the sharee device is granted the storage permission but not the secondary propagation permission (including the instant propagation permission and the delayed propagation permission), an option 4 used to perform the following settings: the sharee device is granted the storage permission and the instant propagation permission but not the delayed propagation permission, an option 5 used to perform the following settings: the sharee device is granted the storage permission and the delayed propagation permission but not the instant propagation permission, and an option 6 used to perform the following settings: the sharee device is granted the storage permission and the secondary propagation permission (including the instant propagation permission and the delayed propagation permission). Specific setting content is not limited in this application.

The following describes an example of an application scenario based on the related permission of the shared content and a UI example in the scenario.

In an implementation, when playing content 1 shared by the sharer device in real time, a sharee device with the instant propagation permission may share the content 1 with another device in real time in response to a user operation used to trigger the real-time sharing function. For specific descriptions, refer to the implementation in which the electronic device 100 serves as a sharer device to perform real-time sharing with another sharee device. Details are not described again.

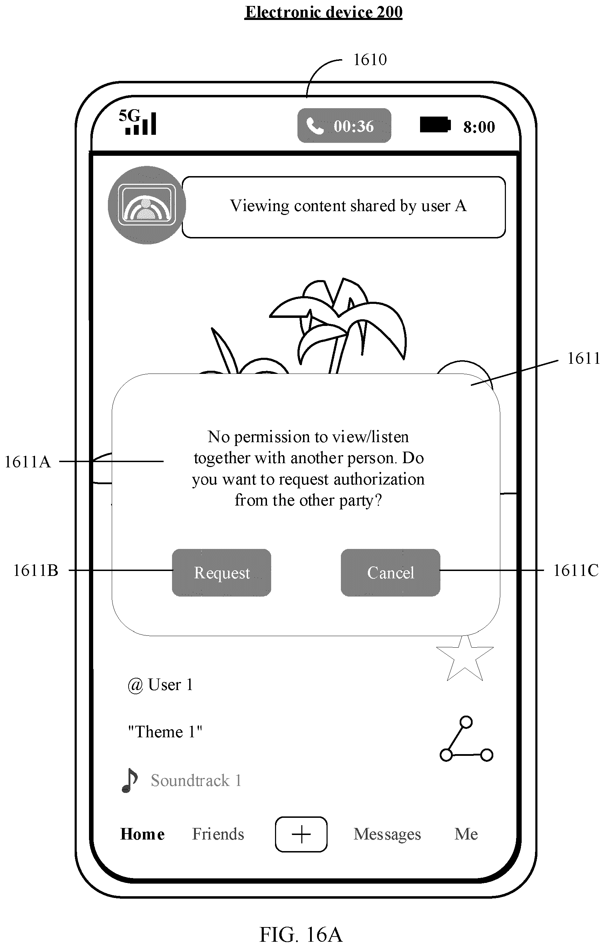

In another implementation, when playing content 1 shared by the sharer device in real time, a sharee device without the instant propagation permission may request, in response to a user operation used to trigger the real-time sharing function, the sharer device to obtain instant propagation permission of the content 1. In some examples, the electronic device 200 may display the user interface 520 shown in FIG. 5B. The user interface 520 is used to play an audio stream/a video stream of the short video application shared by the electronic device 100 in real time. The electronic device 200 may display, in response to a sliding operation (for example, sliding a knuckle along a specific track "W") on the user interface 520, the user interface 1610 shown in FIG. 16A. The user interface 1610 includes a prompt box 1611. The prompt box 1611 includes prompt information 1611A (including characters "No permission to view/listen together with another person. Do you want to request authorization from the other party"), a request control 1611B, and a cancel control 1611C.

In some examples, the electronic device 200 may cancel real-time sharing of an audio stream/a video stream of the short video application with another device in response to a touch operation (for example, a tap operation) on the cancel control 1611C, for example, return to display the user interface 520 shown in FIG. 5B.

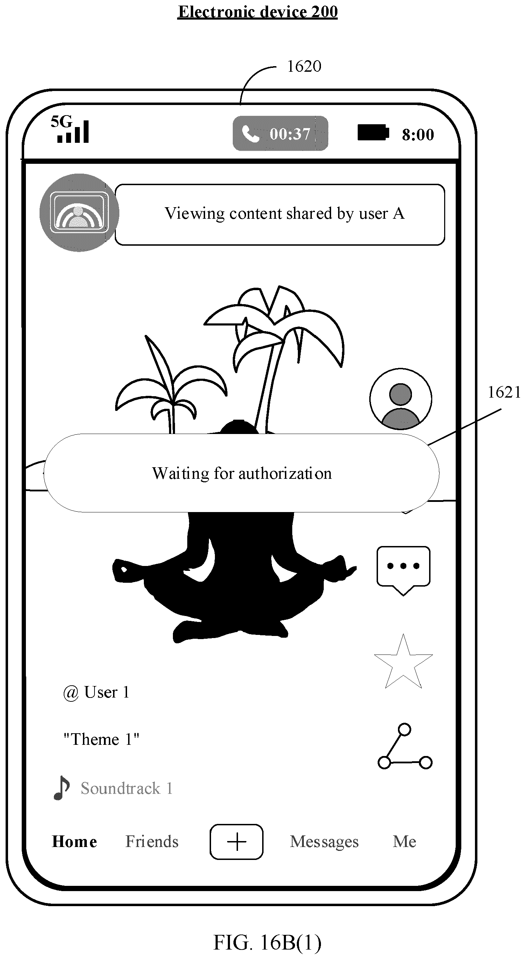

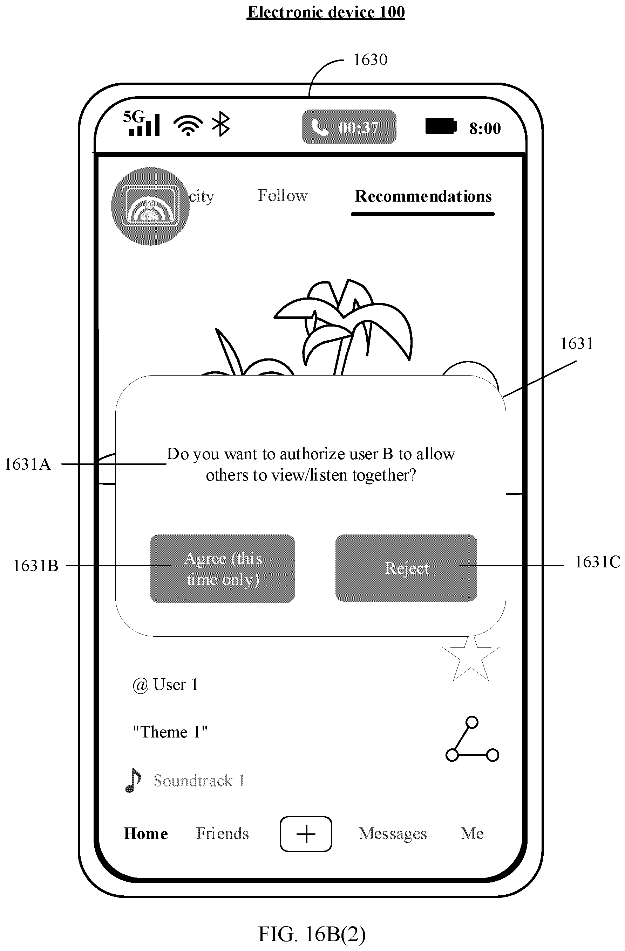

In some examples, the electronic device 200 may send a request message to the sharer device in response to a touch operation (for example, a tap operation) on the request control 1611B, to request to obtain instant propagation permission of currently played shared content (briefly referred to as current shared content, namely, an audio stream/a video stream of the short video application). For an example of the electronic device 100 and the electronic device 200 at this time, refer to FIG. 16B(1) and FIG. 16B(2). As shown in FIG. 16B(1), the electronic device 200 may display a user interface 1620. The user interface 1620 includes prompt information 1621 (including characters "Waiting for authorization"). As shown in FIG. 16B(2), the electronic device 100 may display a user interface 1630. The user interface 1630 may include a prompt box 1631. The prompt box 1631 includes prompt information 1631A (including characters "Do you want to authorize user B to allow others to view/listen together"), an agree control 1631B, and a reject control 1631C. The agree control 1631B is configured to grant the electronic device 200 the instant propagation permission for the current shared content. The reject control 1631C is configured to reject to grant the electronic device 200 the instant propagation permission for the current shared content. This is not limited to the foregoing examples. In some other examples, the agree control 1631B may also be configured to grant the electronic device 200 the instant propagation permission for any shared content, and the agree control 1631B may also be configured to grant the electronic device 200 the instant propagation permission and the delayed propagation permission for the current shared content.

In some examples, after receiving the request message that is sent by the electronic device 200 and that is used to request to obtain the instant propagation permission of the current shared content, the electronic device 100 may send a response message to the electronic device 200 in response to a user operation. In a case, the electronic device 100 sends, to the electronic device 200 in response to a touch operation (for example, a tap operation) on the agree control 1631B in the user interface 1630 shown in FIG. 16B(2), a response message indicating that the request is accepted. After receiving the response message, the electronic device 200 may share the current shared content (audio stream/video stream of the short video application) to the another device in real time, and the electronic device 200 outputs, for example, prompt information indicating that the authorization succeeds. Descriptions of sharing an audio stream/a video stream by the electronic device 200 as a sharer device with another device in real time are similar to descriptions of sharing an audio stream/a video stream by the electronic device 100 as a sharer device in real time. For example, after receiving the response message, the electronic device 200 may display an interface for selecting a to-be-shared object and/or to-be-shared content. In another case, the electronic device 100 sends, to the electronic device 200 in response to a touch operation (for example, a tap operation) on the reject control 1631C in the user interface 1630 shown in FIG. 16B(2), a response message indicating that the request is rejected. After receiving the response message, the electronic device 200 may cancel real-time sharing of the current shared content (audio stream/video stream of the short video application) to the another device, and the electronic device 200 outputs, for example, prompt information indicating that the authorization fails.

This is not limited to the foregoing examples. In some other examples, after receiving the request message that is sent by the electronic device 200 and that is used to request to obtain the instant propagation permission of the current shared content, the electronic device 100 may not output prompt information, but directly reject or receive the request message according to a preset rule. The preset rule may be preset by the electronic device 100, or may be determined in response to a user operation. This is not limited in this application.

In another implementation, when playing content 1 shared by the sharer device in real time, a sharee device without the instant propagation permission may display prompt information in response to a user operation used to trigger the real-time sharing function. The prompt information indicates that the sharee device does not have the instant propagation permission, for example, includes characters "No permission to view/listen together with another person". This is not limited thereto. A sharee device may not respond to a user operation used to trigger the real-time sharing function. This is not limited in this application.

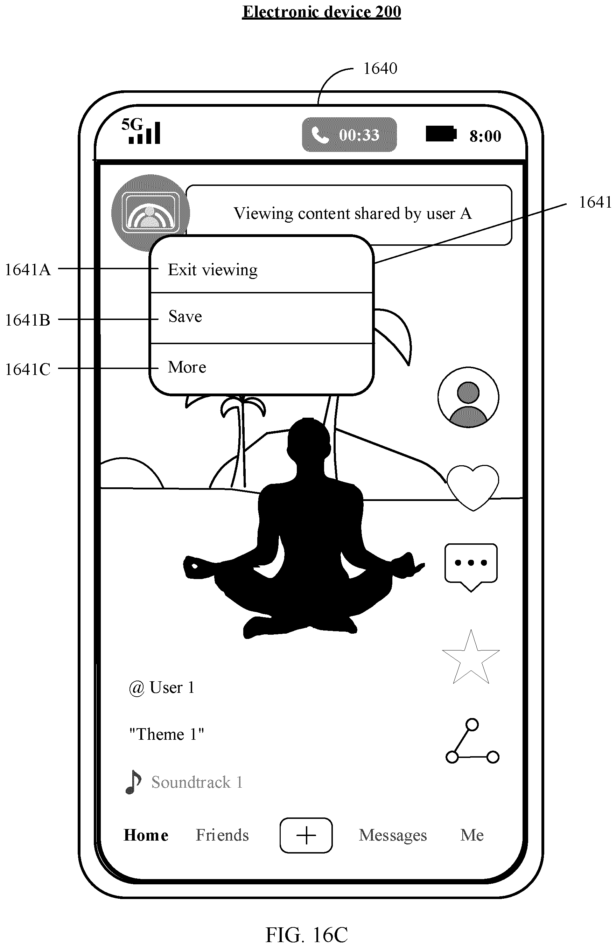

In an implementation, a play interface, displayed by the sharee device, of shared content may include a save control. The save control is configured to save the shared content to the sharee device. In some examples, the electronic device 200 may display, in response to a touch operation (for example, a tap operation) on the sharing control option 523 in the user interface 520 shown in FIG. 5B, a user interface 1640 shown in FIG. 16C. The user interface 1640 includes a sharing menu 1641. The sharing menu 1641 may include a plurality of options, for example, an option 1641A used to pause/exit a play interface of shared content, an option 1641B used to store shared content, and an option 1641C used to trigger a more function option. In a case, an electronic device 200 with the storage permission may store, in response to a touch operation (for example, a tap operation) on the option 1641B, shared content (for example, a currently played audio stream/video stream of the short video application) sent by the electronic device 100. In this case, for example, prompt information (indicating that the storing succeeds) is displayed. In another case, an electronic device 200 without the storage permission may display prompt information (indicating that the electronic device 200 does not have the storage permission) in response to a touch operation (for example, a tap operation) on the option 1641B, or request the electronic device 100 to obtain storage permission for currently shared content. A specific example is similar to those in FIG. 16A, FIG. 16B(1), and FIG. 16B(2). Details are not described again. This is not limited thereto. The electronic device 200 may not respond to a touch operation on the option 1641B. This is not limited in this application.

This is not limited to the foregoing examples. In some other examples, another operation may be used to trigger saving of shared content, for example, a voice input or a specific sliding operation. This is not limited in this application.

This is not limited to the foregoing examples. In some other examples, the electronic device 200 may alternatively choose to store played shared content (which may be all or a part of shared content sent by the electronic device 100). Specifically stored shared content is not limited in this application.

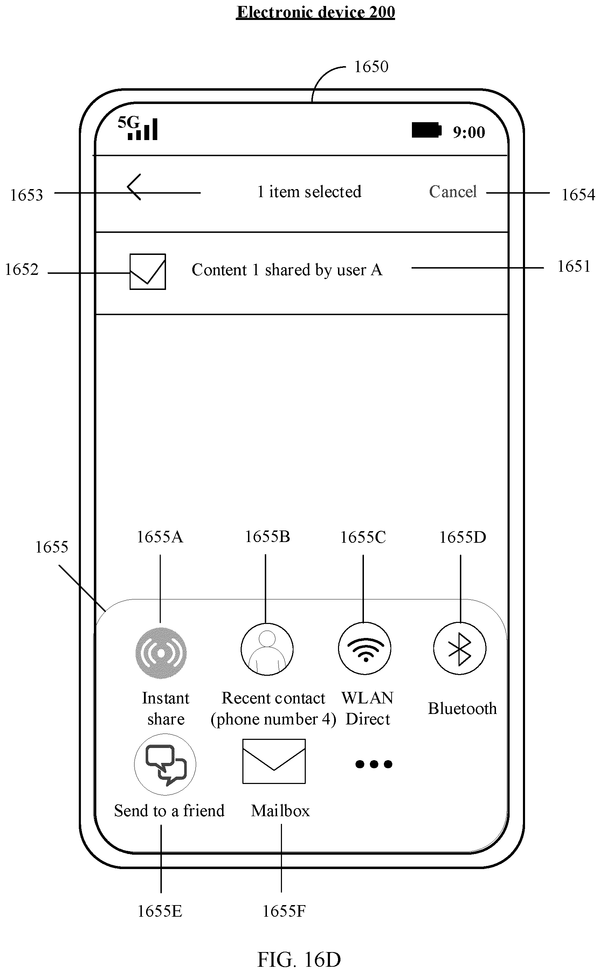

In an implementation, after storing shared content, the sharee device may trigger sharing of the stored shared content with another device. In some examples, the electronic device 200 may display a file sharing interface of shared content, for example, a user interface 1650 shown in FIG. 16D. The user interface 1650 includes file information 1651. The file information 1651 includes characters "Content 1 shared by user A", and indicates a file 1 of content shared by the electronic device 100 in real time. A selection control 1652 is further displayed on the left side of the file information 1651, and is configured to select a file indicated by the file information 1651 or cancel the selection. When the selection control 1652 is in a selected state, prompt information 1653 in the user interface 1650 may include characters "1 item selected". The user interface 1650 further includes a cancel control 1654 and a selection box 1655 for canceling a sharing manner of a selected file. The cancel control 1654 is configured to cancel sending of the selected file 1 to another device. The selection box 1655 may include a plurality of options indicating different sharing manners, for example, an option 1655A including characters "Instant share" (indicating an instant sharing-based sharing manner), an option 1655B including characters "Recent contact (phone number 4)" (indicating a sharing manner through NewTalk such as an operator call/OTT call, where a shared object is a device whose communication number is the phone number 4), an option 1655C including characters "WLAN Direct" (indicating a WLAN-based sharing manner), an option 1655D including characters "Bluetooth" (indicating a Bluetooth-based sharing manner), an option 1655E including characters "Send to a friend" (indicating a chat application-based sharing manner), and an option 1655F including character "Mailbox" (indicating a mailbox/mailbox-based sharing manner). In a case, an electronic device 200 with the delayed propagation permission may send, in response to a touch operation (for example, a tap operation) on any option in the plurality of options, the selected file 1 to another device in a sharing manner indicated by the option. In another case, an electronic device 200 without the delayed propagation permission may display prompt information (indicating that the electronic device 200 does not have the delayed propagation permission) in response to a touch operation (for example, a tap operation) on any option in the plurality of options.

This is not limited to the foregoing examples. In some other examples, an electronic device 200 without the delayed propagation permission may alternatively request the electronic device 100 to obtain delayed propagation permission of the selected file 1. Specific examples are similar to those in FIG. 16A, FIG. 16B(1), and FIG. 16B(2). Details are not described again. In some other examples, an electronic device 200 without the delayed propagation permission may alternatively not respond to a touch operation on any option in the plurality of options. In some other examples, a file of shared content stored in an electronic device 200 without the delayed propagation permission may be encrypted, and a key used to decrypt the file is a dynamic key. Each time when the electronic device 200 opens the file, the electronic device 200 needs to request to obtain a dynamic key from the electronic device 100. The dynamic key is time-effective (for example, valid within one minute or valid for the first three times). The electronic device 200 can play the file only after decrypting the file based on the obtained dynamic key. Even if the electronic device 200 successfully sends the file of the shared content to another device (the electronic device 400 is used as an example for description), because the electronic device 400 cannot obtain the dynamic key, the file cannot be decrypted and played, to achieve effect of protecting privacy security of a sharer user. In some other examples, a file of shared content stored in an electronic device 200 without the delayed propagation permission may be encrypted, and a key used to decrypt the file is obtained by using a device ID of the electronic device 200 as one of factors. Therefore, the electronic device 200 can decrypt the file by using the key, and another device cannot decrypt the file by using the key even if the another device obtains the key and the file, to further ensure security of the shared content. The device ID is, for example, but not limited to, a media access control address (media access control address, MAC), a serial number (serial number, SN), or an international mobile equipment identity (international mobile equipment identity, IMEI). How to prohibit an electronic device without the delayed propagation permission from sending a file of shared content to another device is not limited in this application.

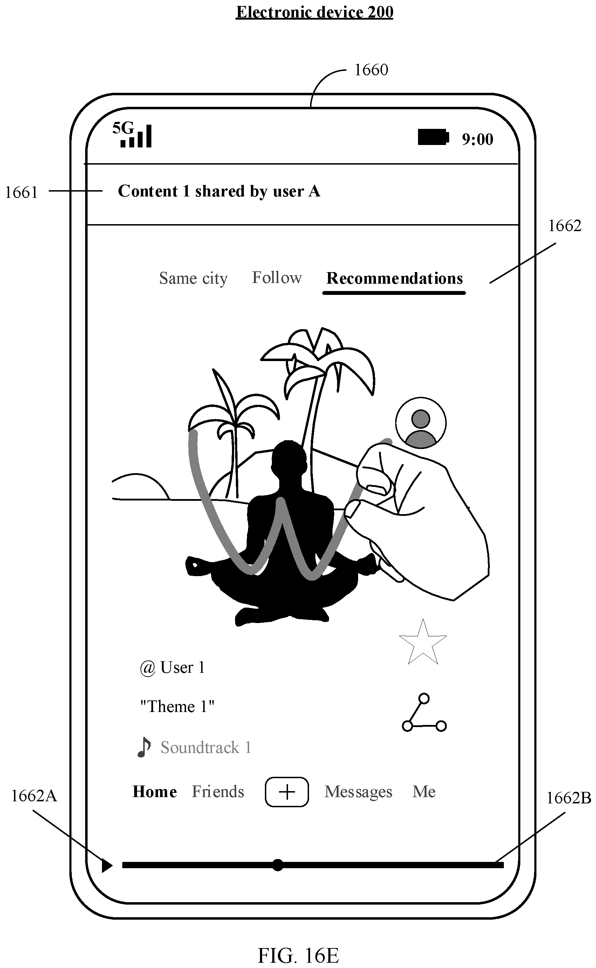

In some other examples, when playing a file of shared content, the electronic device 200 displays, for example, a user interface 1660 shown in FIG. 16E. The user interface 1660 may include a title 1661 and a play box 1662. The title 1661 includes a name of a file played in the play box 1622 "Content 1 shared by user A". The play box 1622 may include a play/pause control 1662A and a progress bar control 1662B. In a case, an electronic device 200 with the delayed propagation permission may share a currently played audio stream/video stream with another device in real time in response to a user operation used to trigger real-time sharing (in FIG. 16E, an example in which the user operation is sliding a knuckle on a display along a specific track "W" is used for description). Descriptions of sharing an audio stream/a video stream by the electronic device 200 as a sharer device with another device in real time are similar to descriptions of sharing an audio stream/a video stream by the electronic device 100 as a sharer device in real time. For example, the electronic device 200 displays, in response to the user operation used to trigger real-time sharing, an interface for selecting a to-be-shared object. In another case, an electronic device 200 without the delayed propagation permission may display prompt information (indicating that the electronic device 200 does not have the delayed propagation permission) in response to a user operation used to trigger real-time sharing (in FIG. 16E, an example in which the user operation is sliding a knuckle on a display along a specific track "W" is used for description). This is not limited to the foregoing examples. In some other examples, an electronic device 200 without the delayed propagation permission may alternatively request the electronic device 100 to obtain delayed propagation permission of a currently played file. Specific examples are similar to those in FIG. 16A, FIG. 16B(1), and FIG. 16B(2). Details are not described again. In some other examples, an electronic device 200 without the delayed propagation permission may alternatively not respond to a user operation used to trigger real-time sharing. This is not limited in this application.

This is not limited to the foregoing examples. In some other examples, the electronic device 100 may alternatively automatically identify whether to-be-shared data meets a preset condition. When the to-be-shared data meets the preset condition, the electronic device 200 is not granted the storage permission and/or the secondary propagation permission based on the shared data.

In some examples, the preset condition is that the to-be-shared data is application data of a preset application. For example, the electronic device 100 may preset information about the preset application (which may be understood as a blocklist). The blocklist may include at least one piece of the following application information: an application type, an application name, a package name, an application identifier, and the like. That the preset condition is that the to-be-shared data is application data of a preset application may include: application information corresponding to the to-be-shared data is consistent with application information in the blocklist. The preset application may include an application determined in response to a user operation, or may include an application that is automatically identified. For example, the electronic device 100 may identify a type of an application, and set an application of a bank type, a payment type, or the like as a preset application.

In some examples, the preset condition is that the to-be-shared data includes preset content. The preset content may include content determined in response to a user operation, or may include content that is automatically identified. The preset content is, for example, but not limited to, a text type, an image type, or a video type. The preset content is, for example, but not limited to, a user name, a password, an account name, a login name, an identity card number, a bank card number, an account balance, and the like.

In the foregoing example, permission management of the sharee device based on the shared content can be implemented, and privacy security of the sharer user can be effectively ensured.

This is not limited to the foregoing implementation (real-time sharing of display content of an entire application or an entire display). In another implementation, the electronic device 100 may determine at least one area of the display in response to a user operation, and an audio stream/a video stream related to the determined area is used for real-time sharing.

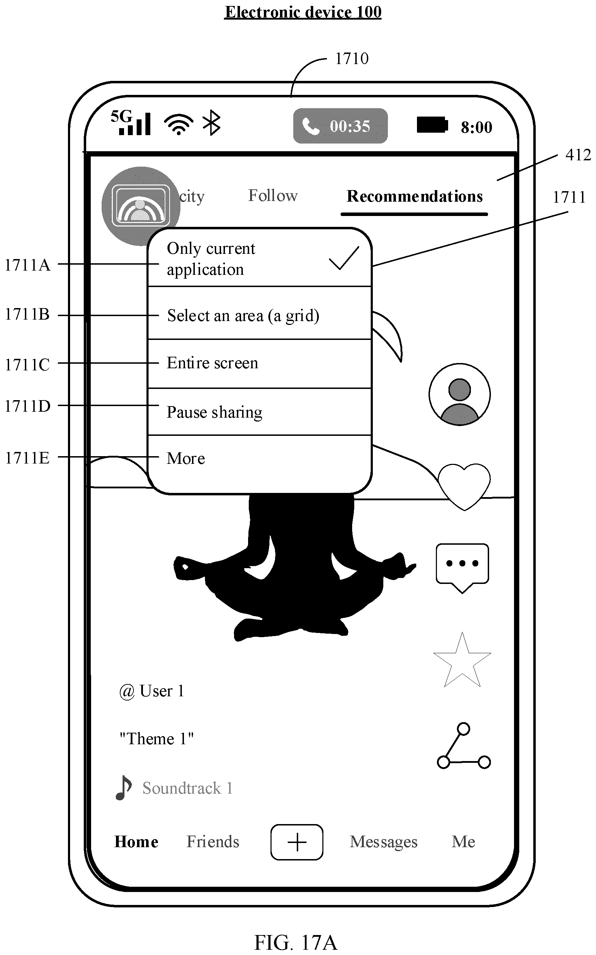

In some examples, the electronic device 100 may display a sharing menu in response to a touch operation (for example, a tap operation) on the sharing control option 421 in the user interface 420 shown in FIG. 4B, for example, display a user interface 1710 shown in FIG. 17A. A sharing menu 1711 in the user interface 1710 may include a plurality of options, for example, an option 1711A used to share an audio stream/a video stream of a current application (the short video application is used as an example for description in FIG. 17A), an option 1711B, an option 1711C used to share display content of a screen of the electronic device 100, an option 1711D used to cancel/pause/stop real-time sharing, and an option 1711E used to trigger more functions. The option 1711B includes characters "Select an area (a grid)", and is used to select, in a grid manner, an area used to perform real-time sharing.

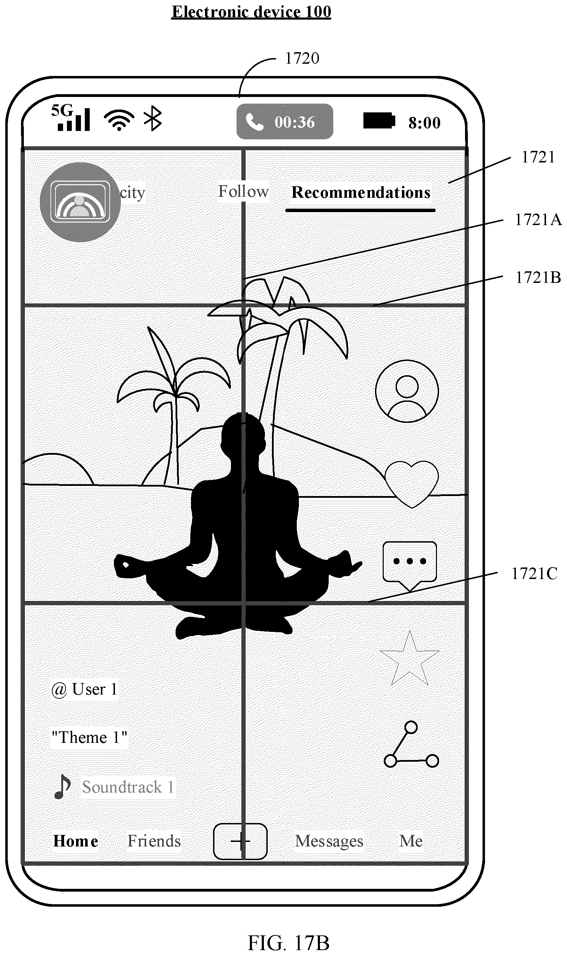

In some examples, the electronic device 100 may display, in response to a touch operation (for example, a tap operation) on the option 1711B in the user interface 1710 shown in FIG. 17A, a user interface 1720 shown in FIG. 17B. The user interface 1720 is similar to the user interface 420 shown in FIG. 4B. A difference lies in that a play window 1721 of the short video in the user interface 1720 is divided into a plurality of areas (the areas may also be referred to as grids) by using a plurality of segmentation lines. In FIG. 17B, an example in which the play window 1721 is divided into 2×3=6 grids by using three segmentation lines (a vertical segmentation line 1721A, a horizontal segmentation line 1721B, and a segmentation line 1721C) is used for description. Any grid in the play window 1721 may be selected, and the selected grid may be used as a real-time sharing area.

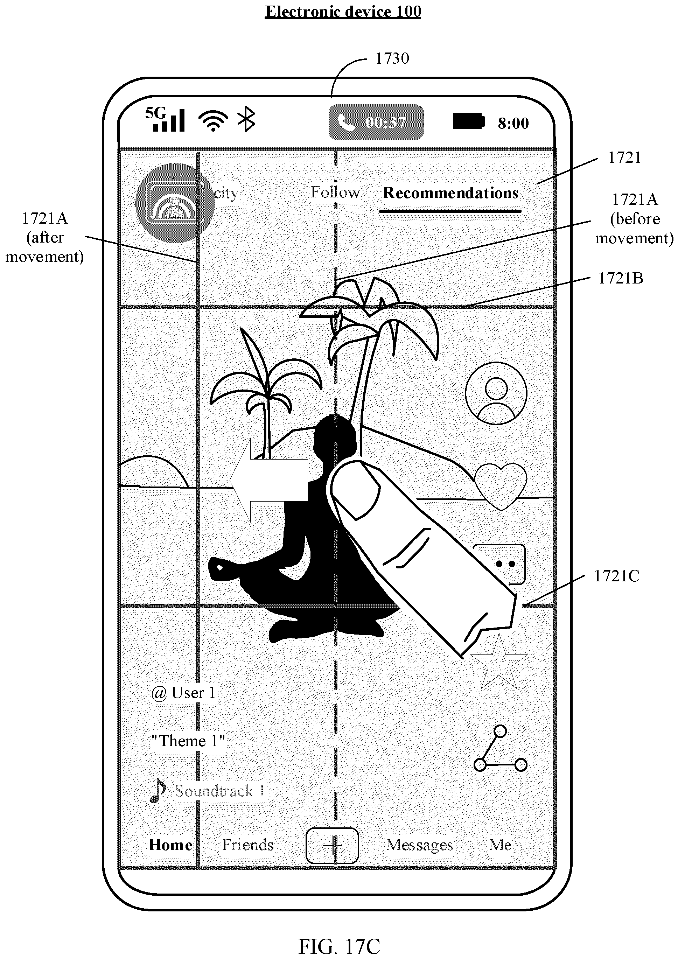

In some examples, the electronic device 100 may move a segmentation line in a play window of shared content in response to a user operation. For example, the electronic device 100 may move the vertical segmentation line 1721A leftward or rightward in response to a touch operation on the segmentation line 1721A in the play window 1721 included in the user interface 1720 shown in FIG. 17B. For a specific example, refer to a user interface 1730 shown in FIG. 17C. In FIG. 17C, an example in which the touch operation is sliding leftward is used for description. The user interface 1730 shows the segmentation line 1721A before the movement and the segmentation line 1721A after the movement. This is not limited thereto. The vertical segmentation line in the play window 1721 may be further moved upward or downward.

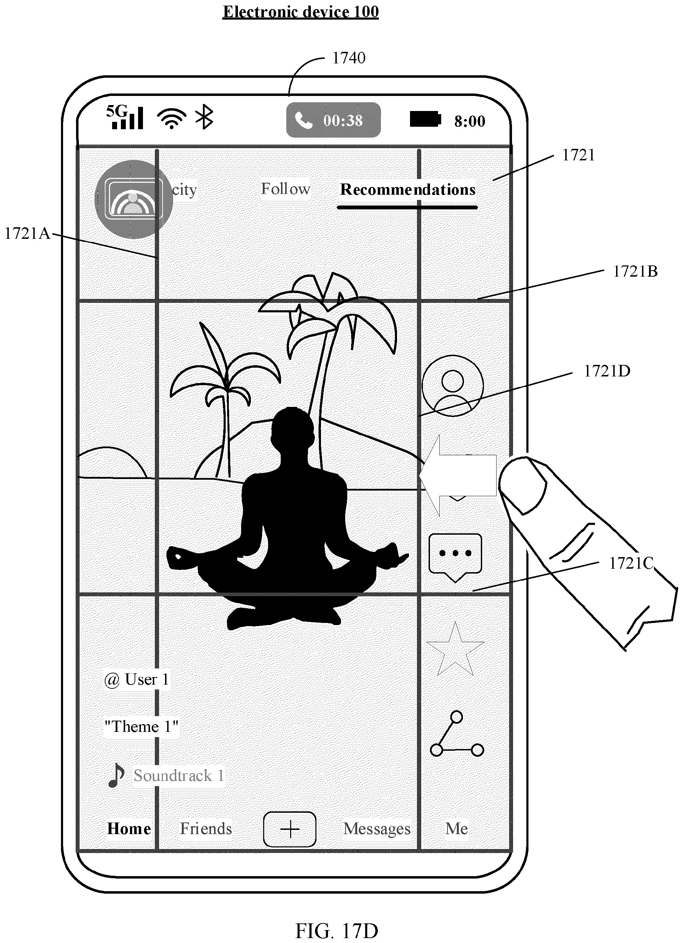

In some examples, the electronic device 100 may add a segmentation line to a play window of shared content in response to a user operation. For example, in response to a touch operation on a left edge or a right edge of the play window 1721 included in the user interface 1730 shown in FIG. 17C, the electronic device 100 may add a vertical segmentation line and move the segmentation line rightward or leftward. For a specific example, refer to a user interface 1740 shown in FIG. 17D. In FIG. 17D, an example in which the touch operation is sliding from a right edge of the screen to a middle of the screen (sliding leftward) is used for description. The user interface 1740 shows a newly added vertical segmentation line 1721D. This is not limited thereto. A horizontal segmentation line may be further added in response to a touch operation on an upper edge or a lower edge of the play window 1721.

In some examples, the electronic device 100 may delete a segmentation line from a play window of shared content in response to a user operation. For example, the electronic device 100 may move the vertical segmentation line 1721A to a left edge or a right edge of a screen in response to a touch operation (for example, sliding leftward or rightward) on the segmentation line 1721A in the play window 1721 included in the user interface 1720 shown in FIG. 17B. In this case, the play window 1721 may not display the segmentation line 1721A, which may be understood as that the segmentation line 1721A is deleted. This is not limited thereto. A horizontal segmentation line in the play window may be further moved to an upper edge or a lower edge of the screen, so as to delete the segmentation line.

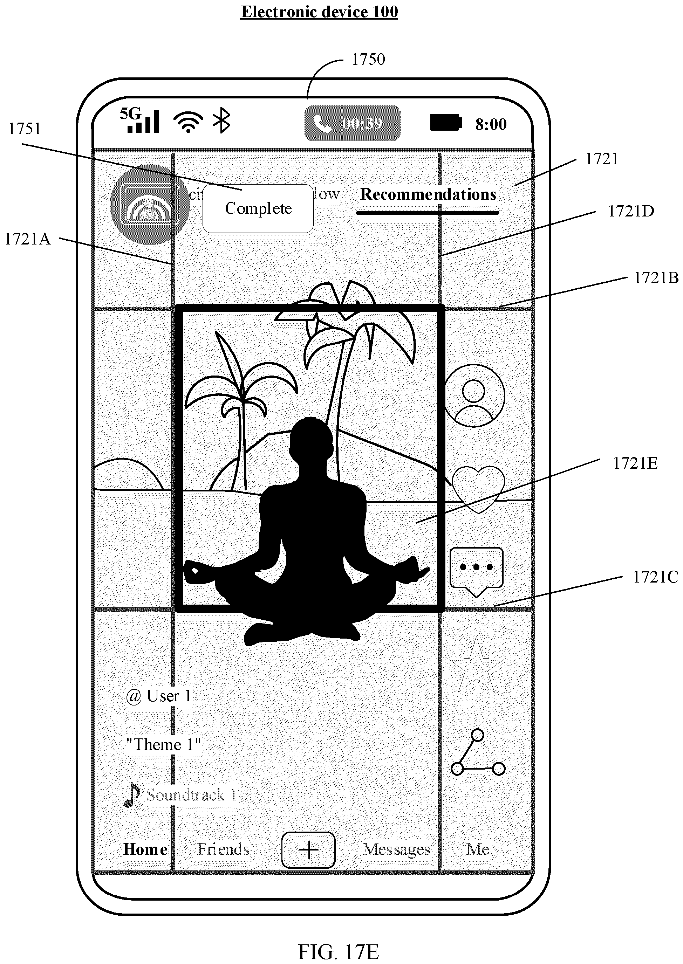

In some examples, the electronic device 100 may select any grid (as a real-time sharing area) in a play window of shared content in response to a user operation. For example, in response to a touch operation (for example, a tap operation, a double-tap operation, or a touch and hold operation) on a grid in the middle of the play window 1721 included in the user interface 1740 shown in FIG. 17D, the electronic device 100 may select the grid. In this case, the electronic device 100 may display a user interface 1750 shown in FIG. 17E, and a grid 1721E in the middle of the play window 1721 shown in the user interface 1750 is in a selected state. The user interface 1750 further includes a complete control 1751. The complete control 1751 is configured to store a currently selected grid (the grid 1721E) as a real-time sharing area.

It may be understood that, after a segmentation line is moved, deleted, and added in a play window of shared content, a size and/or a quantity of grids included in the play window change. For example, sizes of six grids in the user interface 1720 shown in FIG. 17B (before a segmentation line is moved shown in FIG. 17C and a segmentation line is added shown in FIG. 17D) are different from sizes of six grids in the user interface 1750 shown in FIG. 17E (after the segmentation line is moved shown in FIG. 17C and the segmentation line is added shown in FIG. 17D).

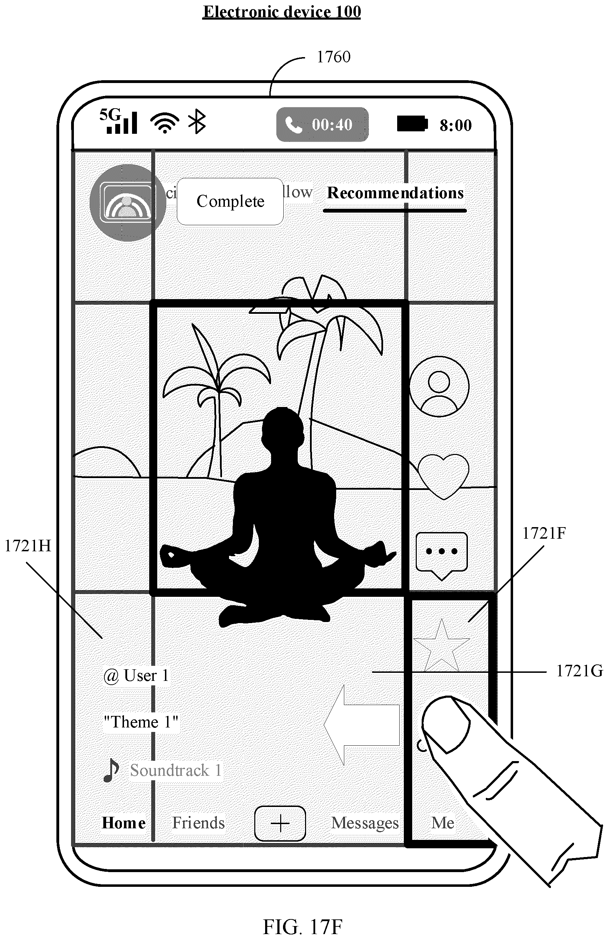

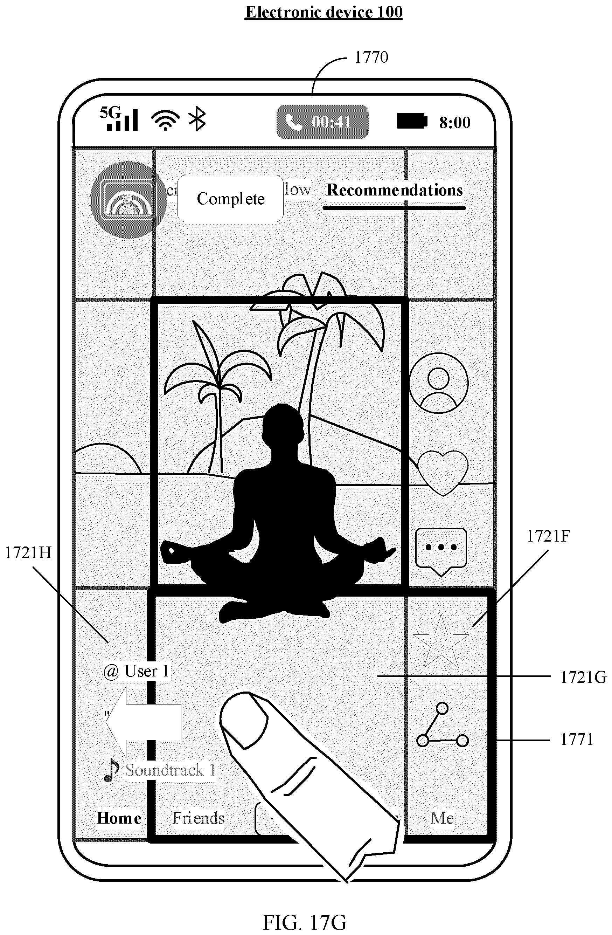

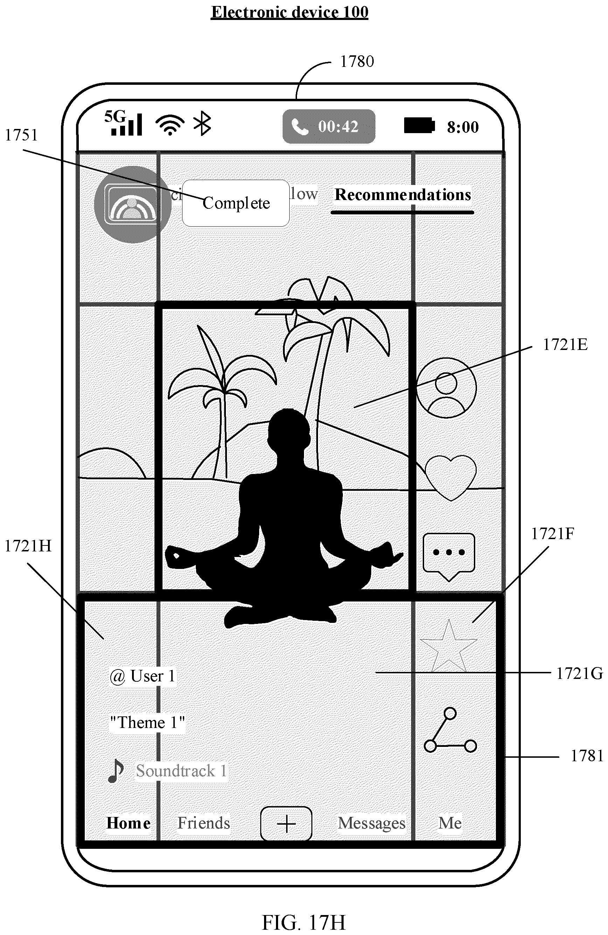

In some examples, the electronic device 100 may select a plurality of grids (as a real-time sharing area) in a play window of shared content in response to a user operation. For example, the electronic device 100 may sequentially receive touch operations (for example, a tap operation, a double-tap operation, or a touch-and-hold operation) on three grids at the bottom of the play window 1721 included in the user interface 1740 shown in FIG. 17D, and select the three grids in response to the touch operations. A specific example is similar to that in FIG. 17E. This is not limited thereto. The electronic device 100 may first receive a touch operation (for example, a tap operation, a double-tap operation, or a touch and hold operation) on any grid in the three grids, and select the grid. For example, the electronic device 100 may display a user interface 1760 shown in FIG. 17F, and a grid 1721F in the user interface 1760 is in a selected state. As shown in FIG. 17F, after performing the touch operation, the user may keep touching a display of the electronic device 100 by using a finger, and slide leftward to a grid 1721G adjacent to the grid 1721F in the user interface 1760. The electronic device 100 may select the grid 1721G in response to the user operation. In this case, a user interface 1770 shown in FIG. 17G may be displayed. A grid 1771 in the user interface 1770 is in a selected state, and the grid 1771 is obtained by combining the grid 1721F and the grid 1721G. As shown in FIG. 17G, the user may continue to keep touching the display of the electronic device 100 by using the finger, and slide leftward to a grid 1721H adjacent to the grid 1721G in the user interface 1760. The electronic device 100 may select the grid 1721H in response to the user operation. In this case, a user interface 1780 shown in FIG. 17H may be displayed. A grid 1781 in the user interface 1780 is in a selected state, and the grid 1781 is obtained by combining the grid 1721F, the grid 1721G, and the grid 1721H.

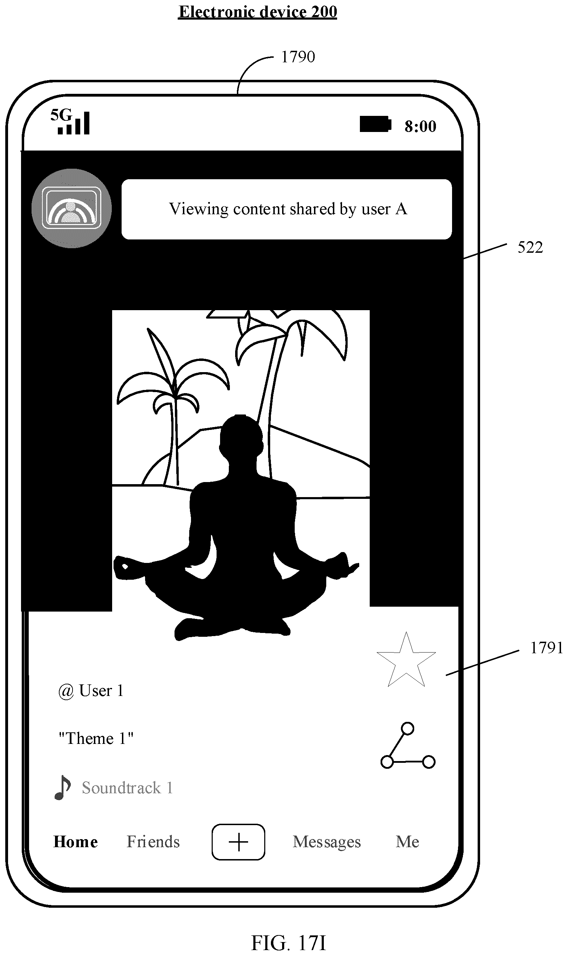

In some examples, after determining a real-time sharing area, the electronic device 100 may share a video stream/an audio stream related to the area to another device in real time. For example, in response to a touch operation (for example, a tap operation) on the complete control 1751 in the user interface 1780 shown in FIG. 17H, the electronic device 100 may set the selected grid 1721E and the grid 1781 as real-time sharing areas, and share a related video stream/audio stream to the electronic device 200 in real time. For example, the electronic device 200 may display a user interface 1790 shown in FIG. 17I. The user interface 1790 is similar to the user interface 520 shown in FIG. 5B. A difference lies in that in the play window 522 of the shared content shown in the user interface 1790, only the selected grid 1721E and content 1791 in the grid 1781 are displayed, and content in another area is not displayed.

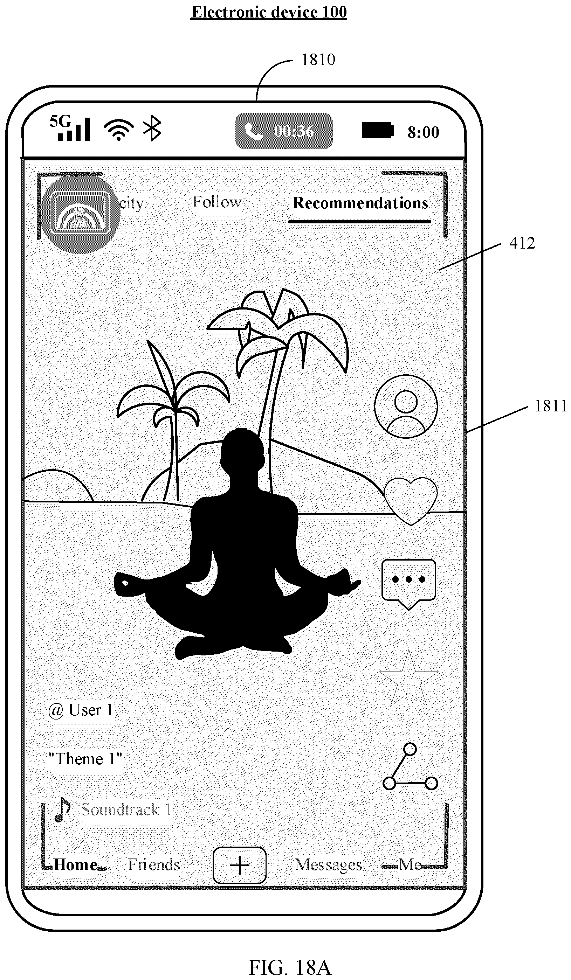

A manner of selecting a real-time sharing area is not limited to those shown in FIG. 17B to FIG. 17H. In some other examples, the electronic device 100 may display, in response to a touch operation (for example, a tap operation) on the option 1711B in the user interface 1710 shown in FIG. 17A, a user interface 1810 shown in FIG. 18A. The user interface 1810 is similar to the user interface 420 shown in FIG. 4B. A difference lies in that a selected box 1811 is further displayed in the play window 412 of the short video in the user interface 1810. Optionally, the selected box 1811 includes all display content in the play window 412 by default. An area in which the selected box 1811 is located may be used as a real-time sharing area.

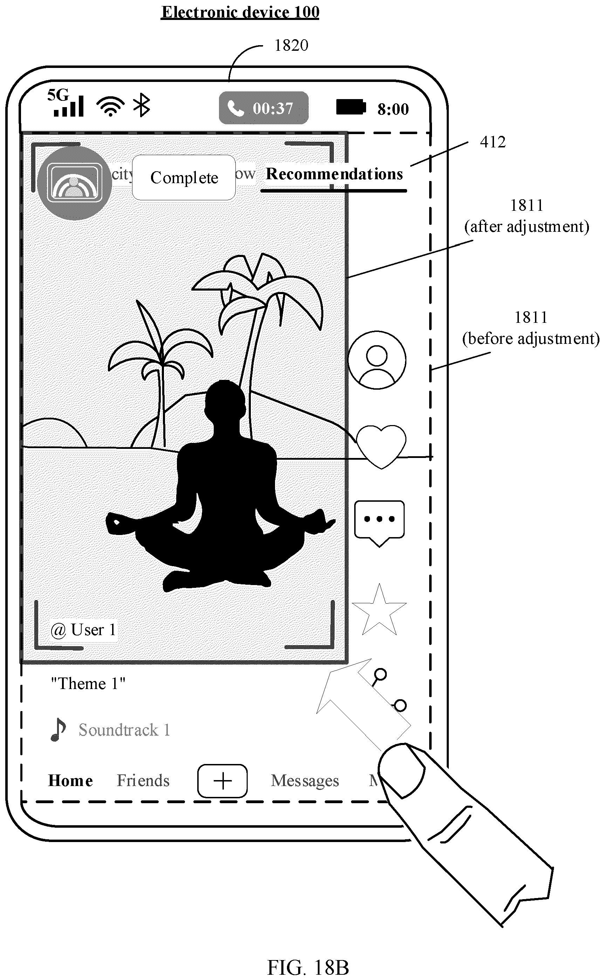

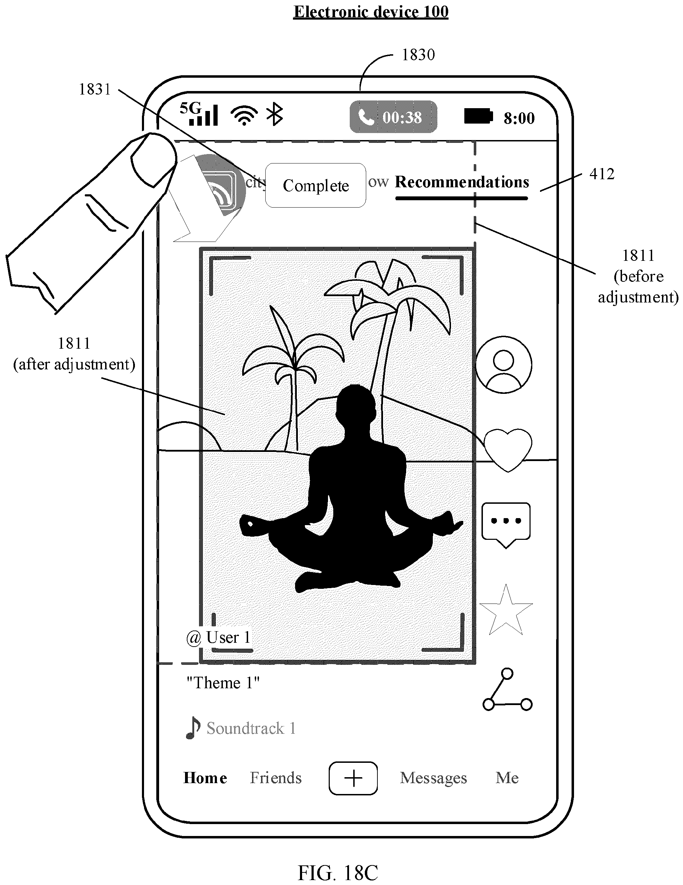

In some examples, the electronic device 100 may adjust a size and/or a location of a selected box in a play window of shared content. For example, the electronic device 100 may receive a touch operation (for example, sliding upward and downward, sliding leftward and rightward, sliding obliquely upward, or sliding obliquely downward) on a lower right corner of the selected box 1811 in the user interface 1810 shown in FIG. 18A. In FIG. 18B, an example in which the touch operation is sliding from the lower right corner to an upper left corner is used for description. The electronic device 100 may zoom out the selected box 1811 in response to the touch operation. A user interface 1820 shown in FIG. 18B shows the selected box 1811 before adjustment and a selected box 1811 after adjustment. The electronic device 100 may continue to receive a touch operation (for example, sliding upward and downward, sliding leftward and rightward, sliding obliquely upward, or sliding obliquely downward) on the upper left corner of the selected box 1811 in the user interface 1820 shown in FIG. 18B. In FIG. 18C, an example in which the touch operation is sliding from the upper left corner to the lower right corner is used for description. The electronic device 100 may zoom out the selected box 1811 in response to the touch operation. A user interface 1830 shown in FIG. 18C shows the selected box 1811 before adjustment and a selected box 1811 after adjustment. The user interface 1830 further includes a complete control 1831. The complete control 1831 is configured to store, as a real-time sharing area, an area in which the current selected box 1811 (the selected box 1811 after adjustment) is located.

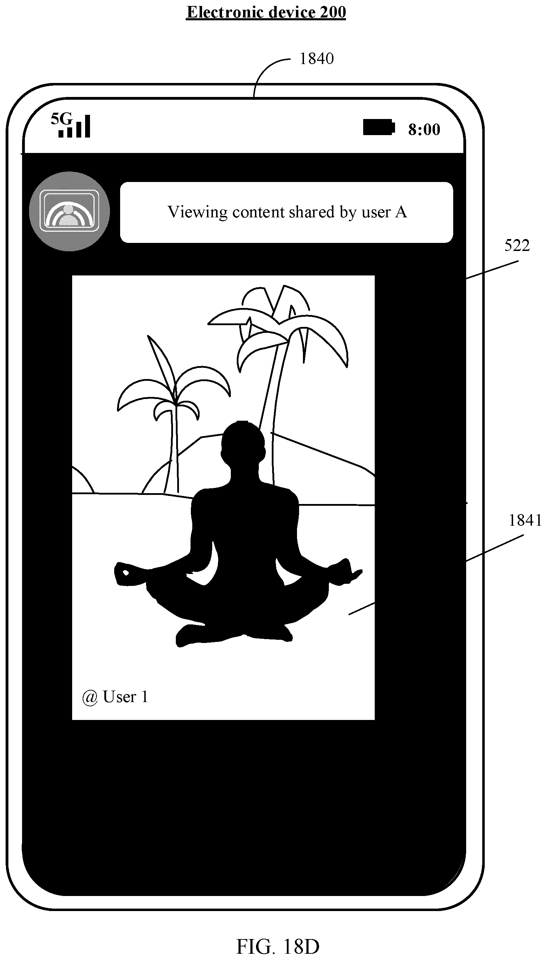

In some examples, after determining that the area in which the selected box is located is a real-time sharing area, the electronic device 100 may share a video stream/an audio stream related to the area to another device in real time. For example, in response to a touch operation (for example, a tap operation) on the complete control 1831 in the user interface 1830 shown in FIG. 18C, the electronic device 100 may set an area in which the selected box 1811 is located as a real-time sharing area, and share a related video stream/audio stream to the electronic device 200 in real time. For example, the electronic device 200 may display a user interface 1840 shown in FIG. 18D. The user interface 1840 is similar to the user interface 520 shown in FIG. 5B. A difference lies in that in the play window 522 of the shared content shown in the user interface 1840, only content 1841 in the selected box 1811 is displayed, and content in another area is not displayed.

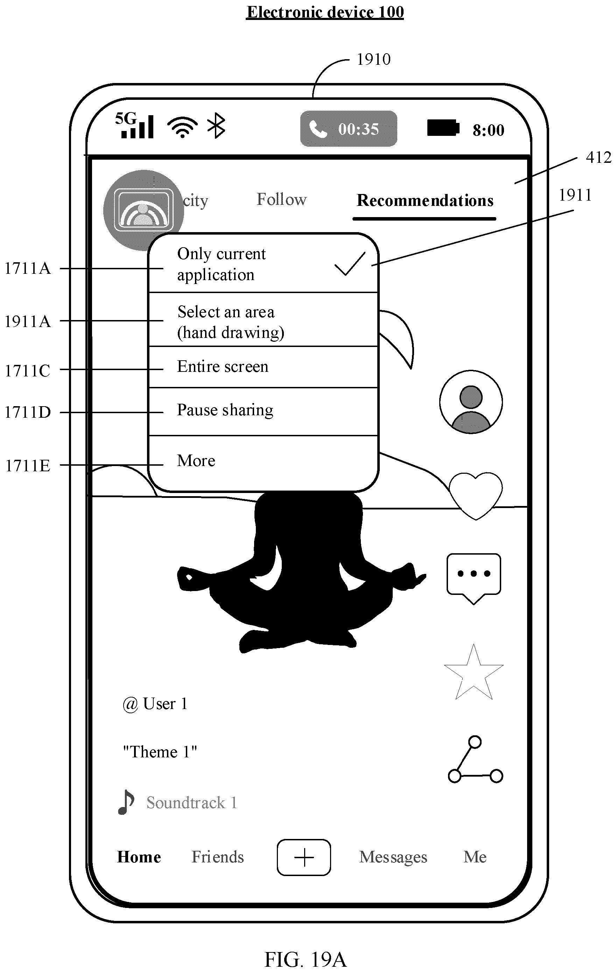

A manner of selecting a real-time sharing area is not limited to those shown in the foregoing examples. In some other examples, the electronic device 100 may display, in response to a touch operation (for example, a tap operation) on the sharing control option 421 in the user interface 420 shown in FIG. 4B, a user interface 1910 shown in FIG. 19A. The user interface 1910 is similar to the user interface 1710 shown in FIG. 17A. A difference lies in that a sharing menu 1911 in the user interface 1910 does not include the option 1711B, but includes an option 1911A. The option 1911Aincludes characters "Select an area (hand drawing)", and is used to select a real-time sharing area in a hand drawing manner.

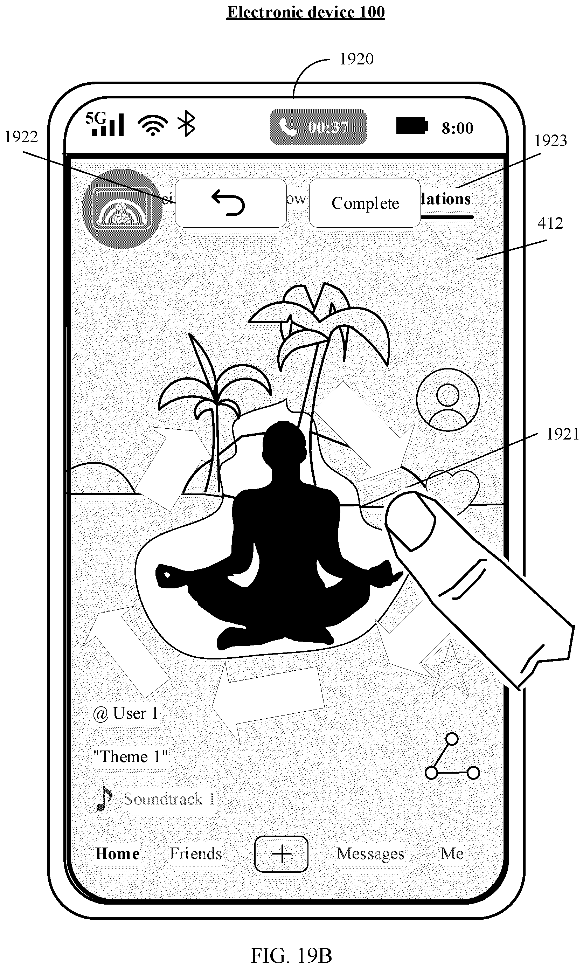

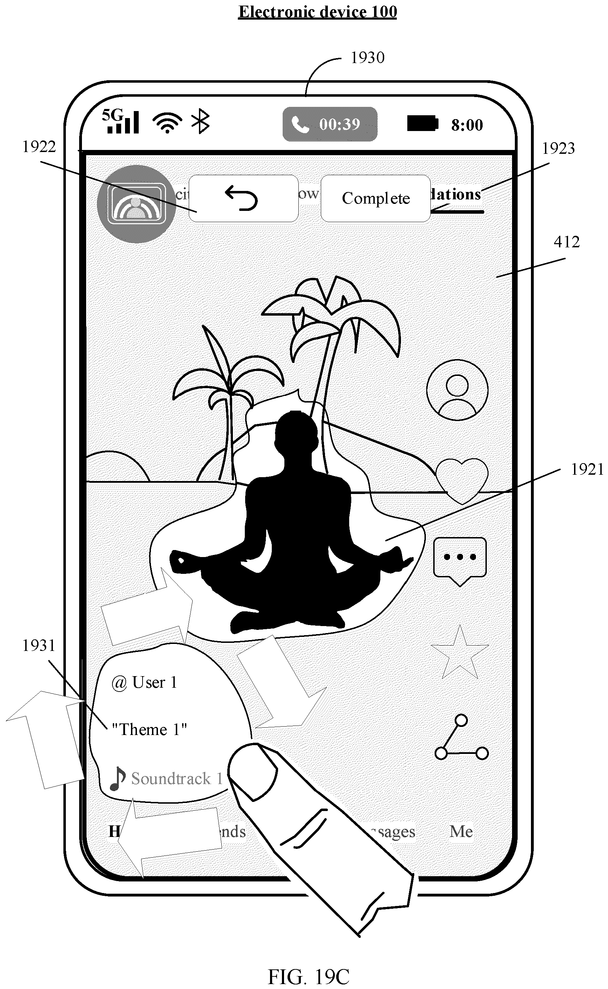

In some examples, the electronic device 100 may display, in response to a touch operation (for example, a tap operation) on the option 1911A in the user interface 1910 shown in FIG. 19A, a user interface 1920 shown in FIG. 19B. The user interface 1920 is similar to the user interface 420 shown in FIG. 4B. The electronic device 100 may select, from the play window 412 in response to a touch operation on the play window 412 of the short video in the user interface 1920, an area related to the touch operation. In FIG. 19B, an example in which the touch operation is sliding in a clockwise direction is used for description. The area related to the touch operation is an area 1921 in the user interface 1920. The user interface 1920 further includes a return control 1922 and a complete control 1923. The return control 1922 is configured to cancel a latest operation result, for example, cancel selection of the area 1921. The complete control 1923 is configured to store a currently selected area (for example, the area 1921) as a real-time sharing area. This is not limited thereto. The user may further select a plurality of areas. For example, after FIG. 19B, the electronic device 100 may select, from the play window 412 in response to a touch operation on the play window 412 of the short video, an area related to the touch operation. In FIG. 19C, an example in which the touch operation is sliding in a clockwise direction is used for description. The area related to the touch operation is an area 1931 in the user interface 1930 shown in FIG. 19C.

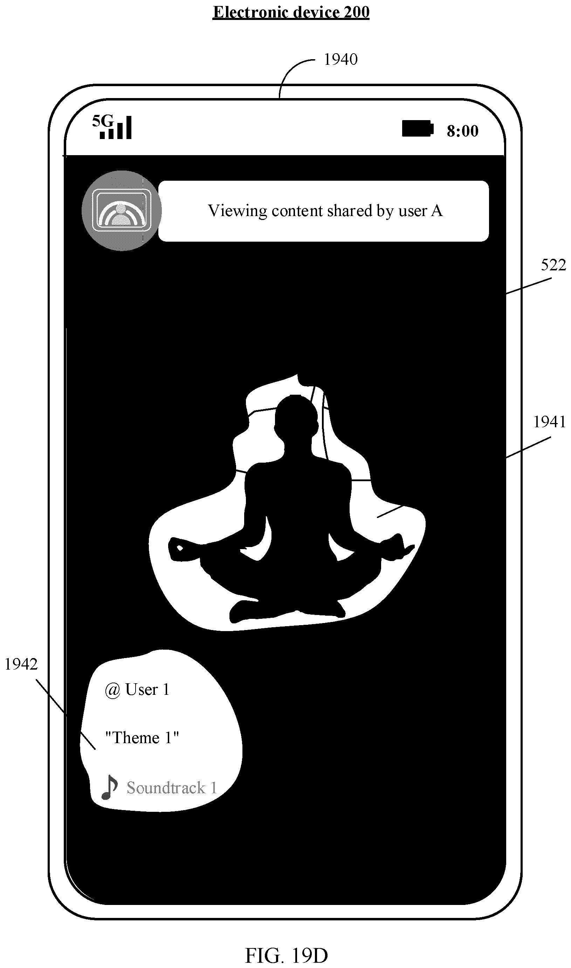

In some examples, after determining that an area selected by the user in a hand drawing manner is a real-time sharing area, the electronic device 100 may share a video stream/an audio stream related to the area to another device in real time. For example, in response to a touch operation (for example, a tap operation) on the complete control 1923 in the user interface 1930 shown in FIG. 19C, the electronic device 100 may set the area 1921 and the area 1931 that are selected by hand drawing as real-time sharing areas, and share a related video stream/audio stream to the electronic device 200 in real time. For example, the electronic device 200 may display a user interface 1940 shown in FIG. 19D. The user interface 1940 is similar to the user interface 520 shown in FIG. 5B. A difference lies in that in the play window 522 of the shared content shown in the user interface 1940, only content 1941 in the area 1921 and content 1942 in the area 1931 are displayed, and content in another area is not displayed.

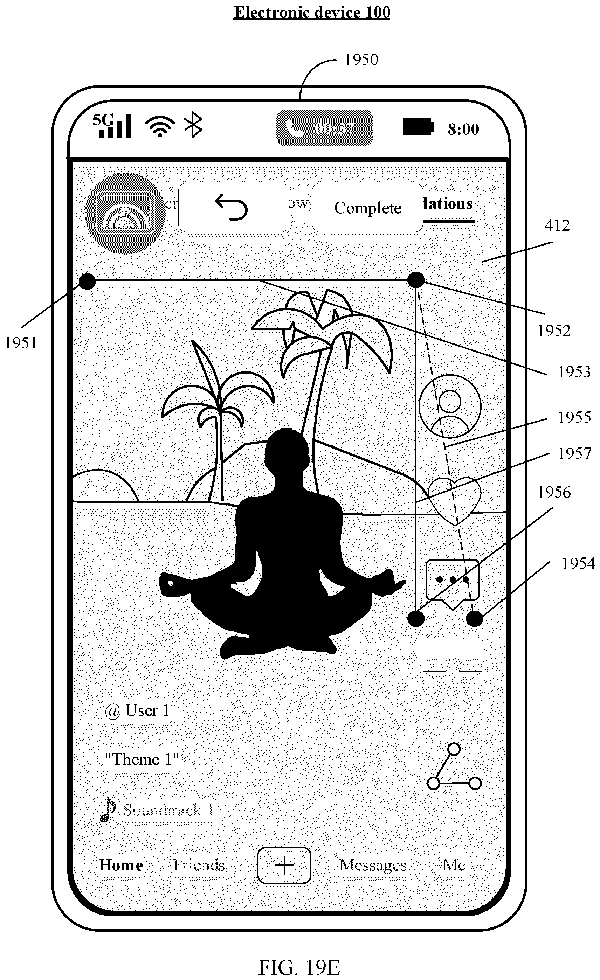

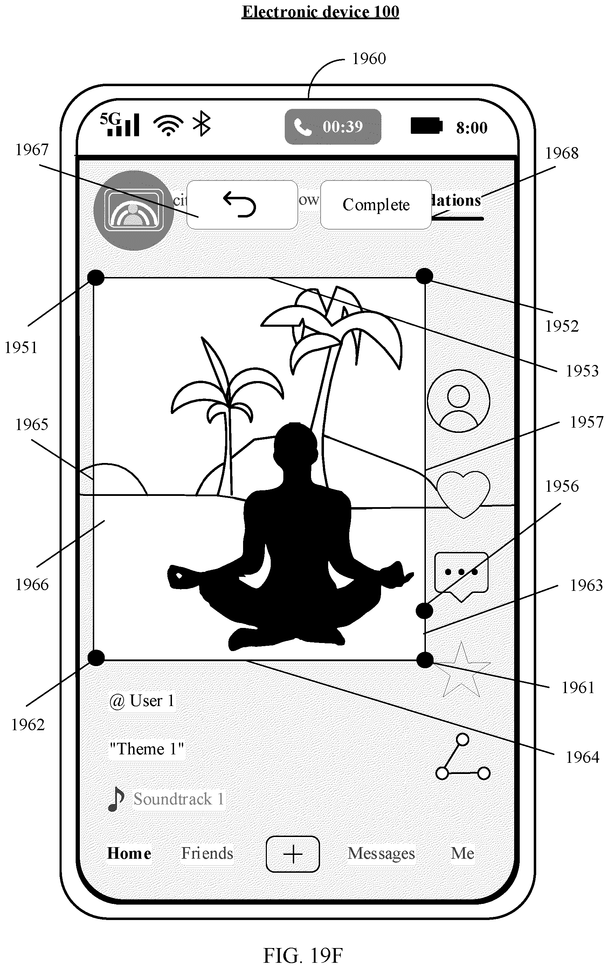

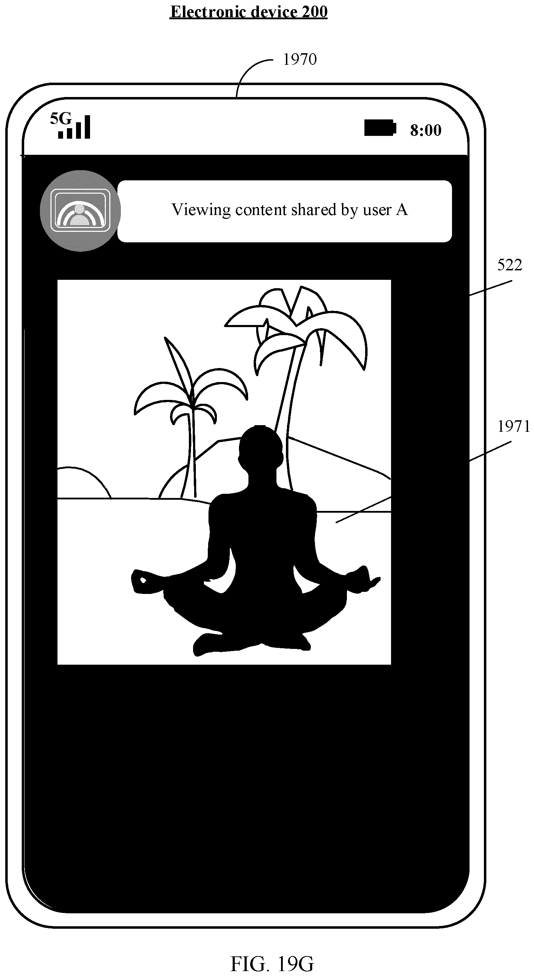

A manner of selecting a real-time sharing area is not limited to those shown in FIG. 19B and FIG. 19C. In some other examples, the electronic device 100 may display, in response to a touch operation (for example, a tap operation) on the option 1911A in the user interface 1910 shown in FIG. 19A, a user interface 1950 shown in FIG. 19E. The user interface 1950 is similar to the user interface 420 shown in FIG. 4B, and includes the play window 412 of the short video. The electronic device 100 may sequentially receive touch operations (for example, tap operations) on the location 1951 and the location 1952 in the user interface 1950, and display, in the user interface 1950 in response to the touch operations, a boundary line 1953 (in a solid line form) whose endpoints are a point of the location 1951 and a point of the location 1952. Then, the electronic device 100 may receive a touch operation on a location 1954 in the user interface 1950. When the user keeps touching the location 1954 by using a finger, a boundary line 1955 (in a dashed line form, representing adjustable) whose endpoints are the point of the location 1952 and a point of the location 1954 may be displayed in the user interface 1950. The user may keep touching the display by using the finger and move from the location 1954 to a location 1956. The electronic device 100 may cancel displaying of the boundary line 1955 in the user interface 1950 in response to the user operation, and display a boundary line 1957 (in a solid line form) whose endpoints are the point of the location 1952 and a point of the location 1956. This case may be understood as that the boundary line 1955 is adjusted to the boundary line 1957. Then, the electronic device 100 may sequentially receive touch operations (for example, tap operations) on a location 1961, a location 1962, and the location 1951 in a user interface 1960 shown in FIG. 19F, and display, in the user interface 1960 in response to the touch operations, a boundary line 1963 (in a solid line form) whose endpoints are the point of the location 1956 and a point of the location 1961, a boundary line 1964 (in a solid line form) whose endpoints are the point of the location 1961 and a point of the location 1962, and a boundary line 1965 (in a solid line form) whose endpoints are the point of the location 1962 and the point of the location 1951. The boundary lines 1953, 1957, 1963, 1964, and 1965 may form an area 1966 (selected by the user) in the user interface 1960. The user interface 1960 further includes a return control 1967 and a complete control 1968. The return control 1967 is configured to cancel a latest operation result, for example, cancel displaying of the boundary line 1965. The electronic device 100 may set, in response to a touch operation (for example, a tap operation) on the complete control 1968, an area 1966 that is selected by the user in a hand drawing manner as a real-time sharing area, and share a related video stream/audio stream to the electronic device 200 in real time. For example, the electronic device 200 may display a user interface 1970 shown in FIG. 19G. The user interface 1970 is similar to the user interface 520 shown in FIG. 5B. A difference lies in that in the play window 522 of the shared content shown in the user interface 1970, only content 1971 in the area 1966 is displayed, and content in another area is not displayed.

This is not limited to the foregoing examples. In some other examples, the electronic device 100 may not share any application data of a preset application in real time (for example, an interface that is of a sharee device and that is used to display shared content is black). For example, the electronic device 100 may preset information about the preset application (which may be understood as a blocklist). The blocklist may include at least one piece of the following application information: an application name, a package name, an application identifier, and the like. When the electronic device 100 identifies that application information corresponding to to-be-shared data is consistent with application information in the blocklist, the electronic device may not share the to-be-shared data in real time (for example, but not limited to the following case: the electronic device 100 outputs prompt information indicating that real-time sharing cannot be performed, or a window that is of the sharee device and that is used to display to-be-shared data is black). The preset application may include an application determined in response to a user operation, or may include an application that is automatically identified. For example, the electronic device 100 may identify a type of an application, and set an application of a bank type, a payment type, or the like as a preset application. In some other examples, the electronic device 100 may not share an interface of an application in real time (for example, when a sharee device displays shared content, if a video stream related to the interface is played, the interface is displayed in black, or if another video stream is played, the interface is displayed normally). For example, when identifying that a to-be-shared user interface includes preset content, the electronic device 100 does not share the interface in real time. In some other examples, the electronic device 100 may not share an area in a user interface in real time (a specific example is similar to those in FIG. 19D and FIG. 19G). For example, when identifying that a to-be-shared user interface includes preset content, the electronic device 100 does not share, in real time, an area that is of the interface and in which the preset content is displayed. The preset content may include content determined in response to a user operation, or may include content that is automatically identified. The preset content is, for example, but not limited to, a text type, an image type, or a video type. The preset content is, for example, but not limited to, a user name, a password, an account name, a login name, an identity card number, a bank card number, an account balance, and the like.

This is not limited to the foregoing implementation (real-time sharing of display content that is of an entire application, an entire display, or an area selected by the user). In another implementation, the electronic device 100 may determine at least one layer in a user interface in response to a user operation. An audio stream/a video stream related to the determined layer is used for real-time sharing.

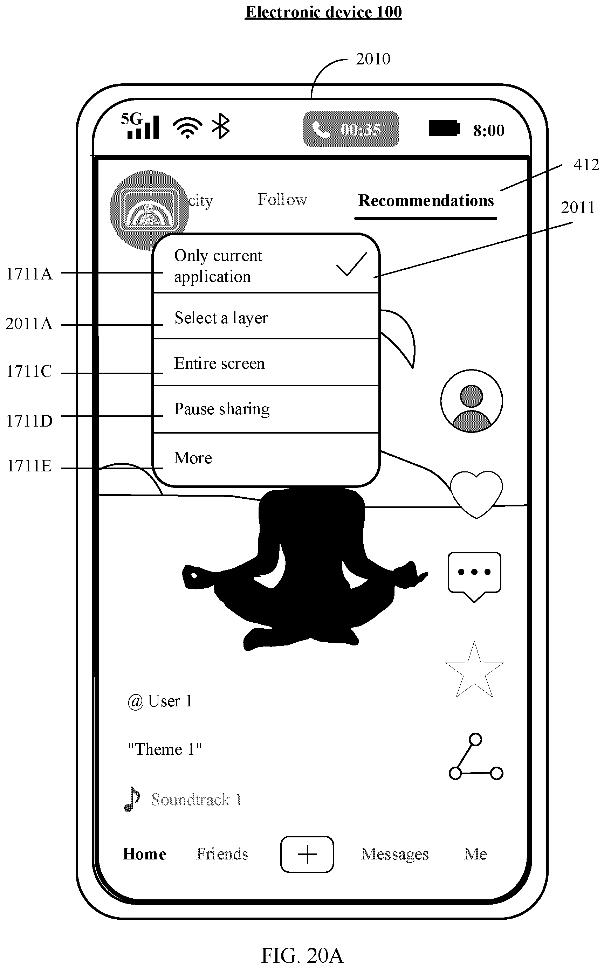

In some examples, the electronic device 100 may display a sharing menu in response to a touch operation (for example, a tap operation) on the sharing control option 421 in the user interface 420 shown in FIG. 4B, for example, display a user interface 2010 shown in FIG. 20A. The user interface 2010 is similar to the user interface 1710 shown in FIG. 17A. A difference lies in that a sharing menu 2011 in the user interface 2010 does not include the option 1711B, but includes an option 2011A. The option 2011A includes characters "Select a layer", and is used to trigger selection of a layer used for real-time sharing.

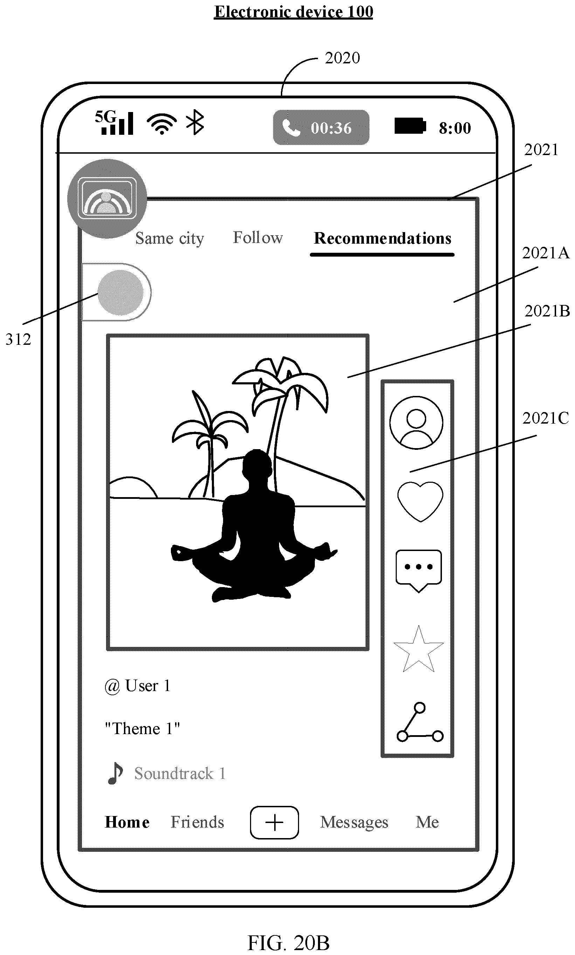

In some examples, the electronic device 100 may display a layer selection interface in response to a touch operation (for example, a tap operation) on the option 2011A in the user interface 2010 shown in FIG. 20A, for example, display a user interface 2020 shown in FIG. 20B. The user interface 2020 may include a schematic layer interface 2021. The schematic layer interface 2021 may include a layer 2021A, a layer 2021B, and a layer 2021C. These layers may be obtained by performing layer division on the play window 412 of the short video in the user interface 420 shown in FIG. 4B (it is assumed that the floating window 312 in a collapsed state is further displayed). The layer 2021A may include content of the short video application and the floating window 312. The layer 2021B may include content of the short video application (which may be understood as specific content of the short video 1 played in the play window 412). The layer 2021C may include content of the short video application (which may be understood as a related control of the short video application). In response to a touch operation (for example, a tap operation, a double-tap operation, or a touch and hold operation) on any layer on the schematic layer interface 2021, the electronic device 100 may select the layer. The electronic device 100 may share an audio stream/a video stream related to the selected layer with another device, for example, share the audio stream/video stream of the short video 1 related to the layer 2021B to the electronic device 200. In this case, the electronic device 200 displays, for example, the user interface 1970 shown in FIG. 19G. The play window 522 in the user interface 1970 displays only the content 1971 in the layer 2021B, and does not display content of another layer.

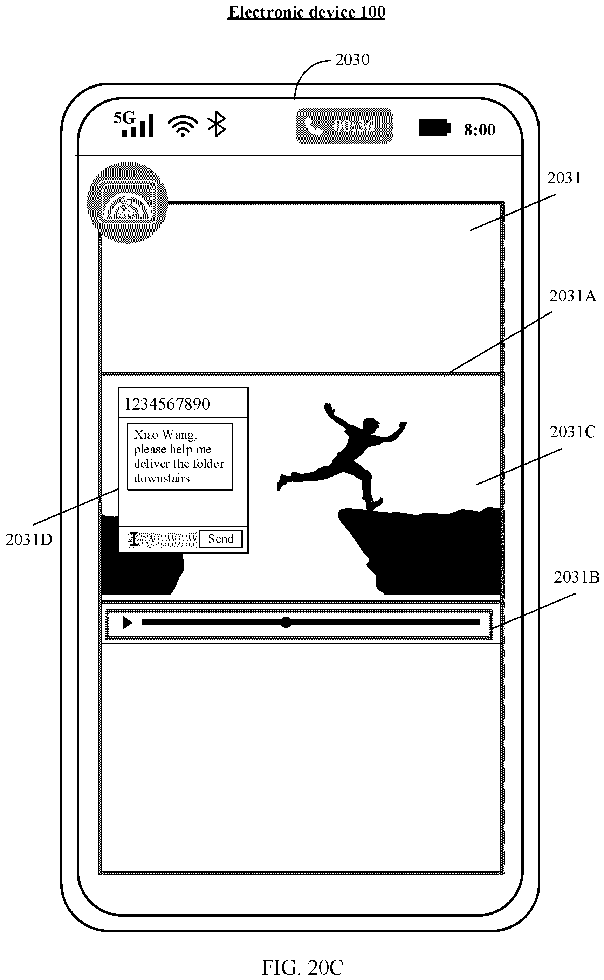

This is not limited to the foregoing examples. In some other examples, a layer selection interface displayed by the electronic device 100 may alternatively be a user interface 2030 shown in FIG. 20C. The user interface 2030 may include a schematic layer interface 2031. The schematic layer interface 2031 may include a layer 2031A and a layer 2031B. These layers may be obtained by performing layer division on a play interface (the play interface displays a floating window of the messaging application) of the video application. The layer 2031A may include video content 2031C of the video application and content 2031D of the messaging application. The layer 2031B may include content such as a play control and a progress bar of the video application. In response to a touch operation (for example, a tap operation, a double-tap operation, or a touch and hold operation) on any layer on the schematic layer interface 2031, the electronic device 100 may select the layer. The electronic device 100 may share an audio stream/a video stream related to the selected layer to another device.

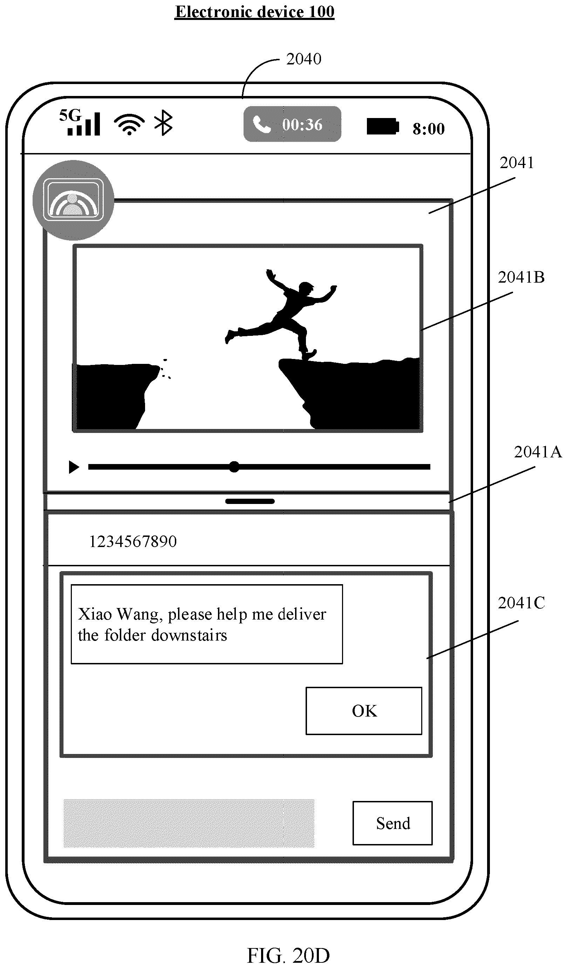

In some other examples, a layer selection interface displayed by the electronic device 100 may alternatively be a user interface 2040 shown in FIG. 20D. The user interface 2040 may include a schematic layer interface 2041. The schematic layer interface 2041 may include a layer 2041A, a layer 2041B, and a layer 2041C. These layers may be obtained by performing layer division on a split-screen interface of the video application and the messaging application. The layer 2041A may include content of the video application and content of the messaging application (which may be understood as including content of an entire split-screen interface, or may be understood as including content of the layer 2041B and the layer 2041C). The layer 2041B may include video content of the video application. The layer 2041C may include a short message of the messaging application. In response to a touch operation (for example, a tap operation, a double-tap operation, or a touch and hold operation) on any layer on the schematic layer interface 2041, the electronic device 100 may select the layer. The electronic device 100 may share an audio stream/a video stream related to the selected layer to another device.

This is not limited to the foregoing examples. In some other examples, more or fewer layers may be obtained through division. For example, the schematic layer interface 2031 in the user interface 2030 shown in FIG. 20C further includes a layer 2031D, and the layer 2031D includes content of the messaging application. A layer division manner is not limited in this application.

This is not limited to the foregoing examples. In some other examples, one layer may further include content of more or fewer applications. For example, one layer includes only system content (excluding content of any application) of the electronic device, or one layer includes content of two or more applications. Content included in the layer is not limited in this application.

In the foregoing example, real-time sharing may be performed in a plurality of manners such as any application, any area (regular or irregular), and a full screen. A foreground application, a background application, and an application that is not running may be used for real-time sharing. That is, shared content is not limited, and a usage scenario is wider. This effectively meets a user requirement and improves user experience.

This is not limited to the foregoing implementation. In another implementation, when the electronic device 100 serves as a sharer device to share first content with another device in real time, any one of the another device may also serve as a sharer device to share second content with a device like the electronic device 100, that is, bidirectional sharing may be implemented. Descriptions of real-time sharing performed by the another device serving as a sharer device is similar to descriptions of real-time sharing performed by the electronic device 100 serving as a sharer device. The following shows examples of some scenarios, but there may be another scenario similar to a scenario in which the electronic device 100 serves as a sharer device to perform real-time sharing. This should not constitute a limitation.

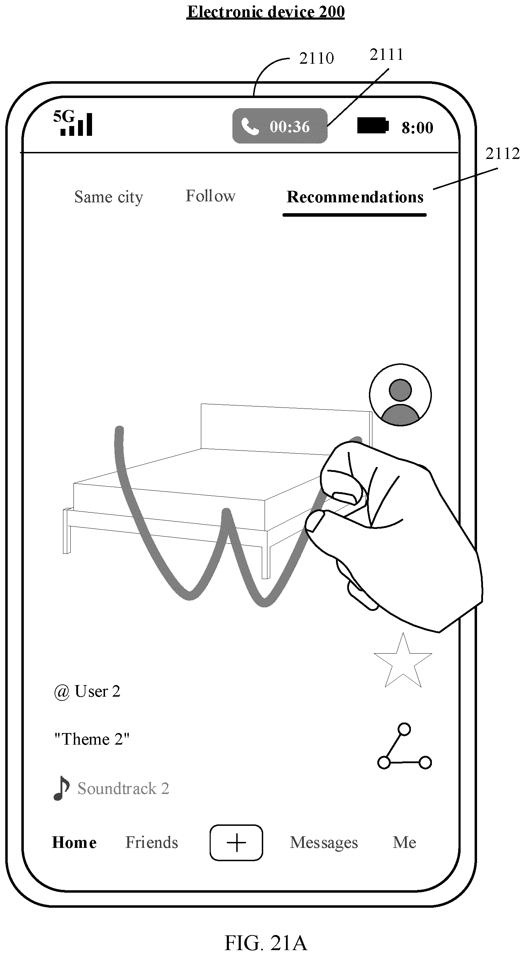

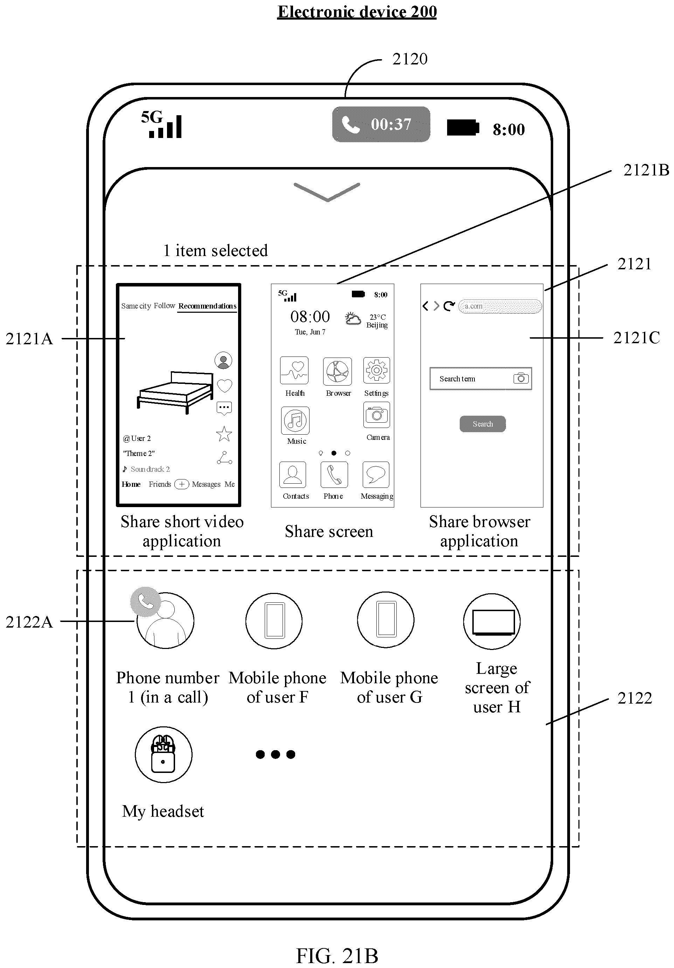

In some examples, after FIG. 5B, the electronic device 200 may switch a play interface (for example, the play window 522 in the user interface 520 shown in FIG. 5B) of content shared by the electronic device 100 in real time to the background for display (which may also be referred to as switching an application corresponding to the content shared in real time to run in the background), and display a user interface of another application in the foreground (which may also be referred to as running the another application in the foreground), for example, a user interface 2110 of the short video application shown in FIG. 21A. The user interface 2110 may include a call control 2111 located at the top and a play window 2112 of the short video. The call control 2111 may represent that the electronic device 200 is currently in a call state and call duration is 36 seconds. The play window 2112 is used to display a played short video, for example, a short video 2 named "Theme 2" and published by "User 2" is currently being played. The electronic device 200 may display, in response to a user operation used to trigger real-time sharing, for example, a user operation of sliding a knuckle along a specific track "W" shown in FIG. 21A, an interface for selecting a to-be-shared object and to-be-shared content, for example, a user interface 2120 shown in FIG. 21B. The user interface 2120 may include a list 2121 of selectable to-be-shared content and a list 2122 of selectable to-be-shared objects. The list 2121 may include an option 2121A used to share display content of a foreground application (the short video application is used as an example for description in FIG. 21B), an option 2121B used to share display content of a screen of the electronic device 200, and an option 2121C used to share display content of a background application (a browser application is used as an example for description in FIG. 21B). The list 2122 may include an option 2122A indicating a call party (the electronic device 100 whose communication number is "Phone number 1") and a plurality of options indicating a nearby device.

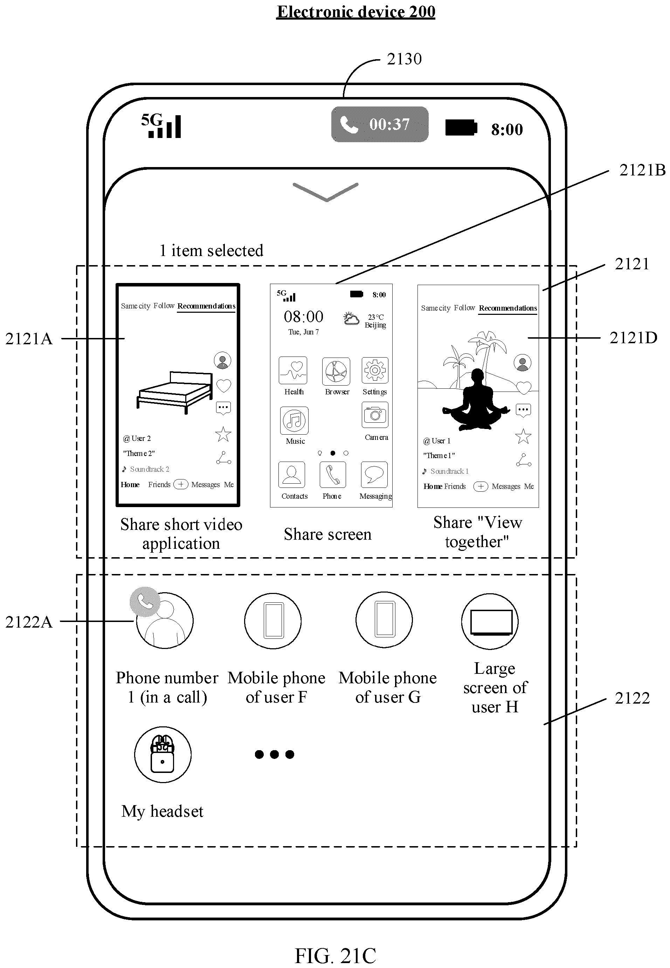

This is not limited to the list of selectable to-be-shared objects shown in FIG. 21B. In some other examples, the list of selectable to-be-shared content may include an option used to share the content shared by the electronic device 100 in real time. Optionally, the electronic device 200 with the instant propagation permission may display the option used to share the content shared by the electronic device 100 in real time, and the electronic device 200 without the instant propagation permission may not display the option used to share the content shared by the electronic device 100 in real time. For example, the interface for selecting a to-be-shared object and to-be-shared content displayed by the electronic device 200 is a user interface 2130 shown in FIG. 21C. The user interface 2130 is similar to the user interface 2120 shown in FIG. 21B. A difference lies in that the list 2121 of selectable to-be-shared content in the user interface 2130 further includes an option 2121D. Characters "Share 'View together'" are displayed below the option 2121D. The option is used to share the content shared by the electronic device 100 in real time, for example, an audio stream/a video stream of the short video 1 played in the play window 522 in the user interface 520 shown in FIG. 5B.

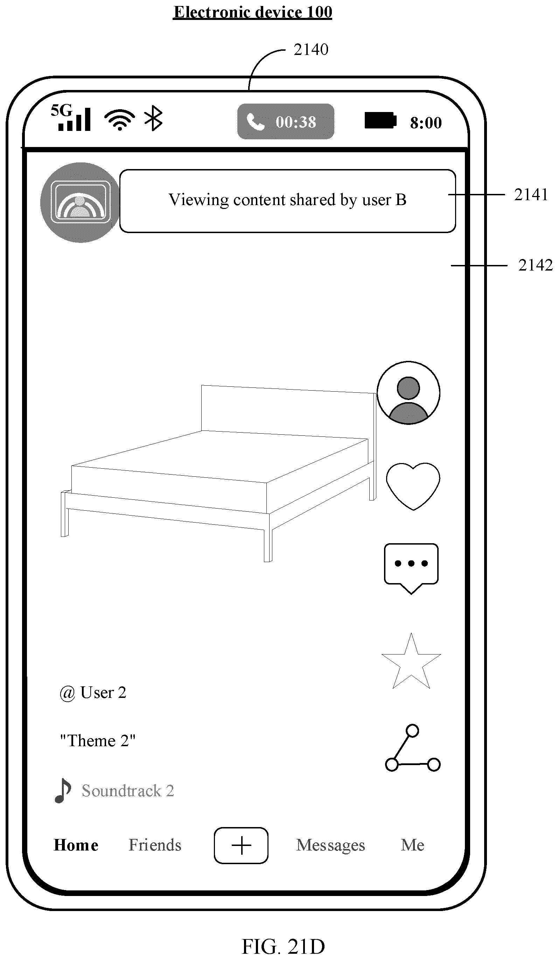

In some examples, in response to a touch operation (for example, a tap operation) on the option 2122A in the user interface 2120 shown in FIG. 21B or the user interface 2130 shown in FIG. 21C, the electronic device 200 may share, in real time to the electronic device 100 indicated by the option 2122A, an audio stream/a video stream of the short video application indicated by the option 2121Ain a selected state (specifically, an audio stream/a video stream of the short video 2). In other words, when the electronic device 100 shares the audio stream/video stream of the short video 1 with the electronic device 200 in real time, the electronic device 200 may also share the audio stream/video stream of the short video 2 with the electronic device 100 in real time. In a case, the electronic device 200 may play, in the foreground, the audio stream/video stream of the short video 1 shared by the electronic device 100 in real time, for example, display the user interface 520 shown in FIG. 5B. In addition, the electronic device 100 may also play, in the foreground, the audio stream/video stream of the short video 2 shared by the electronic device 200 in real time, for example, display a user interface 2140 shown in FIG. 21D. The user interface 2140 may include a prompt box 2141 and a play window 2142. The prompt box 2141 includes characters "Viewing content shared by user B". The play window 2142 is used to display shared content (for example, an image displayed in the play window 2112 in the user interface 2110 shown in FIG. 21A). This is not limited to the foregoing case. In another case, both the electronic device 100 and the electronic device 200 may play, in the foreground, the audio stream/video stream of the short video 2 shared by the electronic device 200 in real time. For example, the electronic device 100 displays the user interface 2140 shown in FIG. 21D, and the electronic device 200 displays the user interface 2110 shown in FIG. 21A. Alternatively, both the electronic device and the electronic device 200 may play, in the foreground, the audio stream/video stream of the short video 1 shared by the electronic device 100 in real time. For example, the electronic device 100 displays the user interface 420 shown in FIG. 4B, and the electronic device 200 displays the user interface 520 shown in FIG. 5B. This is not limited to the foregoing case. In another case, the electronic device 100 or the electronic device 200 may display the content shared by the electronic device 100 in real time and content shared by the electronic device 200 in real time on split screens. For example, the electronic device 200 displays a user interface 2150 shown in FIG. 21E. The user interface 2150 may include a play window 2151 of the short video and a play window 2152 of the content shared by the electronic device 100 in real time, where the play windows are displayed on split screens. A control 2153 may be displayed between the play window 2151 and the play window 2152. The control 2153 is configured to adjust sizes of display areas of the play window 2151 and the play window 2152. The play window 2151 is used to display an image displayed in the play window 2112 in the user interface 2110 shown in FIG. 21A. A control 2151A is displayed in the play window 2151. For descriptions of the control 2151A, refer to descriptions of the sharing control option 421 in the user interface 420 shown in FIG. 4B. The play window 2152 is used to display an image displayed in the play window 522 in the user interface 520 shown in FIG. 5B. A control 2152A is displayed in the play window 2152. For descriptions of the control 2152A, refer to descriptions of the sharing control option 523 in the user interface 520. An interface displayed by the electronic device 100 is similar to the user interface 2150 shown in FIG. 21E. Details are not described again. A specific display manner of bidirectional sharing is not limited in this application.

This is not limited to the foregoing examples. In some other examples, both the electronic device 100 and the electronic device 200 may serve as sharer devices to share an audio stream and/or a video stream in real time with the electronic device 400. The electronic device 400 may display, according to any one of the foregoing cases or other cases, content shared by the electronic device 100 in real time and/or content shared by the electronic device 200 in real time. For example, the electronic device 400 may display the user interface 2150 shown in FIG. 21E. In this case, the play window 2151 in the user interface 2150 also includes prompt information "Viewing content shared by user B".

This is not limited to the foregoing examples. In some other examples, more devices may be used as sharer devices to perform real-time sharing. Descriptions of any two devices are similar to descriptions of bidirectional sharing performed by the electronic device 100 and the electronic device 200. Details are not described again.

This is not limited to the foregoing examples. In some other examples, when the electronic device 200 serves as a sharer device to share, to the electronic device 100 and/or another device in real time, content shared by the electronic device 100 in real time, different operations may be performed based on whether the electronic device 200 has the instant propagation permission. For example, the electronic device 200 with the instant propagation permission may share, in real time in response to a touch operation (for example, a tap operation) on the option 2121D in the user interface 2130 shown in FIG. 21C, content indicated by the option 2121D. Alternatively, the electronic device 200 without the instant propagation permission may request, in response to a touch operation (for example, a tap operation) on the option 2121D in the user interface 2130 shown in FIG. 21C, the electronic device 100 to obtain instant propagation permission for content indicated by the option 2121D. For details, refer to examples in FIG. 16A to FIG. 16C. Details are not described again. This is not limited thereto. The electronic device 200 without the instant propagation permission may alternatively directly display prompt information indicating that the electronic device does not have the instant propagation permission, or directly does not respond to the touch operation.

In an implementation, the electronic device 100 may enable the real-time sharing function in the implementation by default. In another implementation, the electronic device 100 may enable the real-time sharing function in the implementation in response to a user operation. The following shows some user interfaces used to set the real-time sharing function.

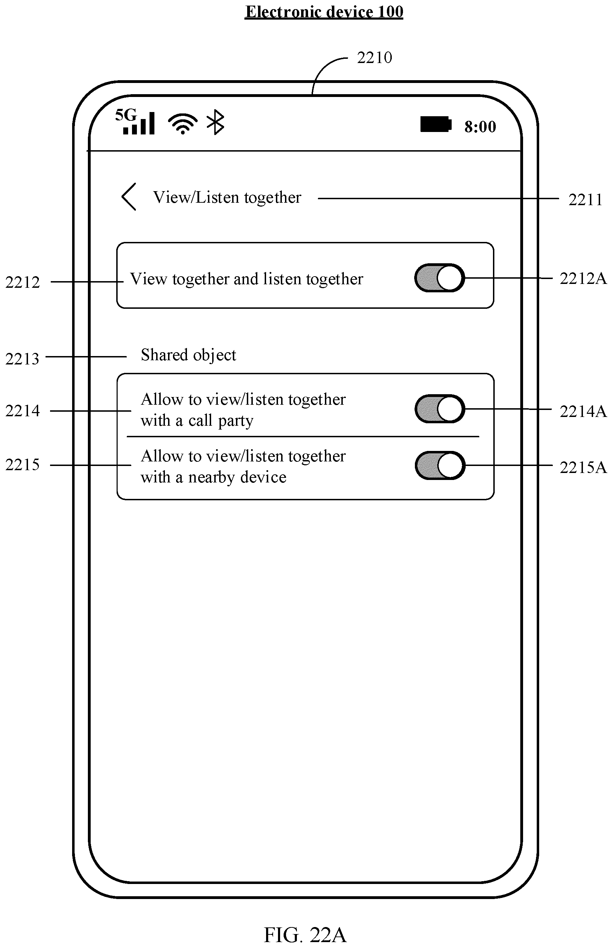

In some examples, the electronic device 100 may display a user interface 2210 shown in FIG. 22A. The user interface 2210 includes a setting name 2211 (including characters "View/Listen together"), and may represent that the user interface 2210 is an interface for setting the real-time sharing function. For example, the electronic device 100 may display the user interface 2210 in response to a touch operation (for example, a tap operation) on a "View/Listen together" option under a "More connections" option in a setting menu. The user interface 2210 may include a function name 2212 (including characters "View together and listen together"). A corresponding switch control 2212A is further displayed on the right of the function name 2212. The switch control 2212A is configured to enable or disable a real-time sharing function indicated by the function name 2212. The switch control 2212A may be understood as a main switch of the real-time sharing function. The user interface 2210 further includes a setting menu of a shared object: a plurality of setting options displayed below a title 2213 (including characters "Sharing menu"), for example, a setting option 2214 (including characters "Allow to view/listen together with a call party") and a setting option 2215 (including characters "Allow to view/listen together with a nearby device"). A corresponding switch control 2214A is further displayed on the right of the setting option 2214. The switch control 2214A is configured to enable or disable a function that is indicated by the setting option 2214 and that is of implementing real-time sharing through NewTalk such as an operator call/OTT call. A corresponding switch control 2215A is further displayed on the right of the setting option 2215. The switch control 2215A is configured to enable or disable a function that is indicated by the setting option 2215 and that is of implementing real-time sharing by using the near field communication technology. This is not limited thereto. An option indicating to implement a real-time sharing function in a satellite manner, an option indicating to implement a real-time sharing function with a vehicle-mounted device, and the like may be further included. Alternatively, only the setting option 2214 or the setting option 2215 is included. This is not limited in this application.

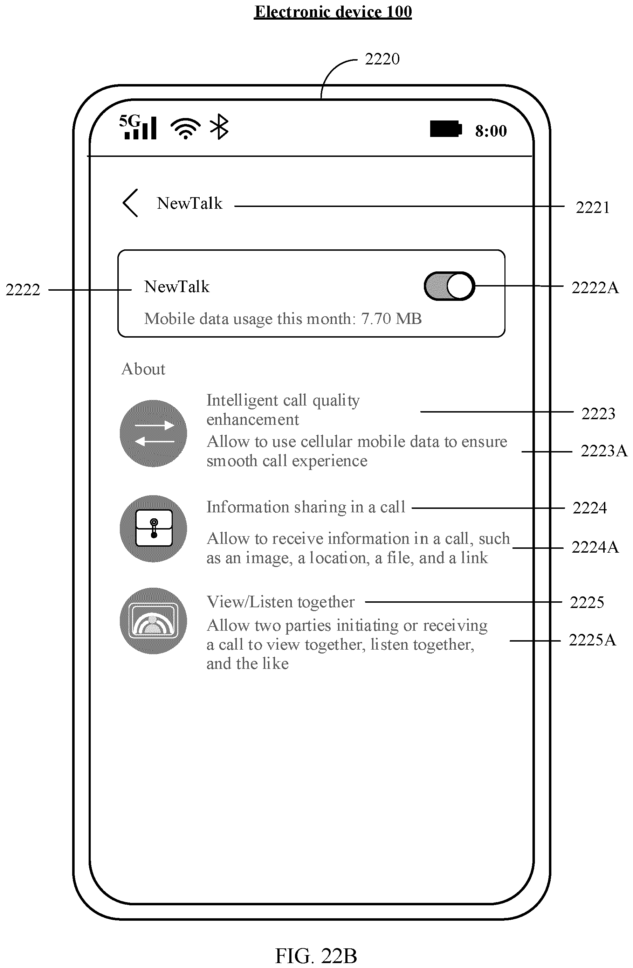

In some examples, the electronic device 100 may display a user interface 2220 shown in FIG. 22B. The user interface 2220 includes a setting name 2221 (including characters "NewTalk "), and may represent that the user interface 2220 is an interface for setting a NewTalk function. For example, the electronic device 100 may display the user interface 2220 in response to a touch operation (for example, a tap operation) on a "NewTalk (NewTalk)" option in a setting menu under a "Phone" option. The user interface 2220 may include a function name 2222 (including characters "NewTalk"). A corresponding switch control 2222A is further displayed on the right of the function name 2222. The switch control 2222A is configured to enable or disable a NewTalk function indicated by the function name 2222. The switch control 2222A may be understood as a main switch of the NewTalk function. The user interface 2220 further includes information about a plurality of sub-functions in the NewTalk function, for example, a sub-function 2223, a sub-function 2224, and a sub-function 2225. The sub-function 2223 includes a function name: "Intelligent call quality enhancement". A corresponding function description 2223A (including characters "Allow to use cellular mobile data to ensure smooth call experience") is further displayed below the sub-function 2223. The sub-function 2224 includes a function name: "Information sharing in a call". A corresponding function description 2224A (including characters "Allow to receive information in a call, such as an image, a location, a file, and a link") is further displayed below the sub-function 2224. The sub-function 2224 is implemented, for example, by using an option 312B and an option 312C that are included in a floating window 312 on the call interface 310 shown in FIG. 3(A). The sub-function 2225 includes a function name: "View/Listen together". A corresponding function description 2225A (including characters "Allow two parties initiating or receiving a call to view together, listen together, and the like") is further displayed below the sub-function 2225, and is used to indicate a function of implementing real-time sharing through NewTalk such as an operator call/OTT call, for example, a function implemented by using an option 312D included in a floating window 312 on the call interface 310 shown in FIG. 3(A).

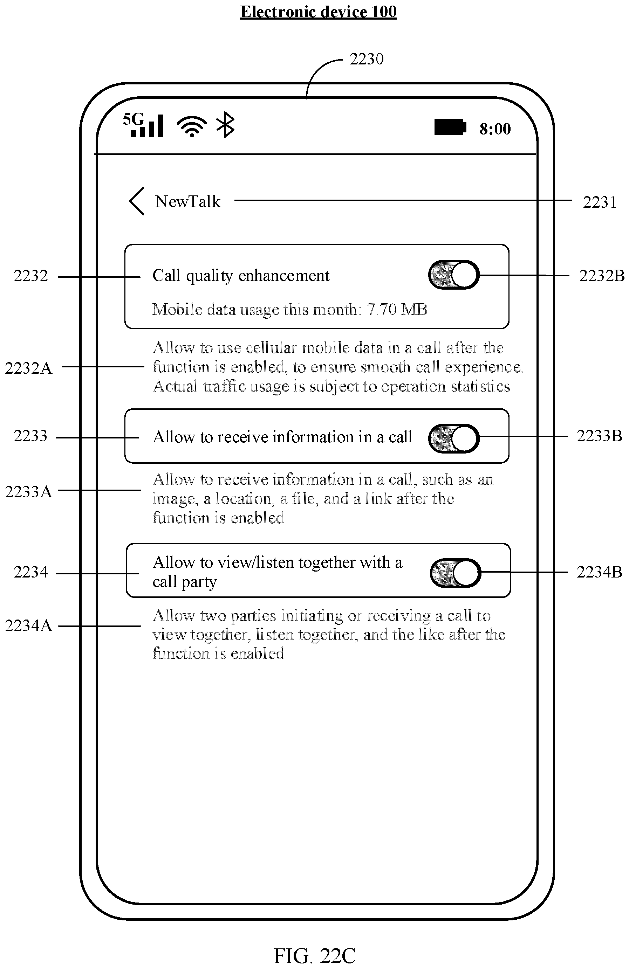

This is not limited to the example shown in FIG. 22B. In some other examples, any sub-function of a New Talk function may be independently enabled or disabled. For example, the electronic device 100 may display a user interface 2230 shown in FIG. 22C. The user interface 2230 includes a setting name 2231 (including characters "NewTalk"). For example, the electronic device 100 may display the user interface 2230 in response to a touch operation (for example, a tap operation) on a "NewTalk (NewTalk)" option in a setting menu under a "Phone" option. The user interface 2230 may include options of a plurality of sub-functions in the NewTalk function, for example, a sub-function 2232, a sub-function 2233, and a sub-function 2234. The sub-function 2232 includes a function name: "Call quality enhancement". A corresponding description 2232A (including characters "Allow to use cellular mobile data in a call after the function is enabled, to ensure smooth call experience. Actual traffic usage is subject to operation statistics") is further displayed below the sub-function 2232. A corresponding switch control 2232B is further displayed on the right of the sub-function 2232. The switch control 2232B is configured to enable or disable the sub-function 2232. The sub-function 2233 includes a function name: "Allow to receive information in a call". A corresponding description 2233A (including characters "Allow to receive information in a call, such as an image, a location, a file, and a link after the function is enabled") is further displayed below the sub-function 2233. A corresponding switch control 2233B is further displayed on the right of the sub-function 2233. The switch control 2233B is configured to enable or disable the sub-function 2233. The sub-function 2234 includes a function name: "Allow to view/listen together with a call party". A corresponding description 2234A (including characters "Allow two parties initiating or receiving a call to view together, listen together, and the like after the function is enabled") is further displayed below the sub-function 2234. A corresponding switch control 2234B is further displayed on the right of the sub-function 2234. The switch control 2234B is configured to enable or disable the sub-function 2234, that is, a real-time sharing function is implemented through NewTalk such as an operator call/OTT call.

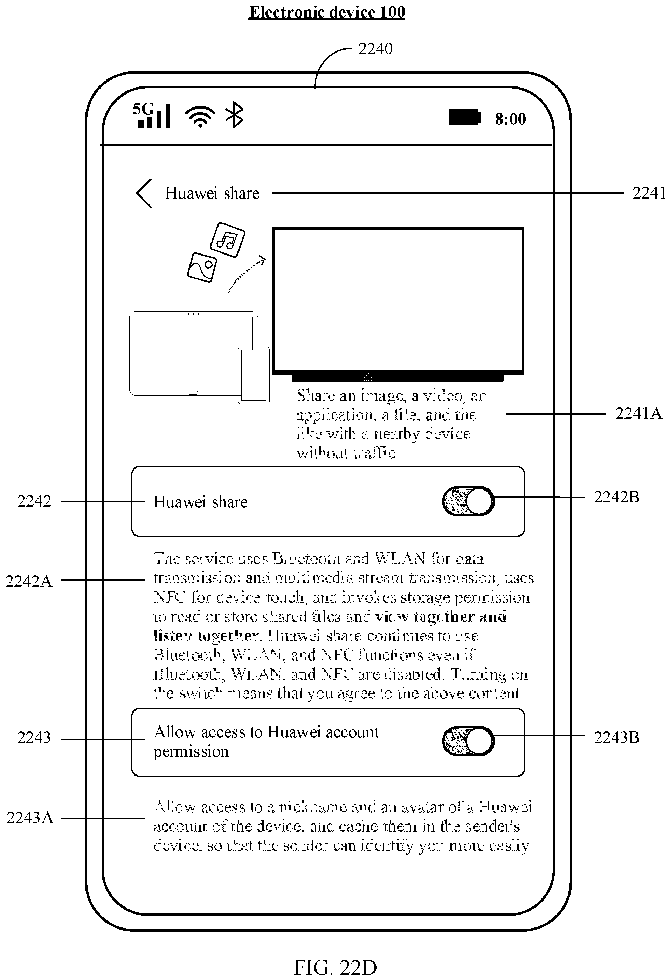

In some examples, the electronic device 100 may display a user interface 2240 shown in FIG. 22D. The user interface 2240 includes a setting name 2241 (including characters "Huawei share"). A corresponding description 2241A(including characters "Share an image, a video, an application, a file, and the like with a nearby device without traffic") is further displayed below the setting name 2241, and may represent that the user interface 2240 is an interface for setting a Huawei sharing (which may also be referred to as instant sharing in this application) function. For example, the electronic device 100 may display the user interface 2240 in response to a touch operation (for example, a tap operation) on a "Huawei share" option under a "More connections" option in a setting menu. The user interface 2240 may include a function name 2242 (including characters "Huawei share") and a function name 2243 (including characters "Allow access to Huawei account permission"). A corresponding function description 2242A (including characters "The service uses Bluetooth and WLAN for data transmission and multimedia stream transmission, uses NFC for device touch, and invokes storage permission to read or store shared files and view together and listen together. Huawei share continues to use Bluetooth, WLAN, and NFC functions even if Bluetooth, WLAN, and NFC are disabled. Turning on the switch means that you agree to the above content") is further displayed below the function name 2242, and may represent a Huawei share function of sharing files and sharing audio streams/video streams in real time by using a near field communication technology like Bluetooth, WLAN, and NFC. A corresponding switch control 2242B is further displayed on the right of the function name 2242. The switch control 2242B is used to enable or disable a Huawei sharing function indicated by the function name 2242. The switch control 2242B may be understood as a main switch of the Huawei sharing function. The Huawei sharing function indicated by the function name 2242 is implemented, for example, by using the control 814B/control 814D in the user interface 810 shown in FIG. 8A. A corresponding function description 2243A (including character "Allow access to a nickname and an avatar of a Huawei account of the device, and cache them in the sender's device, so that the sender can identify you more easily") is further displayed below the function name 2243. A corresponding switch control 2243B is further displayed on the right of the function name 2243. The switch control 2243B is configured to enable or disable a function indicated by the function name 2243, for example, a user name shown in the list 622 of selectable to-be-shared objects in the user interface 620 shown in FIG. 6B may be obtained by using the function indicated by the function name 2243.

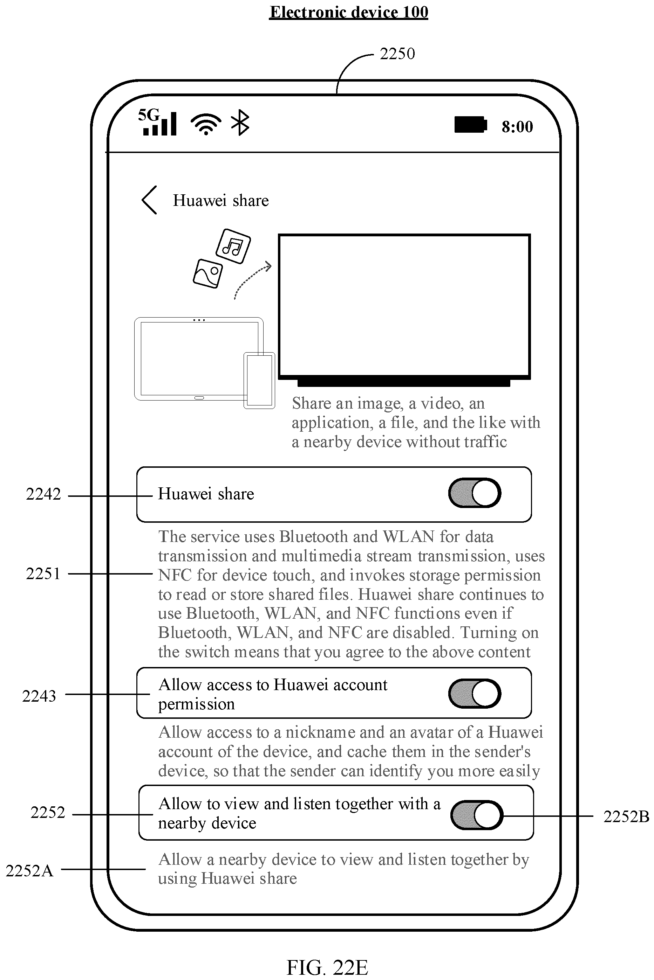

This is not limited to the example shown in FIG. 22D. In some other examples, a real-time sharing function implemented by using Huawei share may be enabled or disabled independently of a Huawei sharing function. For example, the electronic device 100 may display a user interface 2250 shown in FIG. 22E. The user interface 2250 is similar to the user interface 2240 shown in FIG. 22D. A difference lies in that a function description 2251 displayed below the function name 2242 in the user interface 2250 is different, the function description 2251 includes the following characters: "The service uses Bluetooth and WLAN for data transmission and multimedia stream transmission, uses NFC for device touch, and invokes storage permission to read or store shared files. Huawei share continues to use Bluetooth, WLAN, and NFC functions even if Bluetooth, WLAN, and NFC are disabled. Turning on the switch means that you agree to the above content", and may represent a Huawei share function of sharing files by using a near field communication technology like Bluetooth, WLAN, and NFC. In addition, the user interface 2250 further includes a function name 2252 (including characters "Allow to view and listen together with a nearby device"). A corresponding function description 2252A (including characters "Allow a nearby device to view and listen together by using Huawei share") is further displayed below the function name 2252, and may represent a real-time sharing function implemented by using Huawei share, for example, a real-time sharing function implemented by using a near field communication technology like Bluetooth, WLAN, or NFC. A corresponding switch control 2252B is further displayed on the right of the function name 2252. The switch control 2252B is configured to enable or disable a function indicated by the function name 2252. The function indicated by the function name 2252 is implemented, for example, by the control 814B/control 814D in the user interface 810 shown in FIG. 8A.

This is not limited to a real-time sharing scenario ("View together" and/or "Listen together") shown in the foregoing implementations. In another implementation, the real-time sharing scenario may further include "Play together". The following describes a real-time sharing scenario of "Play together" by using the electronic device 100 and the electronic device 200 that perform NewTalk such as an operator call/OTT call as an example.

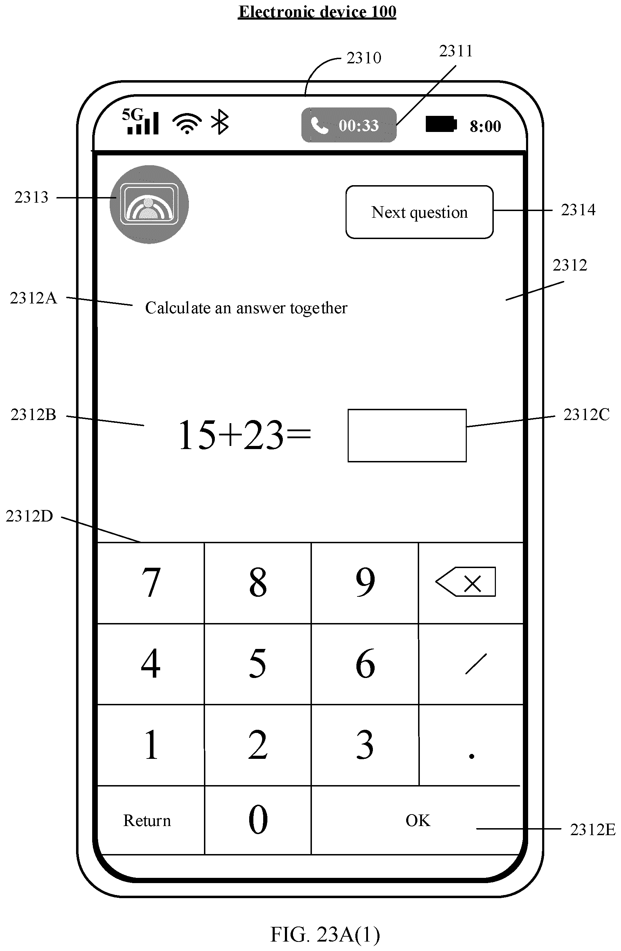

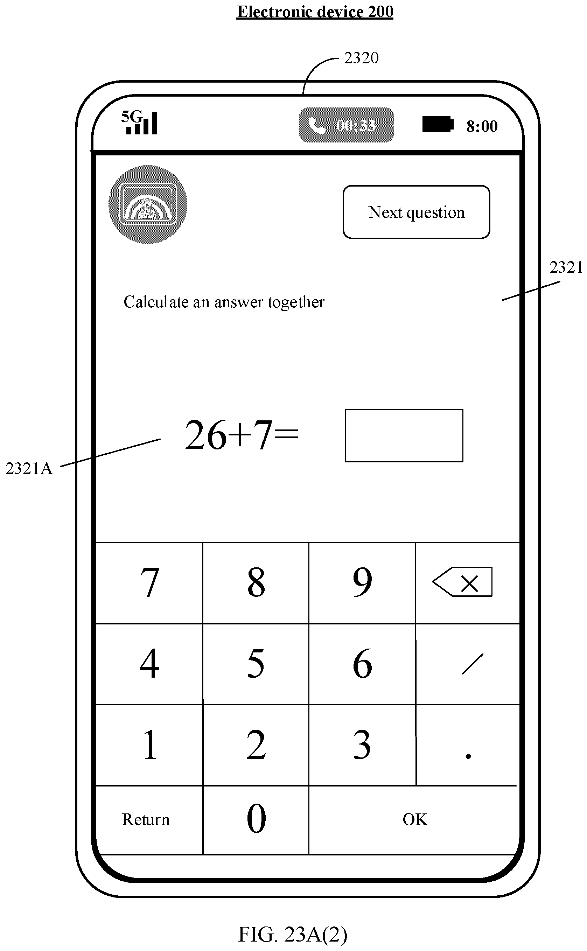

In some examples, the electronic device 100 may send, in response to a user operation used to trigger real-time sharing, for example, a touch operation on the sharing option 312D on the call interface 310 shown in FIG. 3(A), a request "Play together" to a call party, namely, the electronic device 200. After the electronic device 200 accepts the request, both the electronic device 100 and the electronic device 200 may display a game interface. For example, as shown in FIG. 23A(1) and FIG. 23A(2), the electronic device 100 may display a user interface 2310 shown in FIG. 23A(1), and the electronic device 200 may display a user interface 2320 shown in FIG. 23A(2). The user interface 2310 may include a call icon 2311 located at the top and a game window 2312. The call icon 2311 may represent that the electronic device 100 is currently in a call state and call duration is 33 seconds. The game window 2312 is used to display game content of "Play together". The game window 2312 may include a game name 2312A (including characters "Calculate an answer together") and question information 2312B (including characters "15+23="). An input box 2312C for receiving content input by a user is further displayed on the right of the question information 2312B. A keyboard 2312D is further displayed below the question information 2312B. The keyboard 2312D is used by the user to input a corresponding character in the input box 2312C. The keyboard 2312D may include an OK control 2312E. The OK control 2312E is configured to submit, to an audit device, content in the input box 2312C as an answer corresponding to the question information 2312B, so that the audit device reviews whether the answer is correct. The game window 2312 may further include a control option 2313 and a switch option 2314. The control option 2312 is used to trigger displaying of a control menu. The control menu includes, for example, but is not limited to, an option used to pause/exit "Play together". The switch option 2314 is used to switch content included in the question information 2312B. The user interface 2320 is similar to the user interface 2310. A difference lies in that question information 2321A in a game window 2321 shown in the user interface 2320 is different from the question information 2312B in the user interface 2310. This is not limited to the foregoing examples. In some other examples, question information displayed by the electronic device 100 and the electronic device 200 may alternatively be the same. For example, the question information in the user interface 2320 is the question information 2312B in the user interface 2310.

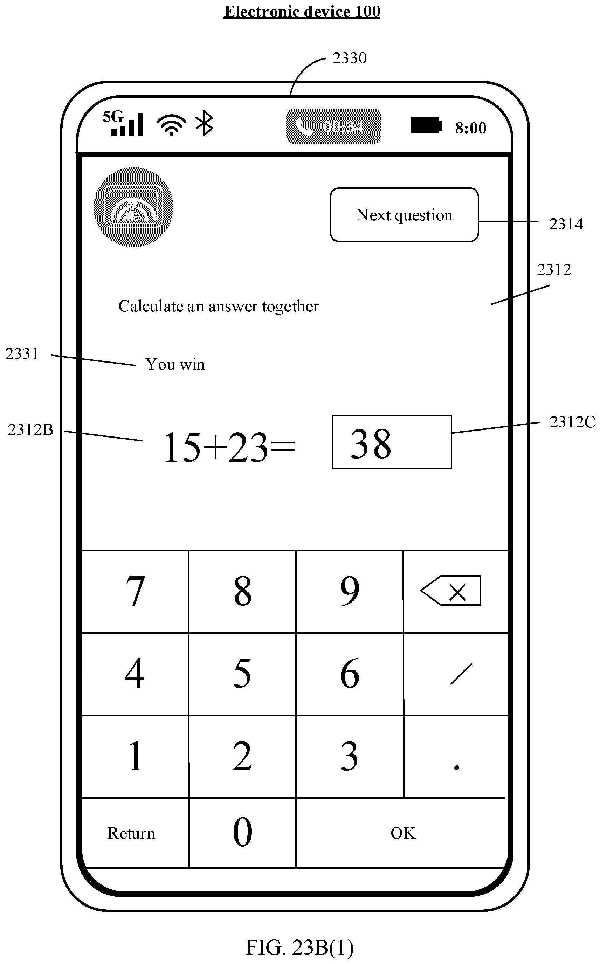

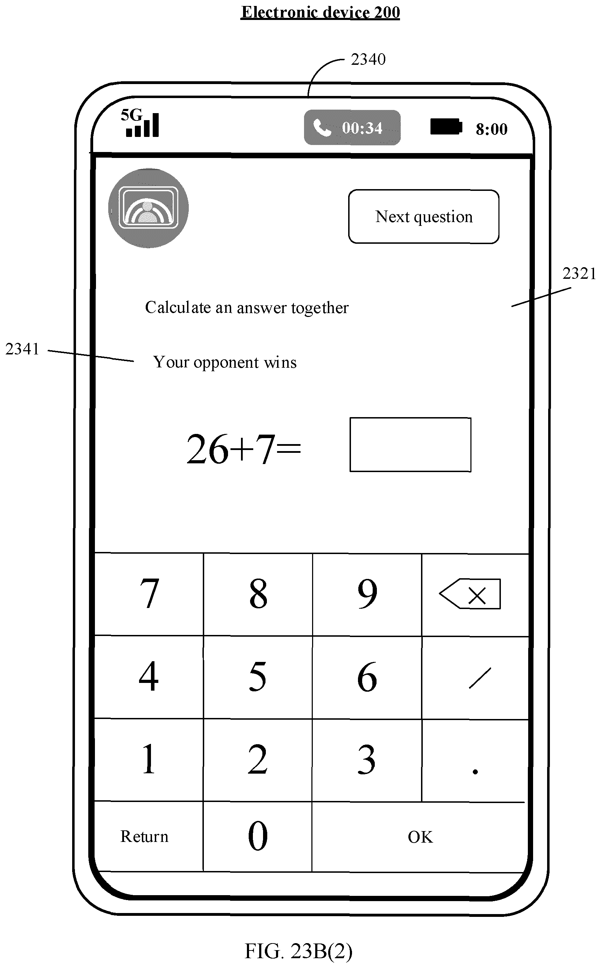

In some examples, after FIG. 23A(1) and FIG. 23A(2), the electronic device 100 may receive characters "38" input by the user in the input box 2312C in the user interface 2310 shown in FIG. 23A(1), and receive a touch operation (for example, a tap operation) on the OK control 2312E in the user interface 2310. In response to the touch operation, the electronic device 100 may send the content (characters "38") in the input box 2312C to a server. When determining that the content is the answer corresponding to the question information 2312B in the user interface 2310 (which may also be referred to as determining that the answer is correct), the server may indicate the electronic device 100 to display prompt information, where the prompt information indicates winning in the current game, and may indicate the electronic device 200 to display prompt information, where the prompt information indicates losing in the current game. For example, as shown in FIG. 23B(1) and FIG. 23B(2), the electronic device 100 may display a user interface 2330 shown in FIG. 23B(1), and the electronic device 200 may display a user interface 2340 shown in FIG. 23B(2). The user interface 2330 is similar to the user interface 2310 shown in FIG. 23A(1). A difference lies in that the input box 2312C in the game window 2312 shown in the user interface 2330 displays the characters "38" input by the user, and the game window 2312 further displays prompt information 2331. The prompt information 2331 includes characters "You win" and indicates winning in the current game. The user interface 2340 is similar to the user interface 2320 shown in FIG. 23A(2). A difference lies in that the game window 2321 shown in the user interface 2340 further displays prompt information 2341. The prompt information 2341 includes characters "Your opponent wins" and indicates losing in the current game.

In some examples, after FIG. 23B(1) and FIG. 23B(2), the electronic device 100 may request, in response to a touch operation (for example, a tap operation) on the switch option 2314 in the user interface 2330 shown inFIG. 23B(1), the server to obtain game content of a new round of game. After receiving the request, the server may send the game content, for example, question information in a game window, to the electronic device 100 and the electronic device 200. In some other examples, the electronic device 100 may alternatively request, within preset duration (for example, 10 seconds) after displaying the prompt information 2331 in the user interface 2330 shown in FIG. 23B(1), the server to obtain game content of a new round of game. This is not limited to the foregoing examples. In some other examples, the electronic device 200 may request to obtain game content of a new round of game from the server. This is not limited in this application.

This is not limited to a case in the foregoing examples (the audit device is a server). In some other examples, the audit device may alternatively be the electronic device 100, the electronic device 200, or another network device. In a case, the audit device is the electronic device 100. The electronic device 100 may determine independently whether the content (characters "38") in the input box 2312C in the user interface 2330 shown in FIG. 23B(1) is the answer corresponding to the question information 2312B in the user interface 2330. When a determining result is yes, the electronic device 100 may display prompt information indicating winning in the current game, and indicate the electronic device 200 to display prompt information indicating losing in the current game. In another case, the audit device is the electronic device 200. The electronic device 100 may send the content (characters "38") in the input box 2312C in the user interface 2330 shown in FIG. 23B(1) to the electronic device 200. The electronic device 200 determines whether the content is the answer corresponding to the question information 2312B in the user interface 2330. When a determining result is yes, the electronic device 200 may display prompt information indicating losing in the current game, and indicate the electronic device 100 to display prompt information indicating winning in the current game.

In the foregoing example, that a device providing game content of "Play together" is a server may be understood as that the server is a master device/sharer device, and the electronic device 100 and the electronic device 200 are slave devices/sharee devices. This is not limited thereto. In some other examples, a device providing game content of "Play together" may alternatively be the electronic device 100, the electronic device 200, or another network device. The following uses an example in which the device providing the game content of "Play together" is the electronic device 100 for description. The electronic device 100 may share, in real time, the game content with the electronic device 200 in, but not limited to the following three sharing manners:
Manner 1: A multimedia data stream that can be directly output by a sharee device, such as an audio stream or a video stream, is not transmitted, but only game data is transmitted. The game data is, for example, the question information 2321A shown in FIG. 23A(1) to FIG. 23B(2), and is not limited thereto. The game data may further include data of a game status such as a score. This is not limited in this application.
Manner 2: A multimedia data stream that can be directly output by a sharee device, such as an audio stream or a video stream, is transmitted, but a blocked canvas is not carried. For example, after starting real-time sharing, the electronic device 100 may display a new layer (which may be referred to as a canvas) on the question information 2312B shown in FIG. 23A(1) to FIG. 23B(2). The canvas is used to block the question information 2312B, so that the user cannot see the question information 2312B. The electronic device 100 cancels displaying of the canvas after preset transmission duration. The preset transmission duration may be a delay generated by sending a multimedia data stream by the electronic device 100 to the electronic device 200 and a processing delay (for example, a delay in decoding and rendering) before the electronic device 200 plays the multimedia data stream. The preset transmission duration is, for example, a measured value, an average value, or an estimated value of the electronic device 100 in preset measurement duration (for example, a latest transmission process).
Manner 3: A multimedia data stream that can be directly output by a sharee device, such as an audio stream or a video stream, is transmitted, and a blocked canvas is carried. For example, the electronic device 100 and the electronic device 200 may display, before preset game start time, the canvas on the question information 2312B and the question information 2321A that are shown in FIG. 23A(1) to FIG. 23B(2), and cancel displaying of the canvas at the preset game start time.

It may be understood that, when real-time sharing is performed in the manner 1, a data transmission amount of the device is small, and a requirement for a network environment such as traffic and a bandwidth is low. This may be well applicable to a scenario in which traffic is small or network quality is poor, to reduce the data transmission amount of the device and reduce power consumption of the device.

This is not limited to the foregoing examples. In some other examples, there may be a plurality of devices that provide game content of "Play together". For example, the electronic device 100 may provide game data for the electronic device 200, and the electronic device 200 may provide game data for the electronic device 100. This is not limited in this application.

In some examples, a slave device/sharee device may browse and operate a game, and may not run the game but run a "Play together" play window. This is not limited thereto. In some other examples, a slave device/sharee device may alternatively run a game based on received game content, for example, receive a complete game application. This is not limited in this application.

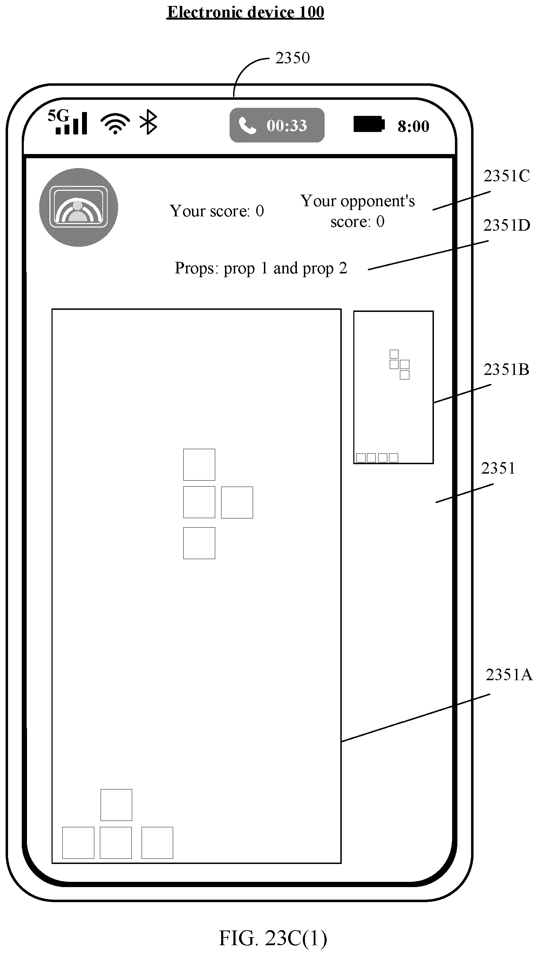

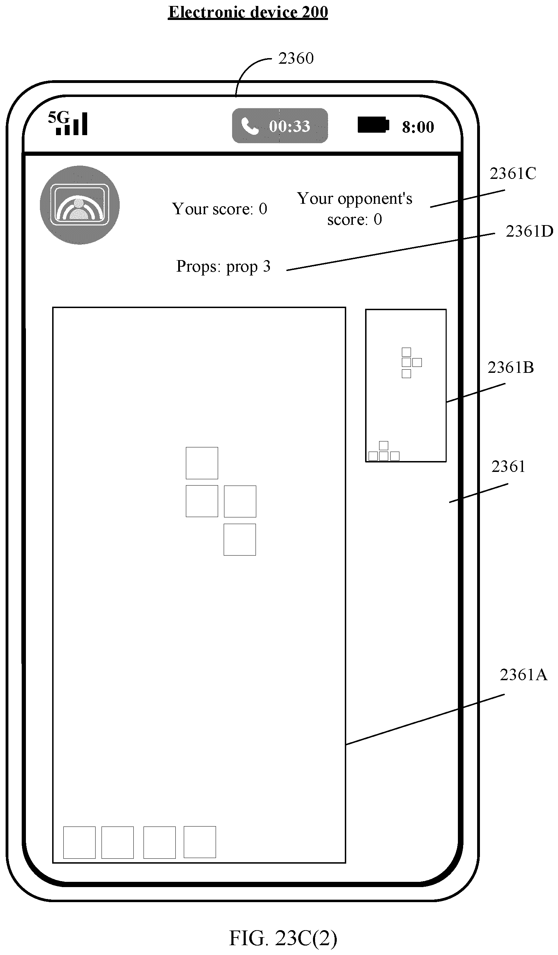

The game content is not limited to the game content in the foregoing example. In some other examples, the game content may be another game of "Play together". For example, as shown in FIG. 23C(1) and FIG. 23C(2), the electronic device 100 may display a user interface 2350 shown in FIG. 23C(1), and the electronic device 200 may display a user interface 2360 shown in FIG. 23C(2). A game window 2351 in the user interface 2350 may include a window 2351A used to display game content of the electronic device 100, a window 2351B used to display game content of a game partner (the electronic device 200), a game score 2351C, and prop information 2351D of the electronic device 100. Similarly, a game window 2361 in the user interface 2360 may include a window 2361A used to display game content of the electronic device 200, a window 2361B used to display game content of a game partner (the electronic device 100), a game score 2361C, and prop information 2361D of the electronic device 200. It may be understood that the electronic device 100 may send updated game content on the electronic device 100 to a call party or the electronic device 200 may send updated game content on the electronic device 200 to a call party, so that the other party update a displayed user interface. For example, the electronic device 200 may send content of the window 2361A in the user interface 2360 to the electronic device 100, so that the electronic device 100 updates display content of the window 2351B in the user interface 2350. The electronic device 200 may directly send game content to the electronic device 100, or may first send game content to the server and then the server forwards the game content to the electronic device 200 (which may be referred to as indirect sending). Similarly, the electronic device 100 may directly or indirectly send content of the window 2351A in the user interface 2350 to the electronic device 200, so that the electronic device 200 updates display content of the window 2361B in the user interface 2360. This is not limited thereto. For example, when a game score of the electronic device 100 changes, a latest game score may be directly or indirectly sent to the electronic device 200, so that the electronic device 200 updates display content of the game score 2361C in the user interface 2360. Similarly, when a game score of the electronic device 200 changes, a latest game score may be directly or indirectly sent to the electronic device 100, so that the electronic device 100 updates display content of the game score 2351C in the user interface 2350.

This is not limited to a real-time sharing scenario ("View together" and/or "Listen together") shown in the foregoing implementations. In another implementation, the real-time sharing scenario may further include "Edit together". The following describes a real-time sharing scenario of "Edit together" by using the electronic device 100 and the electronic device 200 that perform NewTalk such as an operator call/OTT call as an example.

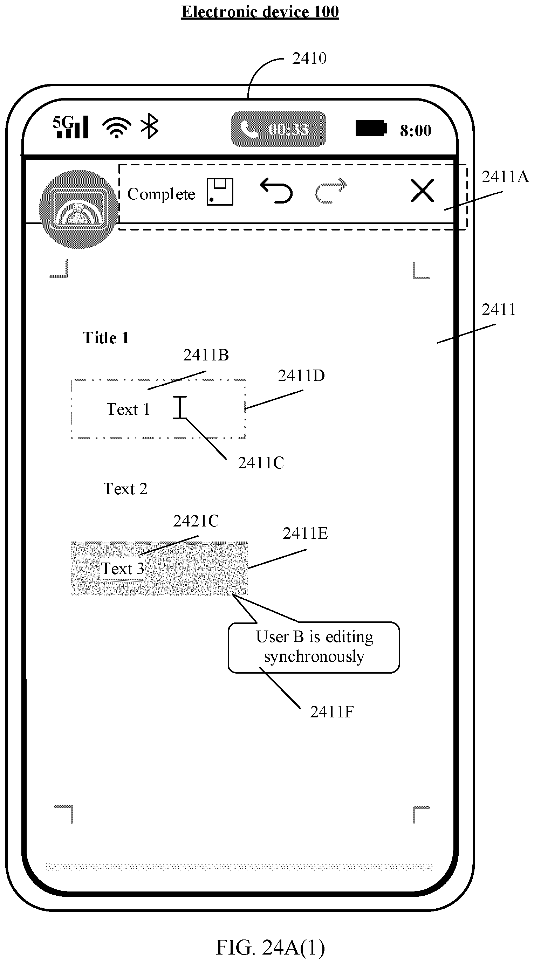

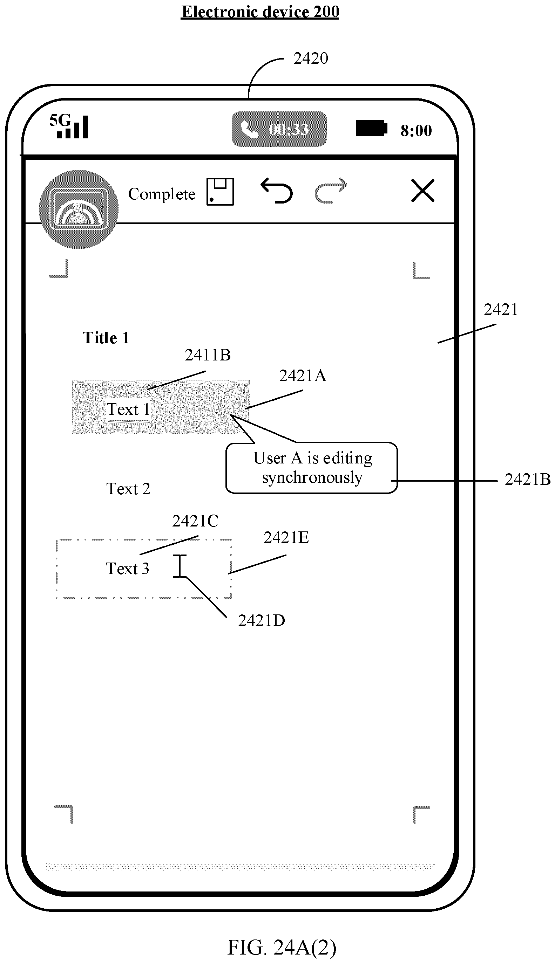

In some examples, the electronic device 100 (user A) may serve as a sharer device to share, in real time, content of a file (for example, in a word format) with a call party, namely, the electronic device 200 (user B), and both the electronic device 100 and the electronic device 200 may display specific content of the file. For example, as shown in FIG. 24A(1) and FIG. 24A(2), the electronic device 100 may display a user interface 2410 shown in FIG. 24A(1), and the electronic device 200 may display a user interface 2420 shown in FIG. 24A(2). The user interface 2410 may include an editing window 2411 of a file 1. The editing window 2411 may include specific content of the file 1 and an editing function list 2411A. The editing function list 2411A includes, for example, a control for storing a file, a control for undoing a latest input, a control for redoing a latest undone input, and a control for exiting editing. The user interface 2420 is similar to the user interface 2410, also includes an editing window 2421 of the file 1. As shown in FIG. 24A(1), in response to a touch operation on a text 2411B ("Text 1") in the editing window 2411, the electronic device 100 may display a cursor 2411C on the right of the text 2411B and display an editing mark 2411D in an area in which the text 2411B is located. The cursor 2411C and the editing mark 2411D are used to indicate that user A currently edits the text 2411B by using the electronic device 100. In addition, as shown in FIG. 24A(2), the electronic device 200 may display an editing mark 2421A and prompt information 2421B (including characters "User A is editing synchronously") in an area in which the text 2411B in the editing window 2421 is located, indicating that a call party (user A) is currently editing the text 2411B. Similarly, as shown in FIG. 24A(2), when user B edits a text 2421C ("Text 3") in the editing window 2421 by using the electronic device 200, a cursor 2421D may be displayed on the right of the text 2421C in the editing window 2421, and an editing mark 2421E may be displayed in an area in which the text 2421C is located. In addition, as shown in FIG. 24A(1), an editing mark 2411E and prompt information 2411F (including characters "User B is editing synchronously") may be displayed in the area in which the text 2421C in the editing window 2411 is located.

It may be understood that the electronic device 100 may send updated file content on the electronic device 100 to a call party or the electronic device 200 may send updated file content on the electronic device 200 to a call party, so that the other party update a displayed user interface. For example, if user A changes the text 2411B from "Text 1" to "Text 1 includes" in the user interface 2410 shown in FIG. 24A(1), the text 2411B in the user interface 2420 shown in FIG. 24A(2) is also updated to "Text 1 includes".

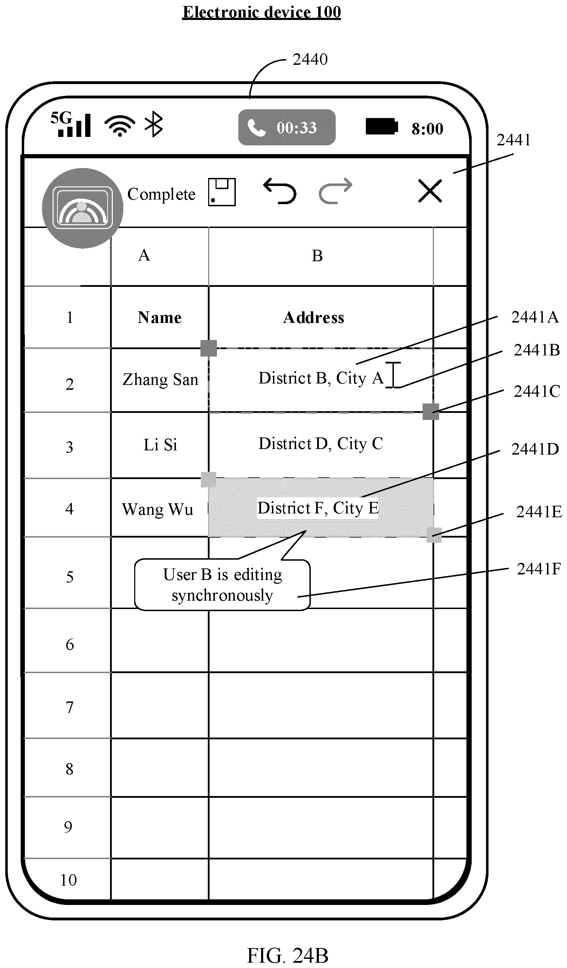

This is not limited to the foregoing examples. In some other examples, the file may alternatively be in a table (excel) format. For example, as shown in FIG. 24B, the electronic device 100 may display a user interface 2440. The user interface 2440 may include an editing window 2441 of a table 1. The editing window 2441 may include specific content of the table 1 and an editing function list. A cursor 2441B is displayed on the right of content 2441A in the editing window 2441, and an editing mark 2441C is displayed in an area in which the content 2441A is located, indicating that user A currently edits the content 2441A by using the electronic device 100. An editing mark 2441E and prompt information 2441F (including characters "User B is editing synchronously") are displayed in an area in which content 2441D in the editing window 2441 is located, indicating that the call party (user B) is currently editing the content 2441D. An interface displayed by the electronic device 200 is similar to the user interface 2440, and specific descriptions are similar to those in FIG. 24B. Details are not described again.

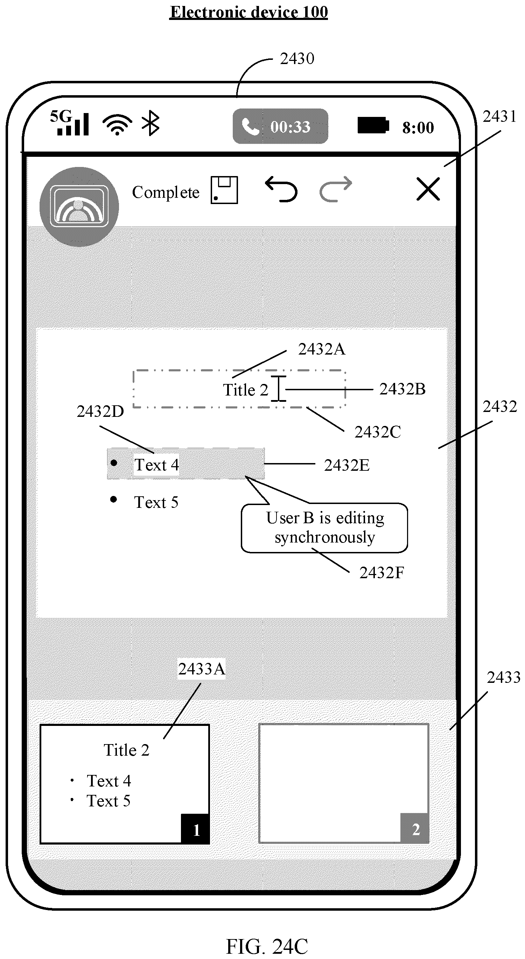

This is not limited to the foregoing examples. In some other examples, the file may alternatively be in a PPT format. For example, as shown in FIG. 24C, the electronic device 100 may display a user interface 2430. The user interface 2430 may include an editing window 2431 of PPT 1. The editing window 2431 may include a display window 2432 of slide content and a list 2433 of slide content included in the PPT 1. That an option 2433A in the list 2433 is in a selected state may represent that the display window 2432 is used to display slide content indicated by the option 2433A. A cursor 2432B is displayed on the right of content 2432A in the display window 2432, and an editing mark 2432C is displayed in an area in which the content 2432A is located, indicating that user A currently edits the content 2432A by using the electronic device 100. An editing mark 2432E and prompt information 2432F (including characters "User B is editing synchronously") are displayed in an area in which content 2432D in the display window 2432 is located, indicating that the call party (user B) is currently editing the content 2432D. An interface displayed by the electronic device 200 is similar to the user interface 2430, and specific descriptions are similar to those in FIG. 24C. Details are not described again.

In the foregoing example, that the electronic device 100 is used to provide an "Edit together" file may be understood as that the electronic device 100 is a master device/sharer device and the electronic device 200 is a slave device/sharee device. In some examples, the slave device/sharee device may browse and edit a file, and may not run the file but run an "Edit together" play window. This is not limited thereto. In some other examples, the slave device/sharee device may alternatively run a file based on received file content, for example, a received complete file. This is not limited in this application.

This is not limited to the foregoing examples. In some other examples, the electronic device 100 may alternatively share a drawing, a whiteboard, a comment, and the like with the electronic device 200 in real time. For example, user A may input the content 1 on a drawing window/whiteboard displayed by the electronic device 100, and the drawing window/whiteboard displayed by the electronic device 200 may display the content 1 input by user A. This is not limited thereto. The content may be deleted or modified. A specific editing manner is not limited in this application. For example, user A may add a comment to a video stream displayed by the electronic device 100, and the electronic device 100 may send the video stream and the comment content together as to-be-shared data to the electronic device 200 for display, to facilitate communication between a sharer user and a sharee user. Shared content is not limited in this application.

This is not limited to the foregoing cases (updated content such as a game, a file, or an image is sent to another device for real-time sharing, so as to be used by the another device to update output content). In some other examples, a user operation event (for example, time period of a touch operation) and related information (for example, occurring time of the touch operation) may further be sent to another device for real-time sharing, so that the another device uses the user operation event as an input event of the another device, and the another device may respond to the user operation event. This can be understood as a real-time sharing scenario of remote control.

In the foregoing example, real-time sharing of viewing together and listening together, and real-time sharing of playing (game) together, editing (file) together, and remote control can be implemented. This greatly expands application scenarios, meets diversified requirements of users, and provides better user experience.

The sharer device and the sharee device are not limited to the electronic devices in the foregoing example. In some other examples, the sharer device and the sharee device may alternatively be electronic devices provided with foldable displays (which may be briefly referred to as foldable screens) (which may be referred to as foldable electronic devices). For example, the layer 2041B and the layer 2041C in the user interface 2040 shown in FIG. 20D may be respectively displayed on two displays of a foldable electronic device. For example, the play window 2151 and the play window 2152 in the user interface 2150 shown in FIG. 21E may be respectively displayed on two displays of a foldable electronic device.

The sharing method in this application is described based on the foregoing embodiments. The method may be applied to the sharing system 10 shown in FIG. 1A. The method may be applied to the sharing system 10 shown in FIG. 1B. The method may be applied to the sharing system 10 shown in FIG. 1C. The method may be applied to the sharing system 10 shown in FIG. 2E.

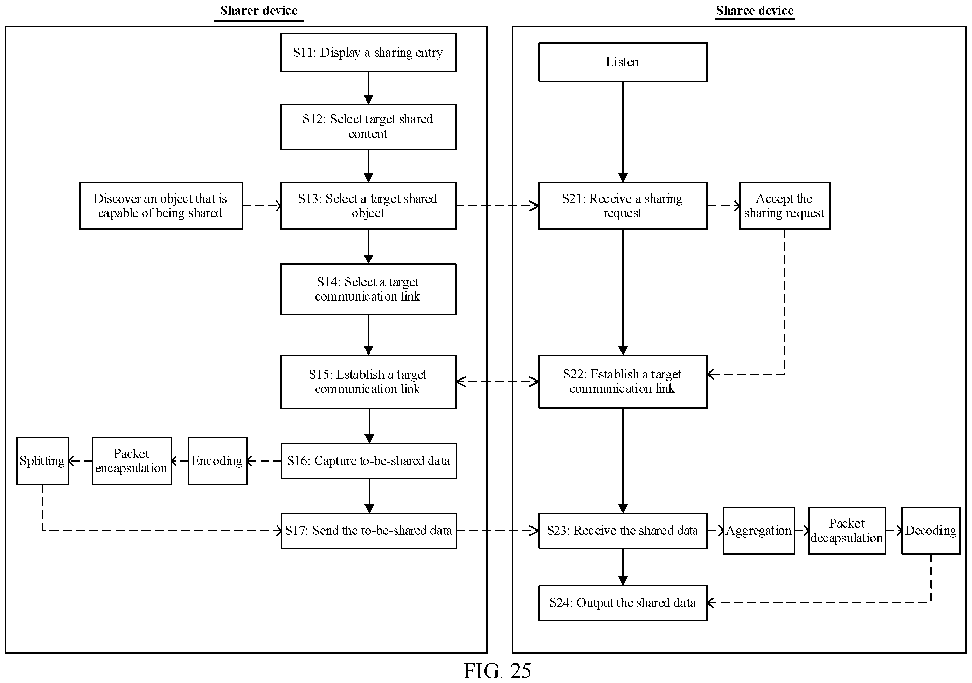

Refer to FIG. 25. FIG. 25 is a schematic flowchart of a sharing method according to an embodiment of this application.

A sharer device may perform, but not limited to, the following steps.

S11: The sharer device displays a sharing entry.

In an implementation, the sharer device may perform a real-time sharing process in response to a user operation on the sharing entry. For details, refer to descriptions of S12 to S17. The user operation may be understood as a user operation used to trigger a real-time sharing function/the real-time sharing process.

The following shows some examples of the sharing entry and the user operation used to trigger the real-time sharing function.

In some examples, the sharing entry is a sharing option 312D included in a floating window 312 that is on a call interface 310 shown in FIG. 3(A) or a user interface 410 shown in FIG. 4A, and the user operation used to trigger the real-time sharing function is, for example, a touch operation (for example, a tap operation) on the sharing option 312D.

In some examples, the sharing entry is a user interface 610 of a short video application shown in FIG. 6A, and the user operation used to trigger the real-time sharing function is, for example, a touch operation on the user interface 610. The touch operation is, for example, a sliding operation like single-finger sliding, multi-finger sliding, or sliding a knuckle (for example, sliding a knuckle along a specific track "W" shown in FIG. 6A).

In some examples, the sharing entry is a share control 712B in a user interface 710 of a multi-task list/multi-task window shown in FIG. 7A, and the user operation used to trigger the real-time sharing function is, for example, a touch operation (for example, a tap operation) on the share control 712B.

In some examples, the sharing entry is an instant share control 814B or a control 814D in a user interface 810 shown in FIG. 8A, and the user operation used to trigger the real-time sharing function is, for example, a touch operation (for example, a tap operation) on the control 814B or the control 814D.

S12: The sharer device selects target shared content.

In an implementation, the sharer device may determine the target shared content according to a preset rule. Optionally, the sharer device may determine, based on the sharing entry, that the target shared content is a multimedia data stream of an application related to the sharing entry.

In some examples, when the sharer device receives a touch operation on the sharing option 312D included in the floating window 312 in the user interface 410 shown in FIG. 4A, because the user interface 410 is a user interface of a short video application, the sharer device may determine that the target shared content is a multimedia data stream of the short video application.

In some examples, when the sharer device receives a touch operation on the user interface 610 shown in FIG. 6A, because the user interface 610 is a user interface of a short video application, the sharer device may determine that the target shared content is a multimedia data stream of the short video application.

In some examples, when the sharer device receives a touch operation on the share control 712B in the user interface 710 shown in FIG. 7A, because the share control 712B is a control that is in the user interface 710 and that is related to a window 712 of a short video application, the sharer device may determine that the target shared content is a multimedia data stream of the short video application.

In another implementation, the sharer device may determine the target shared content in response to a user operation. Optionally, after receiving a user operation used to trigger the real-time sharing function, the sharer device may display an interface for selecting to-be-shared content. In response to a user operation on any to-be-shared content on the selection interface, the sharer device may determine that the to-be-shared content is the target shared content.

In some examples, a user interface 620 shown in FIG. 6B is an interface for selecting to-be-shared content. A list 621 in the user interface 620 shows options of a plurality of pieces of selectable to-be-shared content. The plurality of pieces of to-be-shared content may be a multimedia data stream of a foreground application (for example, a short video application), display content of a screen of an electronic device 100 (sharer device), and a multimedia data stream of a background application (for example, a video application).

In some examples, a user interface 1230 shown in FIG. 12C is an interface for selecting to-be-shared content. A list 1231 in the user interface 1230 shows options of a plurality of pieces of selectable to-be-shared content. The plurality of pieces of to-be-shared content may be a multimedia data stream of a foreground application (for example, a short video application), a multimedia data stream of a background application (for example, a video application), and a multimedia data stream of an application (for example, a music application) that is not running on the electronic device 100 (sharer device).

S13: The sharer device selects a target shared object (sharee device).

In an implementation, before selecting the target shared object, the sharer device may first discover a device/an obj ect that is capable of being selected/shared in real time, and then select the target shared object from the discovered device/object. The sharer device discovers, by using a communication technology, for example, but not limited to, a cellular communication technology, a near field communication technology, a satellite communication technology, or D2D, the device/object that is capable of being selected/shared in real time.

In an implementation, the sharer device may determine the target shared object according to a preset rule. Optionally, the sharer device may determine, based on the sharing entry, that the target shared object is a device related to the sharing entry.

In some examples, when the electronic device 100 (sharer device) receives a touch operation on the sharing option 312D included in the floating window 312 in the user interface 410 shown in FIG. 4A, because the floating window 312 is a control related to NewTalk (for details, refer to descriptions of FIG. 3(A)), and the electronic device 100 currently performs NewTalk with an electronic device 200, the electronic device 100 may determine that the target shared object is a call party, namely, the electronic device 200.

In another implementation, the sharer device may determine the target shared object in response to a user operation. Optionally, after receiving a user operation used to trigger the real-time sharing function, the sharer device may display an interface for selecting a to-be-shared object. The selection interface may include the discovered device/object that is capable of being selected/shared in real time. In response to a user operation on any to-be-shared object on the selection interface, the sharer device may determine that the to-be-shared object is the target shared object.

In some examples, the user interface 620 shown in FIG. 6B is an interface for selecting a to-be-shared object. A list 622 in the user interface 620 shows options of a plurality of selectable to-be-shared objects. The plurality of to-be-shared objects may include one call party and at least one nearby device.

In some examples, a user interface 1110 shown in FIG. 11A is an interface for selecting a to-be-shared object. A list 1111 in the user interface 1110 shows options of a plurality of selectable to-be-shared objects. The plurality of to-be-shared objects may include a plurality of call parties and at least one nearby device.

In some examples, a user interface 1120 shown in FIG. 11B is an interface for selecting to-be-shared content. A list 1121 in the user interface 1120 shows options of a plurality of selectable to-be-shared objects. The plurality of to-be-shared objects may include at least one recent contact and at least one nearby device.

In some examples, a user interface 1130 shown in FIG. 11C is an interface for selecting to-be-shared content. A list 1131 in the user interface 1130 shows options of a plurality of selectable to-be-shared objects. The plurality of to-be-shared objects may include a contact and at least one nearby device. For a specific example of the contact, refer to FIG. 11D.

A sequence of S12 and S13 is not limited. For example, S12 and S13 may be performed simultaneously.

In an implementation, after receiving a user operation used to trigger the real-time sharing function, the sharer device may first display an interface for selecting a real-time sharing manner. The sharer device may display, in response to a user operation on any real-time sharing manner on the selection interface, an interface for selecting to-be-shared content and/or a to-be-shared object (the displayed to-be-shared content and/or to-be-shared object are/is related to the real-time sharing manner). In some examples, a user interface 1210 shown in FIG. 12A is an interface for selecting a real-time sharing manner. The sharer device may display, in response to a user operation on a view together option 1211A in the user interface 1210, a user interface 1220 shown in FIG. 12B. A list 1221 in the user interface 1220 shows options of a plurality of pieces of to-be-shared content that can be viewed. A list 1222 in the user interface 1220 shows options of a plurality of devices that can display images. The sharer device may display, in response to a user operation on a listen together option 1211B in the user interface 1210, the user interface 1230 shown in FIG. 12C. The list 1231 in the user interface 1230 shows options of a plurality of pieces of to-be-shared content that can be listened to. A list 1232 in the user interface 1230 shows options of a plurality of devices that can play audios.

In another implementation, the sharer device may determine a real-time sharing manner based on a received user operation used to trigger the real-time sharing function, and then display an interface for selecting to-be-shared content and/or a to-be-shared object (the displayed to-be-shared content and/or to-be-shared object are/is related to the real-time sharing manner). In some examples, when the user operation used to trigger the real-time sharing function is a first sliding operation on the user interface 610 shown in FIG. 6A (for example, sliding a knuckle along a specific track "W" shown in FIG. 6A), an interface for selecting to-be-shared content is the user interface 1220 shown in FIG. 12B. When the user operation used to trigger the real-time sharing function is a second sliding operation on the user interface 610 (for example, sliding a knuckle along a specific track "L" shown in FIG. 12D), an interface for selecting to-be-shared content is the user interface 1230 shown in FIG. 12C.

S14: The sharer device selects a target communication link.

In some examples, the target communication link may include but is not limited to one or more of the link 1 to the link 6 shown in FIG. 2E and a V2X link. In an implementation, the sharer device may determine the target communication link according to a preset rule.

In some examples, the sharer device may determine the target communication link based on the target shared object. For example, when a target shared object determined by the electronic device 100 (sharer device) is a call party, namely, the electronic device 200, the target communication link may be a link related to a call link established between the electronic device 100 and the electronic device 200, for example, a NewTalk link or an auxiliary link.

In some other examples, the sharer device may determine, based on the sharing entry, that the target communication link is a device related to the sharing entry. For example, when the electronic device 100 (sharer device) receives a touch operation on the instant share control 814D in the user interface 810 shown in FIG. 8A, the target communication link may be a link related to an instant sharing function, for example, a Wi-Fi link or a BT link.

In another implementation, the sharer device may determine the target communication link in response to a user operation. In some examples, after receiving a user operation used to trigger the real-time sharing function, the sharer device may display a user interface 1310 shown in FIG. 13. The user interface 1310 may include a "Share to a contact" option 1311A, a "Share to a Wi-Fi device" option 1311B, and a "Share to a Bluetooth device" option 1311C. A target communication link corresponding to the option 1311A is, for example, a NewTalk link or an auxiliary link. A target communication link corresponding to the option 1311B is, for example, a Wi-Fi link. A target communication link corresponding to the option 1311C is, for example, a Bluetooth link.

A sequence of S14 and any one of S11 to S13 is not limited. For example, S13 and S14 may be performed simultaneously.

S15: The sharer device establishes a target communication link to the sharee device.

A sequence of S15 and any one of S11 to S13 is not limited. For example, S15 is performed before S11.

In some examples, the target communication link is a Wi-Fi link in a far field form. For example, a sharer device and a sharee device that are in different local area networks may establish a Wi-Fi link in a far field form. In some other examples, the target communication link is a Wi-Fi link in a near field form. For example, a sharer device and a sharee device that are connected to a same Wi-Fi signal source (in this case, the sharer device and the sharee device are in a same local area network) may establish a Wi-Fi link in a near field form.

S16: The sharer device captures to-be-shared data.

In an implementation, the sharer device may capture to-be-shared data related to the target shared content. In some examples, when the target shared content is a multimedia data stream of an application 1, the sharer device may capture content such as a layer of the application 1, to generate a multimedia data stream (to-be-shared data) like an image and/or audio of the application 1. In some examples, when the target shared content is display content of a screen of the sharer device and/or related audio data, the sharer device may capture content such as a layer displayed by the sharer device, to generate a multimedia data stream (to-be-shared data) like an image and/or an audio of a system.

This is not limited to the foregoing examples. In some other examples, the target shared content may alternatively not be data output by the sharer device in the foreground or background, but data not output by the sharer device yet. For example, the to-be-shared data may be broadcast data of a channel that is sent by the base station and may be received through a 3G/4G/5G/6G broadcast channel. The broadcast data is not output, but the broadcast data is used as the to-be-shared data for real-time sharing.

In some other examples, the sharer device may alternatively not capture application-level and/or system-level multimedia data of the sharer device as to-be-shared data, but generate to-be-shared data related to the target shared content and send the to-be-shared data to the sharee device. For example, it is assumed that a type of the target shared content is a game. In this case, the sharer device may generate to-be-shared data of a game type and send the to-be-shared data to the sharee device.

In some other examples, the sharer device may alternatively capture a received user operation event and related information (for example, occurring time). For example, the sharer device may capture the user operation event and the related information by using an interface provided by the system (for example, the interface is provided for integration and invocation for an application). The interface includes, for example, but is not limited to, at least one of the following: a discovery (Discovery) interface (for example, used to discover a member (Member)), a link management (Link Manager, LinkMgr) interface, and a transmission (Transmit) interface (for example, used to send (send) and/or receive (recv)).

In other words, specific content of the to-be-shared data is not limited in this application.

In an implementation, after capturing the to-be-shared data, the sharer device may perform processing such as encoding, packet encapsulation, and splitting on the to-be-shared data, and processed to-be-shared data may be sent to the sharee device, that is, S17 is performed.

S17: The sharer device sends the to-be-shared data to the sharee device.

In an implementation, the sharer device may send the to-be-shared data to the sharee device via the target communication link. It may be understood that, because real-time sharing is performed between the sharer device and the sharee device, and the shared data is actually a data stream, the sharer device may continuously send a shared data stream (for example, an audio stream/a video stream) to the sharee device during real-time sharing.

This is not limited to the foregoing examples. In some other examples, the sharer device may further capture multimedia data related to any area of the screen of the sharer device, and send the multimedia data to the sharee device. Optionally, the sharer device may determine a to-be-shared area in response to a user operation. For specific examples, refer to FIG. 17A to FIG. 17I, FIG. 18A to FIG. 18D, and FIG. 19A to FIG. 19G. In some other examples, the sharer device may further capture multimedia data related to any layer of the screen of the sharer device, and send the multimedia data to the sharee device. Optionally, the sharer device may determine a to-be-shared layer in response to a user operation. For a specific example, refer to FIG. 20A to FIG. 20D.

The sharee device may perform, but not limited to, the following steps.

S21: The sharee device receives a sharing request.

In an implementation, the sharee device may continuously listen to whether the sharing request is received.

In an implementation, after receiving the sharing request, the sharee device may accept the sharing request according to the preset rule. For example, when the sharer device is a device in communication, a device that has performed communication, or a discovered device, the sharee device may accept the sharing request by default. In another implementation, the sharee device may alternatively accept the sharing request in response to a user operation. For example, after receiving a sharing request sent by the electronic device 100 (sharer device), the electronic device 200 (sharee device) may display prompt information 511 in a user interface 510 shown in FIG. 5A, and the electronic device 200 may accept the sharing request in response to a touch operation (for example, a tap operation) on an accept control 511B in the prompt information 511. After receiving the sharing request sent by the sharer device, the sharee device may establish the target communication link to the sharer device.

A sequence of S21 and any one of S11 to S16 is not limited. For example, after receiving a touch operation (for example, a tap operation) on an option 622A in the user interface 620 shown in FIG. 6B, the electronic device 100 (sharer device) may determine that the target shared object is the electronic device 200 (sharee device) indicated by the option 622A(that is, S13 is performed), and send a sharing request to the electronic device 200. Then the electronic device 200 may receive the sharing request (that is, S21 is performed).

S22: The sharee device establishes a target communication link to the sharer device.

In an implementation, S22 and S15 are performed simultaneously.

A sequence of S22 and S21 is not limited.

S23: The sharee device receives the shared data sent by the sharer device.

In an implementation, after S17, the sharee device may perform S23.

In an implementation, after receiving the shared data, the sharee device may perform processing such as aggregation, packet decapsulation, and decoding on the shared data, and processed shared data may be output to a user, that is, S24 is performed.

S24: The sharee device outputs the shared data.

In some examples, the sharee device may display an image in the shared data on a display and/or play an audio in the shared data through a speaker. For specific examples, refer to FIG. 5B, FIG. 14A(1) to FIG. 14A(3), FIG. 14B(1) to FIG. 14B(3), and FIG. 14C(1) and FIG. 14C(2). A manner in which the sharee device outputs the shared data is not limited in this application.

This is not limited to the foregoing examples. In some other examples, the sharer device may further send a sharing request for the sharee device to another device connected to the sharee device. After receiving the sharing request, the another device may output prompt information, and the user may accept or reject the sharing request for the sharee device by using the another device. For a specific example, refer to FIG. 14D(1) to FIG. 14D(3).

This is not limited to the foregoing examples. In some other examples, the sharer device and the sharee device may not directly establish a communication link, but establish a communication link through "forwarding" by using a third-party device, and transmit shared data through "forwarding" by using the third-party device. For a specific example, refer to FIG. 14D(1) to FIG. 14D(3).

In an implementation, after S24, any device that performs real-time sharing may receive a user operation when displaying shared data, and process the shared data in response to the user operation, for example, setting content to an editing state or updating content. The device may send processing information (for example, an editing location, updated content, and information related to the updated content) to another device that performs real-time sharing, so that the another device updates the shared data displayed by the device.

In some examples, in a real-time sharing scenario of "Play together" shown in FIG. 23B(1) and FIG. 23B(2), the shared data is game content. When user A inputs characters "38" in an input box 2312C in a user interface 2330 by using the electronic device 100, after determining that content (the characters "38") in the input box 2312C is an answer corresponding to question information 2312B in the user interface 2330, the electronic device 100 may display prompt information 2331, and may send, to the electronic device 200, information indicating losing in the current game (which may be understood as information related to updated content). After receiving the information, the electronic device 200 may display the prompt information 2341 in a user interface 2340.

In some examples, in a real-time sharing scenario of "Play together" shown in FIG. 23C(1) and FIG. 23C(2), the shared data is game content. The electronic device 100 may update a window 2351A and a game score 2351C in a user interface 2350 in response to a user operation, and send updated content to the electronic device 200. The electronic device 200 may display a window 2361B in a user interface 2360 based on the updated window 2351A, and display a game score 2361C in the user interface 2360 based on the updated game score 2351C.

In some examples, in a real-time sharing scenario of "Edit together" shown in FIG. 24A(1) and FIG. 24A(2), the shared data is a file 1 in a word format. When user A edits a text 2411B ("Text 1") in a user interface 2410 by using the electronic device 100, the electronic device 100 may send, to the electronic device 200, a currently editing location, namely, the text 2411B (because characters included in the text 2411B are not currently modified, updated content may not be sent). Therefore, the electronic device 200 may display an editing mark 2421A and prompt information 2421B in an area in which a text 2411B in a user interface 2420 is located. This is not limited thereto. The shared data may alternatively be a file in another format. For a specific example, refer to FIG. 24B and FIG. 24C.

This is not limited to the foregoing examples. In some other examples, the shared data may not be provided by the sharer device, but a network device like a server. In this case, the sharer device may be understood as a device that initiates real-time sharing, but not a device that provides the shared data. For example, the sharer device may send a sharing request to the network device, and the network device sends the shared data to the sharee device based on the sharing request. The network device is, for example, an application server of an application corresponding to the shared data. In some examples, the network device may further send shared data to the sharer device. The shared data sent by the network device to the sharer device may be the same as or different from the shared data sent to the sharee device. For example, in the real-time sharing scenario of "Play together" shown in FIG. 23A(1) to FIG. 23B(2), the server may separately send different question information to the electronic device 100 and the electronic device 200, and a game window 2312 shown in a user interface 2310 displayed by the electronic device 100 is different from a game window 2321 shown in a user interface 2320 displayed by the electronic device 200 (question information is different). The server may further serve as an audit device to verify whether an answer sent by the electronic device 100 or the electronic device 200 is correct. The device that provides the shared data is not limited in this application.

In an implementation, the sharer device may manage the sharee device, for example, cancel real-time sharing with a device (which may also be referred to as deleting the device). For a specific example, refer to FIG. 10A and FIG. 10B.

In an implementation, the sharer device may change shared content. For a specific example, refer to FIG. 10A and FIG. 10B.

In an implementation, the sharer device may set shared content-based related permission of the sharee device, for example, but not limited to storage permission and forwarding permission. For specific examples, refer to FIG. 15A(1) to FIG. 15D and FIG. 16A to FIG. 16E.

In an implementation, when the sharer device shares first content with the sharee device in real time, the sharee device may further share second content with the sharer device in real time, that is, bidirectional sharing may be implemented. Descriptions of real-time sharing performed by the sharee device to the sharer device are similar to descriptions of real-time sharing performed by the sharer device to the sharee device. Details are not described again. For specific examples, refer to FIG. 21A to FIG. 21E.

In an implementation, the electronic device may enable the real-time sharing function in the implementation by default. In another implementation, the electronic device may enable the real-time sharing function in the foregoing implementation in response to a user operation. For a specific example, refer to FIG. 22A to FIG. 22E.

FIG. 25 shows an example in which the sharer device performs real-time sharing with a sharee device. In some other examples, the sharer device may perform real-time sharing with a plurality of sharee devices. For descriptions of real-time sharing performed by the sharer device with any one of the plurality of sharee devices, refer to descriptions in FIG. 25.

For application examples of the sharing method provided in this application, refer to implementations shown in FIG. 3(A) to FIG. 3(C), FIG. 4A to FIG. 4C, FIG. 5A to FIG. 5D, FIG. 6A to FIG. 6D, FIG. 7A to FIG. 7C, FIG. 8A to FIG. 8C, FIG. 9A to FIG. 9C, FIG. 10A and FIG. 10B, FIG. 11A to FIG. 11D, FIG. 12A to FIG. 12D, FIG. 13, FIG. 14A(1) to FIG. 14D(3), FIG. 15A(1) to FIG. 15D, FIG. 16A to FIG. 16E, FIG. 17A to FIG. 17I, FIG. 18A to FIG. 18D, FIG. 19A to FIG. 19G, FIG. 20A to FIG. 20D, FIG. 21A to FIG. 21E, FIG. 22A to FIG. 22E, FIG. 23A(1) to FIG. 23C(2), and FIG. 24A(1) to FIG. 24C.

In this application, a user operation is performed on the sharing entry once, so that the sharer device and the sharee device like one or more call parties and a nearby device can implement real-time sharing and collaboration functions such as viewing together, listening together, playing together, and editing together. In this case, a simpler and more convenient user experience operation sequence is provided. This resolves a problem that real-time sharing cannot be performed in scenarios of an operator call and near field communication, without a need to install a chat application, a conference application, or a to-be-shared application, or adapt to a to-be-shared application, and greatly expands an application scenario, so that a user can quickly share a multimedia data stream of any application, any area, and any layer, to effectively meet user requirements. This improves user experience. In addition, real-time sharing can reduce a possibility of secondary transmission, and improve privacy security protection of the user.

In an implementation, the sharer device may send a first image/video collected by using a camera and a second image/video (which may be an application-level image/video and/or a system-level image/video) shared in real time to the sharee device for display/playing together, so that a sharee user can simultaneously view content shared in real time and an actual scenario of the other party, to meet a personalized requirement of the user.

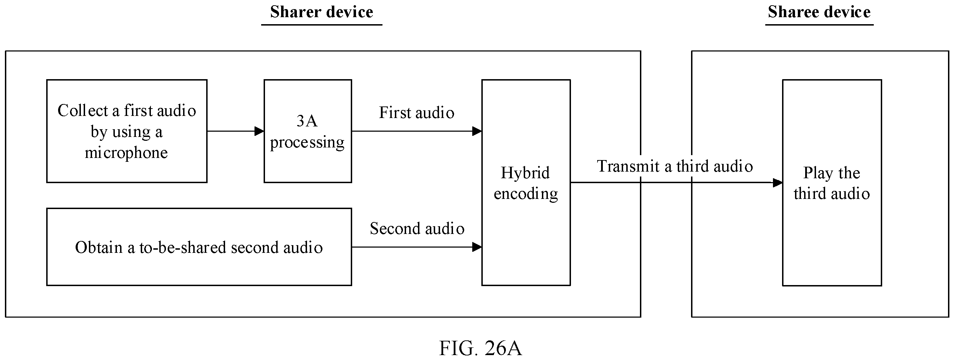

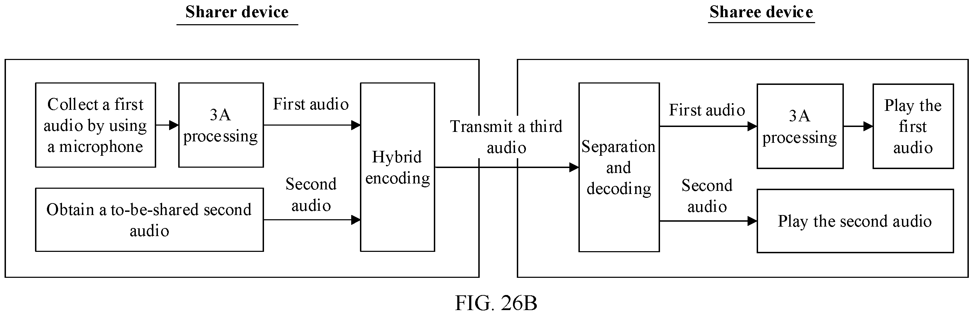

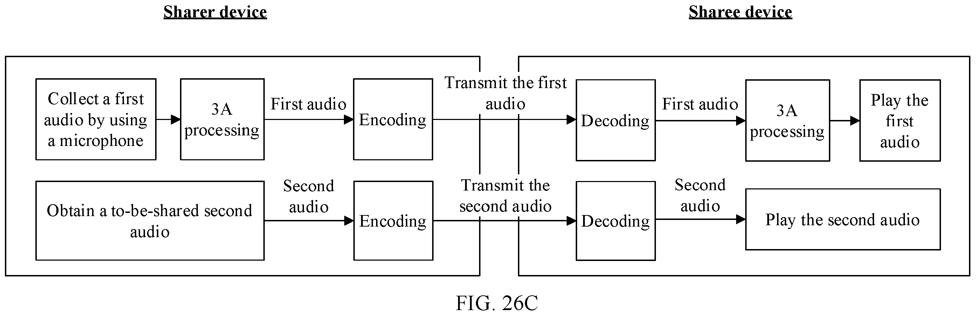

In an implementation, the sharer device may send a first audio collected by using a microphone and a second audio (which may be an application-level audio/a system-level audio/a background audio) shared in real time to the sharee device for playing together, that is, playing of audio mixing is implemented, so that a sharee user can simultaneously listen to the audio shared in real time and a voice of the other party, to meet a personalized requirement of the user. Transmission manners of the first audio and the second audio may include but are not limited to the following three manners:
Manner 1: As shown in FIG. 26A, on a sharer device side, after collecting the first audio by using the microphone, the sharer device may perform 3A processing on the collected first audio to obtain a processed first audio. The 3A processing may include acoustic echo cancellation (acoustic echo cancellation, AEC), background noise suppression (adaptive noise suppression, ANS), and automatic gain control (automatic gain control, AGC). The sharer device may further obtain the to-be-shared second audio (for example, capture and generate the second audio). A sequence in which the sharer device obtains the processed first audio and obtains the second audio is not limited in this application. The sharer device may mix the processed first audio and the obtained second audio, and perform unified encoding (which may be briefly referred to as hybrid encoding) on a mixed audio, so as to obtain a third audio. The sharer device may send the third audio to the sharee device. On a sharee device side, the sharee device may directly decode and play the third audio without separating the third audio.
Manner 2: As shown in FIG. 26B, a processing manner on a sharer device side is consistent with the manner 1, and a difference lies in that, on a sharee device side, the sharee device may perform separation and decoding on a third audio to obtain the first audio and the second audio, and the sharee device may perform 3A processing on the first audio. The sharee device may simultaneously play the first audio and the second audio that are obtained by performing 3A processing.
Manner 3: As shown in FIG. 26C, a processing manner on a sharer device side is similar to the manner 1, and a difference lies in that the sharer device does not perform hybrid encoding on the processed first audio and the obtained second audio, but separately encodes the processed first audio and the obtained second audio, and a first audio and a second audio that are obtained by separately performing encoding may be transmitted to the sharee device via different links. On a sharee device side, the sharee device may separately decode the received first audio and second audio, the sharee device may perform 3A processing on a decoded first audio, and the sharee device may simultaneously play a first audio obtained by performing 3A processing and a decoded second audio.

This is not limited to an example case in the manner 3. In some other examples, a first audio and a second audio that are obtained by separately performing encoding may alternatively be transmitted to the sharee device via a same link.

In an implementation, the sharee device may perform unified noise reduction on the received first audio and second audio (for example, a third audio obtained by performing hybrid encoding on the first audio and the second audio). In another implementation, the sharee device may perform noise reduction on only the received first audio, and do not perform noise reduction on the second audio. A specific noise reduction manner is not limited in this application.

The following describes an example of an implementation of performing real-time sharing through NewTalk (a call like an operator call or an OTT call).

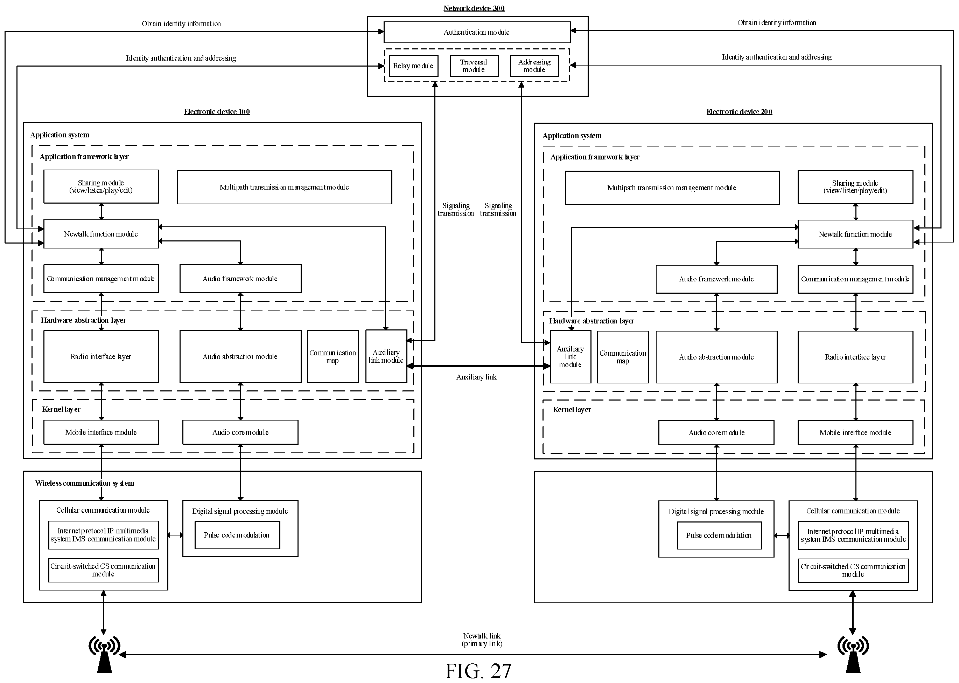

Refer to FIG. 27. FIG. 27 is an example of a diagram of an architecture of another sharing system 10. In some examples, the sharing system 10 shown in FIG. 27 may be applied to a scenario in which real-time sharing is performed through NewTalk. The following examples are described by using real-time sharing of an audio as an example.

For functions and possible implementations of some modules shown in FIG. 27, refer to descriptions of the software architecture of the electronic device in the foregoing embodiments, for example, descriptions of the sharing system 10 shown in FIG. 2E.

As shown in FIG. 27, an electronic device 100 and an electronic device 200 in the sharing system 10 may perform real-time sharing such as viewing together, listening together, playing together, and editing together through NewTalk. This is not limited to a unicast scenario in the foregoing example. In some other examples, more devices may further perform real-time sharing, that is, there may be a multicast or broadcast scenario. This is not limited in this application.

The electronic device 100 is used as an example to describe an architecture of a software system of the electronic device, and the electronic device 200 is described in a similar way.

In an implementation, as shown in FIG. 27, an application system of the electronic device 100 may be divided into three layers from top to bottom: an application framework layer, a hardware abstraction layer, and a kernel layer. The application framework layer includes a sharing module, a NewTalk function module, a communication management module, an audio framework module, and a multipath transmission management module. The hardware abstraction layer includes a radio interface layer (radio interface layer, RIL), an audio abstraction module, a communication map, and an auxiliary link module. The kernel layer includes a mobile interface module and an audio core module.

The communication management module is configured to manage functions such as answering and hanging up of NewTalk. This is not limited thereto. In some examples, the communication management module may be further configured to manage functions related to an SMS message and a network call. This is not limited in this application. In some examples, the NewTalk function module may interact with the RIL through the communication management module, to implement NewTalk between the electronic device 100 and the electronic device 200. The RIL is an interface layer used for connection/interaction with a wireless communication system. The communication management module may interact with the RIL. For example, the communication management module may interact with the RIL through a NewTalk service module in the kernel layer. In some examples, the RIL may interact with a cellular communication system in the wireless communication system of the electronic device 100 through the mobile interface module. The mobile interface module includes, for example, a mobile modem (mobile station modem, MSM) interface (interface) and a module configured to manage an attention command (attention command, AT). An attention command (AT) instruction set may be sent by terminal equipment (terminal equipment, TE) or data terminal equipment (data terminal equipment, DTE) to a terminal adapter (terminal adapter, TA) or data circuit terminal equipment (data circuit terminal equipment, DCE). The TE or the DTE may control a function of a mobile station (mobile station, MS) by sending an attention command (AT), so as to interact with a network service.

The audio framework module, the audio abstraction module, and the audio core module are respectively responsible for managing audio functions at the application framework layer, the hardware abstraction layer, and the kernel layer. In some examples, the audio framework module may interact with the audio core module through the audio abstraction module, and the audio core module may interact with a digital signal processing module in the wireless communication system, to implement an audio processing process. The audio framework module may also be referred to as an audio framework (Audio Framework), and the audio abstraction module may also be referred to as an audio hardware layer (Audio Hardware Layer, Audio HAL). The audio core module may be an advanced Linux sound architecture (advanced Linux sound architecture, ALSA) and/or a core (CORE) layer of an ALSA system on chip (ALSA system on chip, ASoC). The ALSA may provide support for a musical instrument digital interface (musical instrument digital interface, MIDI). The ASoC may be built on top of the ALSA. To better support an embedded system and a software system for audio encoding and decoding (codec) applied to a mobile device, the ASoC may depend on a framework of a standard ALSA driver. The ALSA core may provide system invocation for a logic device upward, and drive a hardware device downward. The logic device includes, for example, but is not limited to, a PCM device, a control (control, CTL) device, an MIDI device, and a timer (Timer) device. The hardware device includes, for example, but is not limited to, a machine (Machine) device, an I2S device, a direct memory access (direct memory access, DMA) device, and a codec (codec) device. The digital signal processing module in the wireless communication system is, for example, an audio digital signal processing (audio digital signal processing, ADSP) system (for example, used to perform audio decoding), and the digital signal processing module includes, for example, a PCM module.

The multipath transmission management module may be responsible for establishing a connection and transmitting data through a plurality of different paths (for example, referred to as four networks+), and is responsible for efficiently transmitting data through a plurality of paths (for example, referred to as a Huawei public cloud network plane (Huawei Open Network, HON). The HON may be integrated into a future minimalist network of a cloud service, to integrate advantages of device-pipe-cloud synergy, and build optimal network communication experience).

The communication map may include a general communication map and optionally a personalized communication map. The communication map may be used to perform the predictive link establishment. Predicted content includes, for example, but not limited to, whether a communication link is established, time at which the communication link is established, a type of the established communication link, a location at which the communication link is established, and the like.

In some examples, when the electronic device 100 serves as a sharer device to share a system-level audio stream/an application-level audio stream/a background audio stream in real time with a call party (the electronic device 200), the NewTalk function module may process real-time shared audio stream through the audio framework module, the audio abstraction module, the audio core module, and the digital signal processing module. In some examples, a processed real-time shared audio stream may be sent to a cellular communication module through the digital signal processing module, and the cellular communication module may simultaneously transmit a call data stream of NewTalk and the real-time shared audio stream to the electronic device 200. This is not limited thereto. In some other examples, the real-time shared audio stream may alternatively be transmitted to the electronic device 200 through another communication module like a Bluetooth communication module, a satellite communication module, or a Wi-Fi communication module in the wireless communication module.

In some examples, when the electronic device 100 serves as a sharer device to share a system-level audio stream/an application-level audio stream/a background audio stream in real time with a call party (the electronic device 200), the NewTalk function module may interact with the auxiliary link module, to establish an auxiliary link to the electronic device 200. The auxiliary link may be used to transmit a real-time shared audio stream.

A network device 300 may include an authentication module. The authentication module is configured to provide identity information. The identity information may be user-level identity information (for example, an access token (AT)) or device-level identity information (for example, a Huawei certificate). In some examples, the NewTalk function module of the electronic device 100 may obtain the identity information of the electronic device 100 through the authentication module of the network device 300. In some examples, the authentication module of the network device 300 may provide corresponding identity information for the electronic device 100 that logs in to a Huawei account. This is not limited thereto. In some examples, the authentication module is further configured to wake up an electronic device in an idle state or a sleep state.

In some examples, the NewTalk function module of the electronic device 100 may implement authentication of identity information (for example, the access token (AT) or Huawei certificate) through an addressing module of the network device 300. After the authentication succeeds, the network device 300 may generate P2P-TOKEN of the electronic device 100. P2P-TOKEN may be used for NAT traversal or NAT relay. This is not limited thereto. In some examples, the addressing module of the network device 300 may be further used by two call parties to exchange respective session IDs. In some examples, the addressing module of the network device 300 may be further configured to: interconnect with a push (PUSH) server, and wake up, by using the push server, the electronic device in the idle state or the sleep state.

In some examples, the woke-up electronic device may be connected to the network device 300, and implement identity information authentication and addressing through the authentication module and the addressing module of the network device 300.

In an implementation, when the electronic device 100 performs NewTalk with the electronic device 200, a NewTalk data stream (which may also be referred to as a call data stream) may be transmitted via a NewTalk link shown in FIG. 27. The NewTalk link may be referred to as a primary link. For descriptions of the NewTalk link, refer to descriptions of the link 1 in FIG. 2E.

In an implementation, when the electronic device 100 and the electronic device 200 perform real-time sharing through NewTalk, a communication link used to transmit a real-time shared multimedia data stream may be a NewTalk link (primary link). This is not limited thereto. The communication link may alternatively be a NewTalk data channel (Data channel) in another implementation or an auxiliary link in another implementation. In some examples, the auxiliary link may be a NAT traversal link or a server relay link (for example, a NAT relay link). For descriptions of the auxiliary link, refer to descriptions of the link 6 in FIG. 2E.

The following describes examples of processes such as discovery, link establishment, and transmission during real-time sharing through NewTalk.

Discovery: behavior of discovering one or more candidate sharee devices/sharing receivers by a sharer device/sharing initiator.

In an implementation, through discovery, the sharer device/sharing initiator can conveniently initiate a real-time sharing process to a specified device in the one or more candidate sharee devices/sharing receivers. In some examples, in a scenario in which real-time sharing is performed through NewTalk, because two call parties (corresponding to a two-party call scenario) or a plurality of call parties (corresponding to a multi-party call scenario) are determined when NewTalk is established, a discovery process is completed when NewTalk is established. In some examples, in the two-party call scenario, when one party in the call initiates real-time sharing as a sharer device/sharing initiator, the other party in the call is a sharee device/sharing receiver. In some other examples, in the multi-party call scenario, when one party in the call initiates real-time sharing as a sharer device/sharing initiator, other parties in the call may be candidate sharee devices/sharing receivers.

Link establishment: used to establish a communication link used to transmit a real-time shared multimedia data stream.

In an implementation, in consideration of a plurality of factors such as power consumption and tariff, link establishment may include but is not limited to the following three cases: always link establishment, predictive link establishment, and on-demand link establishment. The always link establishment means that a communication link is established when NewTalk starts. The predictive link establishment is to establish a communication link based on predicted content. For example, the communication link is established based on prediction of arriving at an area A at a moment A. The predicted content is, for example, obtained based on the communication map. The on-demand link establishment is to establish a communication link when there is a data transmission requirement.

In an implementation, the communication link established to transmit the real-time shared multimedia data stream may include one or more communication links. For example, a communication link with low power consumption may be always maintained, and a high-speed stable communication link may be established as required.

In an implementation, link establishment time may be but is not limited to any one of the following cases:
Case 1: After NewTalk starts, link establishment is initiated at any time point before real-time sharing. For example, in implementations shown in FIG. 6A to FIG. 6C, after the electronic device 100 and the electronic device 200 perform an operator call/OTT call, and before the electronic device 100 responds to the touch operation on the option 622A in the user interface 620 shown in FIG. 6B, the electronic device 100 (sharer device) may initiate link establishment to the electronic device 200 (sharee device). The electronic device 100 may initiate, in response to the touch operation, real-time sharing to the electronic device 200 indicated by the option 622A.
Case 2: The sharer device initiates link establishment after selecting a target shared object. For example, in implementations shown in FIG. 6A to FIG. 6C, after the electronic device 100 (sharer device) determines, in response to the touch operation on the option 622A in the user interface 620 shown in FIG. 6B, that the electronic device 200 indicated by the option 622A is the target shared object, the electronic device 100 may initiate link establishment to the electronic device 200, and perform real-time sharing via an established link.
Case 3: The sharer device initiates link establishment after selecting a target shared object and target shared content. For example, in implementations shown in FIG. 6A to FIG. 6C, after the electronic device 100 (sharer device) determines, in response to the touch operation on the option 622A in the user interface 620 shown in FIG. 6B, that the electronic device 200 indicated by the option 622A is the target shared object and an audio stream/a video stream of the short video application indicated by the option 621A in a selected state in the user interface 620 is the target shared content, the electronic device 100 may initiate link establishment to the electronic device 200, and perform real-time sharing via an established link.
Case 4: The communication link used to transmit the real-time shared multimedia data stream is established when the NewTalk link is established. For example, the communication link used to transmit the real-time shared multimedia data stream includes the NewTalk link.
Case 5: The communication link used to transmit the real-time shared multimedia data stream is established before the NewTalk link is established.
Case 6: Because a communication link has been established in a communication scenario such as call packet supplement, file sharing, and link sharing, the established communication link may be directly used as a communication link used to transmit the real-time shared multimedia data stream, and link establishment time is time at which the communication link is established.
Case 7: The predictive link establishment is performed based on information such as the communication map, and link establishment time is determined based on a prediction result.

In an implementation, a link establishment manner may be but is not limited to any one of the following:
Manner 1: The NewTalk link (primary link) is reused. In some examples, the call data stream and the real-time shared multimedia data stream may share the NewTalk link (primary link) for transmission. In some examples, the call data stream may be first transmitted via the NewTalk link (primary link), and then the real-time shared multimedia data stream is transmitted. In some examples, a header field of the call data stream may be different from that of the real-time shared multimedia data stream. In some examples, NewTalk is an IMS protocol-based call (which may be referred to as an IMS call). In view of this, an original real-time transport protocol (real-time transport protocol, RTP) packet may be extended and added. For example, an RTP header of the call data stream is different from that of the real-time shared multimedia data stream. In some examples, in the manner 1, a core network is in a transparent transmission mode, and does not perform filtering and transcoding on a packet of the real-time shared multimedia data stream.
Manner 2: The data channel of NewTalk is used. The data channel is a data transmission channel based on an IMS dedicated bearer, and is different from a signaling QCI5 of the call and a multimedia channel QCI1/QCI2.
Manner 3: The auxiliary link is established. In some examples, the call data stream may be transmitted via the NewTalk link (primary link), and the real-time shared multimedia may be transmitted via the auxiliary link.

In an implementation, link establishment negotiation is performed based on a packet transmitted via the NewTalk link (primary link), to establish the auxiliary link. In some examples, the sharer device may include, in a real-time transport control protocol (real-time transport control protocol, RTCP) packet transmitted via the primary link, information used to establish the auxiliary link, to request, in a call, a call party to establish the auxiliary link. In some examples, the sharer device may include, in a source description items (source description items, SDES) field included in an RTCP packet, information used to establish the auxiliary link. The SDES field is used to describe, for example, a source that sends the RTCP packet. In some examples, the sharer device may store information used for NAT traversal such as a communication ID (for example, a session ID) and address information (for example, an IP address) in the SDES field in a textual encoding manner. The SDES field is, for example, a terminal identifier (canonical name, CNAME). In some examples, after negotiation, the sharer device may invoke a NAT interface to perform traversal or relay, so as to establish the auxiliary link.

This is not limited to the foregoing examples. In some other examples, the sharer device may further perform link establishment negotiation by using a session initialization protocol (session initialization protocol, SIP) message to establish the auxiliary link. For example, when establishing NewTalk, the sharer device may include information such as a communication ID (for example, a session ID) in an invite (INVITE) message, to exchange respective communication IDs (used to subsequently establish the auxiliary link) with the sharee device. Alternatively, in a call, the sharer device may include information such as a communication ID (for example, a session ID) in a reinvite (reINVITE) message or an update (UPDATE) message, to exchange respective communication IDs (used to subsequently establish the auxiliary link) with the sharee device. This is not limited in this application.

In another implementation, the auxiliary link may alternatively be established not via the NewTalk link (primary link), but may be established through addressing by using the network device 300. In some examples, any party in a call may perform parameter binding on the network device 300. Optionally, specifically, identification information such as a phone number and an OTT ID is bound to/set to be associated with a communication ID (for example, a session ID). In some examples, after any device performs parameter binding on the network device 300, another device may address a communication ID of the device based on identification information such as a phone number and an OTT ID of the device and by using the network device 300.

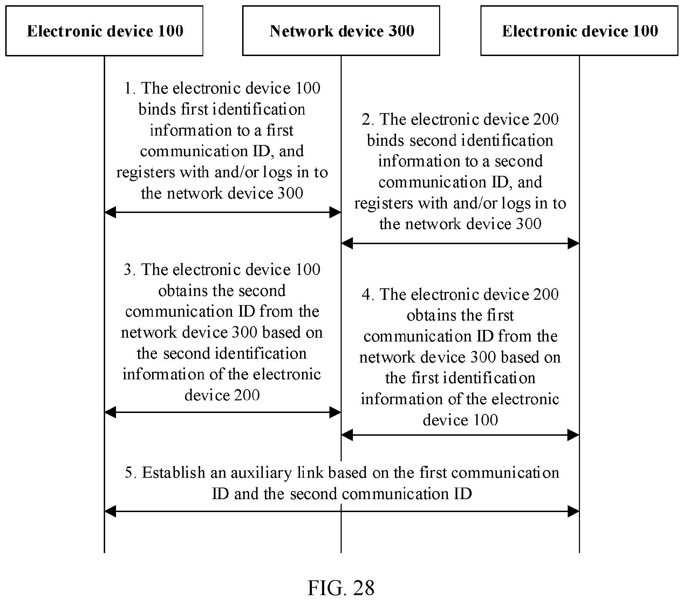

Refer to FIG. 28. FIG. 28 is an example of a schematic flowchart of a process of establishing an auxiliary link. FIG. 28 is described by using an example in which the electronic device 100 and the electronic device 200 that perform NewTalk perform addressing by using the network device 300 to establish the auxiliary link. The establishment process may include but is not limited to the following steps.
1. The electronic device 100 binds first identification information of the electronic device 100 to a first communication ID of the electronic device 100, and registers with and/or logs in to the network device 300 (which may be referred to as a binding operation).

In some examples, the first identification information is a communication number like a phone number or an OTT ID. The first communication ID is a session ID.

In some examples, before the binding operation, the network device 300 may perform identity authentication on the electronic device 100, for example, verify whether an access token (AT) or a Huawei certificate of the electronic device 100 meets a requirement. When the identity authentication on the electronic device 100 succeeds, the network device 300 may generate P2P-TOKEN of the electronic device 100. P2P-TOKEN carries, for example, a key identifier (key id), and is signed by using a private key.

In some examples, the binding operation can be performed only after the identity authentication on the electronic device 100 succeeds.

In some examples, the binding operation may include that the electronic device 100 sends the first identification information of the electronic device 100 to the network device 300, and the network device 300 returns the first communication ID of the electronic device 100. The first identification information may include one or more pieces of identification information of the electronic device 100. For example, if the first identification information includes a phone number 1 and a phone number 2, the electronic device 100 may send, to the network device 300, a HASH-processed phone number 1 and phone number 2 that may be represented as HASH (phone number 1)+HASH (phone number 2).

In some examples, when identification information and/or a communication ID of the electronic device 100 changes, the electronic device 100 may perform a refresh (Refresh) operation. The refresh operation is similar to the binding operation, and a difference lies in that bound identification information and a bound communication ID are changed identification information and a changed communication ID.

In some examples, after the electronic device 100 performs the binding operation, the network device 300 may store the first identification information of the electronic device 100 and the first communication ID associated with the first identification information. This may also be referred to as establishing a binding relationship.

2. The electronic device 200 binds second identification information of the electronic device 200 to a second communication ID of the electronic device 200, and registers with and/or logs in to the network device 300.

Step 2 in FIG. 28 is similar to step 1 in FIG. 28. For details, refer to descriptions of step 1 in FIG. 28. Details are not described again.

3. The electronic device 100 obtains the second communication ID of the electronic device 200 from the network device 300 based on the second identification information of the electronic device 200 (which may be referred to as an addressing operation).

In some examples, when the electronic device 100 knows at least one piece of identification information in the second identification information of the electronic device 200, the electronic device 100 may send a query request to the network device 300. The query request is used to query a communication ID of the electronic device 200. The query request may carry the at least one piece of identification information that is of the electronic device 200 and that is known to the electronic device 100. After receiving the query request, the network device 300 may obtain the first communication ID associated with the at least one piece of identification information and return the first communication ID to the electronic device 100.

In some examples, after step 3 in FIG. 28, the electronic device 100 may perform active release toward the network device 300 through a provided session termination interface, to clear the binding relationship implemented in step 1 in FIG. 28. In some other examples, after step 3 in FIG. 28, the network device 300 may perform automatic release after preset duration (for example, 10 minutes), to clear the binding relationship implemented in step 1 in FIG. 28, which may be referred to as timeout-based binding relationship automatically clearing.

4. The electronic device 200 obtains the first communication ID of the electronic device 100 from the network device 300 based on the first identification information of the electronic device 100.

Step 4 in FIG. 28 is similar to step 3 in FIG. 28. For details, refer to descriptions of step 3 in FIG. 28. Details are not described again.

5. The electronic device 100 and the electronic device 200 establish the auxiliary link based on the first communication ID and the second communication ID.

In some examples, the electronic device 100 may complete link establishment negotiation with the electronic device 200 based on the second communication ID of the electronic device 200, for example, but not limited to IP direct connection, NAT traversal, or server relay (for example, NAT relay), to establish the auxiliary link.

A sequence of step 1 and step 2 in FIG. 28 is not limited, and a sequence of step 3 and step 4 in FIG. 28 is not limited.

This is not limited to a case in the example in FIG. 28. In some other examples, before step 3, the electronic device 200 may not perform step 2 (that is, the binding operation is not performed). In this case, when the electronic device 100 performs an addressing operation, the network device 300 cannot obtain, through matching, a communication ID associated with the second identification information of the electronic device 200. In some examples, the network device 300 may wake up the electronic device 200 by using the connected PUSH server. For example, the woke-up electronic device 200 may be connected to the network device 300, and perform identity authentication and addressing (for example, addressing the electronic device 100) by using the network device 300 (for example, the authentication module and the addressing module in the network device 300). In some other examples, the network device 300 may not wake up the electronic device 200, and may return, to the electronic device 100, indication information indicating an addressing failure (for example, including a reason "not wake up"). In some other examples, the network device 300 cannot successfully wake up the electronic device 200, and may return, to the electronic device 100, indication information indicating an addressing failure (for example, including a reason "wake-up failure"). This is not limited thereto. In some other examples, before step 4, the electronic device 100 may not perform the binding operation. Specific descriptions are similar to those described above. Details are not described again.

In another implementation, the auxiliary link may be established by using a peripheral device instead of the NewTalk link (primary link). The peripheral device may be but is not limited to a device that communicates with the sharer device in a near field communication manner, a device that communicates with the sharer device in a far field communication manner like a cellular communication manner or a satellite, a device that is known to the sharer device (for example, information about the device is stored), or a device that is unknown to the sharer device (for example, no information about the device is stored). In some examples, the electronic device 100 is a device that does not have an addressing capability. The electronic device 100 may establish the auxiliary link to the electronic device 200 by using a peripheral device. For example, the electronic device 100 is a device like a smartwatch (for example, a modem is powered off), a tablet computer (for example, there is no SIM card interface), a smart sound box, or a headset. The electronic device 100 may establish the auxiliary link to the electronic device 200 by using a smartphone connected to the electronic device 100.

In an implementation, the auxiliary link established in the manner 3 is an auxiliary link between the sharer device and the sharee device. In another implementation, the auxiliary link established in the manner 3 includes an auxiliary link 1 between the sharer device and a relay device, and an auxiliary link 2 between the relay device and the sharee device. In some examples, the electronic device 100 is a device that does not have a capability of directly establishing the auxiliary link. The electronic device 100 may communicate with the electronic device 200 by using the relay device. For example, the electronic device 100 is a device like a smartwatch (for example, a modem is powered off), a tablet computer (for example, there is no SIM card interface), a smart sound box, or a headset. The electronic device 100 may establish the auxiliary link to the electronic device 200 by using a smartphone connected to the electronic device 100.

It should be noted that a sharer device in a call state may establish a link in the manner 1, the manner 2, or the manner 3, and a sharer device in the idle state may establish a link in the manner 2 or the manner 3.

The following describes an example of the communication map and an example of how to perform the predictive link establishment based on the communication map.

In an implementation, the communication map may include the general communication map, and the general communication map may include data crowdsourced by a plurality of electronic devices, for example, but not limited to at least one of the following: a service set identifier (service set identifier, SSID) (which may also be referred to as a Wi-Fi ID), a cellular cell ID (CELLID), a signal strength parameter (for example, reference signal received power (reference signal received power, RSRP)), a signal quality parameter (for example, reference signal received quality (reference signal received quality, RSRQ)), a call QoE parameter (for example, a packet loss rate, a delay, and a quantity of discontinuity count), a link transmission quality parameter (for example, a packet loss rate, a delay, and a jitter), a time period, longitude and latitude information of GNSS positioning, absolute location information of GNSS positioning, indoor relative location information of GNSS positioning, and information about a call object (for example, a phone number).

In some examples, performing the predictive link establishment based on the general communication map may be as follows: performing data analysis on a cloud (for example, a server) based on the data crowdsourced by the plurality of electronic devices, to obtain spatial and temporal characteristics of the communication link, where the obtained characteristics may be used to determine at least one of the following: link establishment time, a link establishment location, a type of an established link, and the like. The established link may include a physical link and/or a logical link. Physical links established in different communication manners are different, and a plurality of logical links established in a same communication manner may be different. For example, logical links of a same communication manner that are established by using different ports of the electronic device may be different. For example, a relay link and a traversal link that are established in a cellular communication manner or a Wi-Fi communication manner may be different logical links. It may be understood that the electronic device may determine, by using the cloud, whether a link established at a location in a time period is stable. When the link is stable, communication quality is good. When the link is unstable, communication quality is poor. The communication quality is determined based on, for example, but not limited to the packet loss rate, the delay, the jitter, a bandwidth, or the like. It may also be understood that the electronic device may guide link establishment behavior of the electronic device based on a communication status of another electronic device. For example, because communication quality of a cellular communication link established by another electronic device at a location 1 in a time period 1 is poor, the electronic device may not establish the cellular communication link at the location 1 in the time period 1, to ensure call quality, and the electronic device does not need to learn links one by one at each time and location, to effectively reduce power consumption.

In an implementation, the communication map may include the personalized communication map, and the personalized communication map may be a user operation that may be subsequently performed and that is obtained by learning personal information such as a use habit and operation behavior. In some examples, the personalized communication map may include the data crowdsourced by the plurality of electronic devices. In some examples, the personalized communication map may include private data, for example, but not limited to at least one of the following: intimacy of each call object (for example, represented by call duration, a call time period, a remark/relationship marked in Contacts, and a pleasure degree in a call), information shared in real time with each call object (for example, time, a location, and a frequency), a situation of viewing/listening to a video/an audio simultaneously in a call, a situation of transmitting data such as a link and a file in a call, an operation habit and a behavior sequence (for example, a common button, a touch manner, or a touch location) of a user in a call, and accuracy of predictive link establishment of a historical call.

In some examples, the electronic device or the cloud (for example, a server) may mark a high-frequency real-time shared object (which may be briefly referred to as a high-frequency object) based on the personalized communication map, for example, mark N objects (N is a positive integer) that are most frequently shared in real time within a preset period (for example, one week) as a high-frequency object, and/or mark first M objects sorted by real-time sharing time from latest to earliest as a high-frequency object. The marked high-frequency object may be used to perform the predictive link establishment.

In some examples, the electronic device or the cloud (for example, a server) may mark an intimate object based on the personalized communication map, for example, a contact whose remark/relationship is family, leader, friend, colleague, or the like in Contacts is marked as an intimate object, and/or a contact whose call is frequent (for example, a large quantity of calls and/or a recent call) in a call record is marked as an intimate object. The marked intimate object and information (for example, time, a location, and a frequency) shared with the intimate object in real time may be used to perform the predictive link establishment.

In some examples, the electronic device or the cloud (for example, a server) may predict the operation behavior based on the personalized communication map, for example, predict operation behavior of a user based on a situation of viewing/listening to a video/an audio simultaneously in a call, a situation of transmitting data such as a link and a file in a call, and an operation habit (for example, a common button, a touch manner, or a touch location) of the user in a call. The predicted operation behavior may be used to perform the predictive link establishment.

In an implementation, the predictive link establishment may be used to implement at least one of the following functions:
First, an optimal link is selected. For example, when a plurality of links may be established, at least one optimal/better/good link may be selected from the plurality of links, and the at least one link is established, and another link in the plurality of links is not established.
Second, optimal time for establishing a link is determined. For example, when all links that can be established in a current time period are poor, a subsequent optimal/better/good time point may be selected to establish a link.
Third, a link is established based on a predicted user intention. For example, the operation behavior of the user is learned based on the personalized communication map, to predict subsequent operation behavior of the user. When it is predicted that an intention of a next operation of the user is to perform real-time sharing, a link is established.

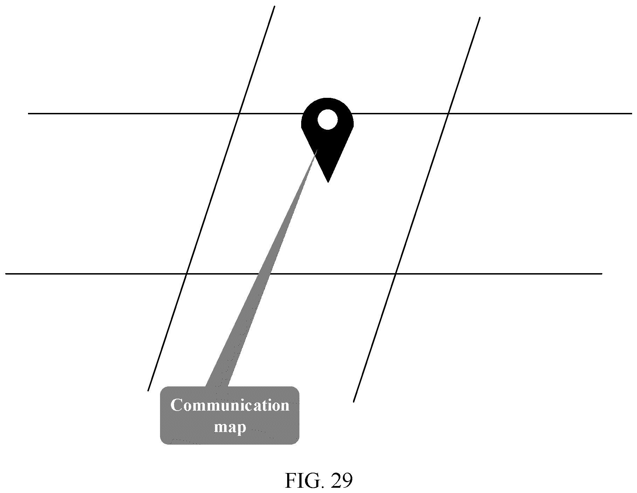

In an implementation, the communication maps in the examples may be distinguished by slicing in the form of a grid, for example, a grid with a specification of 20 meters × 20 meters shown in FIG. 29. In some examples, after data cleaning and analysis are performed on the general communication map, congestion statuses of various links in each grid, optimal link establishment time, and the like may be obtained. In some examples, after privacy information of the user is filtered out from the personalized communication map locally by the electronic device or the cloud, whether the user has a link establishment requirement and optionally link establishment time may be predicted by using a model. This is not limited to the foregoing examples. In some other examples, the communication map may be in an irregular shape. In some other examples, the communication map may be in a form that carries three-dimensional information such as an altitude. A specific form of the communication map is not limited in this application.

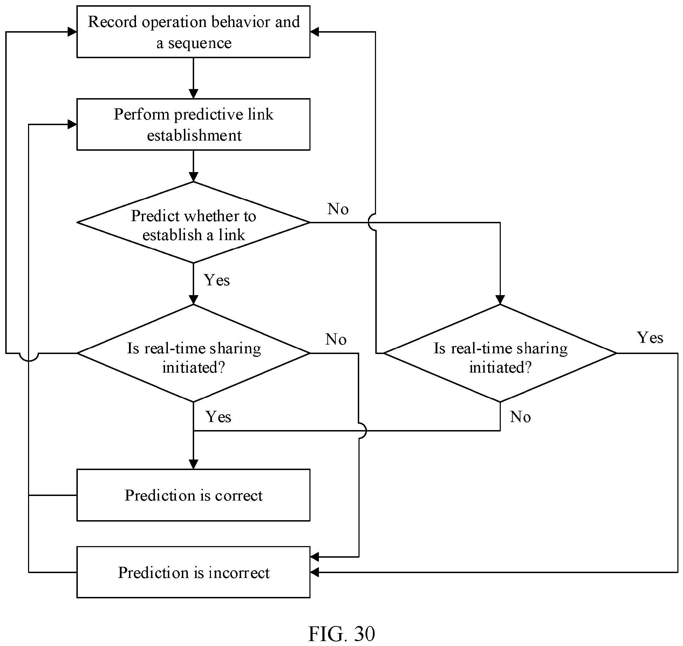

FIG. 30 is an example of a schematic flowchart of the predictive link establishment. As shown in FIG. 30, before initiating real-time sharing, the sharer device may record operation behavior and a sequence, for example, record operation behavior and a sequence in a call. The sharer device may perform the predictive link establishment based on the recorded operation behavior and sequence and the communication map. The sharer device may determine, based on a result of predictive link establishment and a result of whether real-time sharing is actually initiated, whether the predictive link establishment is correct. In some examples, when the result of predicting whether to establish a link is yes, and the result of whether real-time sharing is actually initiated is yes, the prediction is correct. In some other examples, when the result of predicting whether to establish a link is yes, and the result of whether real-time sharing is actually initiated is no, the prediction is incorrect. In some other examples, when the result of predicting whether to establish a link is no, and the result of whether real-time sharing is actually initiated is yes, the prediction is incorrect. In some other examples, when the result of predicting whether to establish a link is no, and the result of whether real-time sharing is actually initiated is no, the prediction is correct. In an implementation, the sharer device may record an operation behavior and sequence of whether real-time sharing is actually initiated, for subsequent predictive link establishment. In an implementation, the sharer device may record a result of whether the predictive link establishment is correct, and feed back the result to a system for predictive link establishment, for subsequent predictive link establishment.

This is not limited to the foregoing examples. In some other examples, the predictive link establishment may be performed by a cloud server or another network device, to reduce processing pressure of the electronic device and reduce power consumption.

The foregoing examples are described by using an example in which the sharer device initiates link establishment. In some other examples, the sharee device may initiate link establishment. This is not limited in this application.

Transmission means transmitting a real-time shared data stream between the sharer device and at least one sharee device.

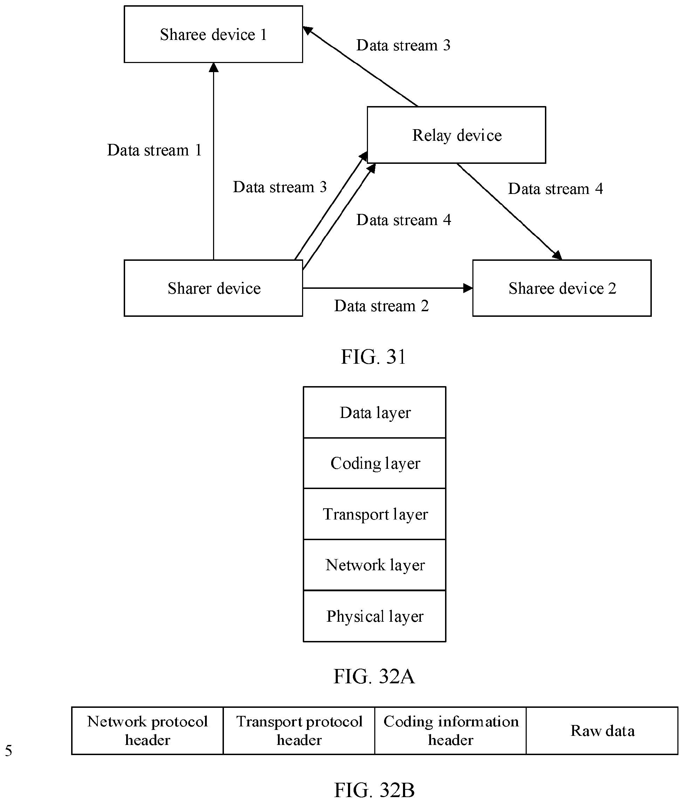

In an implementation, a data stream may be directly transmitted between the sharer device and the sharee device in a device-to-device manner. For example, as shown in FIG. 31, the sharer device may directly send a data stream 1 to a sharee device 1, and the sharer device may directly send a data stream 2 to a sharee device 2. In another implementation, a data stream may be transmitted between the sharer device and the sharee device by using a relay device (for example, a network device like a server). For example, as shown in FIG. 31, the sharer device may send a data stream 3 to the sharee device 1 by using a relay device, that is, the data stream 3 may be forwarded by using the relay device. The data stream 3 may pass through a link between the sharer device and the relay device and a link between the relay device and the sharee device. The sharer device may send a data stream 4 to the sharee device 2 by using the relay device. Specific descriptions are similar to the foregoing descriptions. Details are not described again.

In an implementation, the data stream is transmitted in layers. For example, a transmission architecture for an audio stream/a video stream shown in FIG. 32A may be, from top to bottom, a data layer (for example, audio data/video data), a coding layer (for example, audio/video coding standards such as H.265 and H.264 are used, and sound coding formats such as Opus are used), a transport layer (for example, RTP and a real time streaming protocol (real time streaming protocol, RTSP) are used), a network layer (for example, a TCP/IP protocol or a user datagram protocol (user datagram protocol, UDP) is used), and a physical layer (for example, a protocol of a physical link like cellular communication/Wi-Fi/BT/D2D/satellite is used).

In an implementation, based on the transmission architecture for an audio stream/a video stream shown in FIG. 32A, a format of a transmitted data packet is, for example, shown in FIG. 32B. The data packet may include fields such as a network protocol header (for example, an IP Head), a transport protocol header (for example, an RTP Head), a coding information header (for example, an H.265 Head/Opus Head), and raw data (RAW Data).

In an implementation, when there are a plurality of communication links used to transmit the real-time shared data stream, the sharer device may perform splitting on the real-time shared data stream according to a preset transmission rule (for example, implemented by using the four networks+ in the multipath transmission management module shown in FIG. 27). The transmission rule may include but is not limited to at least one of the following:
Rule 1: An audio stream and a video stream are transmitted separately. The audio stream and the video stream are separately encoded/independently encoded. The audio stream is transmitted via a link A, and the video stream is transmitted via a link B. For example, the link A is a stable communication link with a low delay and/or low jitter, and the link B is a communication link with a large bandwidth and/or a low tariff or without tariff.
Rule 2: An audio stream and a video stream are transmitted separately. Audio mixing encoding is performed on an application-level audio stream/a system-level audio stream/a background audio stream and a call data stream (for details, refer to descriptions on the sharer device side in FIG. 26A). The audio stream after the audio mixing encoding is transmitted via a link A, and the video stream is transmitted via a link B.
Rule 3: An audio stream and a video stream are transmitted separately. A basic audio stream 1 and a basic video stream 1 are transmitted via a link A, and a rich audio stream 2 and a rich video stream 2 are transmitted via a link B.
Rule 4: An audio stream and a basic video stream 1 are transmitted via a link A, and a rich video stream 2 is transmitted via a link B.
   Whether a data stream is a basic data stream or a rich data stream is related to encoding (for example, layered encoding). A data stream with a high encoding degree may be a rich data stream, and a data stream with a low encoding degree may be a basic data stream. For example, for a same image, a thumbnail of the image is basic data, and an original image of the image is rich data.
Rule 5: An audio stream and a video stream are transmitted together. An audio stream and a video stream that have a same timestamp are encoded together. In some examples, the audio stream and the video stream may be transmitted via a same link. In other examples, the audio stream and the video stream may be dynamically migrated to another link according to a change of link quality, to ensure optimal transmission effect.
Rule 6: Redundant packet supplement is performed on an audio stream and/or a video stream. In some examples, a supplemental packet may be transmitted via same link, for example, carrying encoded data of two adjacent frames each time. In some other examples, a supplemental packet may be transmitted via at least one other link. In some examples, redundant packet supplement may be performed on some of audio streams and/or video streams. In some other examples, redundant packet supplement may be performed on all audio streams and/or video streams.

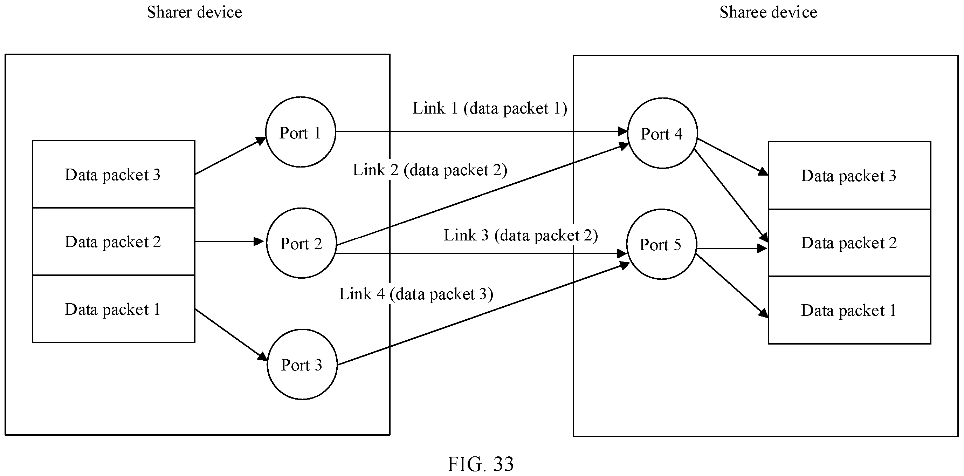

In an implementation, in order to ensure that time for receiving a group of data packets by a receive end (sharee device) is the shortest, when sending the group of data packets, the sharer device may perform splitting transmission based on transmission delays and jitters of a plurality of communication links (for example, implemented by using the HON in the multipath transmission management module shown in FIG. 27), and the receive end (sharee device) may perform packet assembly after receiving the group of data packets sent by the sharer device. For a specific example, refer to FIG. 33. Because there are differences between different links, transmission delays and jitters of the different links may be different. Optionally, there are differences between physical links, for example, transmission delays and jitters of a Bluetooth link and a Wi-Fi link are different. Optionally, there are differences between logical links, for example, transmission delays and jitters of a plurality of Wi-Fi links established by using different ports are different, for example, a transmission delay and a jitter of a directly established Wi-Fi link are different from those of a Wi-Fi link established by using a relay device.

FIG. 33 is an example of a diagram of the splitting transmission.

As shown in FIG. 33, the sharer device may include a port 1, a port 2, and a port 3, and the sharee device may include a port 4 and a Wi-Fi port 5. A link 1 is established between the port 1 and the port 4, a link 2 is established between the port 2 and the port 4, a link 3 is established between the port 2 and the port 5, and a link 4 is established between the port 3 and the port 5. It is assumed that the four links are sequentially the link 1, the link 2, the link 3, and the link 4 in descending order of delays. When sending a group of data packets that include a data packet 1, a data packet 2, and a data packet 3, the sharer device may sequentially perform the following operations: sending the data packet 1 via the link 4, transmitting the data packet 2 via the link 3, transmitting the data packet 2 via the link 2, and transmitting the data packet 1 via the link 1. The data packet 2 transmitted via the link 2 may be a supplemental packet. Therefore, the sharee device may receive the data packet 1, the data packet 2, and the data packet 3 at close moments, and perform packet assembly, to avoid a situation that a moment at which some data packets arrive at the sharee device is much later than a moment at which another data packet arrives at the sharee device, thereby reducing time for the sharee device to receive a group of data packets, and improving transmission efficiency.

The following describes an example of an implementation of performing real-time sharing through Wi-Fi.

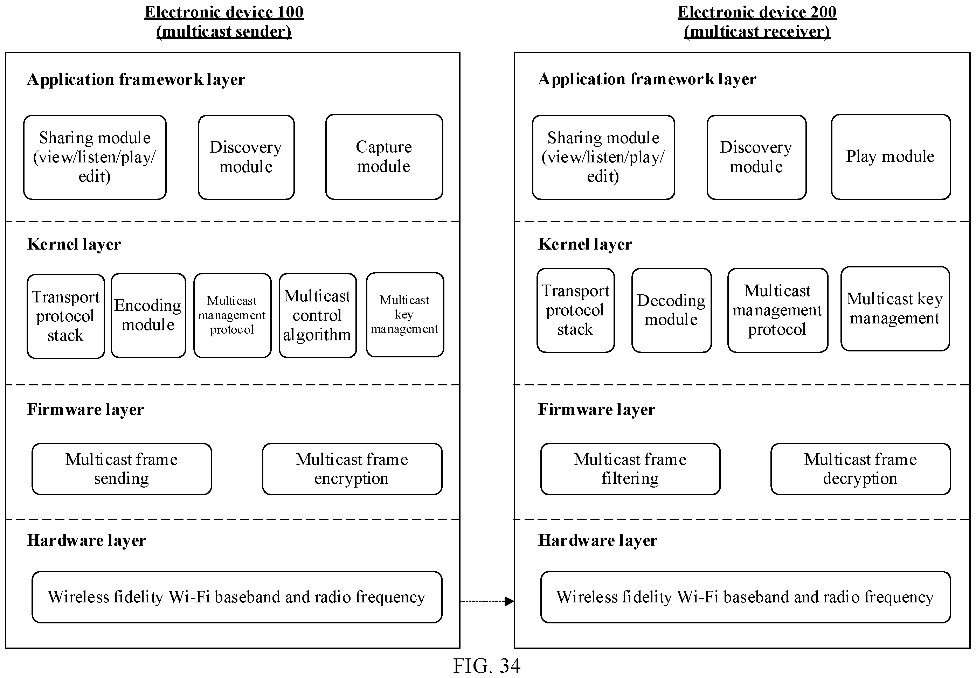

Refer to FIG. 34. FIG. 34 is an example of a diagram of an architecture of another sharing system 10. In some examples, the sharing system 10 shown in FIG. 34 may be applied to a scenario in which real-time sharing is performed through Wi-Fi.

For functions and possible implementations of some modules shown in FIG. 34, refer to descriptions of the software architecture of the electronic device in the foregoing embodiments, for example, descriptions of the sharing system 10 shown in FIG. 2E.

As shown in FIG. 34, an electronic device 100 and an electronic device 200 in the sharing system 10 may perform real-time sharing such as viewing together, listening together, playing together, and editing together through Wi-Fi.

The following examples are described by using an example in which the electronic device 100 is a sharer device that sends a real-time shared data stream and the electronic device 200 is a sharee device that receives the real-time shared data stream. In addition, the following examples are described by using a multicast scenario as an example. In the multicast scenario, the electronic device 100 may also be referred to as a multicast transmitter (source), and the electronic device 200 may also be referred to as a multicast receiver (sink). The electronic device 200 is any one of a plurality of multicast receivers, and is not limited thereto. The sharing system may also be applied to a unicast scenario or a broadcast scenario. This is not limited in this application.

In an implementation, as shown in FIG. 34, a software system of the electronic device 100 may be divided into four layers from top to bottom: an application framework layer, a kernel layer, a firmware layer, and a hardware layer. The application framework layer includes a sharing module, a discovery module, and a capture module. The kernel layer includes a transport protocol stack, an encoding module, a multicast management protocol, a multicast control algorithm, and multicast key management. The firmware layer includes multicast frame sending and multicast frame encryption. The hardware layer includes Wi-Fi baseband and radio frequency.

The capture module may be configured to capture shared data, for example, capture an application level/a system level/a background audio and/or image, and encode the captured audio and/or image to generate source data of the audio/video.

The encoding module may be configured to, before sending an audio data packet/a video data packet, encode (for example, fountain encoding) the data packet, so as to improve transmission reliability and reduce a probability of packet loss through an air interface channel.

The multicast management protocol may be used to manage members of a Wi-Fi multicast group, for example, joining and leaving of a member.

The multicast control algorithm may be used to dynamically control aggregation scheduling of a multicast packet, a signal modulation level of a modulation and coding scheme (modulation and coding scheme), and the like.

The multicast key management may be used to manage a multicast key, for example, dynamic generation and distribution of a multicast key.

The multicast frame sending may be used to encapsulate audio/video data into a Wi-Fi multicast data frame (which may be briefly referred to as a Wi-Fi multicast frame), and send the Wi-Fi multicast frame through an air interface (to a member of the Wi-Fi multicast group, for example, the electronic device 200).

The multicast frame encryption may be used to encrypt a Wi-Fi multicast frame based on a multicast key. Optionally, a Wi-Fi multicast frame sent by the multicast frame sending through an air interface is specifically an encrypted Wi-Fi multicast frame.

The Wi-Fi baseband and radio frequency are used to transmit/receive a W-Fi multicast frame.

In an implementation, as shown in FIG. 34, a software system of the electronic device 200 may be divided into four layers from top to bottom: an application framework layer, a kernel layer, a firmware layer, and a hardware layer. The application framework layer includes a sharing module, a discovery module, and a play module. The kernel layer includes a transport protocol stack, a decoding module, a multicast management protocol, and multicast key management. The firmware layer includes multicast frame filtering and multicast frame decryption. The hardware layer includes Wi-Fi baseband and video. Specific descriptions are similar to descriptions of the software system of the electronic device 100. The following mainly describes modules that are in the electronic device 200 and that are different from the modules of the electronic device 100.

The play module may be configured to: decode audio/video data, and output decoded audio/video data.

The decoding module may be configured to decode a received audio/video data packet (for example, fountain decoding), to recover a lost data packet.

The multicast frame filtering may be used to: after a Wi-Fi multicast frame is received through an air interface, perform filtering based on address information of a multicast group that the electronic device 200 has joined, discard a Wi-Fi multicast frame that does not belong to the multicast group, and reserve a Wi-Fi multicast frame that belongs to the multicast group.

The multicast frame decryption may be used to, after a Wi-Fi multicast frame is received through an air interface, decrypt the received Wi-Fi multicast frame based on a multicast key.

The following describes examples of processes such as discovery, a connection, transmission, and leaving in a case in which real-time sharing is performed through Wi-Fi.

In an implementation, the sharer device (a multicast sender) may serve as a source device of a Wi-Fi multicast group, and search for a nearby device by using a broadcast message, to complete device discovery. In an implementation, after completing the device discovery, the sharer device (multicast sender) may send a real-time sharing request to the sharee device (a multicast receiver). After accepting the request, the sharee device may complete negotiation of information such as a multicast address and a multicast key with the sharer device, so as to complete a connection.

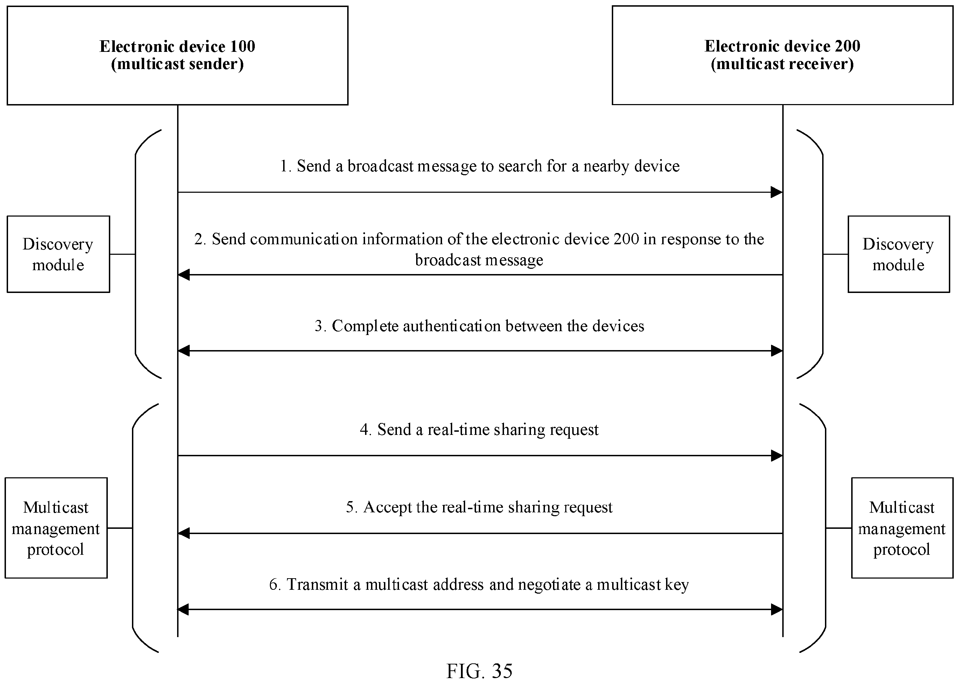

Refer to FIG. 35. FIG. 35 is an example of a schematic flowchart of the device discovery and the connection.

As shown in FIG. 35, the device discovery may include but is not limited to the following steps.
1. The electronic device 100 (sharer device/multicast sender) sends a broadcast message to the electronic device 200 (sharee device/multicast receiver), to search for a nearby device. The broadcast message is, for example, but is not limited to, a Wi-Fi broadcast message or a Bluetooth broadcast message.
2. The electronic device 200 sends communication information of the electronic device 200 to the electronic device 100 in response to the received broadcast message. The communication information includes, for example, but is not limited to, information such as an ID and a MAC address of the electronic device 200.
3. The electronic device 100 and the electronic device 200 complete authentication between the devices.

In some examples, the discovery module of the electronic device 100 and the discovery module of the electronic device 200 may complete the device discovery, for example, steps 1 to 3 in FIG. 35.

As shown in FIG. 35, a device connection may include but is not limited to the following steps.

4. The electronic device 100 sends a real-time sharing request to the electronic device 200. For example, the electronic device 100 sends the real-time sharing request to the electronic device 200 in response to the user operation that is described in the foregoing embodiments and that is used to trigger the real-time sharing function.

5. The electronic device 200 accepts the real-time sharing request sent by the electronic device 100. For example, the electronic device 200 accepts the real-time sharing request in response to a user operation.

6. The electronic device 100 and the electronic device 200 transmit a multicast address and negotiate a multicast key.

In some examples, the multicast management protocol of the electronic device 100 and the multicast management protocol of the electronic device 200 may complete the connection, for example, steps 4 to 6 in FIG. 35.

In an implementation, after the device discovery and the connection, a real-time shared data stream may be transmitted between the sharer device (multicast sender) and a plurality of sharee devices (multicast receivers).

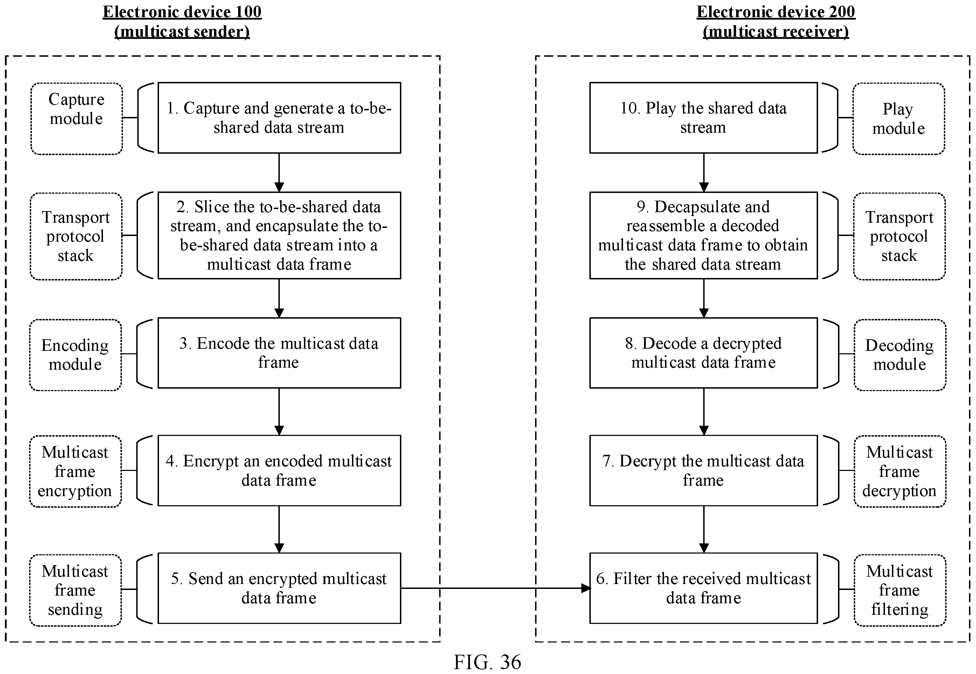

Refer to FIG. 36. FIG. 36 is an example of a diagram of transmitting the real-time shared data stream through Wi-Fi. The transmission process may include but is not limited to the following steps.
1. The electronic device 100 captures and generates a real-time shared data stream (briefly referred to as a shared data stream).
   In some examples, the electronic device 100 (for example, the included capture module) captures an image and/or an audio of an application layer/a system layer/a background layer, and encodes the captured image and/or audio, to generate source data (the shared data stream) of the audio/video.
2. The electronic device 100 slices the to-be-shared data stream, and encapsulates the to-be-shared data stream into a multicast data frame.
   In some examples, the electronic device 100 (for example, the included transport protocol stack) slices the source data of the audio/video, and encapsulates the source data into a multicast data frame.
3. The electronic device 100 encodes the multicast data frame.
   In some examples, the electronic device 100 (for example, the included encoding module) performs fountain encoding on the multicast data frame to add redundant information.
4. The electronic device 100 encrypts an encoded multicast data frame.
   In some examples, the electronic device 100 (for example, the included the multicast frame encryption) encrypts the encoded multicast data frame based on a negotiated multicast key.
5. The electronic device 100 sends an encrypted multicast data frame to the electronic device 200.
   In some examples, the electronic device 100 (for example, the included multicast frame sending) sends the encrypted multicast frame to a multicast group member like the electronic device 200 through an air interface based on a Wi-Fi data multicast protocol.
6. The electronic device 200 filters the received multicast data frame.
   In some examples, after the electronic device 200 receives the multicast data frame through the air interface, the electronic device 200 (for example, the included multicast frame filtering) may discard a multicast data frame that does not belong to a multicast group to which the electronic device 200 belongs, and reserve a multicast data frame that belongs to the multicast group.
7. The electronic device 200 decrypts the multicast data frame.
   In some examples, the electronic device 200 (for example, the included multicast frame decryption) decrypts the multicast data frame based on the negotiated multicast key.
8. The electronic device 200 decodes a decrypted multicast data frame.
   In some examples, the electronic device 200 (for example, the included decoding module) performs fountain decoding on the decrypted multicast data frame to recover a lost data frame based on the redundant information.
9. The electronic device 200 decapsulates and reassembles a decoded multicast data frame to obtain the shared data stream.
   In some examples, the electronic device 200 (for example, the included transport protocol stack) decapsulates and reassembles the decoded multicast data frame, to restore the multicast data frame to an audio stream/a video stream (the shared data stream).
10. The electronic device 200 plays the shared data stream.

In some examples, the electronic device 200 (for example, the included play module) decodes the shared data stream, and displays and/or plays the decoded video stream/audio stream in the foreground.

In some examples, a transport stream direction of an audio stream/a video stream for real-time sharing may be a source application/source system (used to generate an audio stream/a video stream for real-time sharing) of the electronic device 100 -> capture module of the electronic device 100 -> transport protocol stack of the electronic device 100 -> encoding module of the electronic device 100 -> multicast frame encryption of the electronic device 100 -> multicast frame sending of the electronic device 100 -> multicast frame filtering of the electronic device 200 -> multicast frame decryption of the electronic device 200 -> decoding module of the electronic device 200 -> transport protocol stack of the electronic device 200 -> play module of the electronic device 200 -> target application/target system of the electronic device 200 (used to output an audio stream/a video stream for real-time sharing).

In an implementation, any one of the sharer device (multicast sender) and the plurality of sharee devices (multicast receivers) may exit current real-time sharing, which may be understood as that the device may leave a current multicast group.

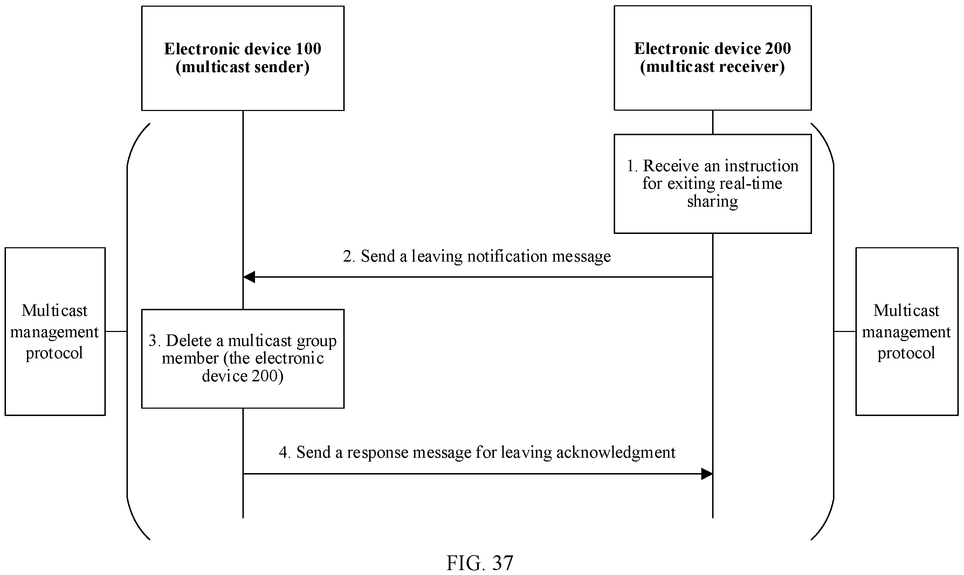

In some examples, when receiving an instruction for exiting the current real-time sharing, any multicast receiver (for example, the electronic device 200) may notify a multicast sender (the electronic device 100), and the multicast sender may delete the member (the multicast receiver) from the multicast group. For a specific example, refer to FIG. 37.

FIG. 37 is an example of a schematic flowchart of leaving of a multicast receiver. The leaving process may include but is not limited to the following steps.
1. The electronic device 200 (a multicast receiver) receives an instruction for exiting real-time sharing. For example, the electronic device 200 receives a touch operation (for example, a tap operation) on an "Exit viewing" option 531A in a user interface 530 shown in FIG. 5C.
2. The electronic device 200 sends a leaving notification message to the electronic device 100 (a multicast sender). For example, the notification message is a multicast signaling frame.
3. The electronic device 100 deletes a multicast group member, namely, the electronic device 200.
4. The electronic device 100 sends, to the electronic device 200, a response message for leaving acknowledgment. For example, the response message is a multicast signaling frame.

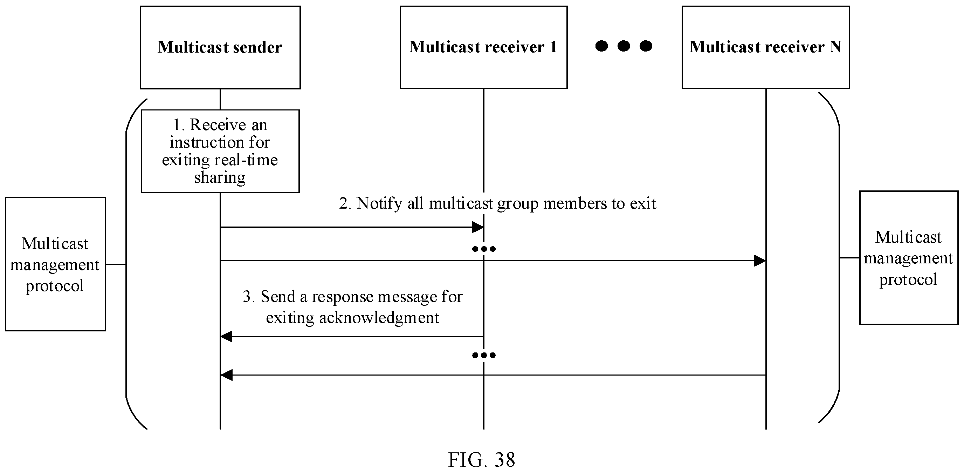

In some examples, when receiving an instruction for exiting current real-time sharing, the multicast sender may notify other multicast group members (a plurality of multicast receivers) to leave a current multicast group, and delete the current multicast group. For a specific example, refer to FIG. 38.

FIG. 38 is an example of a schematic flowchart of leaving of a multicast sender. The leaving process may include but is not limited to the following steps.
1. The multicast sender receives an instruction for exiting real-time sharing. For example, the electronic device 100 (a multicast sender) receives a touch operation (for example, a tap operation) on an option 431E of "Pause sharing" in a user interface 430 shown in FIG. 4C.
2. The multicast sender notifies all multicast group members to exit. Specifically, the multicast sender separately sends, to a plurality of multicast receivers (a multicast receiver 1, ..., and a multicast receiver N, where N is a positive integer greater than 1), a notification message for exiting a multicast group, for example, the notification message is a multicast signaling frame.
3. The plurality of multicast receivers (the multicast receiver 1, ..., and the multicast receiver N) send, to the multicast sender, a response message for exiting acknowledgment, for example, the response message is a multicast signaling frame.

In some examples, the multicast management protocol of the electronic device 100 and the multicast management protocol of the electronic device 200 may complete maintenance of a multicast group member, for example, implement leaving of the multicast receiver shown in FIG. 37 and/or leaving of the multicast sender shown in FIG. 38.

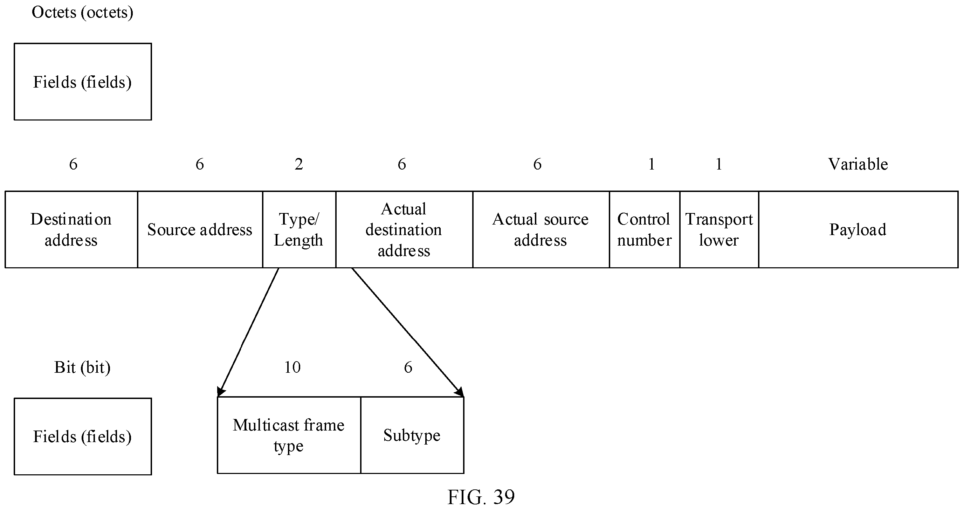

In an implementation, for example, a format of the multicast signaling frame is shown in FIG. 39, and the multicast signaling frame may include fields (fields) such as a destination address (destination address, DestAddr), a source address (source address, SrcAddr), a type/length (Type/Length), an actual destination address (Actual DestAddr), an actual source address (Actual SrcAddr), a control number (Control ID), transport lower (transport lower, TX LE), and a payload (Payload).

The destination address (6 octets (octets)) is a multicast address, and is a receiving address, corresponding to a multicast signaling frame, in an Ethernet header and a MAC header.

The source address (6 octets) is a multicast address, and is a sending address, corresponding to the multicast signaling frame, in the Ethernet header and the MAC header.

It may be understood that, by using the destination address and the source address that belong to the multicast address, an attacker may be prevented from obtaining a multicast key based on an actual source address and/or an actual destination address, to improve data transmission security.

The type/length (2 octets) may include a multicast type (Multicast Type) and a subtype (Subtype). The multicast frame type (10 bits (bits)) represents a type of a multicast frame. For example, a type field in the multicast signaling frame is Ox1FF. The sub-type (6 bits) represents a sub-type of a multicast frame.

The actual destination address (6 octets) is a multicast MAC address based on which the multicast signaling frame is actually received. In some examples, the multicast MAC address may be a multicast address segment, and MAC addresses of a plurality of devices that actually receive the multicast signaling frame may be in the multicast address segment.

The actual source address (6 octets) is a MAC address of a device that actually sends the multicast signaling frame.

The control number (1 octet) is code for controlling a signaling frame and can be used for retransmission.

The transport lower (1 octet) indicates the receive end to shift a receive window.

The payload is specific control signaling information, and sizes of the payload may be different in different cases, that is, are a variable (Variable).

In some examples, the multicast signaling frame may be an original multicast frame of WLAN. This is not limited thereto. In some other examples, the multicast signaling frame may further be determined by using a Huawei Magneto Link (Huawei Magneto Link, HML), to meet a scenario of lower power consumption and WLAN concurrency.

The following describes an example of an implementation of performing real-time sharing through Bluetooth. The following examples are described by using real-time sharing of an audio as an example.

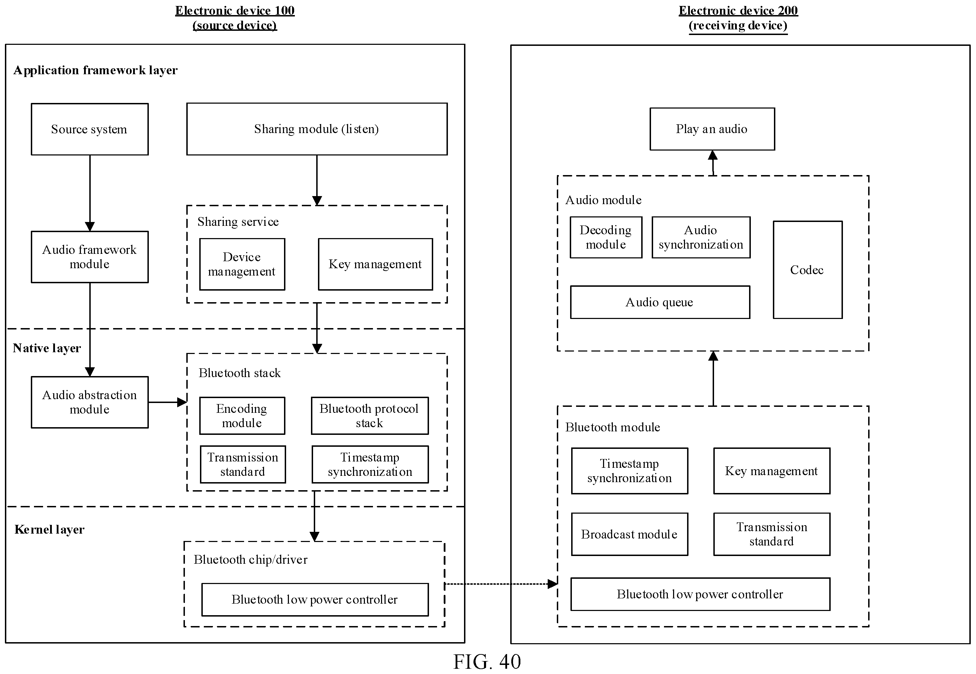

Refer to FIG. 40. FIG. 40 is an example of a diagram of an architecture of another sharing system 10. In some examples, the sharing system 10 shown in FIG. 40 may be applied to a scenario in which real-time sharing is performed through Bluetooth.

For functions and possible implementations of some modules shown in FIG. 40, refer to descriptions of the software architecture of the electronic device in the foregoing embodiments, for example, descriptions of the sharing system 10 shown in FIG. 2E.

As shown in FIG. 40, an electronic device 100 and an electronic device 200 in the sharing system 10 may perform real-time sharing such as viewing together, listening together, playing together, and editing together through Bluetooth. The following examples are described by using an example in which the electronic device 100 is a sharer device that sends a real-time shared data stream (which may also be referred to as a source device) and the electronic device 200 is a sharee device that receives the real-time shared data stream (which may also be referred to as a receiving device). It may be understood that real-time sharing performed through Bluetooth may be applied to a unicast scenario, a multicast scenario, or a broadcast scenario. In the multicast scenario or broadcast scenario, the electronic device 200 may be any one of a plurality of receiving devices.

In an implementation, in the multicast scenario or the broadcast scenario, the source device may simultaneously send audio data to the plurality of receiving devices, and the plurality of receiving devices simultaneously play the audio data after receiving the audio data.

In an implementation, as shown in FIG. 40, a software system of the electronic device 100 may be divided into upper layers from top to bottom: an application framework layer, a native (Native) layer, and a kernel layer. The application framework layer includes a source application/source system, an audio framework module, a sharing module, and a sharing service. The sharing service includes device management and key management. The native layer includes an audio abstraction module and a Bluetooth stack. The Bluetooth stack includes an encoding module, a Bluetooth protocol stack, a transmission standard, and timestamp synchronization. The kernel layer includes a Bluetooth chip/driver (for example, Hi110x). The Bluetooth chip/driver includes a Bluetooth low power controller (BLE Controller).

The source application/source system is used to generate a real-time shared audio stream, for example, a music application, a video application, or a game application.

The audio framework (Audio Framework) module and the audio abstraction (Audio HAL) module are respectively responsible for managing audio functions at the application framework layer and the native layer. In some examples, audio data generated by the source application/source system may be sent to the audio framework module for processing, processed audio data is sent to the audio abstraction module, and the audio abstraction module may send the processed audio data to the Bluetooth stack for processing.

The device management may be used to manage a device that performs real-time sharing through Bluetooth, for example, joining and leaving of a device.

The key management may be used to manage a Bluetooth key, for example, generation of a Bluetooth key. The Bluetooth key is, for example, a key of a broadcast isochronous stream (broadcast isochronous stream, BIS) protocol.

The encoding module may be configured to encode audio data sent by the audio abstraction module, for example, perform L3 encoding.

The Bluetooth protocol stack is, for example, a BIS protocol stack.

The transmission standard may be a standard used to transmit a configuration parameter of audio unicast/multicast/broadcast, for example, but not limited to a broadcast audio scan service (broadcast audio scan service, BASS), a basic audio profile (basic audio profile, BAP), and a generic attribute profile (generic attribute profile, GATT).

The timestamp synchronization may be used to synchronize time with another receiving device, so that the plurality of receiving devices subsequently play the audio data simultaneously after receiving the audio data.

The Bluetooth chip/driver may be configured to send audio data obtained through Bluetooth stack processing to the receiving device.

In an implementation, as shown in FIG. 40, a software system of the electronic device 200 may include a Bluetooth module and an audio module. The Bluetooth module includes timestamp synchronization, key management, a broadcast module (for example, configured to implement BIS broadcast), a transmission standard, and a Bluetooth low energy controller. The audio module includes an audio queue, a decoding module, audio synchronization, and a codec. Specific descriptions are similar to descriptions of the software system of the electronic device 100. The following mainly describes modules that are in the electronic device 200 and that are different from the modules of the electronic device 100.

The Bluetooth module may be configured to: receive and process audio data sent by the source device, and send processed audio data to the audio module.

The audio queue may be used to buffer audio data obtaining through processing by the Bluetooth module. When a size of the audio data buffered in the audio queue is greater than or equal to a preset threshold, the audio module may process the audio data in the audio queue.

The decoding module may be configured to decode data in the audio queue, for example, perform L3 decoding.

The audio synchronization may be used to agree with another receiving device on a moment for playing the audio data, so that the plurality of receiving devices subsequently play the audio data at the agreed moment simultaneously after receiving the audio data.

The codec may be configured to decode audio/video data, to obtain original audio data. The receiving device may play the original audio data at the moment agreed with the another device, that is, the plurality of receiving devices may simultaneously play the original audio data.

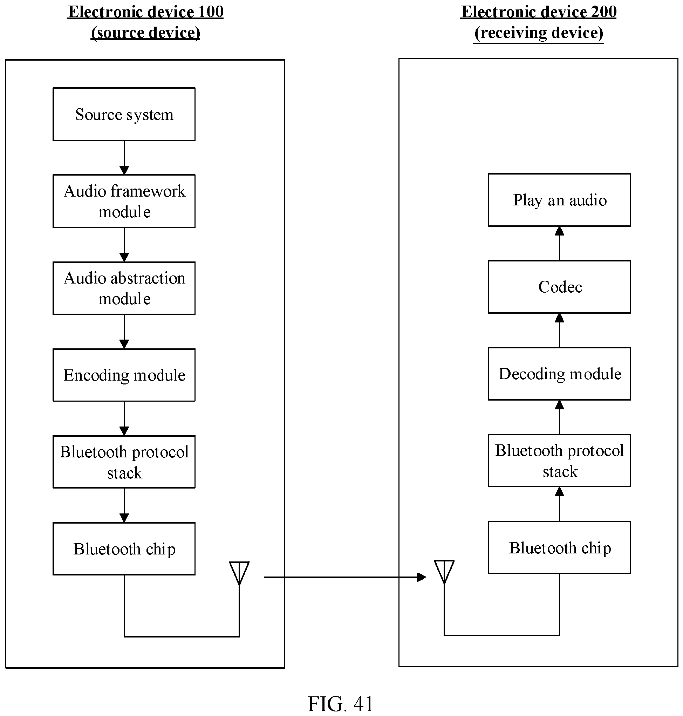

In an implementation, a transport stream direction of an audio stream for real-time sharing in the software system shown in FIG. 40 is shown in FIG. 41. First, after the source device (electronic device 100) selects a sound source (for example, the source application) and the receiving device (it is assumed that the receiving device includes the electronic device 200), the electronic device 100 may establish a Bluetooth connection to the electronic device 200 and transmit a Bluetooth key. Audio data of the audio source may be sequentially transmitted from the source application to the audio framework module, the audio abstraction module, and the encoding module. The encoding module may encode PCM original audio data of the audio source (for example, L3 encoding). Encoded audio data may be transmitted from the encoding module to the Bluetooth protocol stack. The Bluetooth protocol stack may encrypt the encoded audio data by using the transmitted Bluetooth key. The encrypted audio data may be transmitted to the Bluetooth chip. The electronic device 100 may send the audio data to the electronic device 200 by using the Bluetooth chip. The electronic device 200 may receive the audio data by using a Bluetooth chip, and transmit the audio data to a Bluetooth protocol stack. The Bluetooth protocol stack may decrypt the audio data by using the transmitted Bluetooth key. Decrypted audio data may be sequentially transmitted to the decoding module (for example, L3 decoding) and the codec for decoding, and the original audio data obtained by decoding may be used for playing (for example, by using a speaker).

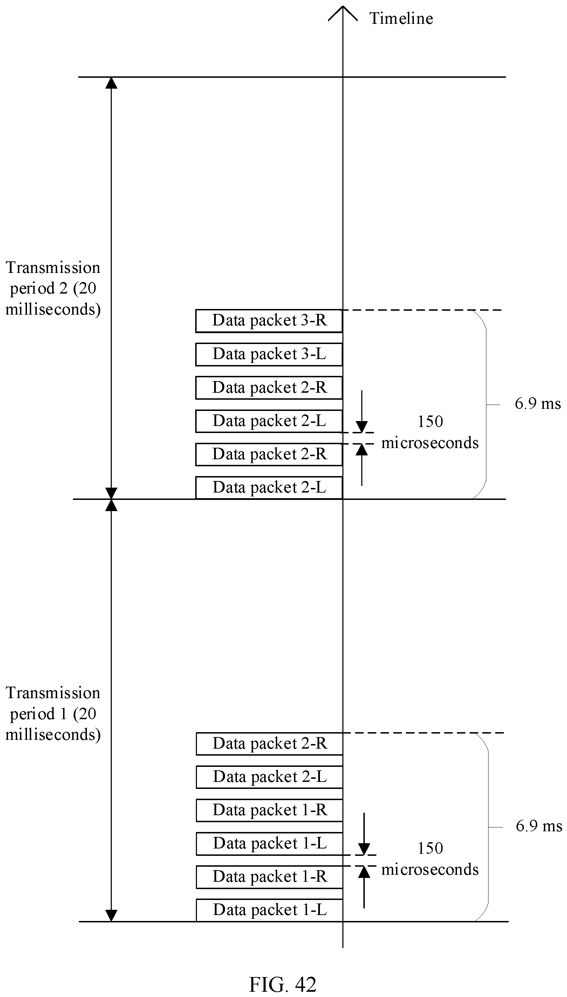

In an implementation, in a scenario of real-time sharing of an audio stream, for example, listening together, the source device may implement audio data distribution through Bluetooth broadcast (which may be briefly referred to as data distribution). In some examples, a BLE Audio BIS technology may be used for data distribution. In some examples, a principle of data distribution is that the audio data is repeatedly sent in a sequential manner or an interleaved manner at a fixed transmission interval (for example, a transmission interval of a BIS), to improve a success rate of broadcast receiving. The receiving device may unidirectionally receive and play the audio data sent by the source device without establishing a connection to the source device. For a specific example, refer to FIG. 42.

FIG. 42 is a diagram of an example of a sending process of audio data. FIG. 42 is described by using an example in which a transmission interval (interval) is 20 milliseconds (ms) and each data packet is repeatedly sent for three times.

As shown in FIG. 42, at a start moment of a transmission period 1 (duration is a transmission interval of 20 ms), the source device starts to send a data packet, for example, sends a data packet once every 150 microseconds, and sequentially sends a left (left) sound channel part of a data packet 1 (which may be referred to as a data packet 1-L for short), a right (right) sound channel part of the data packet 1 (which may be referred to as a data packet 1-R for short), a data packet 1-L, a data packet 1-R, a data packet 2-L, and a data packet 2-R, in other words, the source device transmits the data packet 1 twice and the data packet 2 once within 6.9 ms. At a start moment (an end moment of the transmission period 1) of a transmission period 2 (duration is a transmission interval of 20 ms), the source device sends the data packet again, for example, sends the data packet once every 150 microseconds, and sequentially sends the data packet 2-L, the data packet 2-R, the data packet 2-L, the data packet 2-R, a data packet 3-L, and a data packet 3-R, in other words, the source device transmits the data packet 2 twice and the data packet 3 once within 6.9 ms.

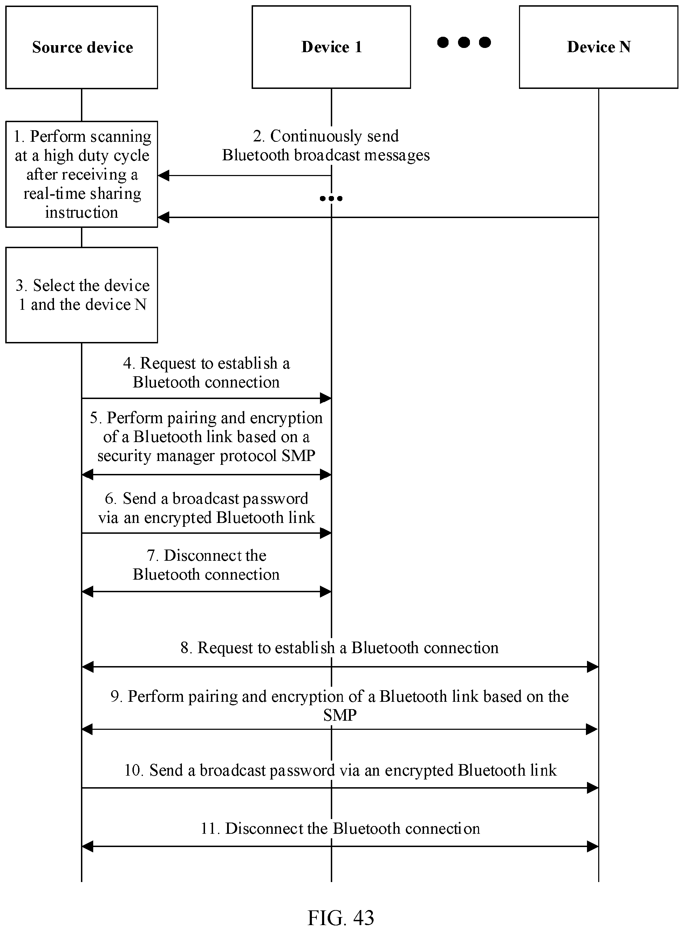

In an implementation, the source device may select a plurality of receiving devices to perform real-time sharing of an audio stream, for example, listening together, as shown in an implementation shown in FIG. 6D, and the source device may transmit a broadcast password for encrypting the audio stream to the selected plurality of receiving devices. In some examples, the source device may connect to the selected plurality of receiving devices through BLE, and initiate security manager protocol (security manager protocol, SMP) pairing to perform link encryption, and then the source device may transmit a broadcast password (Broadcast Code) to the selected plurality of receiving devices via an encrypted link. The source device may sequentially transmit the broadcast password to the selected plurality of receiving devices. After a current receiving device receives the broadcast password, the source device may disconnect from the receiving device, to transmit the broadcast password to a next receiving device. For a specific example, refer to FIG. 43.

FIG. 43 is an example of a schematic flowchart of a password transmission process. FIG. 43 is described by using an example in which the source device selects two devices from N devices (a device 1, ..., and a device N, where N is a positive integer greater than 1) to perform real-time sharing. The process may include but is not limited to the following steps.
1. The source device performs scanning (on a device) at a high duty cycle after receiving a real-time sharing instruction.
2. The N devices (the device 1, ..., and the device N) continuously send Bluetooth broadcast messages (for example, BLE broadcast) to the source device.
   A sequence of step 1 and step 2 in FIG. 43 is not limited. For example, step 1 and step 2 may be performed simultaneously.
3. The source device selects the device 1 and the device N. For example, the source device selects the device 1 and the device N in response to a user operation.
4. The source device requests the device 1 to establish a Bluetooth connection. In some examples, after the device 1 accepts a request from the source device, the source device establishes the Bluetooth connection (for example, a BLE connection) to the device 1.
5. The source device performs pairing with the device 1 and encryption of a Bluetooth link between the source device and the device 1 based on the SMP.
6. The source device sends a broadcast password to the device 1 via an encrypted Bluetooth link.
7. The Bluetooth connection between the source device and the device 1 is disconnected.

After step 4 to step 7, the source device may transmit the broadcast password to a next receiving device (the device N), that is, step 8 to step 11 in FIG. 43 are performed. Descriptions of step 8 to step 11 are similar to those of step 4 to step 7. Details are not described again.

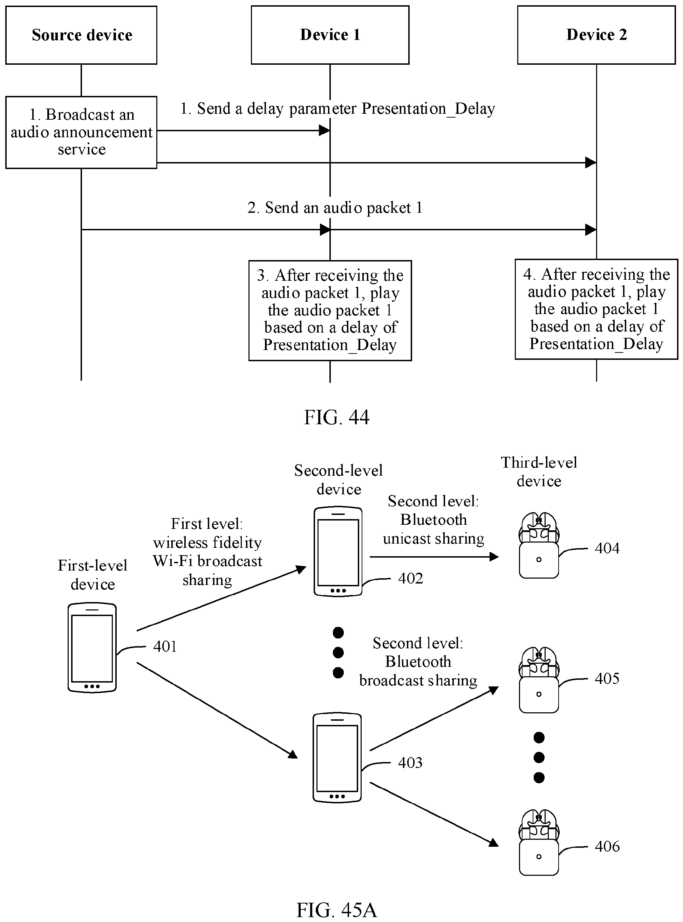

In an implementation, in a scenario of real-time sharing of an audio stream, for example, listening together, a synchronization mechanism of a plurality of receiving devices may be implemented through Bluetooth broadcast (for example, BIS broadcast), that is, the plurality of receiving devices simultaneously play audio data sent by the source device. In some examples, the plurality of receiving devices may obtain a first parameter (for example, a delay parameter (Presentation_Delay)) by using a broadcast announcement service (Broadcast Audio Announcement Service, BAP) of the source device, and play the audio data after a delay of first duration since the audio data sent by the source device is received. The first duration may be determined based on the first parameter. For example, the first duration is the first parameter. For a specific example, refer to FIG. 44.

FIG. 44 is an example of a schematic flowchart of a multi-device synchronization process. FIG. 44 is described by using an example in which a plurality of receiving devices are a device 1 and a device 2. The process may include but is not limited to the following steps.
1. The source device sends Presentation_Delay to the device 1 and the device 2 based on BAP.
2. The source device sends an audio packet 1 (which may also be referred to as a broadcast audio packet 1) to the device 1 and the device 2.
3. After receiving the audio packet 1, the device 1 plays the audio packet 1 based on a delay of Presentation_Delay.
4. After receiving the audio packet 1, the device 2 plays the audio packet 1 based on a delay of Presentation_Delay.

Step 3 and step 4 in FIG. 44 may be performed simultaneously.

It may be understood that, according to a Bluetooth broadcast mechanism, the plurality of receiving devices may simultaneously receive an audio data packet sent by the source device, and the plurality of receiving devices may play the audio data packet after a delay of the first duration since the audio data packet is received, so that the plurality of receiving devices simultaneously play the audio data packet. This provides better user experience.

The embodiments are described by using a one-level sharing scenario (that is, a sharer device shares a first multimedia data stream with at least one sharee device) as an example. In some other embodiments, the embodiments are applied to a multi-level sharing scenario, for example, applied to a two-level sharing scenario. Any device in the at least one sharee device may further serve as a sharer device to share a second multimedia data stream with the at least one device. The second multimedia data stream may be the same as or different from the first multimedia data stream. For any level of sharing in the multi-level sharing scenario, refer to descriptions of one-level sharing in the foregoing embodiment.

The following shows some examples of multi-level sharing scenarios.

FIG. 45A is an example of a two-level sharing scenario. FIG. 45A is shown by using an example in which first-level sharing is implemented through Wi-Fi, and second-level sharing is implemented through Bluetooth.

As shown in FIG. 45A, an electronic device 401 (a first-level device) may perform real-time sharing with a second-level device like an electronic device 402 and an electronic device 403 through Wi-Fi broadcast, the electronic device 402 may share in real time an audio stream/a video stream with an electronic device 404 (a third-level device) through Bluetooth unicast, and the electronic device 403 may perform real-time sharing with a third-level device like an electronic device 405 and an electronic device 406 through Bluetooth broadcast.

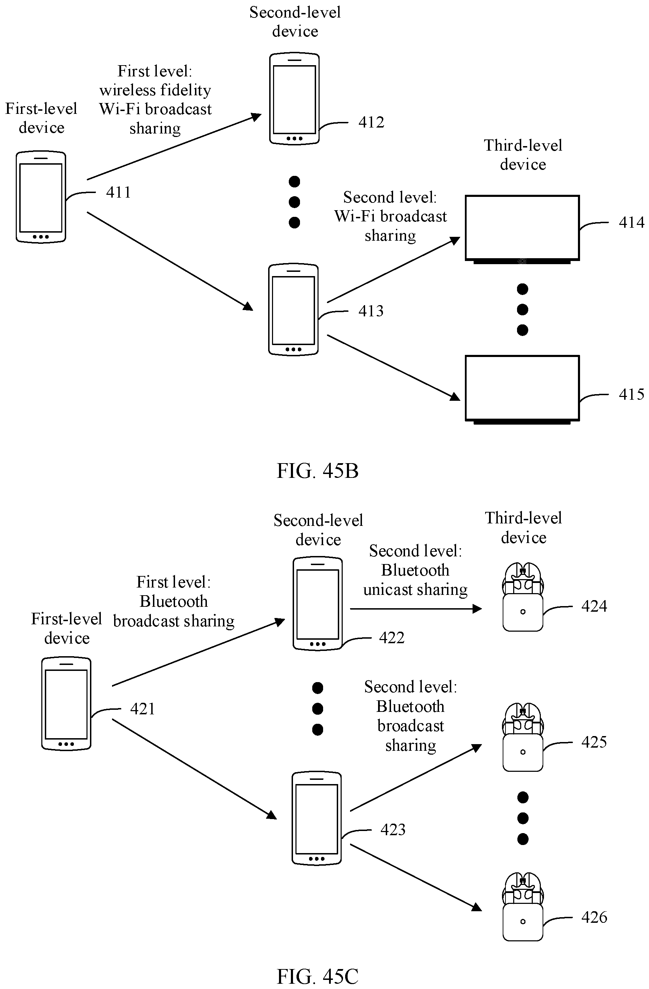

FIG. 45B is another example of a two-level sharing scenario. FIG. 45B is shown by using an example in which both first-level sharing and second-level sharing are implemented through Wi-Fi.

As shown in FIG. 45B, an electronic device 411 (a first-level device) may perform real-time sharing with a second-level device like an electronic device 412 and an electronic device 413 through Wi-Fi broadcast, and the electronic device 413 may perform real-time sharing with a third-level device like an electronic device 414 and an electronic device 415 through Wi-Fi broadcast, which may be understood as a Wi-Fi cascade relay scenario.

FIG. 45C is another example of a two-level sharing scenario. FIG. 45C is shown by using an example in which both first-level sharing and second-level sharing are implemented through Bluetooth.

As shown in FIG. 45C, the electronic device 421 (a first-level device) may perform real-time sharing with a second-level device like an electronic device 422 and an electronic device 423 through Bluetooth broadcast, the electronic device 422 may perform real-time sharing with an electronic device 424 (a third-level device) through Bluetooth unicast, and the electronic device 423 may perform real-time sharing with a third-level device like an electronic device 425 and an electronic device 426 through Bluetooth broadcast.

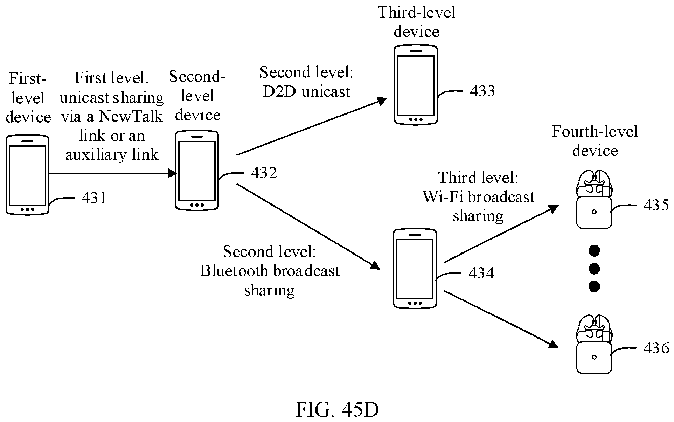

FIG. 45D is an example of a three-level sharing scenario. FIG. 45D is shown by using an example in which first-level sharing is implemented in a far field communication manner such as NewTalk or a satellite, and second-level sharing and third-level sharing are implemented in a near field communication manner such as Wi-Fi, D2D, or BT.

As shown in FIG. 45D, an electronic device 431 (a first-level device) may perform real-time sharing with an electronic device 432 (a second-level device) in a unicast mode via a NewTalk link or an auxiliary link. The electronic device 432 may perform real-time sharing with an electronic device 433 (a third-level device) through D2D unicast, and may further perform real-time sharing with a third-level device like an electronic device 434 through Bluetooth broadcast. The electronic device 434 (third-level device) may perform real-time sharing with a fourth-level device like an electronic device 435 and an electronic device 436 through Wi-Fi broadcast.

This is not limited to the three-level sharing scenario of far field sharing (first-level sharing) + near field sharing (second-level sharing) + near field sharing (third-level sharing) in FIG. 45D. In some other examples, the three-level sharing scenario may be far field sharing + far field sharing + near field sharing. In some other examples, the three-level sharing scenario may be far field sharing + near field sharing + far field sharing. In some other examples, the three-level sharing scenario may be near field sharing + far field sharing + near field sharing. In some other examples, the three-level sharing scenario may be near field sharing + near field sharing + far field sharing. In some other examples, the three-level sharing scenario may be near field sharing + far field sharing + far field sharing. This is not limited in this application.

This is not limited to the multi-level sharing scenarios in the foregoing examples. In some other examples, in FIG. 45A, the electronic device 401 (a first-level device) may perform real-time sharing with the electronic device 402 (a second-level device) through Wi-Fi unicast. In the multi-level sharing scenario in this application, any level of sharing may be unicast, multicast, or broadcast.

In an implementation, an electronic device that performs real-time sharing may adjust, according to a network environment, a bit rate of encoding/decoding real-time shared multimedia data. For example, when a network bandwidth is large, the bit rate may be large; or when a network bandwidth is small, the bit rate may be small, that is, a dynamic bit rate of an audio/a video is supported, and the bit rate may be self-adaptive to a network. This is not limited thereto. In another implementation, a bit rate of encoding/decoding real-time shared multimedia data may be further adjusted based on a charging status/power consumption of the electronic device, a requirement on an output effect, and the like. This is not limited in this application. In this way, user experience and device power consumption can be balanced in various scenarios, and device availability is improved.

In an implementation, the sharer device may share 3G/4G/5G/6G broadcast data in real time, for example, through a 3G/4G/5G/6G broadcast module shown in FIG. 2C to FIG. 2E. The following uses a multicast and broadcast service (multicast and broadcast service, MBS) in a 5G communication system/an NR communication system as an example for description. Other cases are similar.

In an NR MBS, an NR broadcast/multicast (the multicast may also be referred to as groupcast) technology may be used to transmit a user service in a point-to-multipoint manner by sharing radio and transmission resources, so that a service flow covers as many users as possible, to effectively improve utilization of network resources, improve user service experience, and reduce a problem of poor service experience caused by resource congestion.

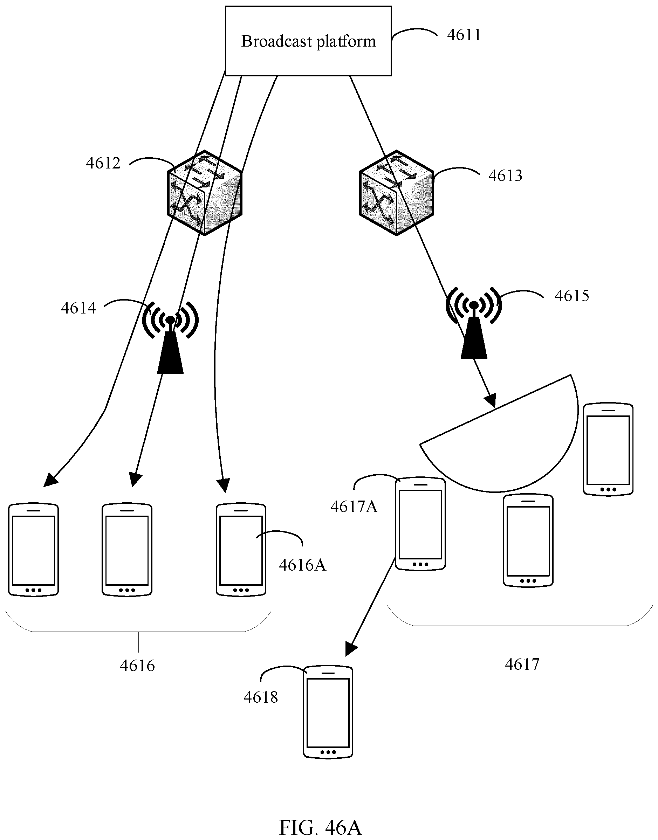

Refer to FIG. 46A. FIG. 46A is a diagram of an architecture of an NR communication system according to this application. FIG. 46A shows an example of an NR broadcast/multicast communication scenario and an NR unicast communication scenario.

The NR communication system shown in FIG. 46A may include a broadcast platform 4611, a core network device 4612, a core network device 4613, a base station 4614, a base station 4615, a plurality of user equipments (UEs) 4616, and a plurality of UEs 4617. The broadcast platform 4611, the core network device 4612, the base station 4614, and the plurality of UEs 4616 may implement unicast communication. The broadcast platform 4611, the core network device 4613, the base station 4615, and the plurality of UEs 4617 may implement broadcast/multicast communication. The broadcast platform 4611 may be a network device, for example, a service server that provides 5G broadcast data and a related service. The broadcast platform 4611 may also be referred to as a broadcast service server. For descriptions of any UE, refer to descriptions of the electronic device shown in the foregoing embodiments.

As shown in FIG. 46A, the broadcast platform 4611 may perform unicast communication with any UE in the plurality of UEs 4616 (a UE 4616A is used as an example for description) by using the core network device 4612 and the base station 4614. In a downlink direction, the broadcast platform 4611 may send data to the base station 4614 by using the core network device 4612. After receiving the data, the base station 4614 sends the data to the UE 4616A, that is, downlink transmission is performed in a device-to-device manner. The broadcast platform 4611 may separately perform unicast communication with the plurality of UEs 4616. In this case, the plurality of UEs 4616 may separately use different bearers, for example, three UEs 4616 use three bearers. In some examples, the UE 4616A may further perform uplink transmission with the base station 4614, the core network device 4612, or the broadcast platform 4611 in a device-to-device manner. Specific descriptions are similar. Details are not described again. In some examples, during unicast communication, at least one of the broadcast platform 4611, the core network device 4612, and the base station 4614 may perceive the UE 4616A.

As shown in FIG. 46A, the broadcast platform 4611 may perform broadcast communication or multicast communication with the plurality of UEs 4617 by using the core network device 4613 and the base station 4615. In a downlink direction, the broadcast platform 4611 may send data to the base station 4615 by using the core network device 4613. After receiving the data, the base station 4615 may send the data to the plurality of UEs 4617, that is, downlink transmission is performed in a device-to-multi-device manner. In this case, the plurality of UEs 4617 may use a same bearer, for example, three UEs 4617 share one bearer. In some examples, during broadcast communication, uplink transmission may not be performed. In some examples, during broadcast communication, the broadcast platform 4611, the core network device 4613, and the base station 4615 may not perceive the plurality of UEs 4617. In some examples, during multicast communication, uplink transmission may be performed. For example, the UE 4616A may perform uplink transmission with the base station 4615, the core network device 4613, or the broadcast platform 4611 in a device-to-device manner. In some examples, during multicast communication, at least one of the broadcast platform 4611, the core network device 4613, and the base station 4615 may perceive the plurality of UEs 4617.

In an implementation, any one of the plurality of UEs 4617 that perform broadcast/multicast communication with the broadcast platform 4611 may share received broadcast/multicast data to at least one other UE in real time. For example, as shown in FIG. 46A, a UE 4617A may share, to a UE 4618, broadcast/multicast data sent by the base station 4615. It may be understood that the UE 4617A has a capability of receiving the 3G/4G/5G/6G broadcast data (for example, the UE 4617A includes a modem), and the UE 4618 may have a capability of receiving the 3G/4G/5G/6G broadcast data, or may not have a capability of receiving the 3G/4G/5G/6G broadcast data. The UE 4618 is, for example, but is not limited to, any one of the following cases:
Case 1: The UE 4618 has a capability of receiving the 3G/4G/5G/6G broadcast data, but a base station to which the UE 4618 belongs does not have a capability of receiving the 3G/4G/5G/6G broadcast data.
Case 2: The UE 4618 has a capability of receiving the 3G/4G/5G/6G broadcast data, but a base station to which the UE 4618 belongs is different from a base station to which the UE 4617A belongs (for example, the UE 4618 and the UE 4617A belong to different operators).
Case 3: The UE 4618 has a capability of receiving the 3G/4G/5G/6G broadcast data, but a base station to which the UE 4618 belongs and a base station to which the UE 4617A belongs (for example, belonging to a same operator) are far away from each other.
Case 4: The UE 4618 does not have a capability of receiving the 3G/4G/5G/6G broadcast data.

In the foregoing four cases, the UE 4618 cannot receive and play channel data that can be received by the UE 4617A, but the UE 4617A can share the received channel data to the UE 4618 in real time, so that a user of the UE 4618 can view/listen to a channel that can be received by the UE 4617A. This is not limited by an environment and a device, is more widely used, and has better user experience.

It should be noted that forms and quantities of the broadcast platform, the core network device, the base station, and the UE shown in FIG. 46A are merely used as examples. This is not limited in embodiments of this application.

The following describes an example of a broadcast/multicast communication scenario.

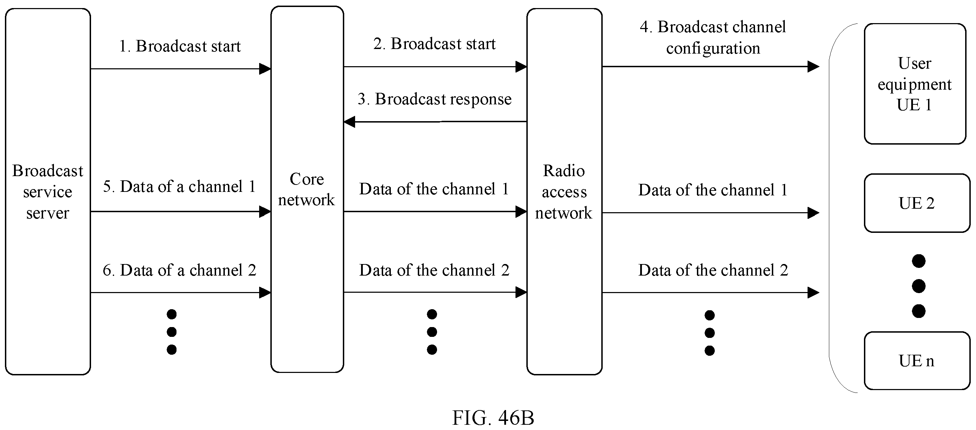

Refer to FIG. 46B. FIG. 46B is a diagram of an architecture of another NR communication system according to this application.

The NR communication system shown in FIG. 46B may include a broadcast service server (for example, the broadcast platform 4611 shown in FIG. 46A), a core network, a radio access network (RAN), and n UEs (a UE 1, a UE 2, ..., and a UE n, where n is a positive integer greater than 1). The core network may include at least one core network device, for example, include the core network device 4612 and the core network device 4613 shown in FIG. 46A. The RAN may include at least one access network device, for example, include the base station 4614 and the base station 4615 shown in FIG. 46A. For descriptions of any UE, refer to descriptions of the electronic device shown in the foregoing embodiments.

As shown in FIG. 46B, in (1), the broadcast service server may notify the core network of broadcast (broadcast) start; in (2), the core network may notify the RAN of broadcast start, for example, but not limited to sending information such as a service ID and a cell list (cell list); in (3), the RAN may return a broadcast response to the core network; and in (4), the RAN may implement broadcast channel configuration of the n UEs through a multicast control channel (multicast control channel, MCCH). There may be one or more configured channels, different channels may correspond to different broadcast data, and the UE may receive broadcast data corresponding to the configured channel.

As shown in FIG. 46B, it is assumed that a channel 1 and a channel 2 are configured. In (5), the broadcast service server may send, to the RAN through the core network, broadcast data corresponding to the channel 1 (which may be referred to as data of the channel 1 for short), and the RAN may send the data of the channel 1 to the n UEs through a multicast traffic channel (multicast traffic channel, MTCH). In (6), the broadcast service server may further send data of the channel 2 to the RAN through the core network, and the RAN may send the data of the channel 2 to the n UEs through the MTCH. A sequence of a broadcast process of the data of the channel 1 and a broadcast process of the data of the channel 2 is not limited. In some examples, the MTCH used when the RAN sends the data of the channel 1 to the n UEs may be different from the MTCH used when the RAN sends the data of the channel 2.

In an implementation, for any one of the n UEs, received channel data may be determined in response to a user operation. For example, the user may choose to allow the UE to receive the data of the channel 1 instead of the data of the channel 2.

In an implementation, any one of the n UEs may share the received channel data to at least one other UE in real time.

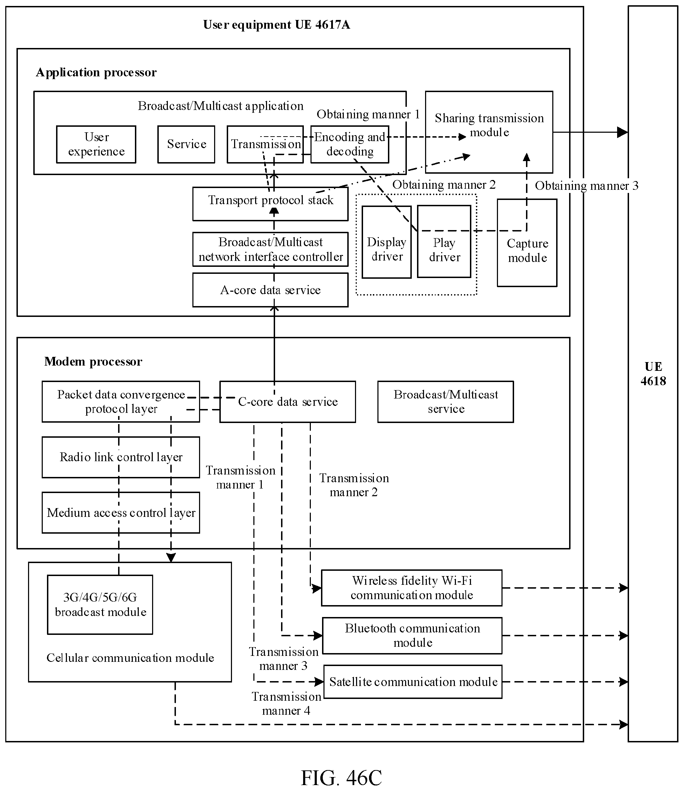

Refer to FIG. 46C. FIG. 46C is a diagram of an architecture of another NR communication system according to this application.

The NR communication system shown in FIG. 46C may include the UE 4617A and the UE 4618 in FIG. 46A. The UE 4617A may share the 3G/4G/5G/6G broadcast data with the UE 4618 in real time. For ease of description, an example in which the 3G/4G/5G/6G broadcast data is the data of the channel 1 is used for description.

As shown in FIG. 46C, the UE 4617A may include an application processor (AP), a modem processor (modem), and a wireless communication module. In FIG. 46C, an example in which the wireless communication module includes a cellular communication module, a Wi-Fi communication module, a Bluetooth communication module, and a satellite communication module is used for description. In a specific implementation, the wireless communication module may include more or fewer communication modules.

The application processor may include a broadcast/multicast application (APP), a sharing transmission module, a transport protocol stack, a broadcast/multicast network interface controller (MBS network, MBSNET), an A-core data service (ADS), a display driver, a play driver, and a capture module. The broadcast/multicast APP may be an APP (for example, Phone) used to implement an MBS, and may include a module configured to provide user experience (DI/UX) display, a module configured to provide service logic, a transmission module, and a codec module. The transmission module may be configured to: receive the 3G/4G/5G/6G broadcast data from the transport protocol stack and send the 3G/4G/5G/6G broadcast data to the codec module. The codec module may be configured to encode or decode the received 3G/4G/5G/6G/6G broadcast data, where decoded data can be played on the broadcast/multicast APP. The sharing transmission module may be configured to implement real-time sharing of a multimedia data stream with another UE. The transport protocol stack is, for example, a TCP/IP protocol stack. The display driver may be configured to invoke a display module such as a display to implement a display function. The play driver may be configured to invoke an audio module such as a speaker to implement an audio play function. The capture module may be configured to capture a decoded multimedia data stream that can be directly played, for example, capture a multimedia data stream that is being played.

The modem processor may include an NR protocol stack, a C-core data service (C-core data service, CDS), and a broadcast/multicast service (MBS). The NR protocol stack may include a medium access control (medium access control, MAC) layer, a radio link control (radio link control, RLC) layer, and a packet data convergence protocol (packet data convergence protocol, PDCP) layer.

As shown in FIG. 46C, the UE 4617A may receive the data of the channel 1 through a 3G/4G/5G/6G broadcast module in the cellular communication module, and then the 3G/4G/5G/6G broadcast module may send the data of the channel 1 to the modem processor. In the modem processor, the data of the channel 1 may be sequentially transmitted to the MAC layer, the RLC layer, and the PDCP layer. The PDCP layer then sends the data of the channel 1 to the CDS, and the CDS sends the data of the channel 1 to the application processor. In the application processor, the data of the channel 1 may be sequentially transmitted to the ADS, the MBSNET, and the transport protocol stack.

In an implementation, the UE 4617A may obtain the data of the channel 1 from the application processor, and share the data of the channel 1 to the UE 4618 in real time. A manner in which the UE 4617A obtains the data of the channel 1 from the application processor may include but is not limited to the following three manners:
Obtaining manner 1: The UE 4617A may obtain decoded data of the channel 1 from the broadcast/multicast APP. In some examples, after the data of the channel 1 is transmitted to the transport protocol stack, the transport protocol stack may send the data of the channel 1 to the transmission module in the broadcast/multicast APP, and then the transmission module sends the data of the channel 1 to the codec module for decoding. The decoded data of the channel 1 may be sent to the sharing transmission module, and the sharing transmission module shares the data to the UE 4618 in real time.
Obtaining manner 2: The UE 4617A may directly obtain, from the transport protocol stack, the data of the channel 1 before decoding. In some examples, after the data of the channel 1 is transmitted to the transport protocol stack, the transport protocol stack may send the data of the channel 1 to the sharing transmission module, and then the sharing transmission module shares the data of the channel 1 to the UE 4618 in real time.
Obtaining manner 3: The UE 4617A may capture, through the capture module, decoded data of the channel 1 for displaying and/or playing. In some examples, after the data of the channel 1 is transmitted to the transport protocol stack, the transport protocol stack may send the data of the channel 1 to the transmission module in the broadcast/multicast APP, and then the transmission module sends the data of the channel 1 to the codec module for decoding. The decoded data of the channel 1 may be sent to the display driver and/or the play driver for output (display and/or playing). The capture module captures an output multimedia data stream and transmits the multimedia data stream to the sharing transmission module, and the sharing transmission module shares the multimedia data stream to the UE 4618 in real time.

In an implementation, in the obtaining manner 2, the modem processor may route, in the CDS, the data of the channel 1 sent to the sharing transmission module, so as to send the data of the channel 1 to the UE 4618 in a corresponding communication manner. In some examples, the UE 4617A communicates with the UE 4618 in a cellular communication manner. In this case, the data of the channel 1 may be sent to the UE 4618 in a transmission manner 1 shown in FIG. 46C. For example, in the transmission manner 1, the CDS may perform IP packet assembly and IP header replacement on the data of the channel 1, processed data of the channel 1 then sequentially passes through the PDCP layer, the RLC layer, and the MAC layer, and finally, the cellular communication module sends the data of the channel 1 to the UE 4618. In some other examples, the UE 4617A communicates with the UE 4618 in a Wi-Fi manner. In this case, the data of the channel 1 may be sent to the UE 4618 in a transmission manner 2 shown in FIG. 46C. For example, in the transmission manner 2, the CDS may send the data of the channel 1 to the Wi-Fi communication module (for example, including a Wi-Fi chip), and the Wi-Fi communication module may perform IP header replacement and IP packet assembly on the data of the channel 1, and sends processed data of the channel 1 to the UE 4618. Alternatively, the CDS may perform IP packet assembly and IP header replacement on the data of the channel 1, and then send processed data of the channel 1 to the Wi-Fi communication module, and the Wi-Fi communication module sends the data of the channel 1 to the UE 4618. This is not limited to the foregoing examples. In some other examples, when the UE 4617A and the UE 4618 communicate in a Bluetooth communication manner, the data of the channel 1 may be sent to the UE 4618 in a transmission manner 3 shown in FIG. 46C. In some other examples, when the UE 4617A and the UE 4618 communicate in a Bluetooth communication manner, the data of the channel 1 may be sent to the UE 4618 in a transmission manner 4 shown in FIG. 46C. Descriptions of the transmission manner 3 and the transmission manner 4 are similar to those of the transmission manner 2. Details are not described again. The UE 4617A and the UE 4618 may further communicate in another communication manner, and may transmit the data of the channel 1 in a corresponding transmission manner. This is not limited in this application.

It may be understood that, in the obtaining manner 2, the application processor of the sharer device may not need to be woken up (for example, does not need to decode the 3G/4G/5G/6G broadcast data or play the 3G/4G/5G/6G broadcast data), but directly send the received 3G/4G/5G/6G broadcast data to the sharee device by using the modem processor, that is, a low-power transmission mode can be provided, power consumption of the device can be reduced, and device availability can be improved. In addition, the sharer device does not need to run the broadcast/multicast APP (used to play the 3G/4G/5G/6G broadcast data) in the foreground, and the sharer device does not need to have a capability of decoding and playing the 3G/4G/5G/6G broadcast data. This expands an application scenario and improves user experience.

The following shows examples of some real-time sharing scenarios, but those examples should not constitute a limitation.

Scenario 1: During an operator call between friends, if one party views an interesting video (for example, a movie, a television, or a short video) or an interesting audio (for example, a piece of music) and wants to view the video or listen to the audio together with the other party, the one party may initiate real-time sharing, so that both parties in the call can view the video or listen to the audio for discussing together. For a specific example, refer to descriptions of the real-time sharing scenario of viewing together. This resolves a problem that an audio stream or a video stream cannot be shared in real time in a current operator call, and improves user experience.

Scenario 2: In an operator call between a subordinate and a leader, the subordinate needs to report a file (for example, in a Word format, an Excel format, or a PPT format) to the leader or share a file with the leader, describe file content line by line or page by page, and modify the file based on the leader's comments. The leader wants to view a modification result synchronously, but the subordinate does not want the leader to view an image or an audio of another application on an electronic device like a mobile phone used by the subordinate. In this case, the subordinate can share only an application of the file in real time, so that the leader can view the modification result and modify the file. For details, refer to descriptions of the real-time sharing scenario of editing together. Usage is more flexible.

Scenario 3: When a consumer calls customer service personnel to consult about how to use a purchased item, the customer service personnel may initiate real-time sharing to share a guidance video, an image, or a file to the consumer. This reduces time and energy spent in phone communication.

Scenario 4: When a child is taking an online class, the working parents want to see the child's online class during lunch break or on the way to and from work, remotely monitor the child, view an image of the online class, explain and comment on parts that the child has questions about, and remotely guide the child. In this case, the child can share an audio stream/a video stream of an online class application in real time through a call, and share a voice collected by using a microphone and a facial image collected by using a camera. For a specific example, refer to FIG. 15A(1) and FIG. 15A(2) and FIG. 15B.

Scenario 5: The elderly at home is unknown about how to use specific things. For example, when using a mobile phone, the elderly cannot access the Internet. In this case, the children in other places need to perform remote guidance through a call. The children in other places can actively initiate a real-time sharing request. After receiving the request, the elderly at home automatically shares a screen of the mobile phone of the elderly, to guide the elderly more conveniently and quickly.

Scenario 6: During a family dinner, a user may share a real-time image of an application with a plurality of nearby users in a near field communication manner such as Wi-Fi, which can be understood as a near field 1-to-any (1 to any) real-time sharing scenario.

Scenario 7: During gathering of friends, a user may share a real-time image of a game application with a plurality of nearby users in a near field communication manner, and/or play a same game together (for a specific example, refer to FIG. 23A(1) to FIG. 23C(2)), which can be understood as a near field 1-to-any (1 to any) real-time sharing scenario.

Scenario 8: When a business conference is held in a same conference room, a user may share content of a file with a plurality of nearby users in a near field communication manner, or even edit the file together, which can be understood as a near field 1-to-any (1 to any) real-time sharing scenario.

Scenario 9: In a near field 1-to-any (1 to any) real-time sharing scenario, the scenario 6 is used as an example for description. For privacy security purposes, a sharer user wants to share some or all content of a video to another user, but does not want to send a source file of the video to the another user. In this case, the sharer user may play a video on a device of the sharer user, perform real-time sharing in a near field communication manner when content that needs to be shared is played, and stop real-time sharing when content that does not need to be shared is played. In addition, the sharer user may not allow a sharee user to store and forward a video shared in real time. For specific examples, refer to FIG. 15D and FIG. 16A to FIG. 16E.

Scenario 10: An audio may be shared in real time in a one-to-one manner, or an audio may be shared, in one-to-many manner, with a plurality of headsets for playing, so that the audio can be listened to together without a need to send an audio file. In addition, a sharer user may not allow a sharee user to store or forward a piece of music shared in real time, to protecting copyright of the piece of music.

Scenario 11: During an outdoor party (Party) or an outdoor square dance, an audio may be shared, in a near field broadcast manner, to a plurality of sound boxes for playing. This avoids nuisance caused by playing at high volume through a large sound box and avoids a dull atmosphere.

Scenario 12: A leader calls a subordinate, and wants to share a file to the subordinate and a colleague near to the subordinate in real time. When it is inconvenient to directly send the file, the leader may share an application of the file to the subordinate in real time, and the subordinate shares the file to the colleague in real time, so that the colleague can view the file by using a device of the colleague, and there is no need for multiple people to gather around the subordinate and share the subordinate's device (a small mobile terminal, for example, a mobile phone). For a specific example, refer to FIG. 45C. This greatly improves user experience.

"Display" in this application may be replaced with another output manner, for example, playing by using a speaker. Similarly, "playing" in this application may also be replaced with another output manner, for example, display on a display.

Output in this application not only includes execution by an output module such as a display of the device itself, but also includes execution by an output module such as a display of another device connected to the device.

The microphone in this application may be replaced with another module that can collect an audio/a speech/a voice.

The camera in this application may be replaced with another module that can shoot/capture an image.

All or a part of the method provided in the embodiments of this application may be implemented by software, hardware, firmware, or any combination thereof. When software is used to implement the embodiments, all or a part of the embodiments may be implemented in the form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disk, SSD)), or the like. The foregoing embodiments are merely intended to describe the technical solutions of this application, but are not intended to limit this application. Although this application is described in detail with reference to the foregoing embodiments, a person of ordinary skill in the art should understand that the technical solutions described in the foregoing embodiments may still be modified or some technical features thereof may be equivalently replaced. These modifications or replacements do not enable essence of a corresponding technical solution to depart from the scope of the technical solutions of embodiments of this application.

## Claims

1. A sharing method, applied to a first device, wherein the method comprises:
displaying a first interface, wherein the first interface indicates that an operator call is currently performed with a second device;
displaying a second interface of a first application when performing the operator call with the second device;
receiving a first user operation on the second interface; and
sending first data to the second device, wherein the first data is used by the second device to output multimedia data related to the second interface.

2. The method according to claim 1, wherein the first interface and the second interface comprise a first floating window, and the first user operation is a user operation on a share control in the first floating window; or
the first user operation is a user operation of sliding along a first track.

3. The method according to claim 1 or 2, wherein before the sending first data to the second device, the method further comprises:
when displaying the second interface, capturing the multimedia data related to the second interface, wherein the first data comprises the multimedia data related to the second interface.

4. The method according to any one of claims 1 to 3, wherein the sending first data to the second device comprises:
sending call data of the operator call and the first data to the second device via a primary link for the operator call.

5. The method according to any one of claims 1 to 3, wherein the sending first data to the second device comprises:
sending call data of the operator call to the second device via a primary link for the operator call, and sending the first data to the second device via a data channel for the operator call.

6. The method according to any one of claims 1 to 3, wherein the sending first data to the second device comprises:
sending call data of the operator call to the second device via a primary link for the operator call, and sending the first data to the second device via an auxiliary link.

7. The method according to claim 6, wherein before the sending first data to the second device, the method further comprises:
sending a first request message to a network device, wherein the first request message comprises identification information of the second device;
receiving a session identifier of the second device that is sent by the network device based on the first request message; and
establishing the auxiliary link to the second device based on the session identifier of the second device.

8. The method according to any one of claims 1 to 7, wherein the sending first data to the second device comprises:
displaying a third interface, wherein the third interface comprises information about a plurality of devices;
receiving a second user operation on the second device in the plurality of devices; and
sending the first data to the second device.

9. The method according to claim 8, wherein the plurality of devices comprise at least one of the following: a discovered device, a connected device, a device that performs a latest operator call, a device that stores identification information, and a device recognized based on a captured image.

10. The method according to any one of claims 1 to 9, wherein the sending first data to the second device comprises:
displaying a fourth interface, wherein the fourth interface comprises information about a plurality of windows;
receiving a third user operation on a first window in the plurality of windows, wherein the first window comprises content of the second interface; and
sending the first data to the second device.

11. The method according to claim 10, wherein the plurality of windows comprise at least one of the following: a window of a foreground application, a window of a background application, and a window of an application that is installed on the first device but is not run.

12. The method according to any one of claims 1 to 7, wherein the sending first data to the second device comprises:
displaying a fifth interface, wherein the fifth interface comprises a plurality of sharing manners;
receiving a fourth user operation on a first manner in the plurality of sharing manners;
displaying a sixth interface, wherein the sixth interface comprises information about a plurality of windows and a plurality of devices, and the plurality of windows and the plurality of devices are determined based on the first manner;
receiving a fifth user operation on a second window in the plurality of windows, and receiving a sixth user operation on the second device in the plurality of devices, wherein the second window comprises content of the second interface; and
sending the first data to the second device based on the fifth user operation and the sixth user operation.

13. The method according to any one of claims 1 to 12, wherein before the sending first data to the second device, the method further comprises:
receiving a seventh user operation; and
determining, in response to the seventh user operation, that a type of shared data is a first type, wherein
when the first type is an audio, the first data comprises audio data related to the second interface;
when the first type is an image, the first data comprises video data related to the second interface; or
when the first type is an audio and an image, the first data comprises audio data and video data that are related to the second interface.

14. The method according to any one of claims 1 to 12, wherein the first data comprises video data related to the second interface; and the method further comprises:
receiving an eighth user operation, of sliding along a second track, on the second interface; and
sending second data to the second device, wherein the second data comprises audio data related to the second interface.

15. The method according to any one of claims 1 to 14, wherein before the sending first data to the second device, the method further comprises:
receiving a ninth user operation used to select a first area in the second interface, wherein the first data comprises multimedia data related to the first area.

16. The method according to any one of claims 1 to 14, wherein before the sending first data to the second device, the method further comprises:
receiving a tenth user operation used to select a first layer in the second interface, wherein the first data comprises multimedia data related to the first layer.

17. The method according to any one of claims 1 to 14, wherein the sending first data to the second device comprises:
when the first application is not a preset application, sending the first data to the second device, wherein a security level of the preset application is higher than a first level.

18. The method according to any one of claims 1 to 14, wherein the sending first data to the second device comprises:
identifying that a security level of data related to a second area in the second interface is higher than a second level; and
sending the first data to the second device, wherein the first data does not comprise the data related to the second area.

19. The method according to any one of claims 1 to 18, wherein the displaying a second interface of a first application comprises:
receiving broadcast data of a first channel that is sent by the network device; and
displaying the second interface based on the broadcast data of the first channel.

20. The method according to any one of claims 1 to 18, wherein the method further comprises:
receiving broadcast data of a second channel that is sent by the network device, wherein a user interface displayed by the first device is unrelated to the broadcast data of the second channel;
receiving an eleventh user operation; and
sending the broadcast data of the second channel to a third device, wherein the broadcast data of the second channel is used by the third device to output an audio and/or a video of the second channel.

21. The method according to any one of claims 1 to 20, wherein the sending first data to the second device comprises:
sending the first data and third data to the second device, wherein the third data comprises audio data collected by the first device by using a microphone and/or image data collected by the first device by using a camera.

22. The method according to any one of claims 1 to 21, wherein the method further comprises:
receiving a twelfth user operation;
in response to the twelfth user operation, determining not to grant permission to the second device to store the first data and forward the first data;
receiving a second request message sent by the second device, wherein the second request message is used to request to store and/or forward the first data; and
displaying first prompt information based on the second request message.

23. The method according to any one of claims 1 to 22, wherein the method further comprises:
receiving a third request message sent by the second device, wherein the third request message is used to request to share multimedia data with the first device in real time;
displaying second prompt information based on the third request message;
receiving a thirteenth user operation, wherein the thirteenth user operation is used to accept a request indicated by the second request message;
receiving fourth data sent by the second device; and
outputting the fourth data.

24. The method according to claim 23, wherein the outputting the fourth data comprises: displaying a seventh interface based on the fourth data, wherein when the first device displays the seventh interface, the second device displays the content of the second interface; or
the outputting the fourth data comprises: displaying the second interface and an eighth interface on split screens, wherein the eighth interface is determined based on the fourth data.

25. The method according to claim 23 or 24, wherein after the receiving fourth data sent by the second device, the method further comprises:
receiving a fourteenth user operation; and
sending the fourth data to a fourth device, so that the fourth device outputs the fourth data.

26. The method according to any one of claims 1 to 25, wherein the sending first data to the second device comprises:
sending the first data to the second device via a first link and a second link, wherein the first link is a cellular communication link or an auxiliary link, the second link comprises at least one of the following: a Bluetooth link, a wireless fidelity Wi-Fi link, a V2X link, a satellite link, a device-to-device D2D link, a cellular communication link, and an auxiliary link, and the first link is different from the second link.

27. The method according to any one of claims 1 to 26, wherein the method further comprises:
displaying a ninth interface, wherein the ninth interface comprises information about a plurality of user interfaces running on the first device;
receiving a fifteenth user operation on a first control in the ninth interface, wherein the first control is related to a tenth interface in the plurality of user interfaces; and
sending fifth data to a fifth device, wherein the fifth data is used by the fifth device to output multimedia data related to the tenth interface.

28. The method according to any one of claims 1 to 27, wherein the method further comprises:
displaying an eleventh interface, wherein the eleventh interface comprises information about a plurality of functions of a control center;
receiving a sixteenth user operation on a second control on the eleventh interface, wherein the second control is related to a sharing function in the plurality of functions; and
sending sixth data to a sixth device, wherein the sixth data is used by the sixth device to output multimedia data of a foreground application of the first device.

29. An electronic device, comprising a transceiver, a processor, and a memory, wherein the memory is configured to store a computer program, and the processor invokes the computer program to perform the method according to any one of claims 1 to 28.

30. A computer storage medium, wherein the computer storage medium stores a computer program, and when the computer program is executed by a processor, the method according to any one of claims 1 to 28 is implemented.
